(19) Europäisches Patentamt
European Patent Office
Office européen des brevets

(11) EP 2 345 685 B1

(12) # EUROPEAN PATENT SPECIFICATION

(45) Date of publication and mention of the grant of the patent:
**15.08.2018 Bulletin 2018/33**

(21) Application number: **09819416.0**

(22) Date of filing: **09.10.2009**

(51) Int Cl.:
*C08G 73/10* (2006.01) *C08G 73/06* (2006.01)
*C08L 79/08* (2006.01) *C08K 3/24* (2006.01)
*C08K 3/36* (2006.01) *C08K 3/22* (2006.01)
*C08J 5/18* (2006.01) *C08J 5/00* (2006.01)
*D01F 6/74* (2006.01) *C08G 73/18* (2006.01)
*C08G 73/22* (2006.01) *C08G 75/32* (2006.01)

(86) International application number:
**PCT/KR2009/005806**

(87) International publication number:
**WO 2010/041909 (15.04.2010 Gazette 2010/15)**

(54) **POLYMER AND PREPARATION METHOD THEREOF**

POLYMER UND HERSTELLUNGSVERFAHREN DAFÜR

POLYMÈRE ET SON PROCÉDÉ DE PRÉPARATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.10.2008 CA 2640906**
**10.10.2008 US 249159**

(43) Date of publication of application:
**20.07.2011 Bulletin 2011/29**

(73) Proprietor: **IUCF-HYU (Industry-University Cooperation Foundation Hanyang University)**
**Seongdong-gu, Seoul 133-791 (KR)**

(72) Inventors:
- **LEE, Young, Moo**
  **Seoul 137-070 (KR)**
- **PARK, Ho, Bum**
  **Seoul 133-791 (KR)**
- **JUNG, Chul, Ho**
  **Gwangju 500-170 (KR)**
- **HAN, Sang, Hoon**
  **Seoul 135-991 (KR)**

(74) Representative: **AWA Sweden AB**
**P.O. Box 5117**
**200 71 Malmö (SE)**

(56) References cited:
**EP-A1- 1 913 992** **EP-A2- 2 281 925**
**EP-A2- 2 281 926** **WO-A1-94/12465**
**WO-A2-02/064242** **WO-A2-2009/142434**
**JP-A- 2005 247 997** **US-A- 5 376 548**

- **PARK, HO BUM ET AL.: 'Polymers with Cavities Tuned for Fast Selective Transport of Small Molecules and Ions' SCIENCE vol. 318, 12 October 2007, pages 254 - 258, XP055001265**
- **JUNG, C. H. ET AL.: 'Gas Permeation Properties of Hydroxy-Group Containing Polyimide Membranes' MACROMOLECULAR RESEARCH vol. 16, 31 August 2008, pages 555 - 560, XP008146669**
- **TULLOS, GORDON L. ET AL.: 'Thermal Conversion of Hydroxy-Containing Imides to Benzoxazoles: Polymer and Model Compound Study' MACROMOLECULES vol. 32, 05 June 1999, pages 3598 - 3612, XP000829782**
- **MERCER, FRANK W. ET AL.: 'Synthesis and charaterization of new fluorinated poly(imide benzoxazole)s' HIGH PERFORMANCE POLYMERS vol. 8, 1996, pages 395 - 406, XP001537426**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 345 685 B1

- **HAYASHI T ET AL: "Effective tritium processing using polyimide films", FUSION ENGINEERING AND DESIGN, ELSEVIER SCIENCE PUBLISHERS, AMSTERDAM, NL, vol. 39-40, 1 September 1998 (1998-09-01), pages 901-907, XP004143005, ISSN: 0920-3796, DOI: 10.1016/S0920-3796(97)00198-1**

Remarks:

The file contains technical information submitted after the application was filed and not included in this specification

## Description

### BACKGROUND OF THE INVENTION

#### (a) Field of the Invention

This disclosure relates to a polymer and a method of preparing the same.

#### (b) Description of the Related Art

In a rigid organic material, diffusion of low molecules or ions through pores is based on sub-nano or nano techniques. A membrane including such an organic material may be used in order to selectively separate low molecules or ions. The membrane may be applicable to many various field such as a process of preparing materials, energy conversion, energy storage, organic batteries, fuel cells, gas separation, and the like.

Accordingly, research into such a membrane has been actively undertaken. However, a material having heat resistance, chemical resistance, solubility in a generally-used solvent, as well as selective separation capability of low molecules or ions has not been developed and therefore there is a limit in application to various fields.

The publication "Polymers with cavities tuned for fast selective transport of small molecules and ions" by Park, Ho Bum et al, Science, vol. 318, 12 october 2017, pages 254-258, discloses free-volume structures in dense vitreous polymers that enable molecular and ionic transport.

### SUMMARY OF THE INVENTION

The present invention relates to a polymer as disclosed in the independent claim 1, and a method of preparing the same as found in independent claim 26 or 29.

One embodiment of the present invention provides a polymer having excellent permeability and selectivity for low molecules, excellent heat resistance and chemical resistance, and good solubility in a solvent.

Another embodiment of the present invention provides a method of preparing the polymer.

According to one embodiment of the present invention, a polymer derived from polyamic acid or a polyimide is provided. The polymer derived from polyamic acid or polyimide includes picopores, and the polyamic acid and the polyimide include a repeating unit obtained from an aromatic diamine including at least one ortho-positioned functional group with respect to an amine group and a dianhydride.

The picopores may have an hourglass-shaped structure by connecting at least two picopores.

The ortho-positioned functional group with respect to the amine group may be OH, SH, or $NH_2$. The polymer derived from polyamic acid or polyimide may have a fractional free volume (FFV) of 0.18 to 0.40, and may have interplanar distance (d-spacing) of 580pm to 800pm measured by X-ray diffraction (XRD).

The picopores may have a pore distribution wherein a full width at half maximum (FWHM) is in the range of 10pm to 40pm measured by positron annihilation lifetime spectroscopy (PALS).

The polymer derived from polyamic acid or a polyimide may have a BET surface area of $100m^2/g$ to $1000m^2/g$.

The polyamic acid may be selected from the group consisting of a polyamic acid including a repeating unit represented by the following Chemical Formulae 1 to 4, polyamic acid copolymers including a repeating unit represented by the following Chemical Formulae 5 to 8, copolymers thereof, and blends thereof.

[Chemical Formula 1]

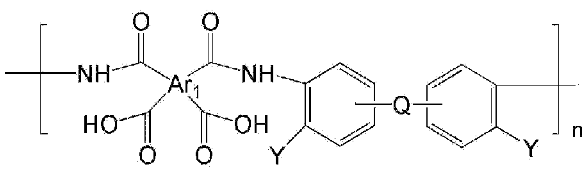

[Chemical Formula 2]

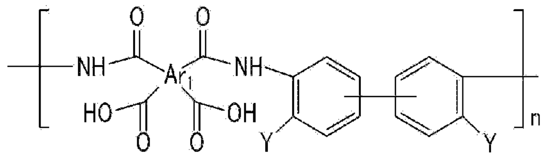

[Chemical Formula 3]

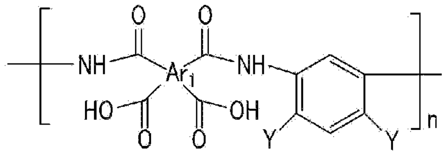

[Chemical Formula 4]

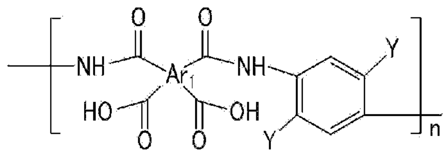

[Chemical Formula 5]

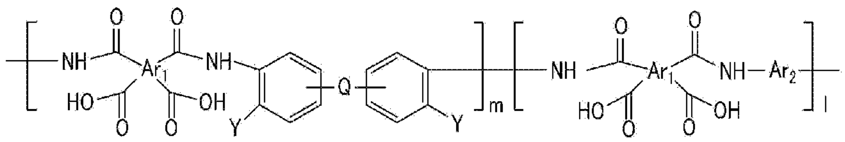

[Chemical Formula 6]

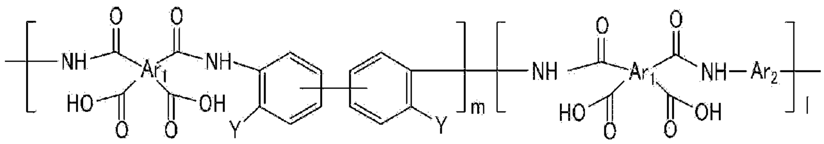

[Chemical Formula 7]

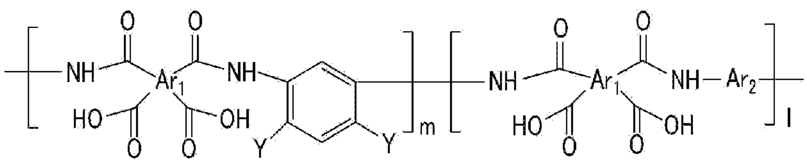

[Chemical Formula 8]

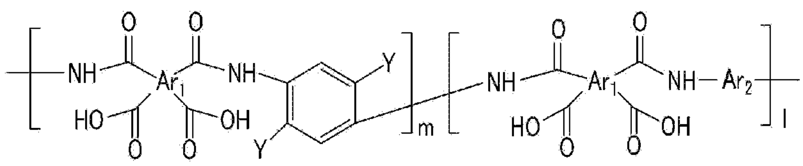

In the above Chemical Formulae 1 to 8,

$Ar_1$ is an aromatic group selected from a substituted or unsubstituted quadrivalent C6 to C24 arylene group and a substituted or unsubstituted quadrivalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH,

$Ar_2$ is an aromatic group selected from a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH,

Q is O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, C(=O)NH, $C(CH_3)(CF_3)$, or a substituted or unsubstituted phenylene group (where the substituted phenylene group is a phenylene group substituted with a C1 to C6 alkyl group or a C1 to C6 haloalkyl group), where the Q is linked with aromatic groups with m-m, m-p, p-m, or p-p positions,

Y is the same or different in each repeating unit and is independently selected from OH, SH, or $NH_2$,

n is an integer ranging from 20 to 200,

m is an integer ranging from 10 to 400, and

l is an integer ranging from 10 to 400.

The polyimide may be selected from the group consisting of a polyimide including a repeating unit represented by the following Chemical Formulae 33 to 36, polyimide copolymers including a repeating unit represented by the following Chemical Formulae 37 to 40, copolymers thereof, and blends thereof.

[Chemical Formula 33]

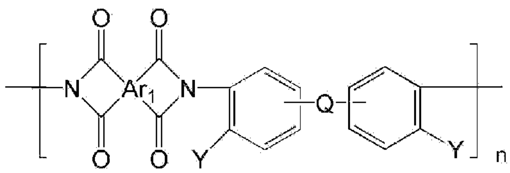

[Chemical Formula 34]

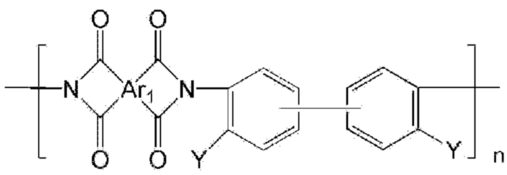

[Chemical Formula 35]

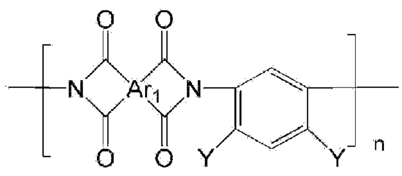

[Chemical Formula 36]

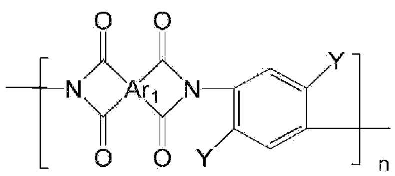

[Chemical Formula 37]

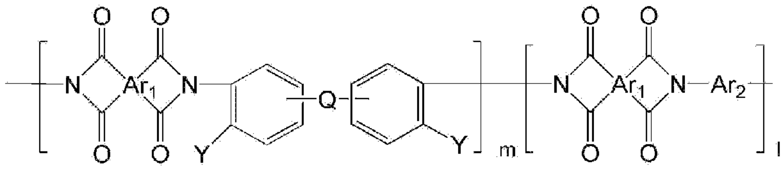

[Chemical Formula 38]

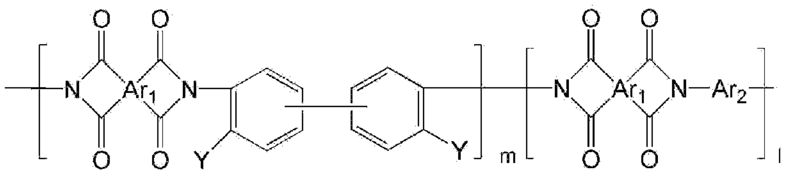

[Chemical Formula 39]

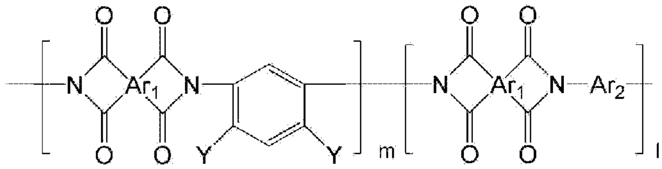

[Chemical Formula 40]

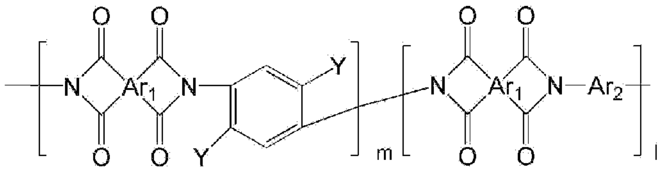

In above Chemical Formulae 33 to 40,
$Ar_1$, $Ar_2$, Q, Y, n, m, and l are the same as $Ar_1$, $Ar_2$, Q, n, m, and l in the above Chemical Formulae 1 to 8.

The polymer derived from polyamic acid or a polyimide may include a polymer including a repeating unit represented by one of the following Chemical Formulae 19 to 32, or copolymers thereof.

[Chemical Formula 19]

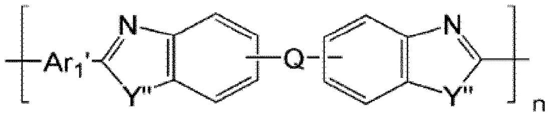

[Chemical Formula 20]

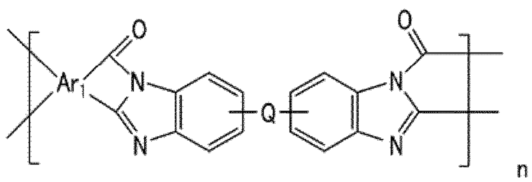

[Chemical Formula 21]

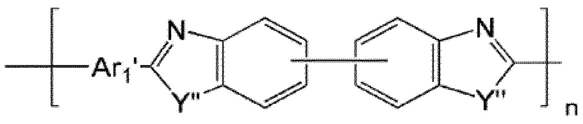

[Chemical Formula 22]

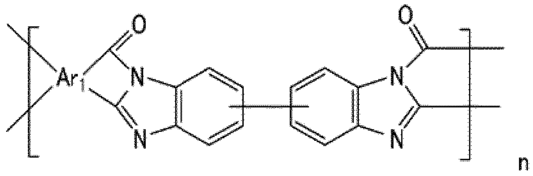

[Chemical Formula 23]

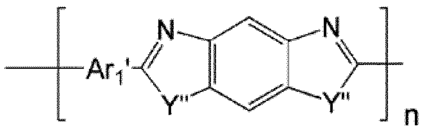

[Chemical Formula 24]

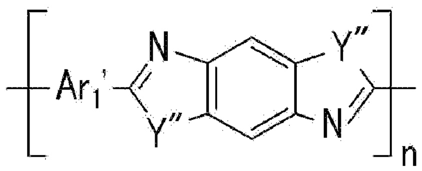

[Chemical Formula 25]

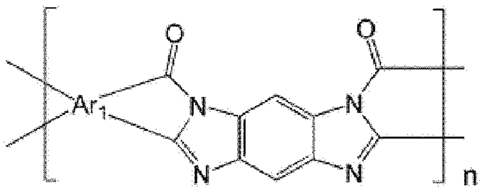

[Chemical Formula 26]

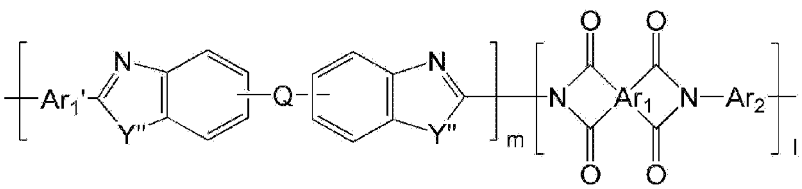

[Chemical Formula 27]

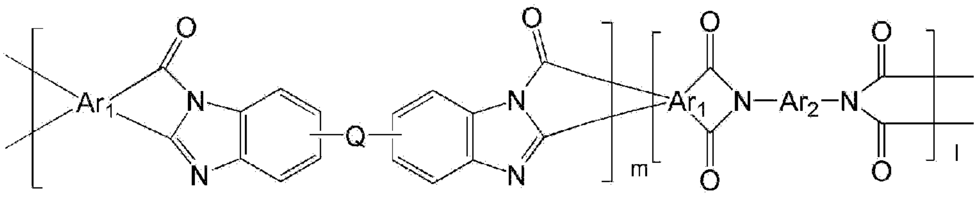

[Chemical Formula 28]

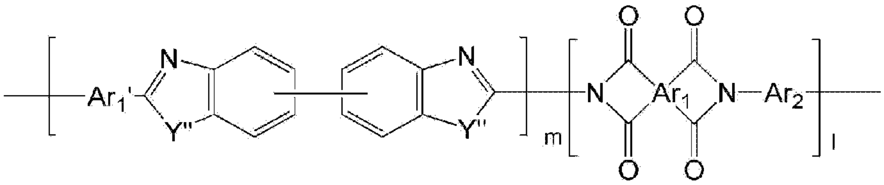

[Chemical Formula 29]

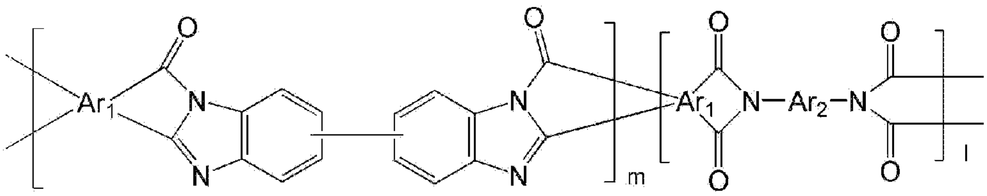

[Chemical Formula 30]

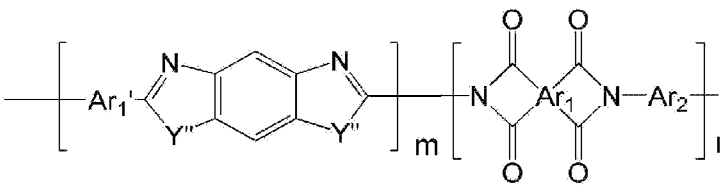

[Chemical Formula 31]

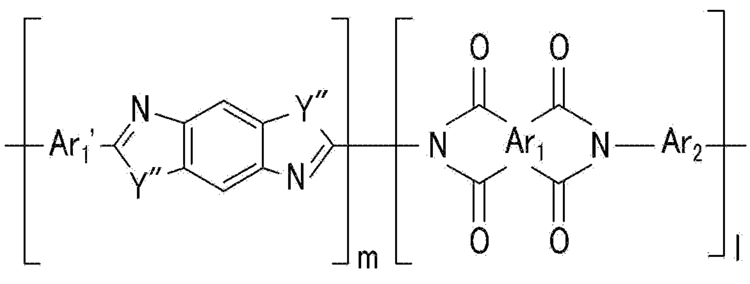

[Chemical Formula 32]

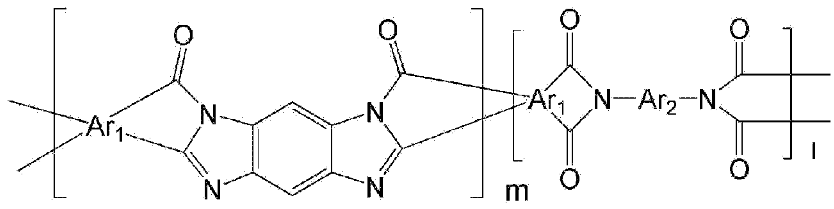

In the above Chemical Formulae 19 to 32,
$Ar_1$, $Ar_2$, Q, n, m, and l are the same as $Ar_1$, $Ar_2$, Q, n, m, and l in the above Chemical Formulae 1 to 8,
$Ar_1$' is an aromatic group selected from a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH, and
Y" is O or S.

In the above Chemical Formulae 1 to 8 and Chemical Formulae 19 to 40, $Ar_1$ may be selected from one of the following Chemical Formulae.

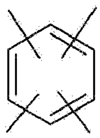 ,
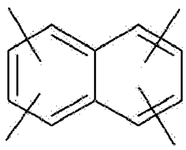 ,
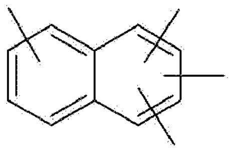 ,
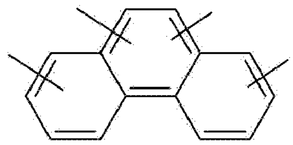 ,

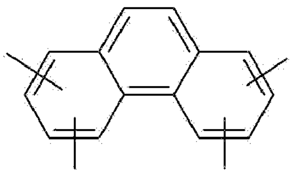 ,
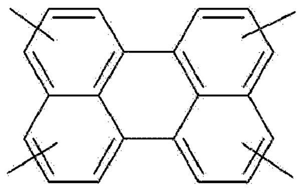 ,
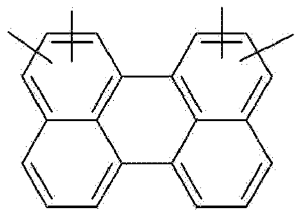 ,

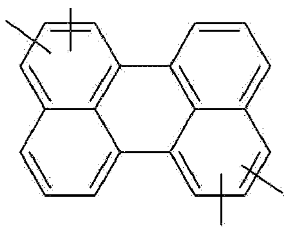 ,
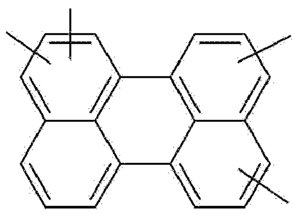 ,
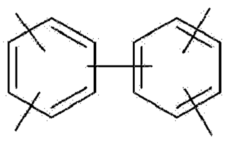 ,

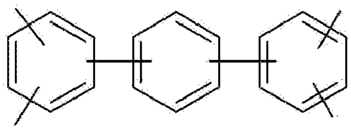 ,
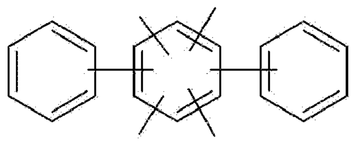 ,

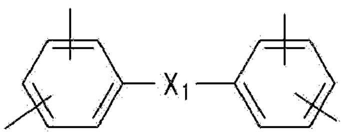 ,
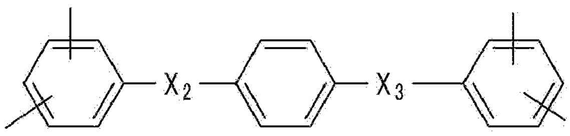 ,

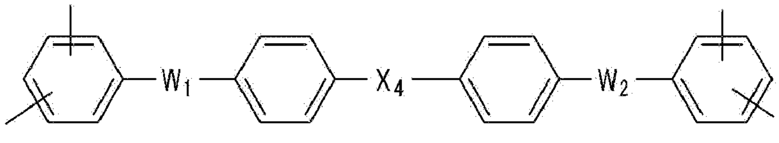 , 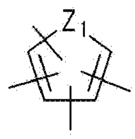 ,

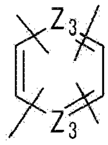

In the above Chemical Formulae,
$X_1$, $X_2$, $X_3$, and $X_4$ are the same or different and are independently O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH,
$W_1$ and $W_2$ are the same or different, and are independently O, S, or C(=O),
$Z_1$ is O, S, $CR_1R_2$, or $NR_3$, where $R_1$, $R_2$, and $R_3$ are the same or different and are independently hydrogen or a C1 to C5 alkyl group, and
$Z_2$ and $Z_3$ are the same or different and are independently N or $CR_4$ (where $R_4$ is hydrogen or a C1 to C5 alkyl group), provided that both $Z_2$ and $Z_3$ are not $CR_4$.

In the above Chemical Formulae 1 to 8 and Chemical Formulae 19 to 40, specific examples of $Ar_1$ may be selected from one of the following Chemical Formulae.

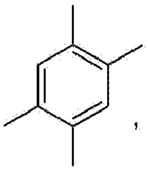 , 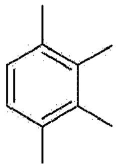 , 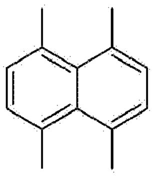 , 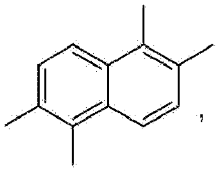 , 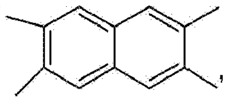 ,

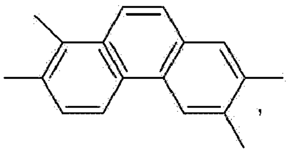 , 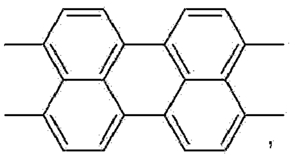 , 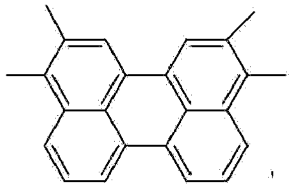 ,

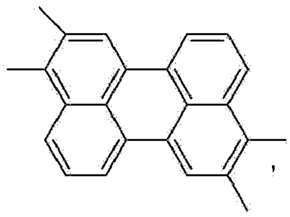 , 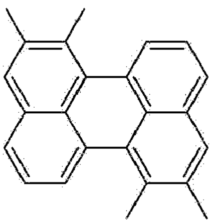 , 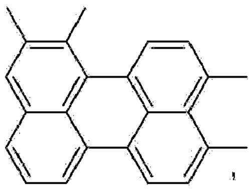 ,

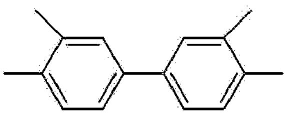 , 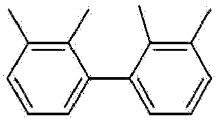 , 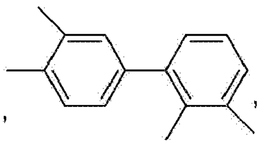 ,

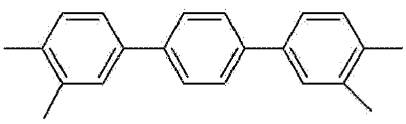 , 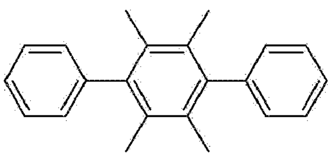 ,

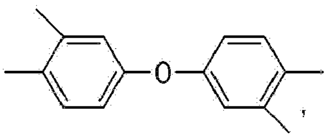, 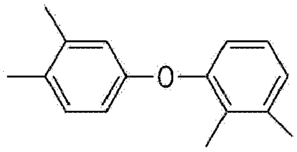, 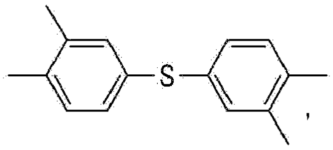,

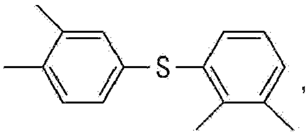, 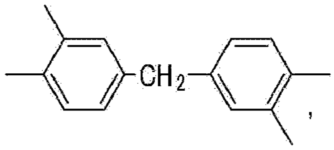, 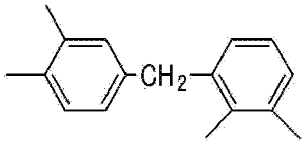,

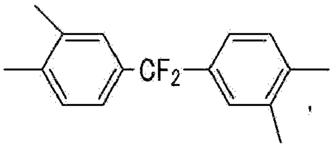, 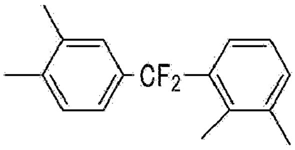, 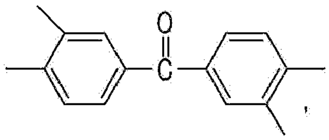,

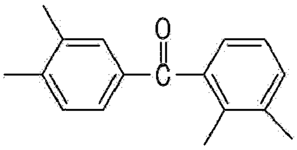, 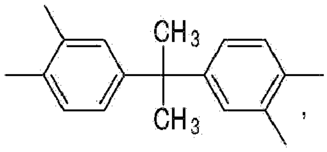, 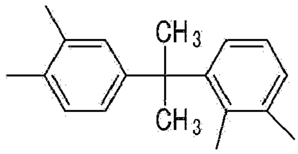,

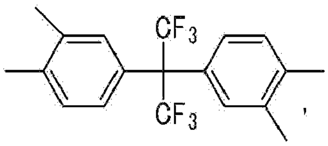, 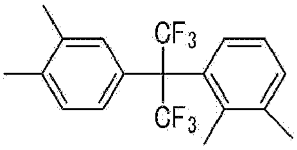, 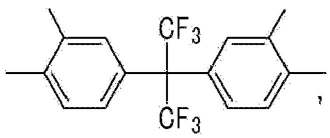,

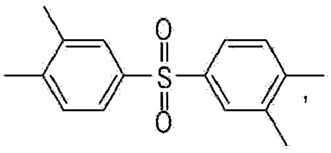, 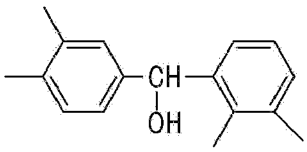, 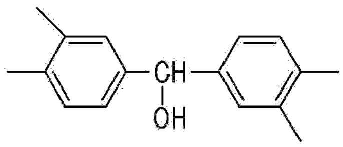,

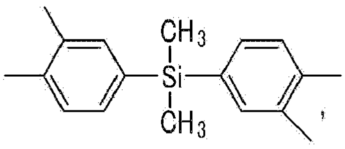, 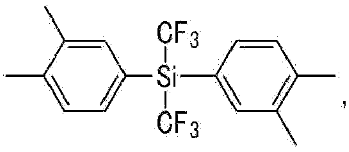, 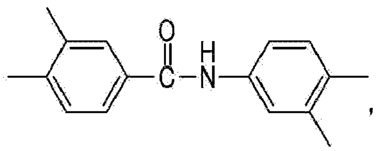,

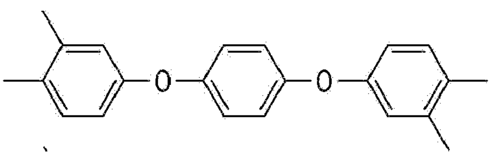, 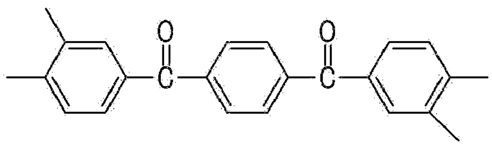,

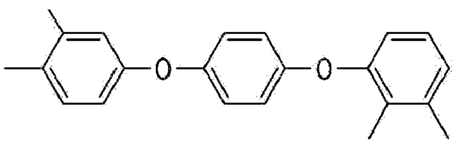, 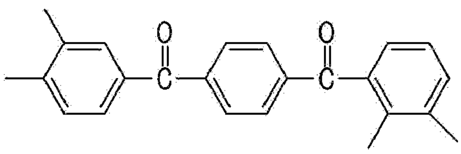,

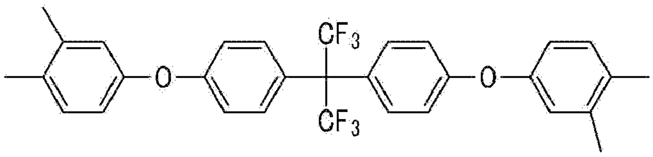, 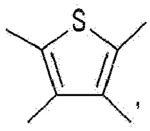, 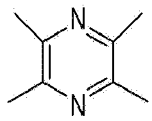,

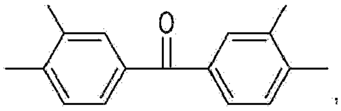, 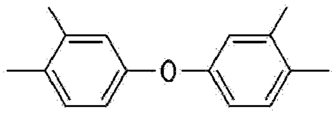

In the above Chemical Formulae 1 to 8 and Chemical Formulae 19 to 40, $Ar_2$ may be selected from one of the following Chemical Formulae.

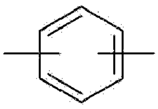, 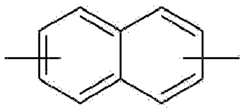, 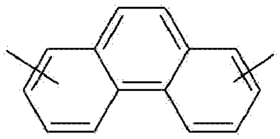,

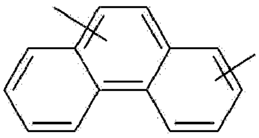, 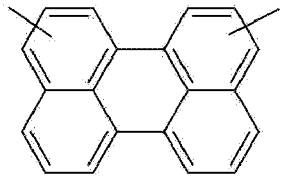, 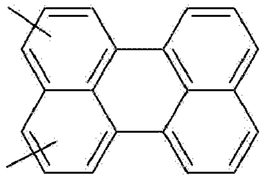,

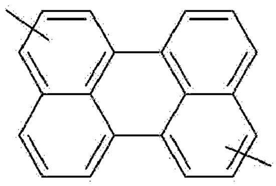, 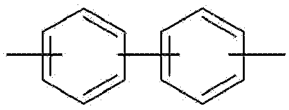

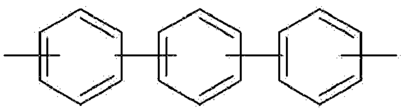, 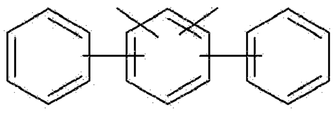,

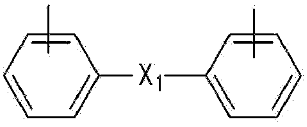, 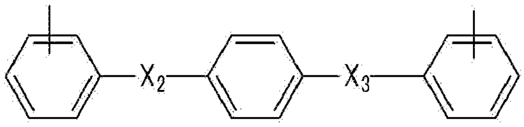,

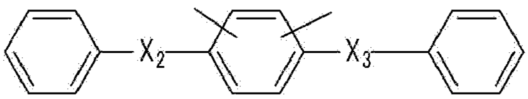,

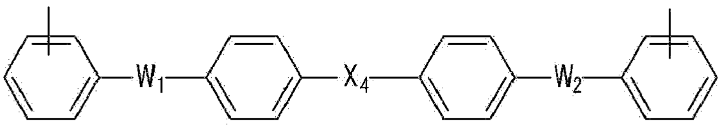, 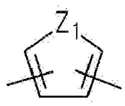,

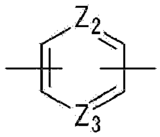

In the above Chemical Formulae,
$X_1$, $X_2$, $X_3$, and $X_4$ are the same or different and are independently O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH,
$W_1$ and $W_2$ are the same or different and are independently O, S, or C(=O),
$Z_1$ is O, S, $CR_1R_2$, or $NR_3$, where $R_1$, $R_2$, and $R_3$ are the same or different and are independently hydrogen or a C1 to C5 alkyl group, and
$Z_2$ and $Z_3$ are the same or different and are independently N or $CR_4$, where $R_4$ is hydrogen or a C1 to C5 alkyl group, provided that both $Z_2$ and $Z_3$ are not $CR_4$.

In the above Chemical Formulae 1 to 8 and Chemical Formulae 19 to 40, specific examples of $Ar_2$ may be selected from one of the following Chemical Formulae.

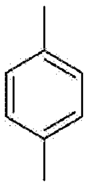 , 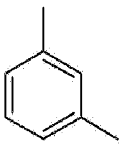 , 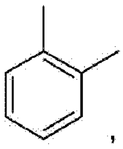 , 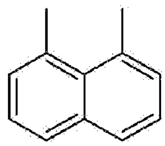 , 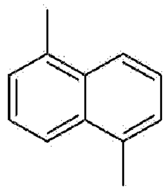 ,

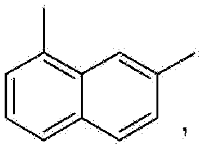 , 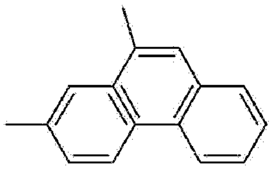 , 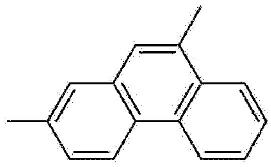 ,

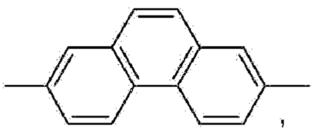 , 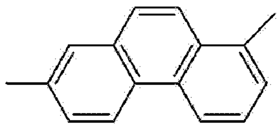 , 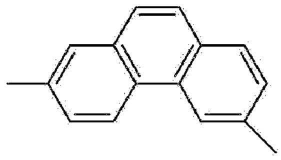 ,

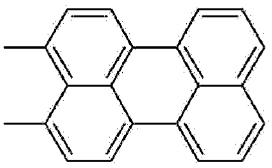 , 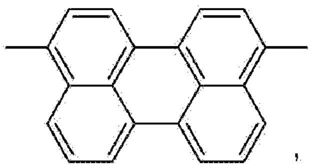 , 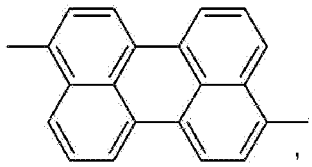 ,

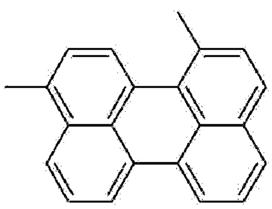 , 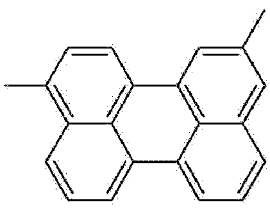 , 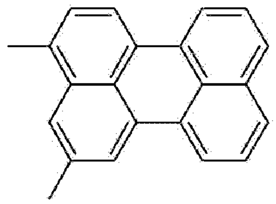 ,

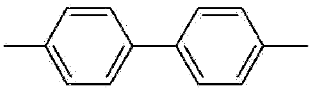 , 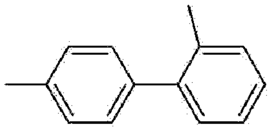 , 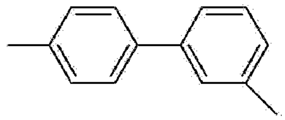 ,

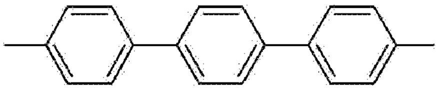 , 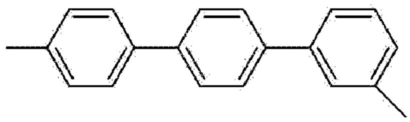 ,

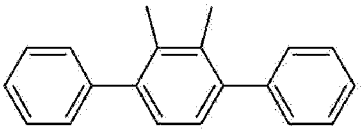 , 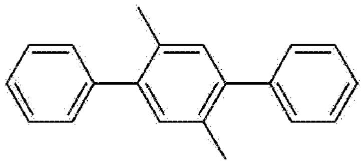 ,

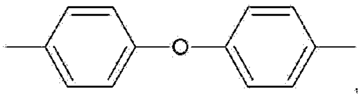 , 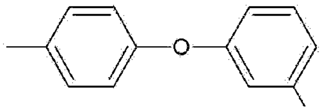 , 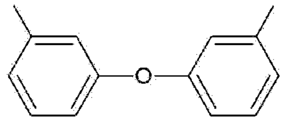 ,

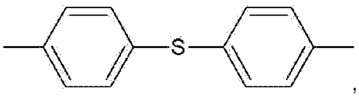 , 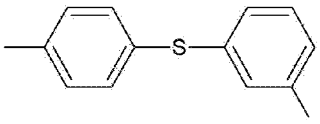 , 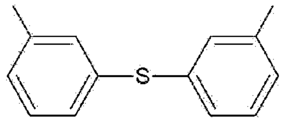 ,

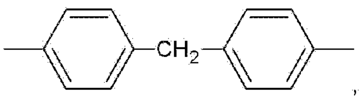 , 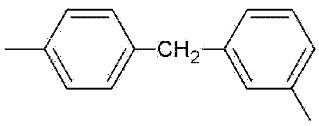 , 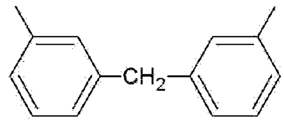 ,

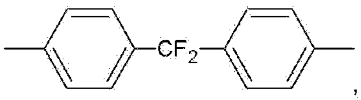 , 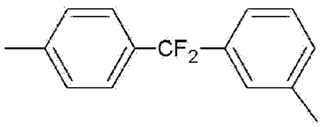 , 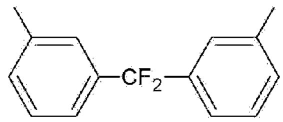 ,

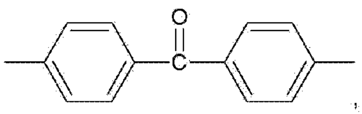 , 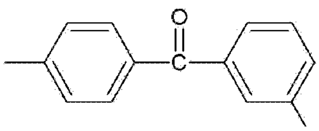 , 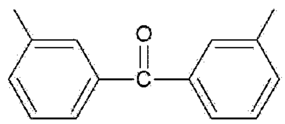 ,

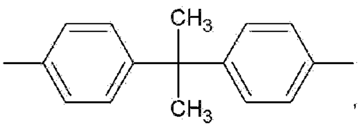 , 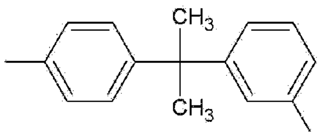 , 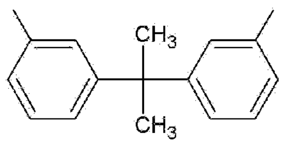 ,

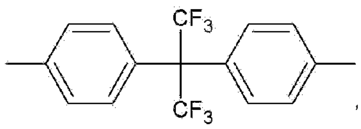 , 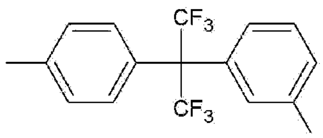 , 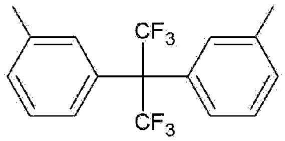 ,

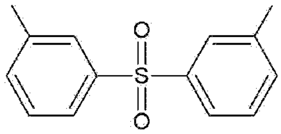 , 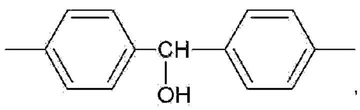 , 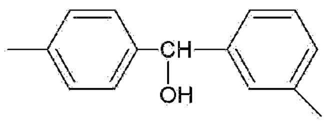 ,

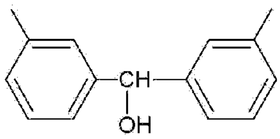 , 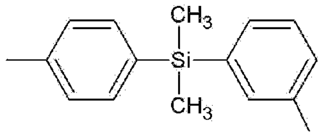 , 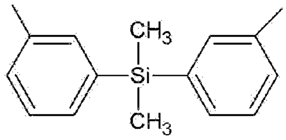 ,

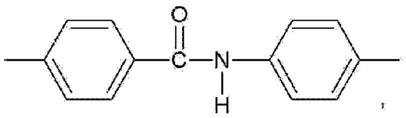 , 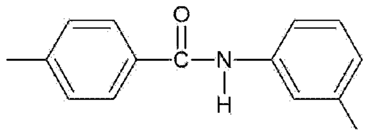 ,

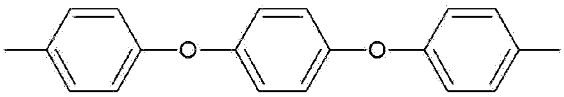 , 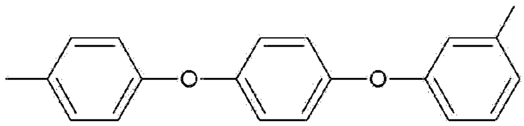 ,

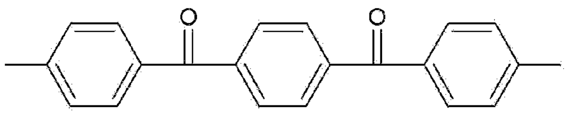 , 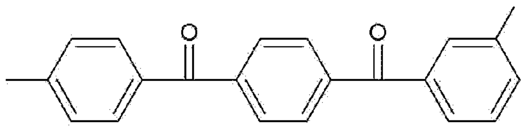 ,

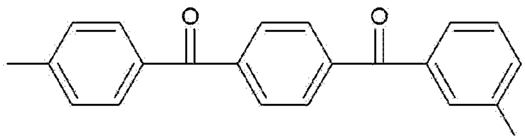 , 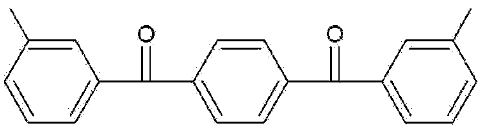 ,

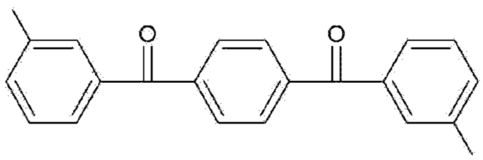 , 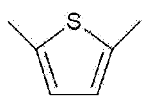 , 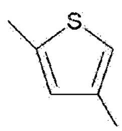 , 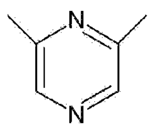 ,

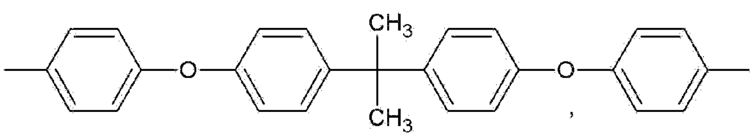 , , 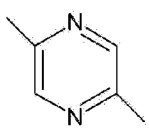 .

In the above Chemical Formulae 1 to 8 and Chemical Formulae 19 to 40, Q is selected from $C(CH_3)_2$, $C(CF_3)_2$, O, S, $S(=O)_2$, or C(=O).

In the above Chemical Formulae 19 to 32, examples of $Ar_1$' are the same as in those of $Ar_2$ of the above

Chemical Formulae 1 to 8 and Chemical Formulae 19 to 40.

In the above Chemical Formulae 1 to 8 and Chemical Formulae 33 to 40, $Ar_1$ may be a functional group represented by the following Chemical Formula A, B, or C, $Ar_2$ may be a functional group represented by the following Chemical Formula D or E, and Q may be $C(CF_3)_2$.

[Chemical Formula A]

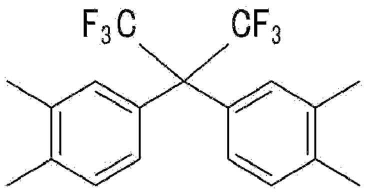

[Chemical Formula B]

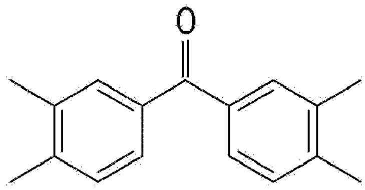

[Chemical Formula C]

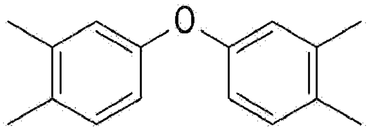

[Chemical Formula D]

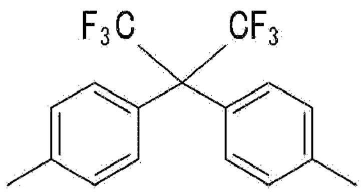

[Chemical Formula E]

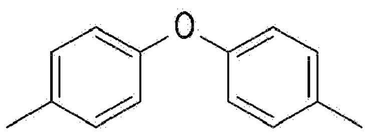

In the above Chemical Formulae 19 to 32, $Ar_1$ may be a functional group represented by the above Chemical Formula A, B, or C, $Ar_1$' may be a functional group represented by the following Chemical Formula F, G, or H, $Ar_2$ may be a functional group represented by the above Chemical Formula D or E, and Q may be $C(CF_3)_2$.

[Chemical Formula F]

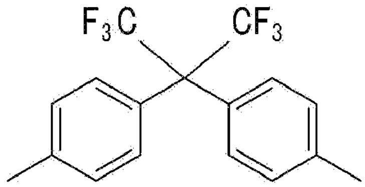

[Chemical Formula G]

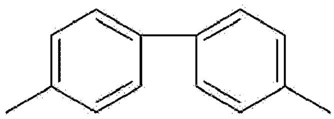

[Chemical Formula H]

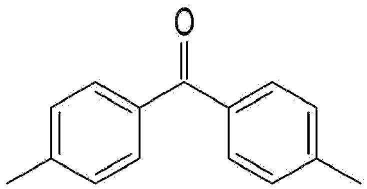

A mole ratio of each repeating unit in the polyamic acid copolymer including a repeating unit represented by the above Chemical Formulae 1 to 4 and an m:l mole ratio in Chemical Formula 5 to 8 range from 0.1:9.9 to 9.9:0.1. A mole ratio between repeating units in the polyimide copolymer including a repeating unit represented by the above Chemical Formulae 33 to 36 and an m:l mole ratio in Chemical Formula 37 to 40 range from 0.1:9.9 to 9.9:0.1.
The polymer may have a weight average molecular weight (Mw) of 10,000 to 200,000.
The polymer may be doped with an acid dopant. The acid dopant includes one selected from the group consisting of sulfuric acid, hydrochloric acid, phosphoric acid, nitric acid, $HBrO_3$, $HClO_4$, $HPF_6$, $HBF_6$, 1-methyl-3-methylimidazolium cations ($BMIM^+$), and a combination thereof.
The polymer may further include an additive selected from the group consisting of fumed silica, zirconium oxide, tetraethoxysilane, montmorillonite clay, and a combination thereof.
The polymer may further include an inorganic filler selected from the group consisting of phosphotungstic acid (PWA), phosphomolybdic acid, silicotungstic acid (SiWA), molybdophosphoric acid, silicomolybdic acid, phosphotin acid, zirconium phosphate (ZrP), and a combination thereof.
Still another embodiment of the present invention provides a method of preparing a polymer including obtaining a polyimide by imidization of the polyamic acid, and heat-treating the polyimide. The polymer includes picopores.
Yet another embodiment of the present invention provides a method of preparing a polymer including a heat-treatment of the polyimide. The polymer includes picopores.
The heat treatment may be performed by increasing the temperature by 1 to 30°C/min up to 350 to 500°C, and then maintaining the temperature for 1 minute to 12 hours under an inert atmosphere. Specifically, the heat treatment may be performed by increasing the temperature by 5 to 20°C/minute to 350 to 450°C, and then maintaining the temperature for 1 hour to 6 hours under an inert atmosphere.
One embodiment of the present invention provides an article including the polymer. The article includes a sheet, a film, a powder, a layer, or a fiber.
The article includes picopores that form a three-dimensional network structure where at least two picopores are three-dimensionally connected to have an hourglass-shaped structure forming a narrow valley at connection parts.
Hereinafter, further embodiments of the present invention will be described in detail.

## BRIEF DESCRIPTION OF THE DRAWINGS

FIG. 1 shows two types of changes in chain structure occurring during thermal rearrangement.

FIG. 2 shows FT-IR spectra of polymers according to Example 3 and Comparative Example 1.
FIG. 3 shows FT-IR spectra of polymers according to Example 9 and Comparative Example 2.
FIG. 4 shows FT-IR spectra of polymers according to Example 10 and Comparative Example 3.
FIG. 5 is a TGA/MS graph of polyhydroxyimide of Comparative Example 1 and of polybenzoxazole of Examples 1, 3, and 4.
FIG. 6 is a TGA/MS graph of a polymer (precursor of a polymer of Example 9) of Comparative Example 2 and a polymer of Example 9.
FIG. 7 is a TGA/MS graph of polyaminoimide (precursor of a polymer of Example 10) of Comparative Example 3 and a polymer of Example 10.
FIG. 8 shows nitrogen ($N_2$) adsorption/desorption isotherms of polymers according to Examples 3, 9, and 10 at -196°C.
FIG. 9 shows nitrogen ($N_2$) adsorption/desorption isotherms of polymers according to Examples 3, 5, and 8 at -196°C.
FIG. 10 is a graph showing pore radius distribution of polymers of Examples 1 to 3 and Comparative Example 1 measured by PALS.
FIG. 11 is a graph showing oxygen permeability (Barrer) and oxygen/nitrogen selectivity of flat membranes prepared by using polymers of Examples 1 to 11, Examples 18 to 22, and Examples 24 to 34 of the present invention, and polymers of Comparative Examples 1 to 7 and Comparative Examples 11 to 13 (the numbers 1 to 11, 18 to 22, and 24 to 34 indicate Examples 1 to 11, Examples 18 to 22, and Examples 24 to 34, respectively, and the numbers 1' to 7' and 11' to 13' indicate Comparative Examples 1 to 7 and Comparative Examples 11 to 13, respectively).
FIG. 12 is a graph showing carbon dioxide permeability (Barrer) and carbon dioxide/methane selectivity for flat membranes prepared by using polymers of Examples 1 to 11, 18 to 22, and 24 to 34 of the present invention, and polymers of Comparative Examples 1 to 7 and 11 to 13 (the numbers 1 to 11, 18 to 22, and 24 to 34 indicate Examples 1 to 11, 18 to 22, and 24 to 34, respectively, and the numbers 1' to 7' and 11' to 13' indicate Comparative Examples 1 to 7 and 11 to 13, respectively).

## DETAILED DESCRIPTION OF THE EMBODIMENTS

Exemplary embodiments of the present invention will hereinafter be described in detail. However, these embodiments are only exemplary, and the present invention is not limited thereto.

The term "picopore" refers to a pore having an average diameter of hundreds of picometers, and in one embodiment, having an average diameter of 100 picometers to 1000 picometers.

As used herein, when a specific definition is not provided, the term "substituted" refers to a compound or a functional group where hydrogen is substituted with at least one substituent selected from the group consisting of a C1 to C10 alkyl group, a C1 to C10 alkoxy group, a C1 to C10 haloalkyl group, and a C1 to C10 haloalkoxy group.

As used herein, when a definition is not otherwise provided, the term "combination" refers to a mixture or copolymer. The term "copolymerization" refers to block polymerization or random polymerization, and the term "copolymer" refers to a block copolymer or a random copolymer.

The polymer according to one embodiment of the present invention includes a polymer derived from polyamic acid or a polyimide having picopores. The polyamic acid and the polyimide include a repeating unit obtained from an aromatic diamine including at least one ortho-positioned functional group with respect to an amine group and a dianhydride.

The picopores have an hourglass-shaped structure forming a narrow valley at connection parts of at least two picopores. Thereby, the polymer has high porosity to permeate or selectively separate low molecules, for example gases, efficiently.

The ortho-positioned functional group with respect to the amine group may be OH, SH, or $NH_2$.

The polyamic acid and the polyimide may be prepared by a generally-used method in this art. For example, the polyamic acid may be prepared by reacting an aromatic diamine including ortho-positioned OH, SH, or $NH_2$ with respect to the amine group, and tetracarboxylic anhydride. The polyimide may be prepared by thermal solution imidization or chemical imidization of the obtained polyamic acid. The thermal solution imidization and chemical imidization are described hereinafter.

The polyamic acid is imidized and then thermally rearranged, and the polyimide is thermally rearranged into a polymer such as polybenzoxazole, polybenzthiazole, or polypyrrolone having a high fractional free volume in accordance with a method that will be described below.

The polymer derived from polyamic acid or a polyimide has a fractional free volume (FFV) of 0.18 to 0.40, and interplanar distance (d-spacing) of 580pm to 800pm measured by X-ray diffraction (XRD). The polymer derived from polyamic acid or a polyimide permeates or selectively separates low molecules.

The polymer derived from polyamic acid or a polyimide includes picopores. The picopores have an average diameter of 600pm to 800pm, without limitation. The picopores have a full width at half maximum (FWHM) of 10pm to

40pm measured by positron annihilation lifetime spectroscopy (PALS). This indicates that the produced picopores have a significantly uniform size. The PALS measurement is performed by obtaining time difference, $T_1$, $T_2$, $T_3$ between $\gamma_0$ of 1.27MeV produced by radiation of positrons produced from $^{22}Na$ isotope and $\gamma_1$ and $\gamma_2$ of 0.511MeV produced by annihilation thereafter.

The polymer derived from polyamic acid or a polyimide has a BET (Brunauer-Emmett-Teller) surface area of $100m^2/g$ to $1000m^2/g$. When the BET surface area is within the range, a surface area that is appropriate for permeability or selective separation of low molecules can be obtained.

The polyamic acid may be selected from the group consisting of polyamic acid including a repeating unit represented by the following Chemical Formulae 1 to 4, polyamic acid copolymers including a repeating unit represented by the following Chemical Formulae 5 to 8, copolymers thereof, and blends thereof, but is not limited thereto.

[Chemical Formula 1]

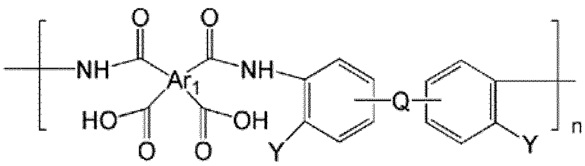

[Chemical Formula 2]

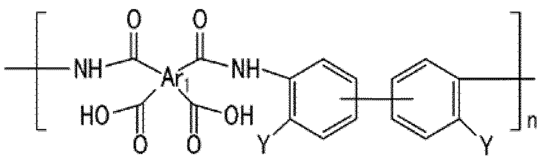

[Chemical Formula 3]

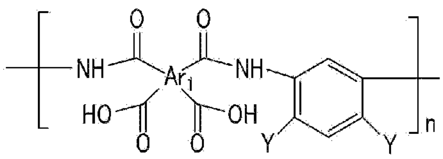

[Chemical Formula 4]

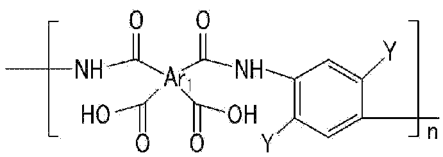

[Chemical Formula 5]

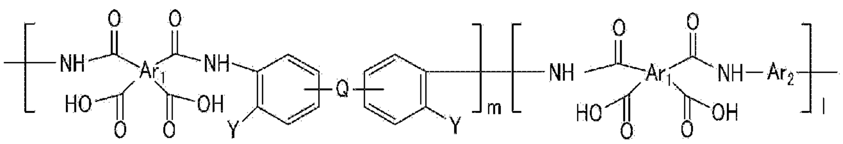

[Chemical Formula 6]

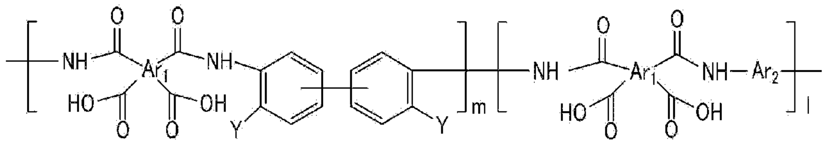

[Chemical Formula 7]

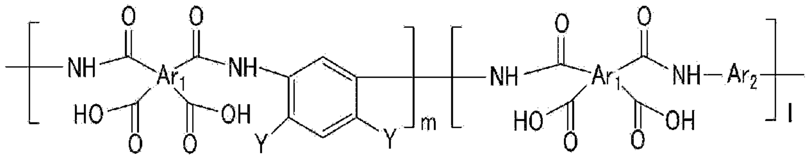

[Chemical Formula 8]

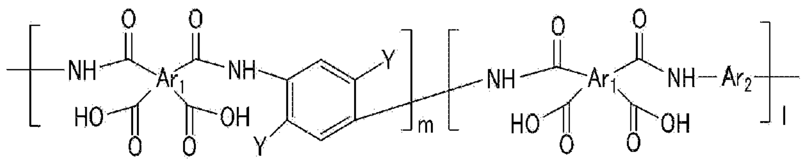

In the above Chemical Formulae 1 to 8,

$Ar_1$ is an aromatic group selected from a substituted or unsubstituted quadrivalent C6 to C24 arylene group and a substituted or unsubstituted quadrivalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH,

$Ar_2$ is an aromatic group selected from a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by single bond or a functional group selected from O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH,

Q is O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, C(=O)NH, $C(CH_3)(CF_3)$, or a substituted or unsubstituted phenylene group (where the substituted phenylene group is a phenylene group substituted with a C1 to C6 alkyl group or a C1 to C6 haloalkyl group), where the Q is linked with aromatic groups with m-m, m-p, p-m, or p-p positions,

Y is the same or different in each repeating unit and is independently selected from OH, SH, or $NH_2$,

n is an integer ranging from 20 to 200,

m is an integer ranging from 10 to 400, and

l is an integer ranging from 10 to 400.

Examples of the copolymers of the polyamic acid including repeating units represented by the above Chemical Formula 1 to 4 include polyamic acid copolymers including repeating units represented by the following Chemical Formulae 9 to 18.

[Chemical Formula 9]

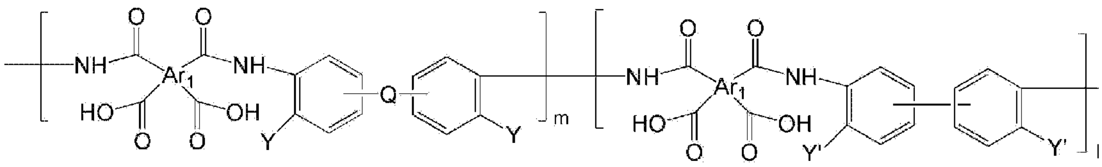

[Chemical Formula 10]

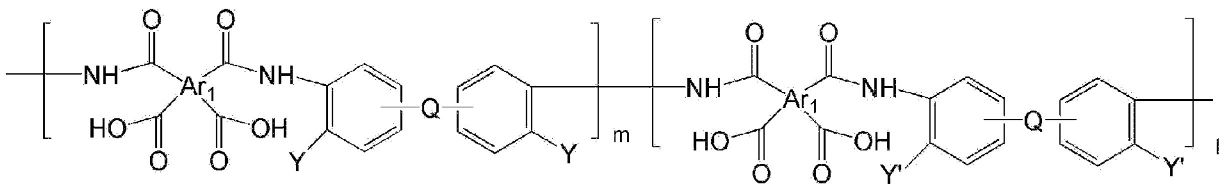

[Chemical Formula 11]

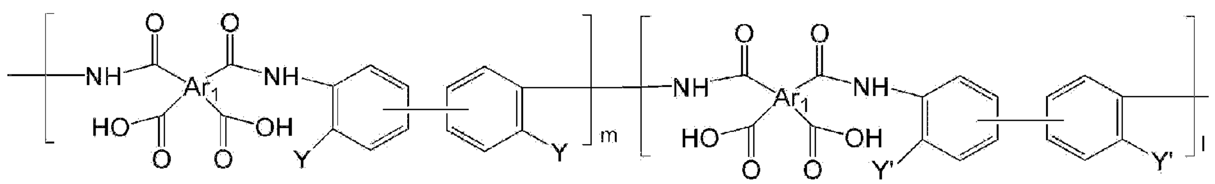

[Chemical Formula 12]

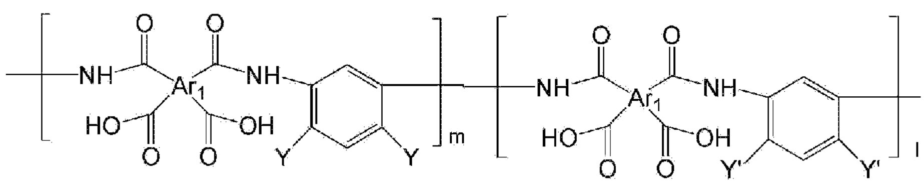

[Chemical Formula 13]

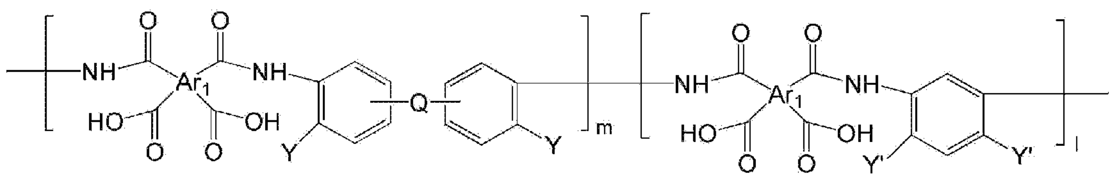

[Chemical Formula 14]

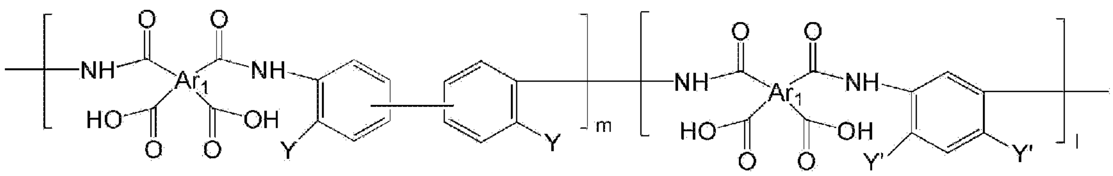

[Chemical Formula 15]

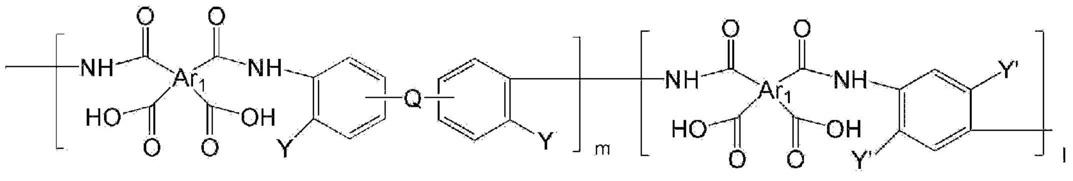

[Chemical Formula 16]

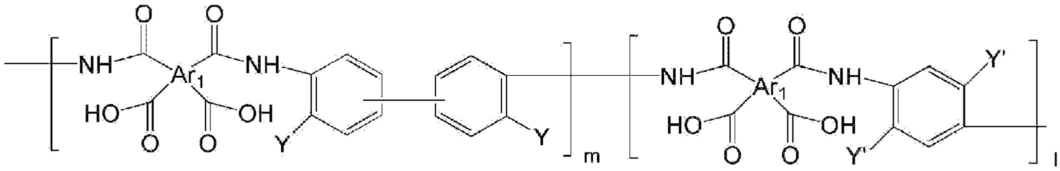

[Chemical Formula 17]

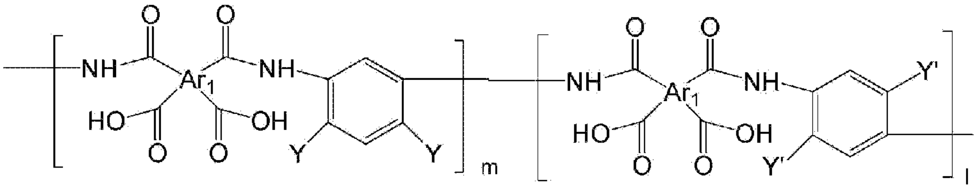

[Chemical Formula 18]

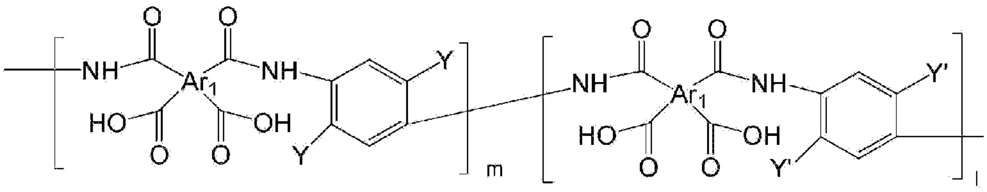

In the above Chemical Formulae 9 to 18,
$Ar_1$, Q, n, m, and l are the same as defined in the above Chemical Formulae 1 to 8, and
Y and Y' are the same or different, and are independently OH, SH, or $NH_2$.

In the above Chemical Formulae 1 to 18, $Ar_1$ may be selected from one of the following Chemical Formulae, but is not limited thereto.

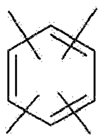 , 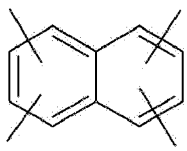 , 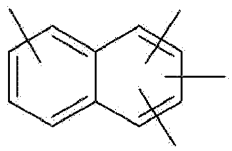 , 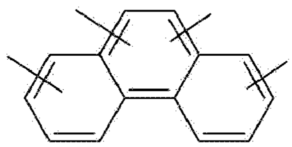 ,

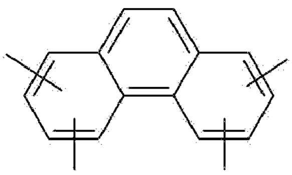 , 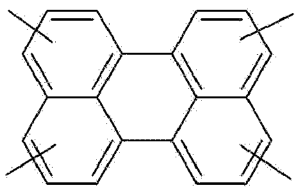 , 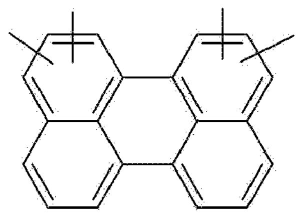 ,

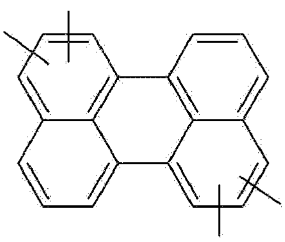 , 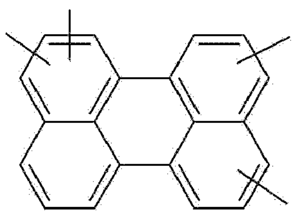 , 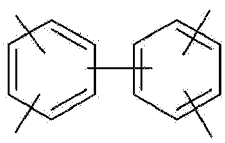 ,

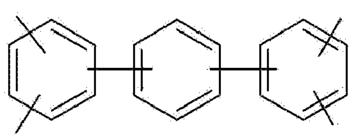,
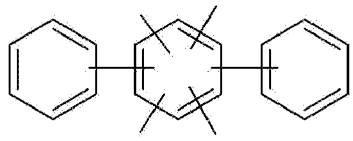,
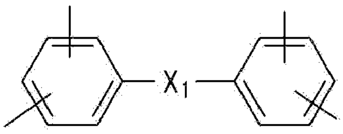,
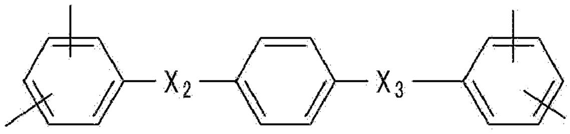,
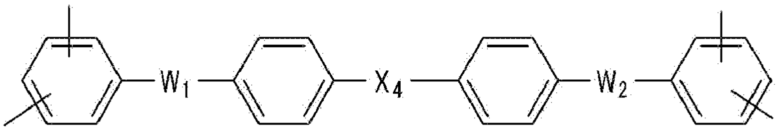,
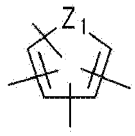,
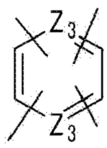

In the above Chemical Formulae,

$X_1$, $X_2$, $X_3$, and $X_4$ are the same or different, and are independently O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH,

$W_1$ and $W_2$ are the same or different, and are independently O, S, or C(=O),

$Z_1$ is O, S, $CR_1R_2$, or $NR_3$, where $R_1$, $R_2$, and $R_3$ are the same or different and are independently hydrogen or a C1 to C5 alkyl group, and

$Z_2$ and $Z_3$ are the same or different and are independently N or $CR_4$, where $R_4$ is hydrogen or a C1 to C5 alkyl group, provided that both $Z_2$ and $Z_3$ are not $CR_4$.

In the above Chemical Formulae 1 to 18, specific examples of An may be selected from one of the following Chemical Formulae, but are not limited thereto.

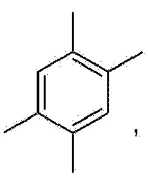,
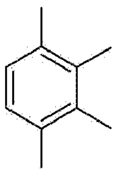,
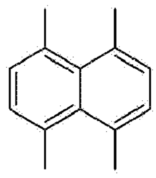,
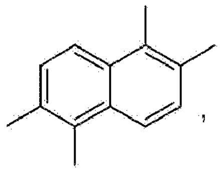,
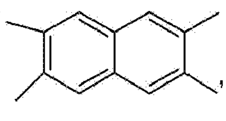,

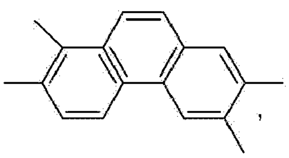,
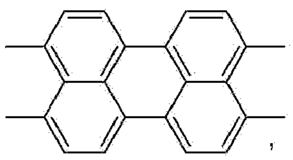,
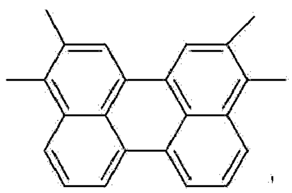,

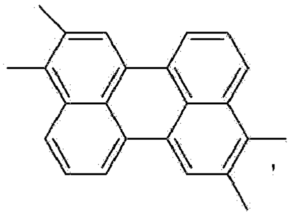,
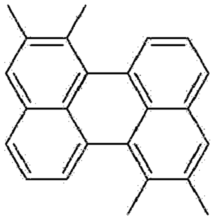,
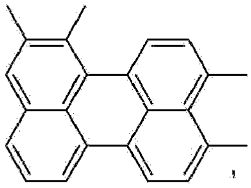,

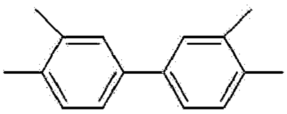,
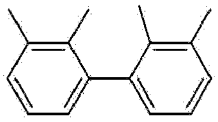,
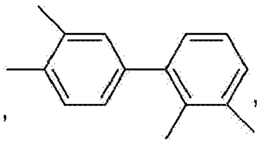,

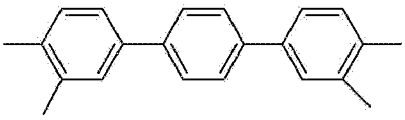,
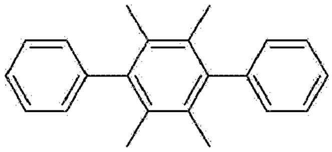,

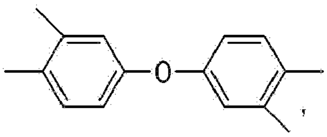,
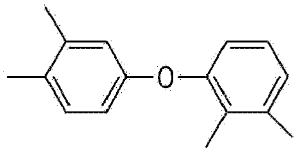,
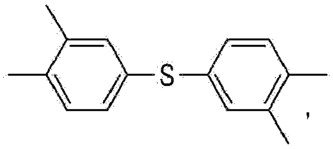,

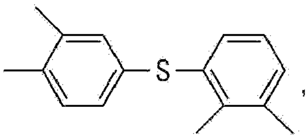,
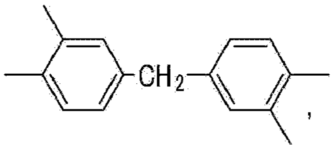,
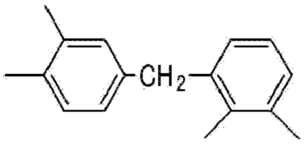,

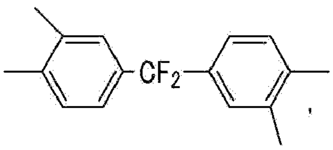,
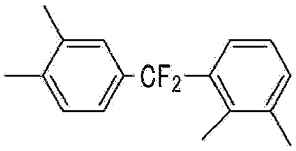,
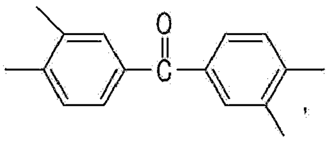,

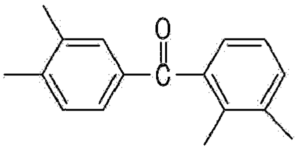,
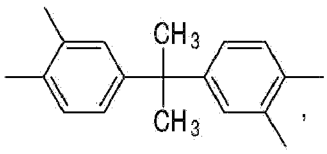,
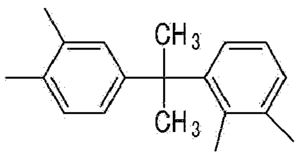,

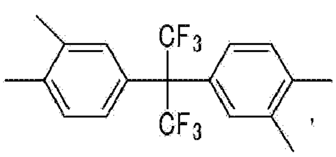,
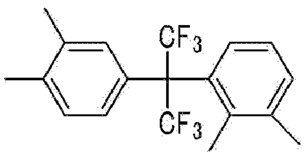,
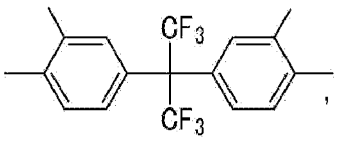,

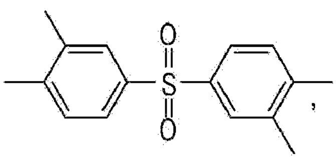,
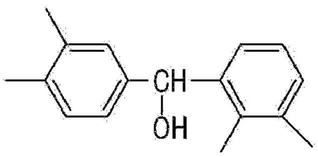,
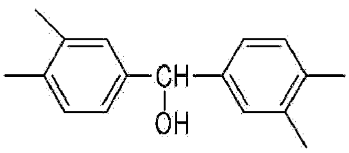,

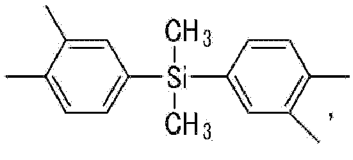 , 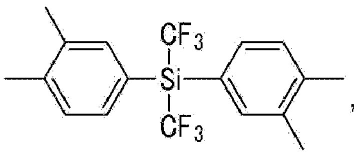 , 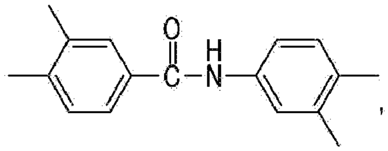 ,

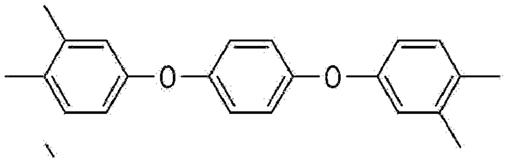 , 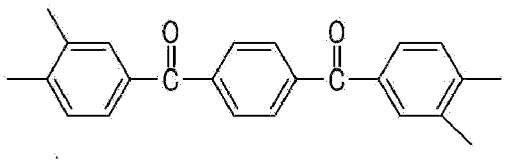 ,

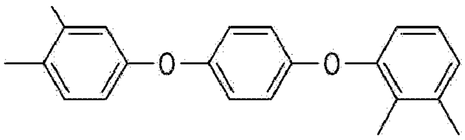 , 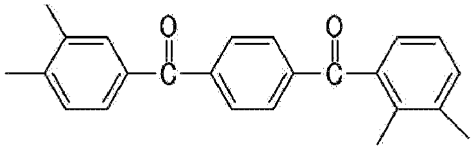 ,

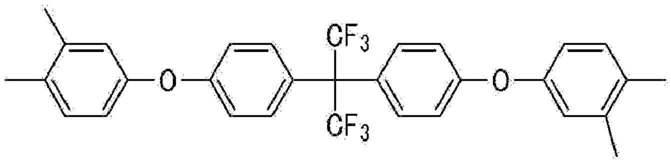 , 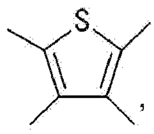 , 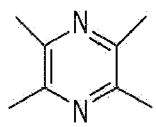 ,

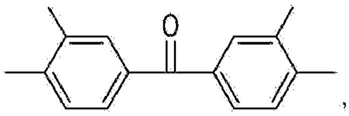 , 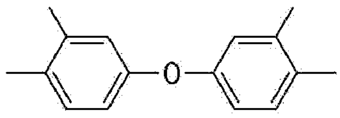

In the above Chemical Formulae 1 to 18, $Ar_2$ may be selected from one of the following Chemical Formulae, but is not limited thereto.

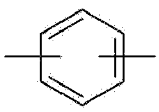 , 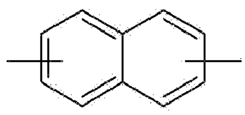 , 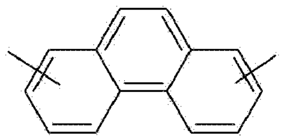 ,

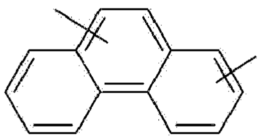 , 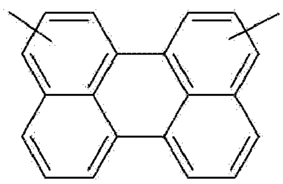 , 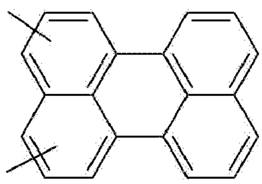 ,

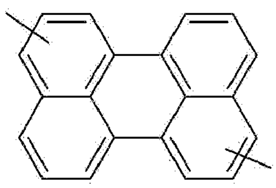 , 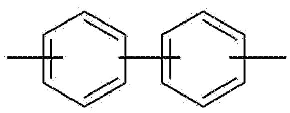

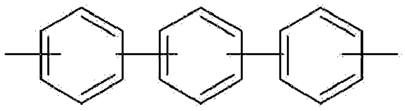 , 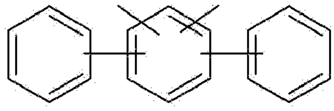 ,

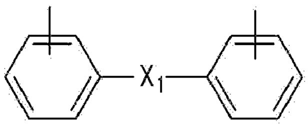 , 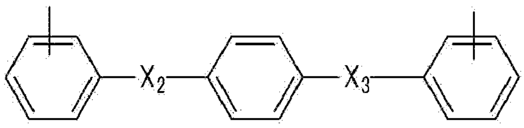 ,

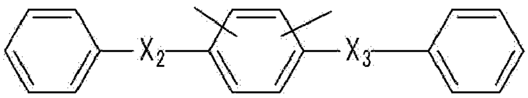 ,

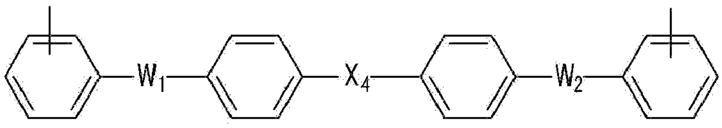 , 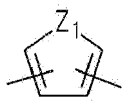 ,

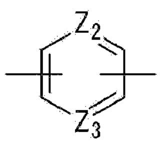

In the above Chemical Formulae,
$X_1$, $X_2$, $X_3$, and $X_4$ are the same or different and are independently O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH,
$W_1$ and $W_2$ are the same or different and are independently O, S, or C(=O),
$Z_1$ is O, S, $CR_1R_2$ or $NR_3$, where $R_1$, $R_2$ and $R_3$ are the same or different and are independently hydrogen or a C1 to C5 alkyl group, and
$Z_2$ and $Z_3$ are the same or different and are independently N or $CR_4$, where $R_4$ is hydrogen or a C1 to C5 alkyl group, provided that both $Z_2$ and $Z_3$ are not $CR_4$.

In the above Chemical Formulae 1 to 18, specific examples of $Ar_2$ may be selected from one of the following Chemical Formulae, but are not limited thereto.

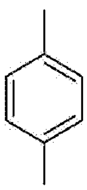 , 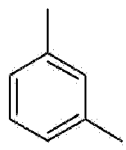 , 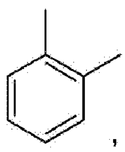 , 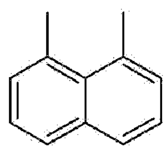 , 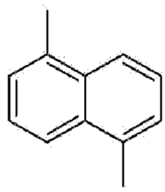 ,

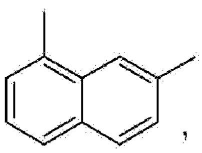 , 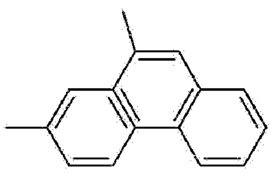 , 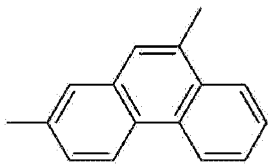 ,

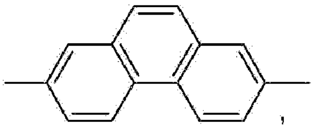 , 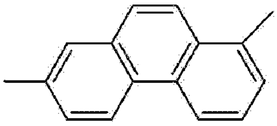 , 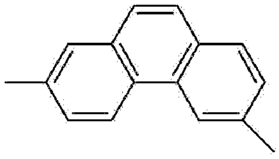 ,

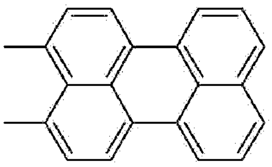 , 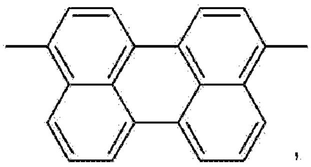 , 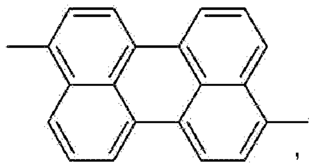 ,

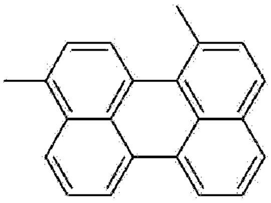 , 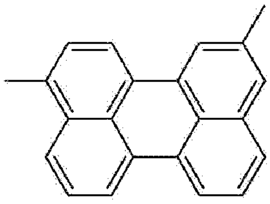 , 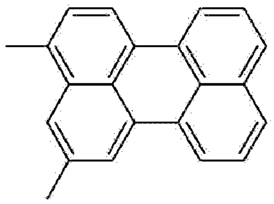 ,

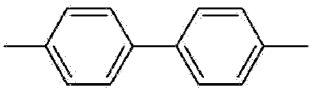 , 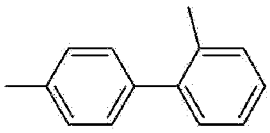 , 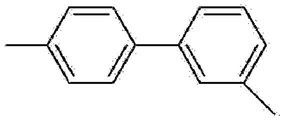 ,

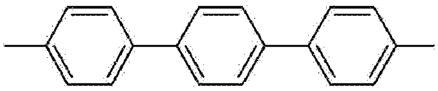 , 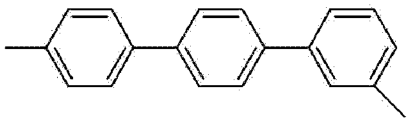 ,

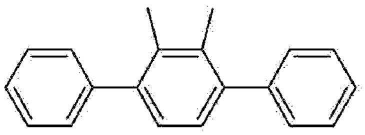 , 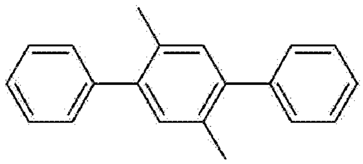 ,

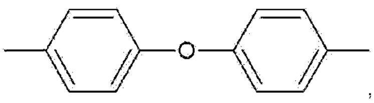 , 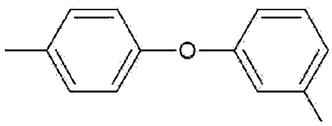 , 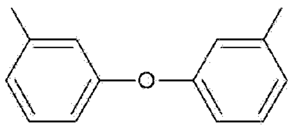 ,

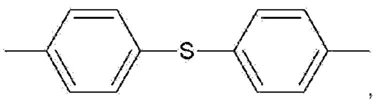 , 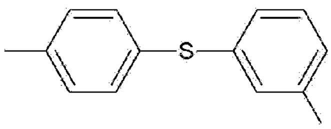 , 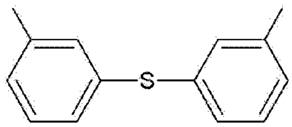 ,

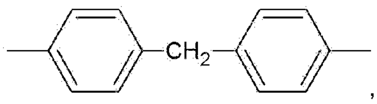, 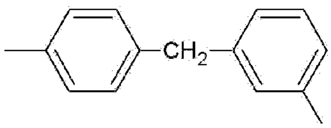, 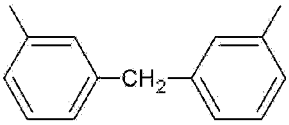,

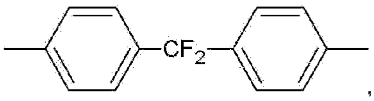, 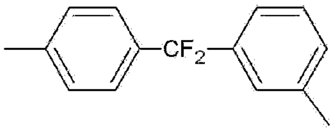, 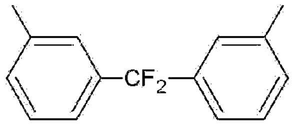,

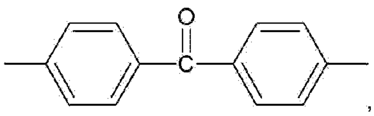, 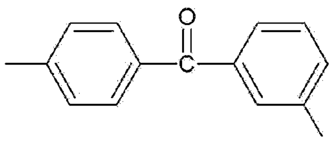, 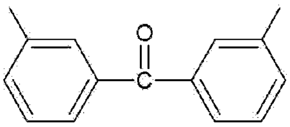,

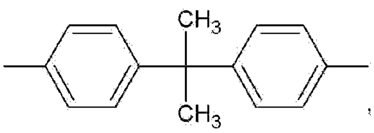, 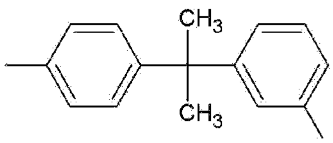, 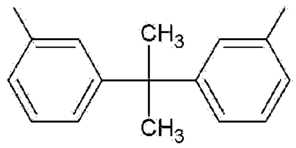,

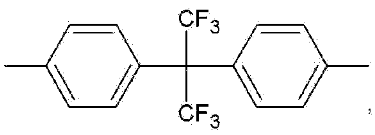, 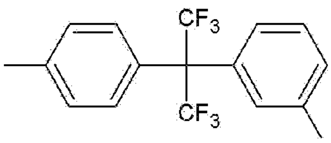, 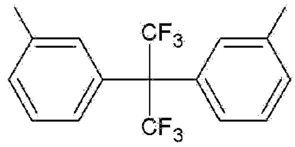,

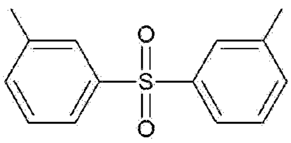, 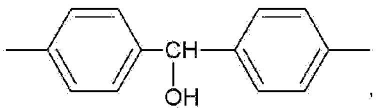, 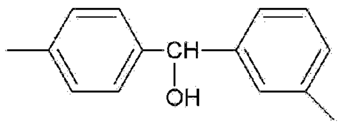,

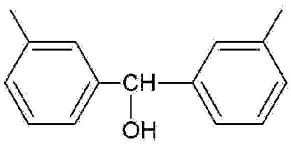, 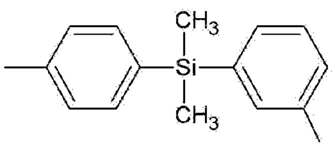, 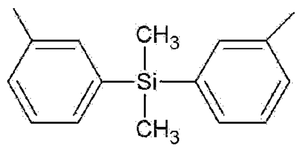,

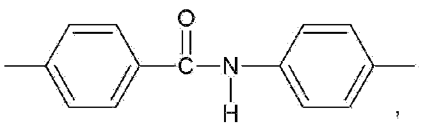, 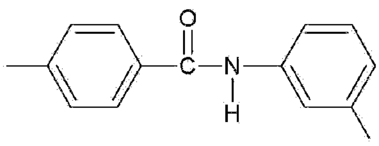,

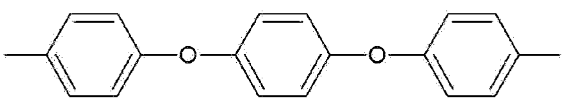, 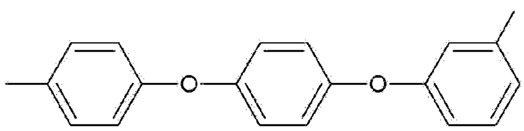,

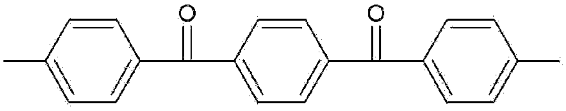,
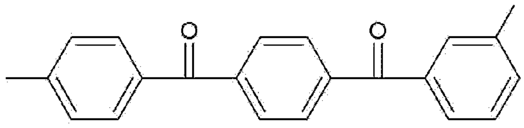,
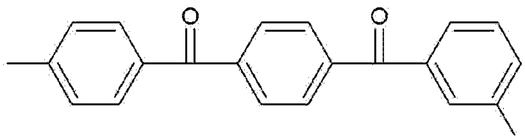,
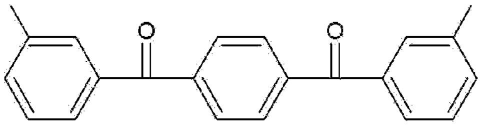,
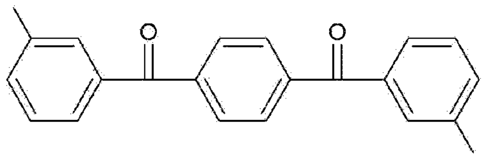,
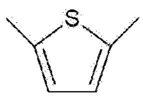,
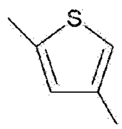,
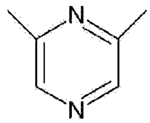,
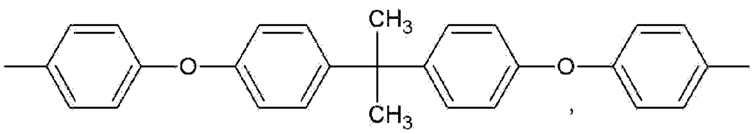,
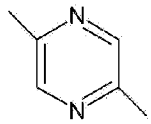.

In the above Chemical Formulae 1 to 18, Q is selected from $C(CH_3)_2$, $C(CF_3)_2$, O, S, $S(=O)_2$, and C(=O), but is not limited thereto.

In the above Chemical Formulae 1 to 18, $Ar_1$ may be a functional group represented by the following Chemical Formula A, B, or C, $Ar_2$ may be a functional group represented by the following Chemical Formula D or E, and Q may be $C(CF_3)_2$, but are not limited thereto..

[Chemical Formula A]

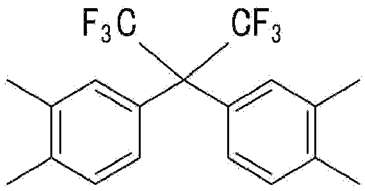

[Chemical Formula B]

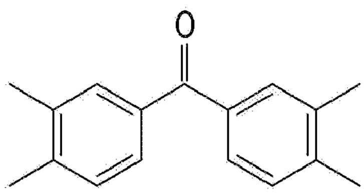

[Chemical Formula C]

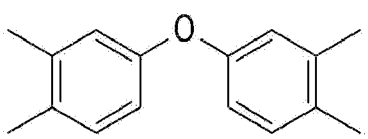

[Chemical Formula D]

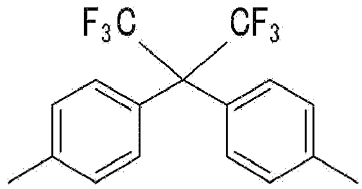

[Chemical Formula E]

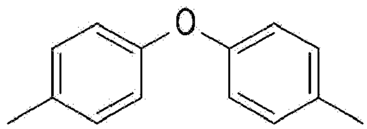

The polyimide may be selected from the group consisting of a polyimide including a repeating unit represented by the following Chemical Formulae 33 to 36, polyimide copolymers including a repeating unit represented by the following Chemical Formulae 37 to 40, copolymers thereof, and blends thereof, but is not limited thereto.

[Chemical Formula 33]

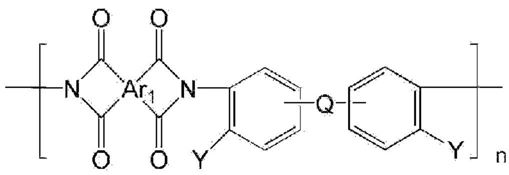

[Chemical Formula 34]

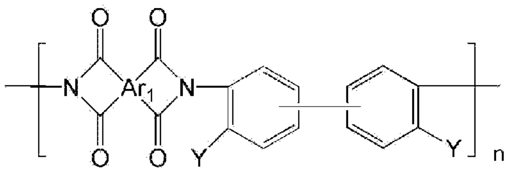

[Chemical Formula 35]

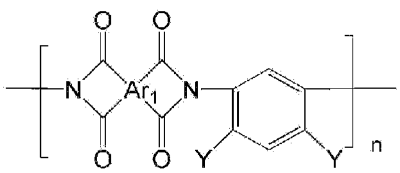

[Chemical Formula 36]

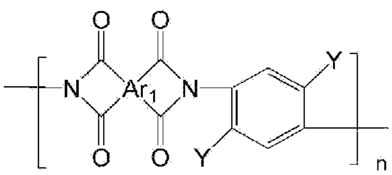

[Chemical Formula 37]

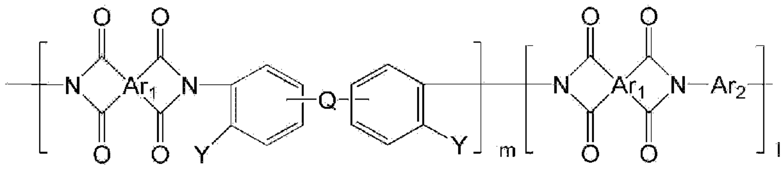

[Chemical Formula 38]

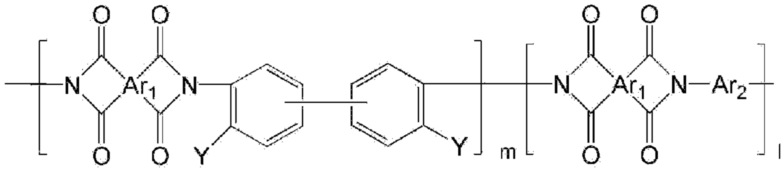

[Chemical Formula 39]

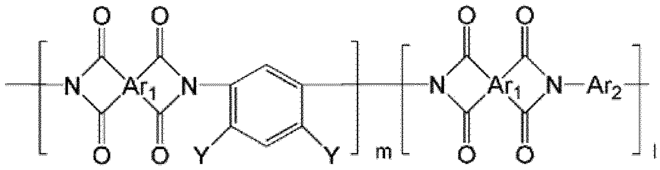

[Chemical Formula 40]

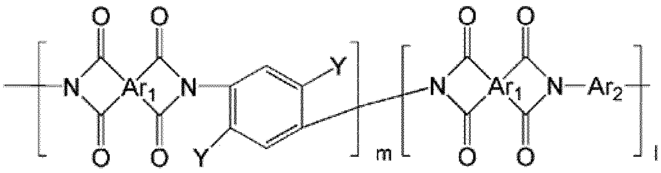

In the above Chemical Formulae 33 to 40,
$Ar_1$, $Ar_2$, Q, Y, n, m, and l are the same as $Ar_1$, $Ar_2$, Q, n, m, and l in the above Chemical Formulae 1 to 8.

In the above Chemical Formulae 33 to 40, examples of $Ar_1$, $Ar_2$, and Q are the same as examples of $Ar_1$, $Ar_2$, and Q in the above Chemical Formulae 1 to 18.

Examples of the polyimide copolymer including repeating units represented by the above Chemical Formulae 33 to 36 include polyimide copolymers including repeating units represented by the following Chemical Formulae 41 to 50.

[Chemical Formula 41]

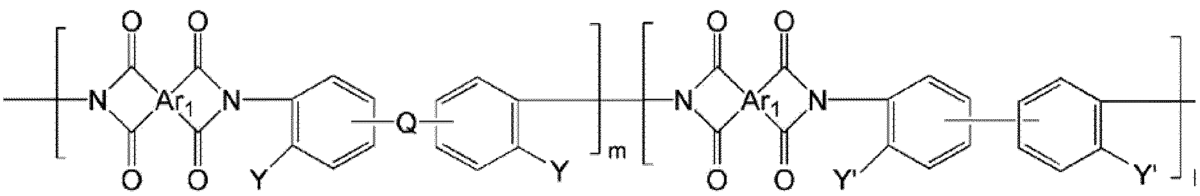

[Chemical Formula 42]

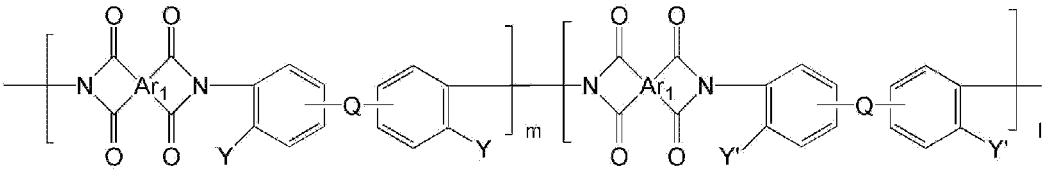

[Chemical Formula 43]

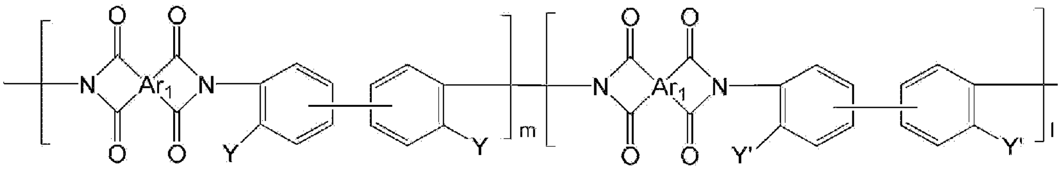

[Chemical Formula 44]

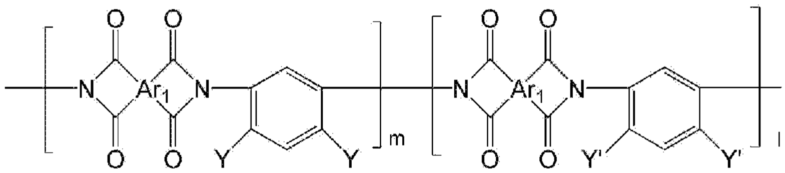

[Chemical Formula 45]

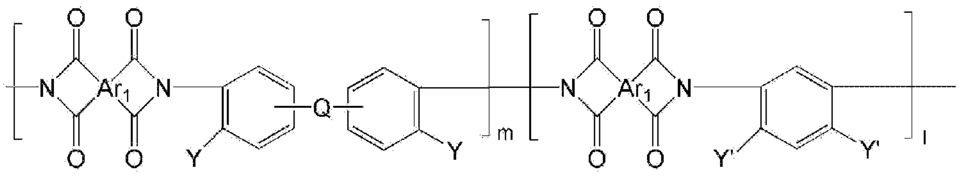

[Chemical Formula 46]

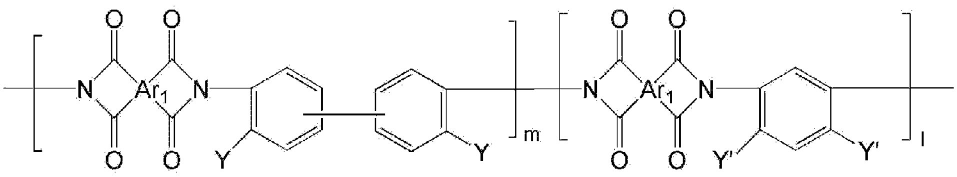

[Chemical Formula 47]

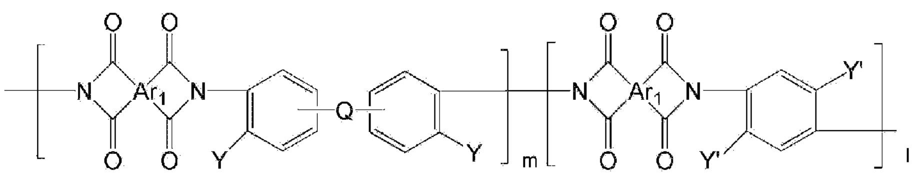

[Chemical Formula 48]

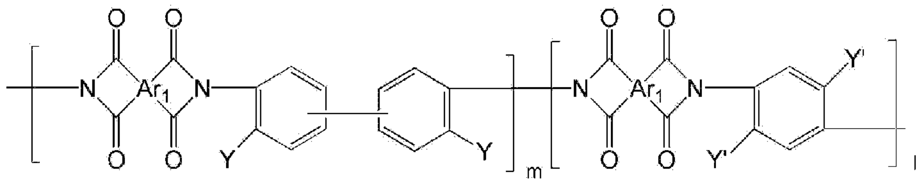

[Chemical Formula 49]

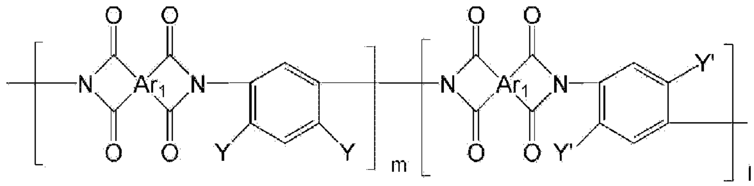

[Chemical Formula 50]

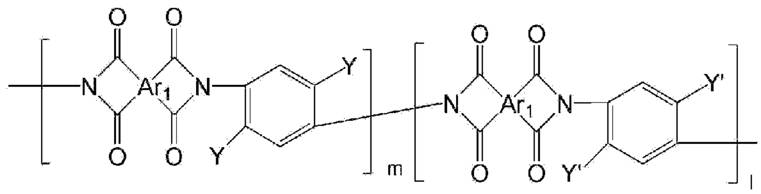

In the above Chemical Formulae 41 to 50,
$Ar_1$, Q, Y, Y', n, m, and l are the same as $Ar_1$, Q, Y, Y', n, m, and l of the above Chemical Formulae 1 to 18.

In the above Chemical Formulae 41 to 50, examples of $Ar_1$ and Q are the same as examples of $Ar_1$ and Q of the above Chemical Formulae 1 to 18.

The polyamic acid including a repeating unit according to the above Chemical Formulae 1 to 4, and the polyimide including a repeating unit according to above Chemical Formulae 33 to 36 may be prepared by a generally-used method in this art. For example, the monomer may be prepared by reacting tetracarboxylic anhydride and an aromatic diamine including OH, SH, or $NH_2$.

The polyamic acid including a repeating unit represented by Chemical Formulae 1 to 4 are imidized and thermally rearranged through a preparation process that will be mentioned later, to be converted into polybenzoxazole, polybenzothiazole, or polypyrrolone having a high fractional free volume, respectively. The polyimides including a repeating unit represented by Chemical Formulae 33 to 36 are thermally rearranged through a preparation process that will be mentioned later, to be converted into polybenzoxazole, polybenzothiazole, or polypyrrolone having a high fractional free volume, respectively. Here, a polymer including polybenzoxazole derived from polyhydroxyamic acid in which Y of Chemical Formulae 1 to 4 is OH or polyhydroxyimide in which Y of Chemical Formulae 33 to 36 is OH, polybenzothiazole derived from polythiolamic acid in which Y of Chemical Formulae 1 to 4 is SH or polythiolimide in which Y of Chemical Formulae 33 to 36 is SH, or polypyrrolone derived from polyaminoamic acid in which Y of Chemical Formulae 1 to 4 is $NH_2$ or polyaminoimide in which Y of Chemical Formulae 33 to 36 is $NH_2$ may be prepared.

In addition, it is possible to control the physical properties of the polymer thus prepared by controlling the mole ratio between the repeating units of polyamic acid copolymers including a repeating unit represented by Chemical Formulae 1 to 4, or polyimide copolymers including a repeating unit represented by Chemical Formulae 33 to 36.

The polyamic acid copolymers including a repeating unit represented by Chemical Formulae 5 to 8 are imidized and thermally rearranged through a preparation process that will be mentioned later. The polyimide copolymers including a repeating unit represented by Chemical Formulae 37 to 40 are thermally rearranged through a preparation process that will be mentioned later. Here, the polyamic acid copolymer including a repeating unit represented by Chemical Formulae 5 to 8 or the polyimide copolymer including a repeating unit represented by Chemical Formulae 37 to 40 are converted into poly(benzoxazole-imide) copolymer, poly(benzothiazole-imide) copolymer, or poly(pyrrolone-imide) copolymer, each having a high fractional free volume, and therefore the polymers including the copolymers mentioned above may be prepared. In addition, it is possible to control the physical properties of the polymer thus prepared by controlling the copolymerization ratio (mole ratio) between blocks that will be thermally converted into polybenzoxazole,

polybenzothiazole, or polypyrrolone by intramolecular and intermolecular rearrangement, and blocks that will be imidized into polyimide.

The polyamic acid copolymers including a repeating unit represented by Chemical Formulae 9 to 18 are imidized and thermally rearranged through a preparation process that will be mentioned later. The polyamic acid copolymers including a repeating unit represented by Chemical Formulae 41 to 50 are thermally rearranged through a preparation process that will be mentioned later. Herein, the polyamic acid copolymer including a repeating unit represented by Chemical Formulae 9 to 18 or the polyimide copolymer including a repeating unit represented by Chemical Formulae 41 to 50 are converted into polybenzoxazole copolymer, polybenzothiazole copolymer, and polypyrrolone copolymer, each having a high fractional free volume, and therefore the polymers including the copolymers mentioned above may be prepared. In addition, it is it is possible to control the physical properties of the polymer thus prepared by controlling the mole ratio between the blocks that will be thermally rearranged into polybenzoxazole, polybenzothiazole, and polypyrrolone.

Preferably, a mole ratio between the repeating units of the polyamic acid copolymers including a repeating unit represented by Chemical Formulae 1 to 4, or a copolymerization ratio (mole ratio) m:l between blocks in the polyamic acid copolymers including a repeating unit represented by Chemical Formulae 5 to 18, may be controlled to be from 0.1:9.9 to 9.9:0.1, more preferably 2:8 to 8:2, and most preferably 5:5.

Preferably, a mole ratio between the repeating units of the polyimide copolymers including a repeating unit represented by Chemical Formulae 33 to 36, or a copolymerization ratio (mole ratio) m:l between blocks in the polyimide copolymers including a repeating unit represented by Chemical Formulae 37 to 50, may be controlled to be from 0.1:9.9 to 9.9:0.1, more preferably 2:8 to 8:2, and most preferably 5:5.

The copolymerization ratio affects the morphology of the thus-prepared thermally rearranged polymer. Since such morphologic change is associated with pore characteristics, heat resistance, and surface hardness. When the mole ratio and the copolymerization ratio are within the range, the prepared polymer may effectively permeate or selectively separate the low molecules, and have excellent heat resistance, chemical resistance, and surface hardness.

The polymer derived from polyamic acid or a polyimide may include compounds including a repeating unit represented by one of the following Chemical Formulae 19 to 32 or copolymers thereof, but is not limited thereto.

[Chemical Formula 19]

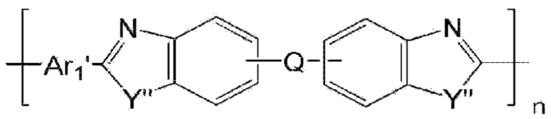

[Chemical Formula 20]

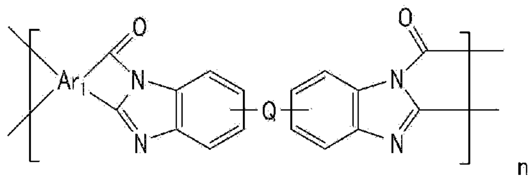

[Chemical Formula 21]

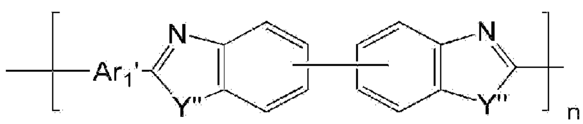

[Chemical Formula 22]

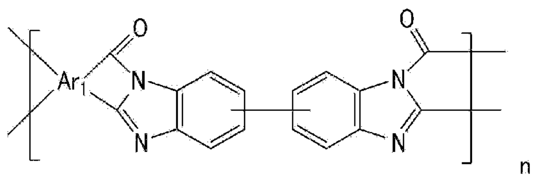

[Chemical Formula 23]

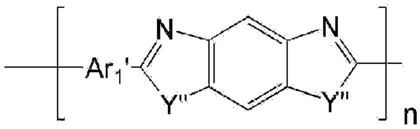

[Chemical Formula 24]

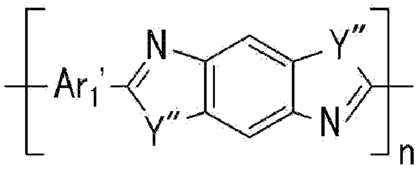

[Chemical Formula 25]

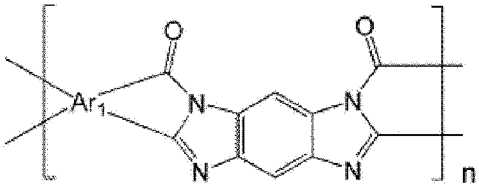

[Chemical Formula 26]

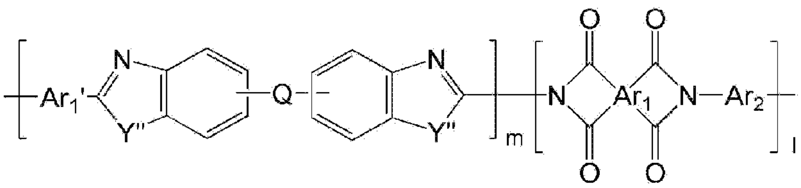

[Chemical Formula 27]

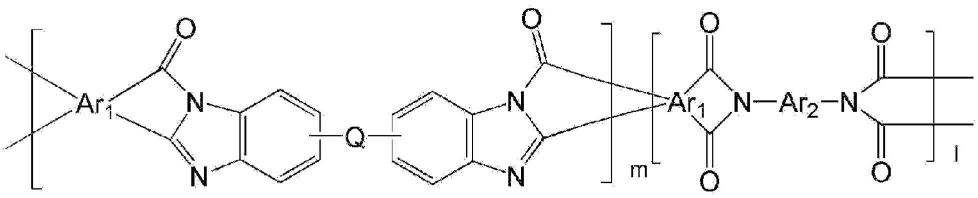

[Chemical Formula 28]

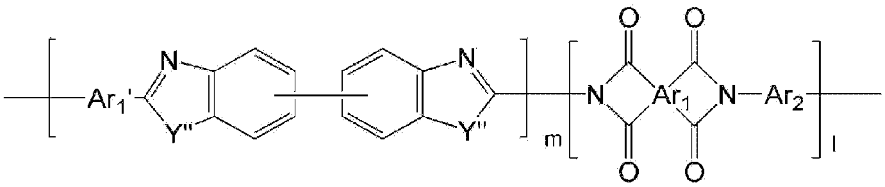

[Chemical Formula 29]

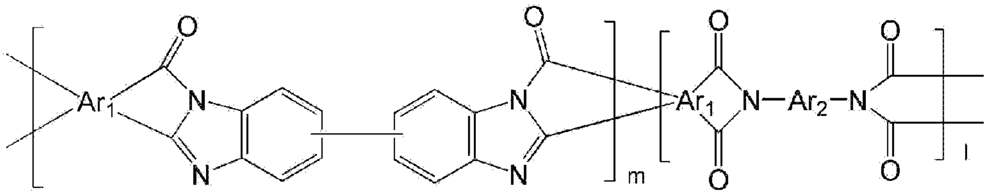

[Chemical Formula 30]

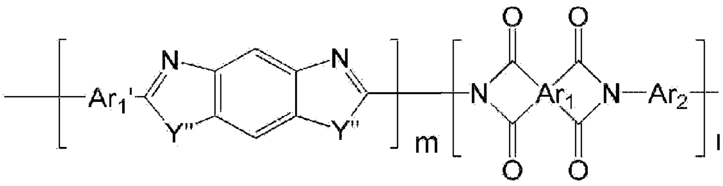

[Chemical Formula 31]

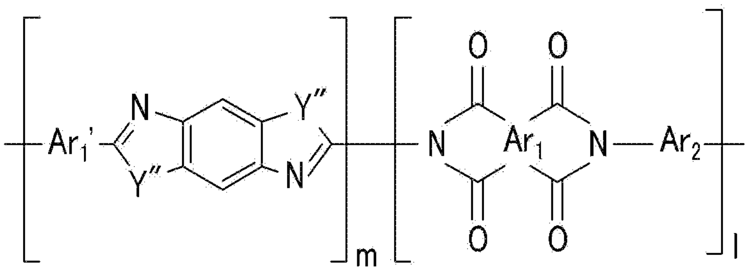

[Chemical Formula 32]

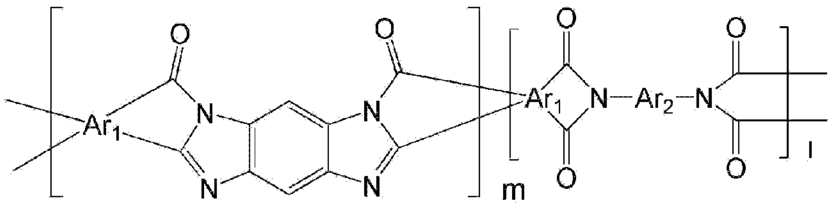

In the above Chemical Formulae 19 to 32,

$Ar_1$, $Ar_2$, Q, n, m, and l are the same as $Ar_1$, $Ar_2$, Q, n, m, and l in the above Chemical Formulae 1 to 8,

$Ar_1$' is an aromatic group selected from a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$ (where $1 \leq p \leq 10$), $(CF_2)_q$ (where $1 \leq q \leq 10$), $C(CH_3)_2$, $C(CF_3)_2$, or C(=O)NH, and

Y" is O or S.

Examples of $Ar_1$, $Ar_2$, and Q in the above Chemical Formulae 19 to 32 are the same as examples of $Ar_1$, $Ar_2$, and Q in the above Chemical Formulae 1 to 18.

In addition, examples of $Ar_1$' in the above Chemical Formulae 19 to 32 is the same as examples of $Ar_2$ in the above Chemical Formulae 1 to 18.

In the above Chemical Formulae 19 to 32, $Ar_1$ may be a functional group represented by the above Chemical Formula A, B, or C, $Ar_1$' may be a functional group represented by the following Chemical Formula F, G, or H, $Ar_2$ may be a functional group represented by the above Chemical Formula D or E, and Q may be $C(CF_3)_2$, but are not limited thereto.

[Chemical Formula F]

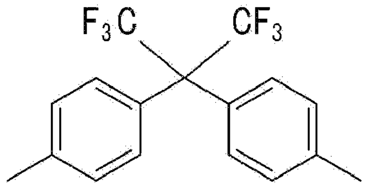

[Chemical Formula G]

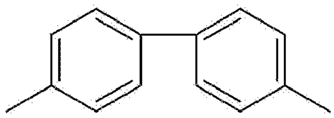

[Chemical Formula H]

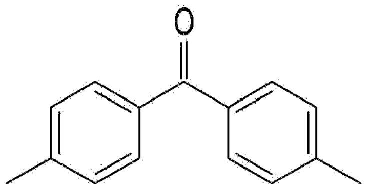

The polymer derived from polyamic acid or the polymer derived from a polyimide may be doped with an acid dopant. When it is doped with an acid dopant, the acid dopant may be presented in a pore of the polymer, and then the pore size and form of the polymer may be controlled, and thereby it is possible to control the physical properties of the polymer. For example, since the polymer is doped with an acid dopant, carbon dioxide permeability is decreased and carbon dioxide/methane is selectivity increased.

The doping with an acid dopant may be performed by impregnating the polymer with a solution including an acid dopant. It may be doped due to the hydrogen bond between an acid dopant and the polymer, but is not limited thereto.

The acid dopant includes one selected from the group consisting of sulfuric acid, hydrochloric acid, phosphoric acid, nitric acid, $HBrO_3$, $HClO_4$, HPFe, $HBF_6$, 1-methyl-3-methylimidazolium cations ($BMIM^+$), and a combination thereof, but is not limited thereto.

The polymer derived from polyamic acid or the polymer derived from a polyimide may further include an additive selected from the group consisting of fumed silica, zirconium oxide, an alkoxysilane such as tetraethoxysilane, montmorillonite clay, and a combination thereof, but is not limited thereto. Before processing a heat treatment that will be described hereinafter, the additive may be present in a dispersed condition in the polymer by mixing and agitating the polyamic acid or the polyimide in an organic solvent dispersed with the additive. Thereby, mechanical strength, heat resistance, and chemical resistance of the polymer may be improved.

The additive may be included in an amount 0.1 to 10wt% based on the total weight of the polymer including the additive. When the additive is included within the above amount range, mechanical strength, heat resistance, and chemical resistance of the polymer may be effectively improved.

The polymer derived from polyamic acid or polyimide may further include an inorganic filler selected from the group consisting of a phosphotungstic acid (PWA), a phosphomolybdic acid, a silicotungstic acid (SiWA), a molybdophosphoric acid, a silicomolybdic acid, a phosphotin acid, zirconium phosphate (ZrP), and combinations thereof, but is not limited thereto. The inorganic filler may be presented in pores of the polymer by impregnating the polymer with a solution including the inorganic filler. The inorganic filler may form a bond such as a hydrogen bond with the polymer, but is not limited thereto.

It is possible to control the pore size and form of the polymer, and therefore physical properties of the polymer may be controlled, and mechanical strength, heat resistance, and chemical resistance of the polymer may be improved.

The inorganic filler may be included in an amount 0.5 to 60wt% based on the total weight of the polymer including the inorganic filler. When the inorganic filler is included within the above amount ranges, mechanical strength, heat resistance, and chemical resistance of the polymer may be effectively improved.

The polymer derived from polyamic acid or a polyimide may be prepared by using polyamic acid or a polyimide that are soluble in a general organic solvent and may be coated without defects or cracks, and therefore it may reduce

manufacturing costs by simplify the preparation process and may be formed with a large size. The pore size or distribution of the polymer is adjustable by controlling the preparation process condition. Accordingly, the polymer may be widely used in various areas such as gas permeability, gas separation, vapor separation, water purifying, an adsorption agent, a heat resistance fiber, a thin film, and the like.

In another embodiment, a polymer may be derived from the combinations of polyamic acid and polyimide, and the polymer may include the polymer derived from polyamic acid and the polyimide. Hereinafter, polyamic acid, a polyimide, and a polymer derived from polyamic acid or the polyimide are the same as described above.

The polymer may include a polymer derived from polyamic acid or a polyimide polymer in a weight ratio of 0.1:9.9to 9.9:0.1, and in one embodiment, 8:2 to 2:8, and more preferably 5:5. The polymer may have each characteristics of a polymer derived from polyamic acid or the polyimide. It is also has excellent dimensional stability and long-term stability.

In another embodiment, a method of preparing a polymer including obtaining the polyimide by imidization of polyamic acid and heat-treating the polyimide is provided. The polymer may have picopores. The polymer may include compounds including a repeating unit represented by one of the above Chemical Formulae 19 to 32, or copolymers thereof, but is not limited thereto.

In the preparing method of the polymer, the imidization may include thermal imidization, but is not limited thereto.

The thermal imidization may be performed at 150°C to 300°C for 30 minutes to 2 hours under an inert atmosphere. When the imidization temperature is below the range, polyamic acid as a precursor is only slightly imidized, and on the other hand, when the imidization temperature exceeds this range, significant effects cannot be obtained and economic efficiency is thus very low.

The imidization conditions may be suitably controlled within the range according to the functional groups of the polyamic acid, $Ar_1$, $Ar_2$, Q, Y, and Y'.

The polymer including picopores may be obtained by thermal rearrangement of the polyimide through a heat-treatment. The polymer including picopores may have decreased density comparing with the polyimide, increased fractional free volume caused by good connection between picopores, and increased d-spacing. Thereby, the polymer including picopores may have excellent low molecular permeability, and is applicable for selective separation of low molecules.

The thermal rearrangement of the polyimide will be described referring to FIG. 1.

FIG. 1 shows two types of changes in a chain structure occurring during the thermal rearrangement.

Referring to FIG. 1, A) shows random chain formations resulting from the formation of meta- and para-linked chains, and B) shows relatively flexible, twisting pairs of short flat planes (α and β) that convert to single long flat planes (γ). The single long flat planes (γ) are much more stiff and rigid than twisting pairs of short flat planes (α and β) because it forms a stable resonance. Accordingly, the polymer including picopores prepared by heat treatment of the polyimide may prevents torsional rotation inside of a chain, increasing the efficiency of picopores formation, and inhibiting rapid collapse of the created picopores. The polymer may effectively include a plurality of picopores, and thereby the low molecules may be permeated effectively or separated selectively. The polymer may have excellent mechanical strength, heat resistance, and chemical resistance.

Hereinafter, the imidization and heat treatment will be illustrated in detail with reference to the following Reaction Schemes 1 and 2.

[Reaction Scheme 1]

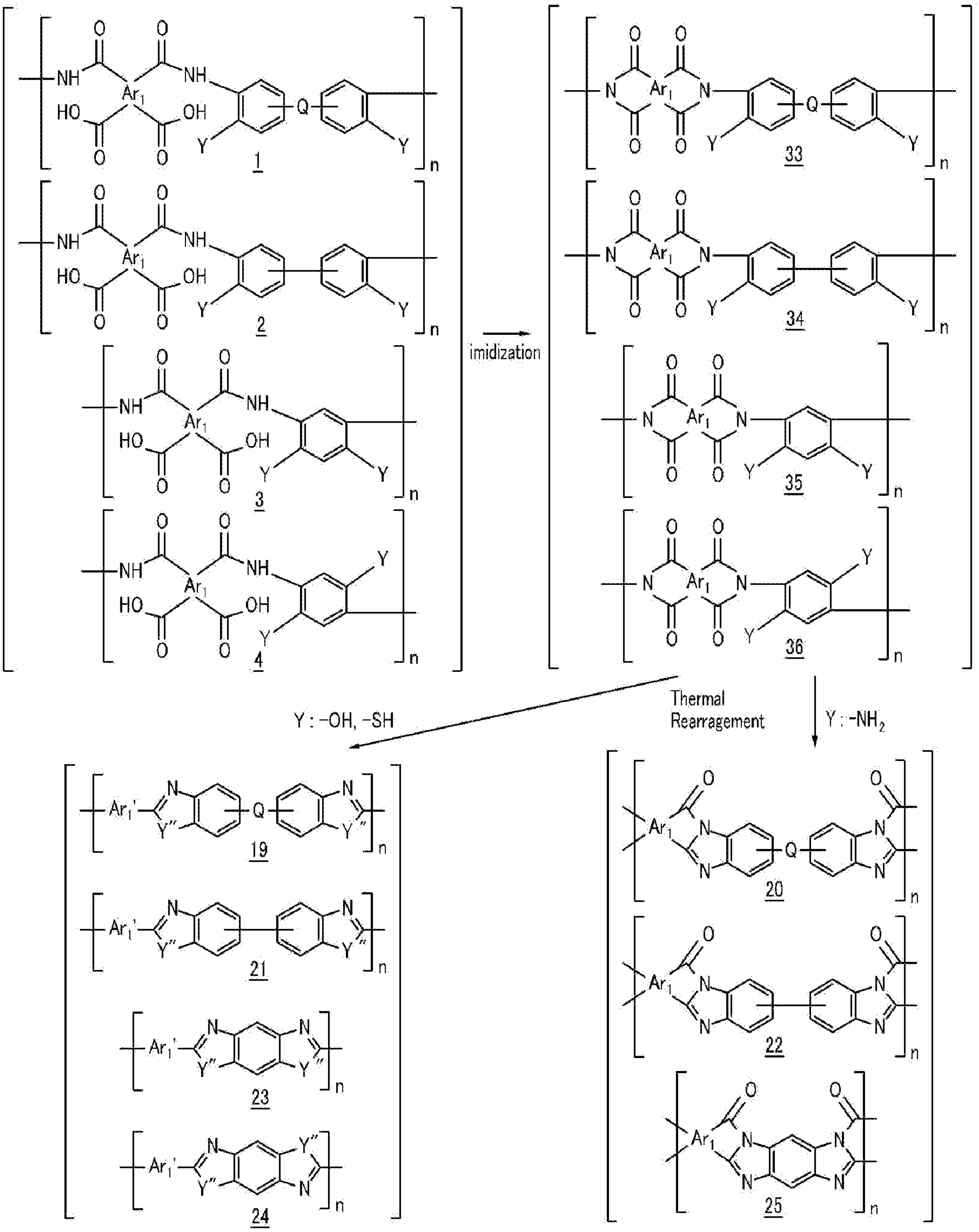

[Reaction Scheme 2]

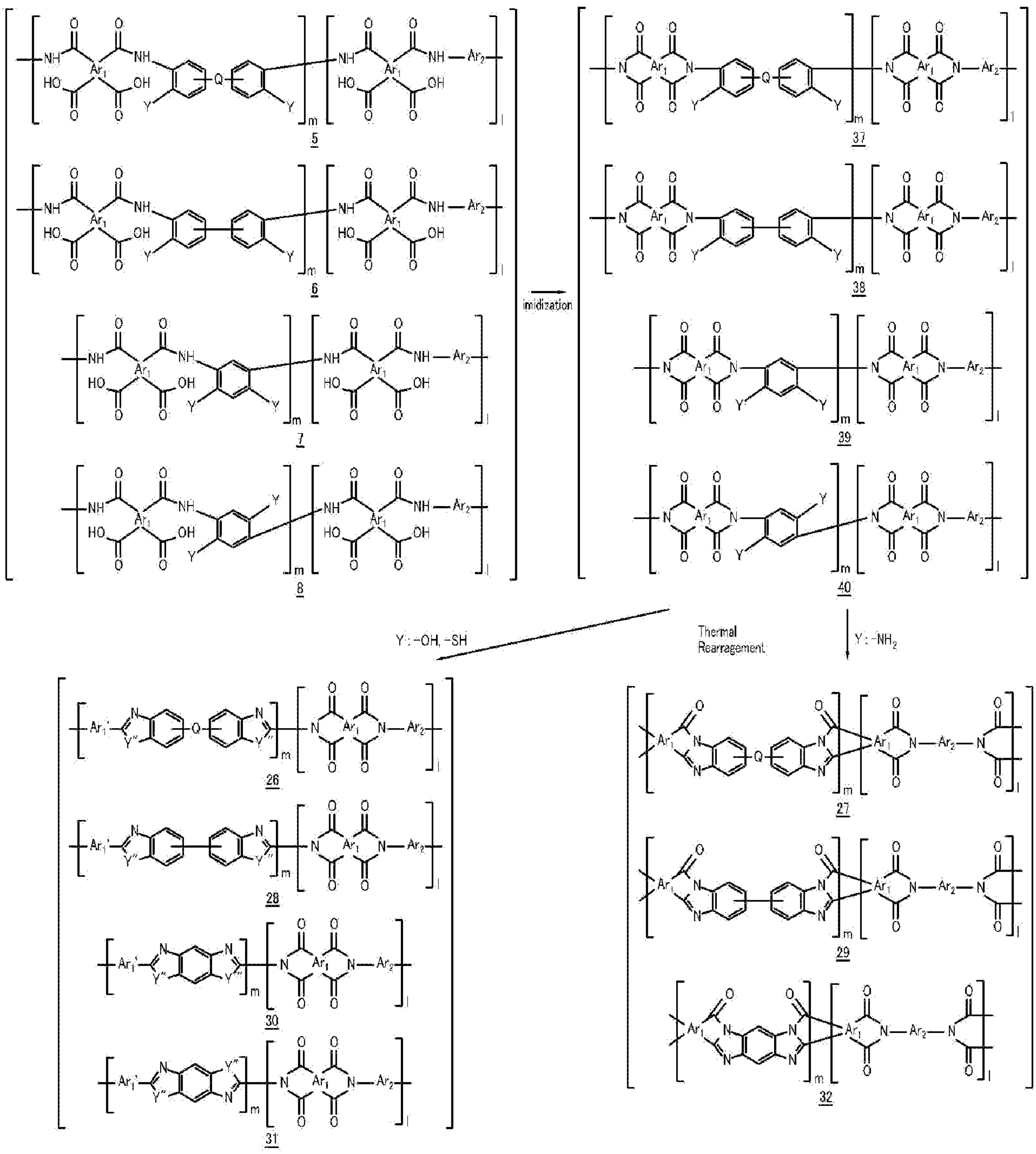


In the Reaction Schemes 1 and 2,

$Ar_1$, $Ar_1$', $Ar_2$, Q, Y, Y", n, m, and l are the same as defined in the above Chemical Formulae 1 to 50.

Referring to the Reaction Scheme 1, the polyamic acid including a repeating unit represented by the above Chemical Formulae 1 to 4 is subjected to imidization as described above to form a polyimide including a repeating unit represented by the above Chemical Formulae 33, 34, 35, and 36.

Subsequently, the polyimide including a repeating unit represented by the above Chemical Formulae 33 to 36, respectively, is converted into a polybenzoxazole, polybenzthiazole, or polypyrrolone polymer including a repeating unit represented by Chemical Formulae 19 to 25, respectively, through heat treatment. The polymer preparation is carried out through the removal reaction of $CO_2$ or $H_2O$ present in the polyimide polymers including repeating units of Chemical Formulae 33 to 36.

The polyhydroxyamic acids in which Y of Chemical Formulae 1 to 4 is -OH or the polythiolamic acids in which

Y of Chemical Formulae 1 to 4 is -SH are thermally rearranged into polybenzoxazole (Y"=O) or polybenzthiazole (Y"=S) including repeating units of Chemical Formula 19, Chemical Formula 21, Chemical Formula 23, and Chemical Formula 24, respectively. In addition, polyaminoamic acids in which Y of Chemical Formulae 1 to 4 is $-NH_2$ are thermally rearranged into polypyrrolones including repeating units of Chemical Formulae 20, 22, and 25.

As shown in Reaction Scheme 2, polyamic acid copolymers including repeating units of Chemical Formulae 5 to 8 are converted through imidization into polyimides including repeating units of Chemical Formulae 37 to 40.

Through the above-described thermal heat treatment, the polyimides including repeating units of the above Chemical Formulae 37 to 40 are converted through the removal reaction of $CO_2$ or $H_2O$ present in the polyimides into polymers including repeating units of Chemical Formulae 26 to 32.

Polyhydroxyamic acids in which Y of Chemical Formulae 5 to 8 is -OH or polythiolamic acids in which Y of Chemical Formulae 5 to 8 is -SH are thermally rearranged into poly(benzoxazole(Y"=O)-imide) copolymers or poly(benzthiazole(Y"=S)-imide) copolymers including repeating units of Chemical Formulae 26, 28, 30, and 31. In addition, polyaminoamic acids (Y= $NH_2$) represented by the above Chemical Formulae 5 to 8 are thermally rearranged into poly(pyrrolone-imide) copolymers including repeating units represented by Chemical Formula 27, 29, and 32, respectively.

Each block of the polyamic acid copolymers including repeating units represented by Chemical Formulae 9 to 18 is imidized to form a polyimide including blocks that are different from each other. The resulting each block of the polyimide are thermally rearranged into polybenzoxazole, polybenzothiazole, and polypyrrolone, depending upon the kinds of Y to form copolymers of polymers including repeating units represented by Chemical Formulae 19 to 25.

Another embodiment of the present invention provides a method of preparing a polymer including heat-treating of the polyimide. The polymer includes picopores. The polymer may include compounds including a repeating unit represented by the above Chemical Formulae 19 to 32 or copolymers thereof, but is not limited thereto.

The heat treatment, the thermal convertion, and the rearrangement are the same as above as long as they are not differently described hereinafter.

The polyimide may be prepared by imidization of polyamic acid including a repeating unit obtained from an aromatic diamine including at least one ortho-positioned functional group with respect to an amine group and a dianhydride, for example chemical imidization or thermal solution imidization.

The chemical imidization may be performed at 20°C to 180°C for 4 hours to 24 hours. Pyridine as a catalyst and acetic anhydride to remove produced water may be added. When the chemical imidization is performed in the above temperature range, imidization of polyamic acid may be sufficiently performed.

The chemical imidization may be performed after protecting ortho-positioned functional groups OH, SH, and $NH_2$ with respect to the amine group in the polyamic acids. That is, a protecting group for functional groups OH, SH, and $NH_2$ are introduced, and the protecting group is removed after imidization. The protecting group may be introduced by a chlorosilane such as trimethylchlorosilane ($(CH_3)_3SiCl$), triethylchlorosilane ($(C_2H_5)_3SiCl$), tributyl chlorosilane ($(C_4H_9)_3SiCl$), tribenzyl chlorosilane ($(C_6H_5)_3SiCl$), triethoxy chlorosilane ($(C_2H_5O)_3SiCl$), or a hydrofuran such as tetrahydrofuran (THF). For the base, tertiary amines such as trimethyl amine, triethyl amine, tripropyl amine, pyridine may be used. For removing the protecting group, diluted hydrochloric acid, sulfuric acid, nitric acid, acetic acid may be used. The chemical imidization using the protecting group may improve yield and molecular weight of the polymer according to one embodiment of the present invention.

The solution-thermal imidization may be performed at 100°C to 180 °C for 2 to 30 hours in a solution. When the thermal solution imidization is performed within the above temperature range, polyamic acid imidization may be sufficiently realized.

The thermal solution imidization may be performed after protecting ortho-positioned functional groups OH, SH, and $NH_2$ with respect to the amine group in the polyamic acids. That is, a protecting group for functional groups OH, SH, and $NH_2$ is introduced, and the protecting group is removed after imidization. The protecting group may be introduced by a chlorosilane such as trimethylchlorosilane, triethylchlorosilane, tributyl chlorosilane, tribenzyl chlorosilane, triethoxy chlorosilane, or a hydrofuran such as tetrahydrofuran. For the base, tertiary amines such as trimethyl amine, triethyl amine, tripropyl amine, pyridine may be used. For removing the protecting group, diluted hydrochloric acid, sulfuric acid, nitric acid, acetic acid may be used.

The thermal solution imidization may be performed using an azeotropic mixture that further includes benzenes such as benzene, toluene, xylene, cresol, aliphatic organic solvents such as hexane, and alicyclic organic solvents such as cyclohexane.

The thermal solution imidization using the protecting group and azeotropic mixture may also increase yield and molecular weight of the polymer according to one embodiment of the present invention.

The imidization condition can be controlled in accordance with the functional groups $Ar_1$, $Ar_2$, Q, Y, and Y' of the polyamic acid.

The imidization reaction will be described in more detail referring to the following Reaction Schemes 3 and 4.

[Reaction Scheme 3]

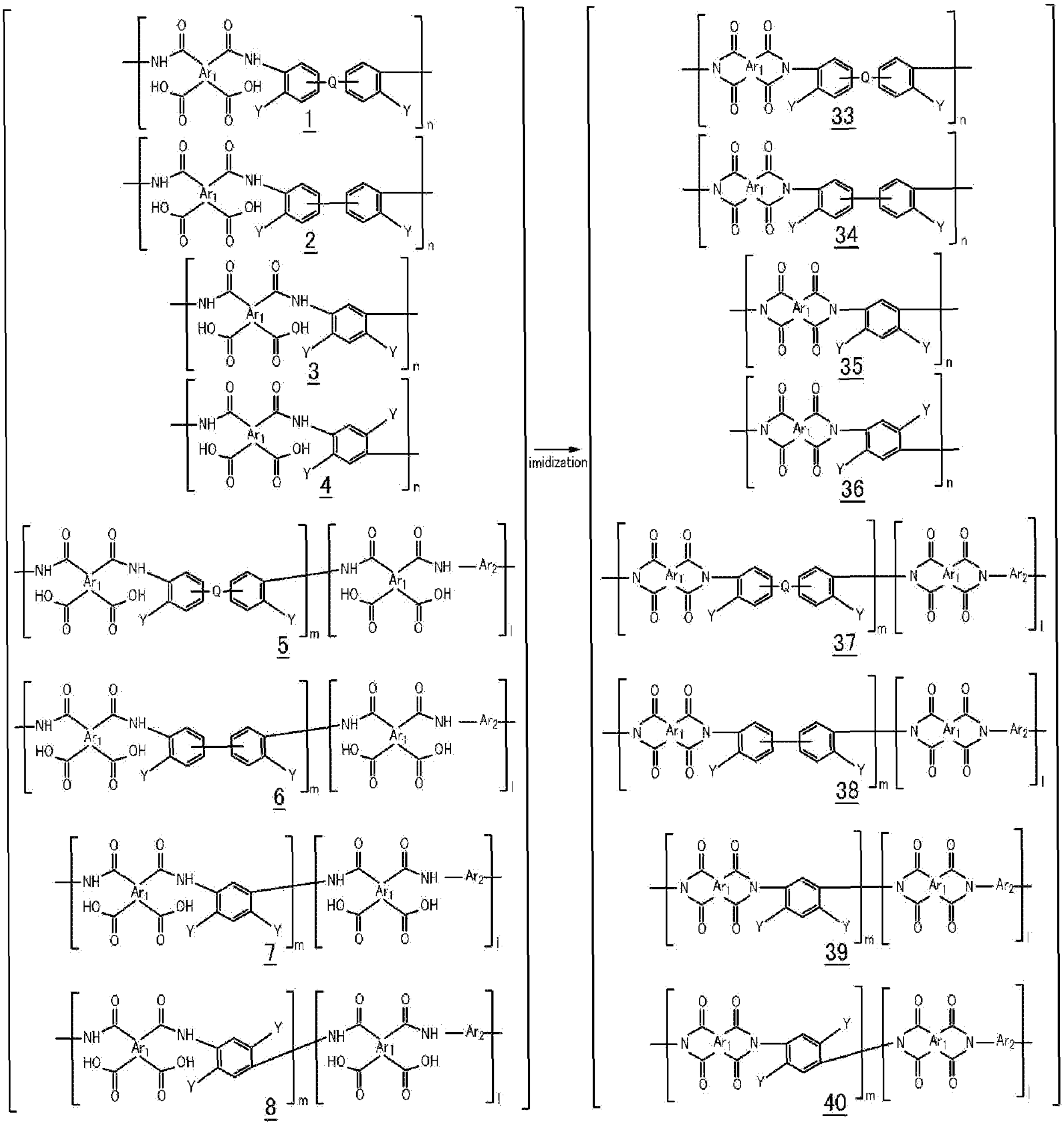


1

2

3

4

5

6

7

8

33

34

35

36

37

38

39

40

[Reaction Scheme 4]

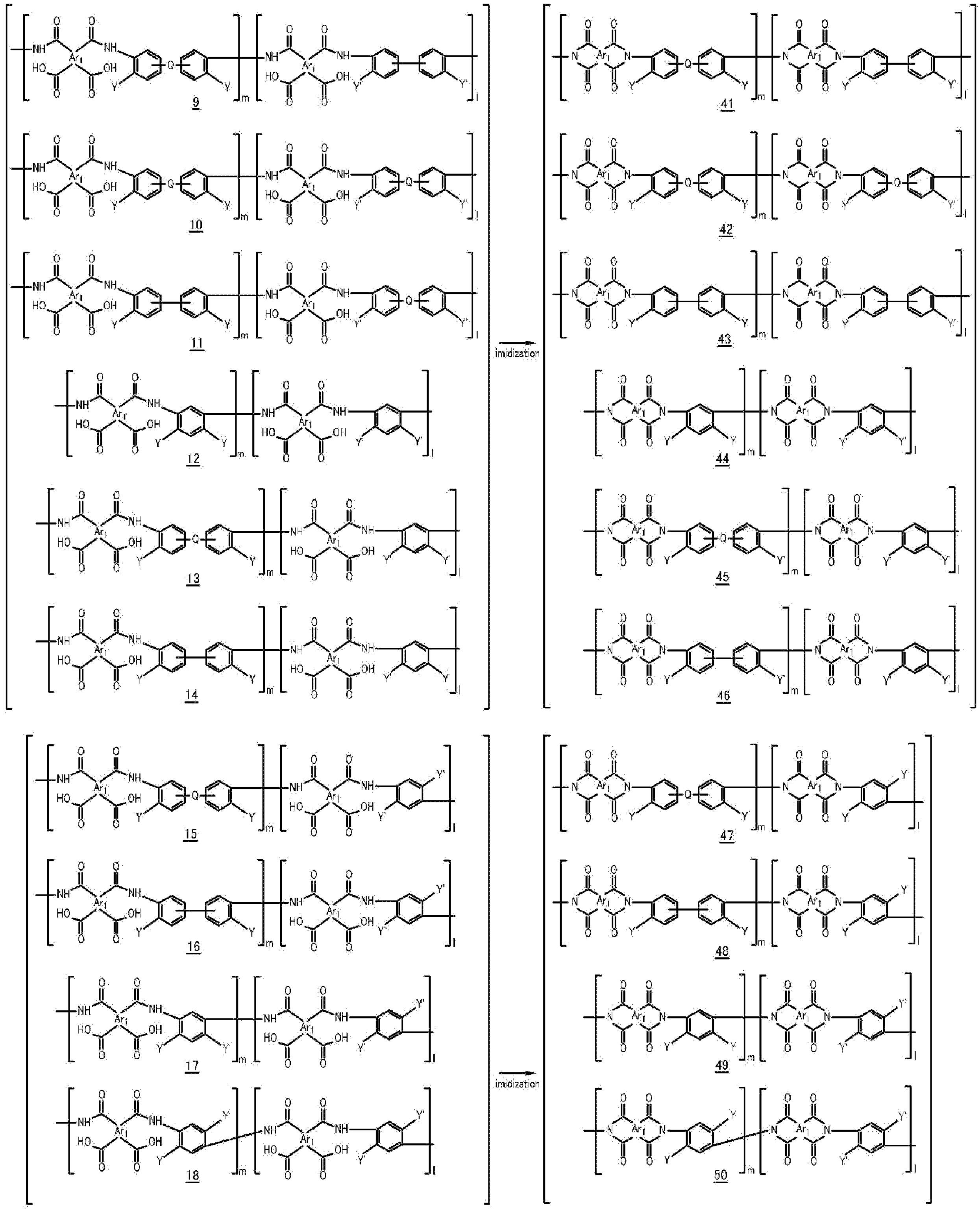


9 10 11 12 13 14 41 42 43 44 45 46 15 16 17 18 47 48 49 50

In Reaction Schemes 3 and 4,

$Ar_1$, $Ar_2$, Q, Y, Y', n, m, and l are the same as in the above Chemical Formulae 1 to 18.

As shown in Reaction Scheme 3, polyamic acids (polyhydroxyamic acid, polythiolamic acid, or polyaminoamic acid) including a repeating unit represented by Chemical Formula 1, Chemical Formula 2, Chemical Formula 3, and Chemical Formula 4 are converted through imidization, i.e., a cyclization reaction, into polyimides including a repeating unit represented by Chemical Formula 33, Chemical Formula 34, Chemical Formula 35, and Chemical Formula 36,

respectively.

In addition, polyamic acid copolymers including a repeating unit represented by Chemical Formula 5, Chemical Formula 6, Chemical Formula 7, and Chemical Formula 8 are converted through imidization into polyimide copolymers including a repeating unit represented by Chemical Formula 37, Chemical Formula 38, Chemical Formula 39, and Chemical Formula 40, respectively.

As shown in Reaction Scheme 4, polyamic acid copolymers including a repeating unit represented by Chemical Formulae 9 to 18 are converted through imidization into polyimide copolymers including a repeating unit represented by Chemical Formulae 41 to 50.

Still another embodiment of the present invention provides a method of preparing a polymer including obtaining a polyimide by imidization of the polyamic acid that is from the compound including combinations of the polyamic acid and the polyimide, and heat-treating the polyimide. The polymer includes picopores. The polymer may include a compound including a repeating unit represented by the above Chemical Formulae 19 to 32 or copolymers thereof, but is not limited thereto.

The imidization, the heat treatment, the thermal convertion, and the rearrangement are the same as above as long as they are not differently described hereinafter.

The heat treatment may be performed by increasing the temperature by 1°C/min to 30°C/min up to 350°C to 500°C, and then maintaining the temperature for 1 minute to 12 hours under an inert atmosphere. Preferably, the heat treatment may performed by increasing the temperature by 5°C/min to 20°C/min up to 350°C to 450°C, and then maintaining the temperature for 1 hour to 6 hours under an inert atmosphere. More preferably, the heat treatment may performed by increasing the temperature by 10°C/min to 15°C/min up to 420°C to 450°C, and then maintaining the temperature for 2 hours to 5 hours under an inert atmosphere. When the heat treatment is performed under the condition within the above range, thermally rearranged reaction may be sufficiently performed.

During the preparation process of the polymer, by controlling polymer design while taking into consideration the characteristics of $Ar_1$, $Ar_1'$, $Ar_2$, and Q present in the chemical structure, pore size, distribution, and related characteristics may be controlled.

The polymer may include the compounds including a repeating unit represented by the above Chemical Formulae 19 to 32 or copolymers thereof, but is not limited thereto.

The polymers of the present invention can endure not only mild conditions, but also stringent conditions such as a long operation time, acidic 66 conditions, high humidity, and high temperature, due to rigid backbones present in the polymers. The polymer according to the embodiment has excellent chemical stability, heat resistance, and mechanical properties.

The polymers including a repeating unit represented by Chemical Formulae 19 to 32 or copolymers thereof are designed to have a desired weight average molecular weight, and in one embodiment, a weight average molecular weight of 10,000 to 200,000. When they have weight average molecular weight within the above range, it may maintain excellent physical properties of the polymers.

The polymer according to one embodiment of the present invention is a polymer derived from polyamic acid or a polyimide, and may include picopores. The picopores have an hourglass-shaped structure forming a narrow valley at connection parts of at least two picopores, and thereby have high fractional free volume to effectively permeate or selectively separate low molecules.

Further, the polymer has excellent dimensional stability with respect to having less than 5% of shrinkage after imidization and heat treatment.

Yet another embodiment of the present invention may provide an article including the polymer. The article includes a sheet, a film, a powder, a membrane, or a fiber.

The article includes picopores that form a three-dimensional network structure where at least two picopores are three-dimensionally connected to have an hourglass-shaped structure forming a narrow valley at connection parts. The article may effectively permeate or selectively separate low molecules, may have excellent heat resistance, surface hardness, and dimensional stability, and 67 therefore it may be widely applied to many areas where this performance needed.

Hereinafter, preferred examples will be provided for further understanding of the invention. These examples are for illustrative purposes only and are not intended to limit the scope of the present invention.

## Examples

### Reference Example 1 - Preparation of a polymer

As shown in Reaction Scheme 5 below, a polymer including polybenzoxazole including a repeating unit represented by the following Chemical Formula 51 was prepared from polyhydroxyamic acid.

[Reaction Scheme 5]

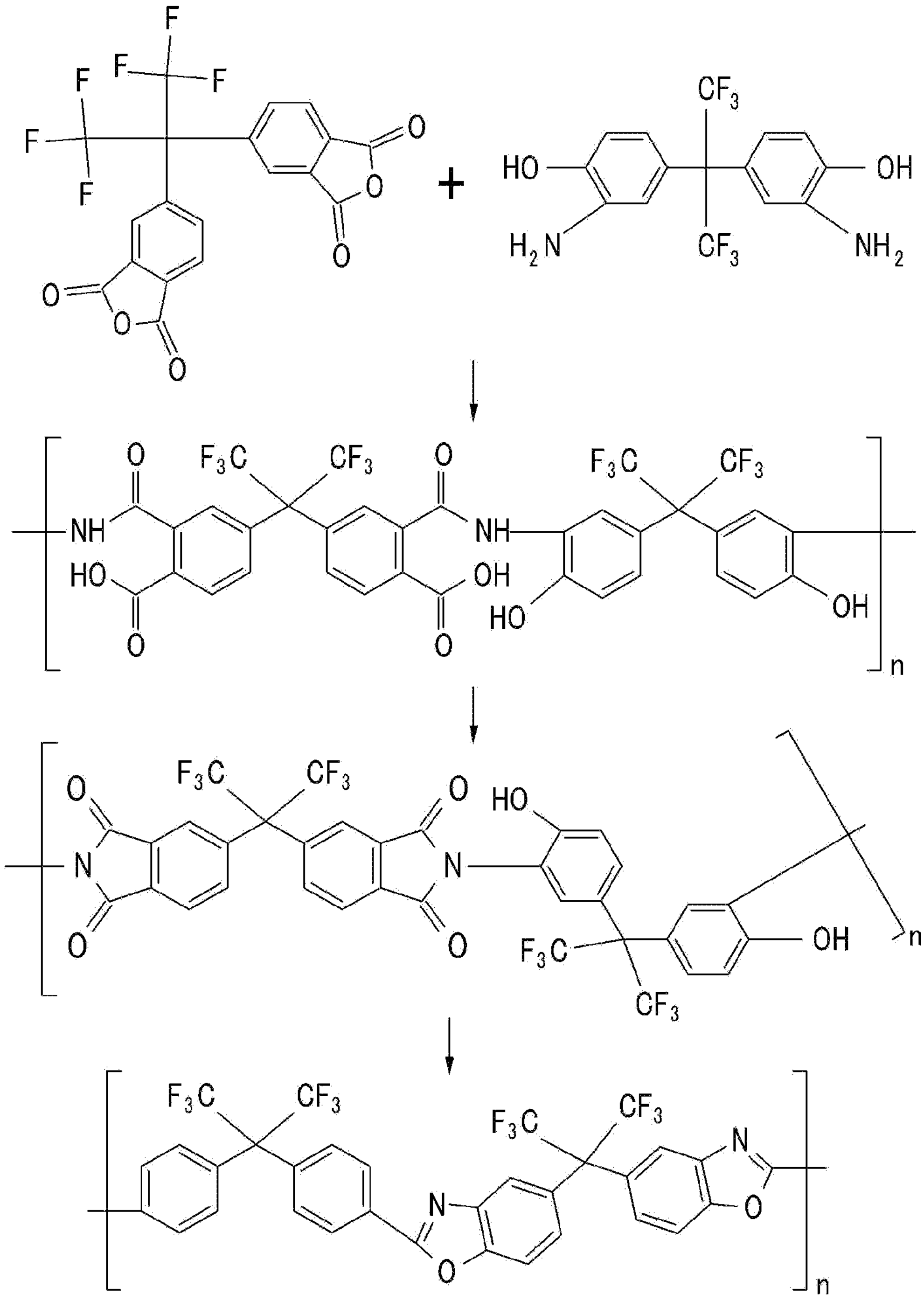

51

(1) Preparation of polyhydroxyamic acid

3.66g (10mmol) of 2,2-bis(3-amino-4-hydroxyphenyl)hexafluoropropane and 4.44g (10mmol) of 4,4'-(hexafluoroisopropylidene)diphthalic anhydride was added into 45.9g (85wt%) of N-methylpyrrolidone (NMP). Then, the solution was allowed to react at 15°C for 4 hours to prepare a pale yellow viscous polyhydroxyamic acid solution.

(2) Preparation of polyhydroxyimide

The prepared viscous polyhydroxyamic acid solution was cast on a glass plate 20cm x 25cm in size, and cured and imidized in a vacuum oven at 100°C for 2 hours, at 150°C for 1 hour, at 200°C for 1 hour, and at 250°C for 1 hour. Then, vacuum drying was carried out in a vacuum oven at 60°C for 24 hours in order to completely remove the residual solvent. Consequently, a transparent pale yellow polyhydroxyimide membrane was prepared. The thickness of the prepared membran including polyhydroxyimide was 30$\mu$m.

(3) Preparation of a polymer including polybenzoxazole

The polyhydroxyimide membran was thermally treated in the muffled tubular furnace at 350°C at a heating rate of 5°C/min under an argon atmosphere (300$cm^3$[STP]/min), and was held for 1 hour at 350°C. Then, it was cooled down slowly to room temperature to prepare a polymer including polybenzoxazole including a repeating unit represented by the above Chemical Formula 51.

As a result of FT-IR analysis, characteristic bands of the resulting polybenzoxazole at 1553$cm^{-1}$, 1480$cm^{-1}$ (C=N), and 1058$cm^{-1}$ (C-O) which were not detected in polyhydroxyimide were confirmed. The prepared polymer had a fractional free volume of 0.18 and d-spacing of 580pm.

**Reference Example 2 - Preparation of a polymer**

A polymer including polybenzoxazole including a repeating unit represented by the above Chemical Formula 51 was prepared in the same manner as in Example 1, except that the polyhydroxyimide membran was thermally treated at 400°C.

As a result of FT-IR analysis, characteristic bands of the resulting polybenzoxazole at 1553$cm^{-1}$, 1480$cm^{-1}$ (C=N), and 1058$cm^{-1}$ (C-O) which were not detected in polyhydroxyimide were confirmed. The prepared polymer had a fractional free volume of 0.22 and d-spacing of 592pm.

**Reference Example 3 - Preparation of a polymer**

A polymer including polybenzoxazole including a repeating unit represented by the above Chemical Formula 51 was prepared in the same manner as in Example 1, except that the polyhydroxyimide membran was thermally treated at 450°C.

As a result of FT-IR analysis, characteristic bands of the resulting polybenzoxazole at 1553$cm^{-1}$, 1480$cm^{-1}$ (C=N), and 1052 $cm^{-1}$ (C-O) which were not detected in polyhydroxyimide were confirmed. The prepared polymer had a fractional free volume of 0.28 and d-spacing of 600pm.

**Reference Example 4 - Preparation of a polymer**

A polymer including polybenzoxazole including a repeating unit represented by the above Chemical Formula 51 was prepared in the same manner as in Example 1, except that the polyhydroxyimide membran was thermally treated at 500°C.

As a result of FT-IR analysis, characteristic bands of the resulting polybenzoxazole at 1553$cm^{-1}$, 1480$cm^{-1}$ (C=N), and 1058$cm^{-1}$ (C-O) which were not detected in polyhydroxyimide were confirmed. The prepared polymer had a fractional free volume of 0.37 and d-spacing of 740pm.

**Reference Example 5 - Preparation of a polymer**

A polymer including polybenzoxazole including a repeating unit represented by the following Chemical Formula 52 was prepared according to the following reaction from polyhydroxyamic acid.

[Chemical Formula 52]

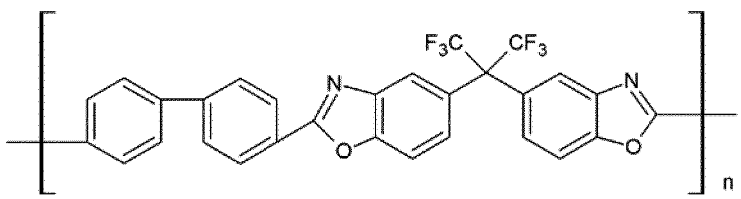

A polymer including polybenzoxazole including a repeating unit represented by the above Chemical Formula 52 was prepared in the same manner as in Example 3, except that 3.66g (10mmol) of 2,2-bis(3-amino-4-hydroxyphenyl)hexafluoropropane and 2.94g (10mmol) of 3,3',4,4'-biphenyltetracarboxylic dianhydride were reacted as a starting material.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed. The prepared polymer had a fractional free volume of 0.219 and d-spacing of 606pm.

**Reference Example 6 - Preparation of a polymer**

A polymer including polybenzoxazole including a repeating unit represented by the following Chemical Formula 53 was prepared according to the following reaction from polyhydroxyamic acid.

[Chemical Formula 53]

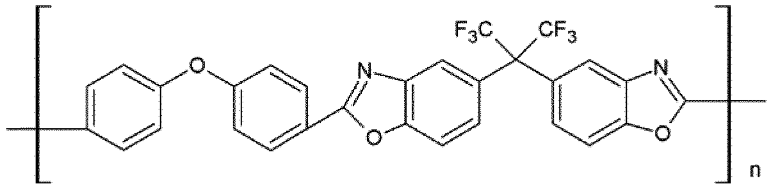

A polymer including polybenzoxazole including a repeating unit represented by the above Chemical Formula 53 was prepared in the same manner as in Example 3, except that 3.66g (10mmol) of 2,2-bis(3-amino-4-hydroxyphenyl)hexafluoropropane and 3.1g (10mmol) of 4,4'-oxydiphthalic anhydride were reacted as a starting material.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed. The prepared polymer had a fractional free volume of 0.205 and d-spacing of 611pm.

**Reference Example 7 - Preparation of a polymer**

A polymer including polybenzoxazole including a repeating unit represented by the following Chemical Formula 54 was prepared according to the following reaction from polyhydroxyamic acid.

[Chemical Formula 54]

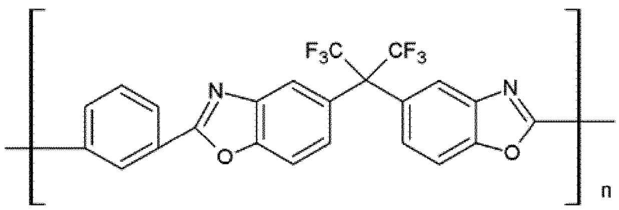

A polymer including polybenzoxazole including a repeating unit represented by the above Chemical Formula 54 was prepared in the same manner as in Example 3, except that 3.66g (10mmol) of 2,2-bis(3-amino-4-hydroxyphenyl)hexafluoropropane and 2.18g (10mmol) of 1,2,4,5-benzenetetracarboxylic dianhydride were reacted as a starting material.

As a result of FT-IR analysis, characteristic bands of the resulting polybenzoxazole at 1553 cm$^{-1}$, 1480cm$^{-1}$ (C=N), and 1058cm$^{-1}$ (C-O) which were not detected in polyhydroxyimide were confirmed. The prepared polymer had a fractional free volume of 0.190 and d-spacing of 698pm.

**Reference Example 8 - Preparation of a polymer**

A polymer including polybenzoxazole including a repeating unit represented by the following Chemical Formula 55 was prepared according to the following reaction from polyhydroxyamic acid.

[Chemical Formula 55]

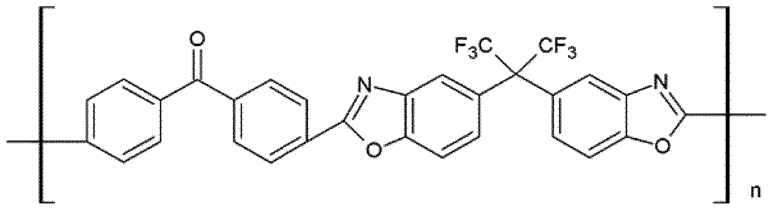

A polymer including polybenzoxazole including a repeating unit represented by the above Chemical Formula 55 was prepared in the same manner as in Example 3, except that 3.66g (10mmol) of 2,2-bis(3-amino-4-hydroxyphenyl)hexafluoropropane and 3.22g (10mmol) of 3,3',4,4'-benzophenonetetracarboxylic dianhydride were reacted as a starting material.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed. The prepared polymer had a fractional free volume of 0.243 and d-spacing of 602pm.

**Reference Example 9 - Preparation of a polymer**

A polymer including polybenzothiazole including a repeating unit represented by the following Chemical Formula 56 was prepared according to the following reaction from polythiolamic acid.

[Chemical Formula 56]

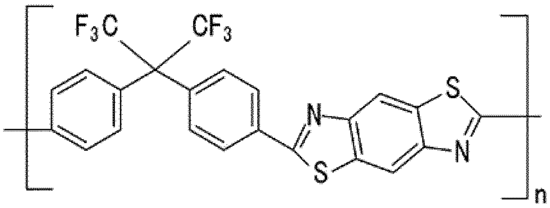

A polymer including polybenzothiazole including a repeating unit represented by the above Chemical Formula 56 was prepared in the same manner as in Example 3, except that 2.45g (10mmol) of 2,5-diamino-1,4-benzenedithiol dihydrochloride and 4.44g (10mmol) of 4,4'-(hexafluoroisopropylidene)diphthalic anhydride were reacted as a starting material to prepare a polyamic acid including a thiol group (-SH).

As a result of FT-IR analysis, characteristic bands of the resulting polybenzothiazole at 1484cm$^{-1}$ (C-S) and 1404cm$^{-1}$ (C-S) which were not detected in polythiolimide were confirmed. The prepared polymer had a fractional free volume of 0.262 and d-spacing of 667pm.

**Reference Example 10 - Preparation of a polymer**

A polymer including polypyrrolone including a repeating unit represented by the following Chemical Formula 57 was prepared according to the following reaction from polyaminoamic acid.

[Chemical Formula 57]

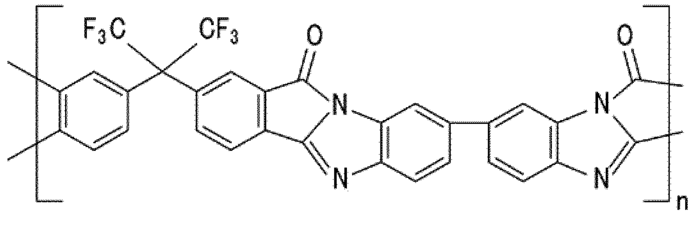

A polymer including polypyrrolone including a repeating unit represented by the above Chemical Formula 57

was prepared in the same manner as in Example 3, except that 2.14g (10mmol) of 3,3'-diaminobenzidine and 4.44g (10mmol) of 4,4'-(hexafluoroisopropylidene)diphthalic anhydride were reacted as a starting material to prepare a polyamic acid including an amine group ($-NH_2$).

As a result of FT-IR analysis, characteristic bands of the resulting polypyrrolone at 1758cm$^{-1}$ (C=O) and 1625cm$^{-1}$ (C=N) which were not detected in polyaminoimide were confirmed. The prepared polymer had a fractional free volume of 0.214 and d-spacing of 635pm.

**Reference Example 11 - Preparation of a polymer**

A polymer including polybenzoxazole including a repeating unit represented by the following Chemical Formula 58 was prepared according to the following reaction from polyhydroxyamic acid.

[Chemical Formula 58]

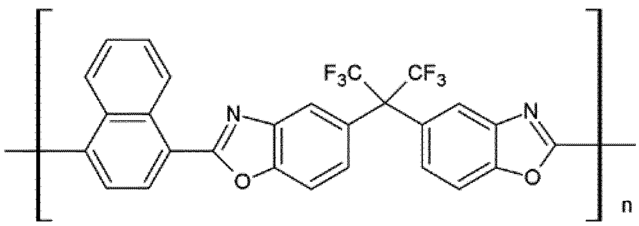

A polymer including polybenzoxazole including a repeating unit represented by the above Chemical Formula 58 was prepared in the same manner as in Example 3, except that 3.66g (10mmol) of 2,2-bis(3-amino-4-hydroxyphenyl)hexafluoropropane and 2.68g (10mmol) of 1,4,5,8-naphthaleic tetracarboxylic dianhydride were reacted as a starting material.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed. The prepared polymer had a fractional free volume of 0.326 and d-spacing of 699pm.

**Reference Example 12 - Preparation of a polymer**

3.66g (10mmol) of 2,2-bis(3-amino-4-hydroxyphenyl)hexafluoropropane and 4.44g (10mmol) of 4,4'-(hexafluoroisopropylidene)diphthalic anhydride were added to 32.4g (80wt%) of N-methylpyrrolidone (NMP), and intensively agitated for 4 hours. Subsequently, 3.22ml (40mmol) of pyridine as a catalyst for chemical imidization and 3.78ml (40mmol) of acetic anhydride were added to the solution. Then, the solution was allowed to react at room temperature for 24 hours to prepare a pale yellow viscous polyhydroxyimide solution. The pale yellow viscous polyhydroxyimide solution was agitated in triple-distilled water, and deposited to prepare a polymer powder. Then, the polymer powder was filtered and dried at 120°C.

The prepared polymer powder was dissolved in an amount of 20wt% in an N-methylpyrrolidone (NMP) solution. The dissolved polyhydroxyimide solution was cast on a glass plate 20 cm x 25 cm in size, and cured and imidized in vacuum oven at 180°C for 6 hours. Then, vacuum drying was carried out in a vacuum oven at 60° C for 24 hours in order to completely remove the residual solvent. Consequently, a transparent brown polyhydroxyimide membrane was prepared. The thickness of the prepared membrane including polyhydroxyimide was 40μm.

The polyhydroxyimide membrane was thermally treated in a muffled tubular furnace at 450°C at a heating rate of 10°C/min under an argon atmosphere (300cm$^3$[STP]/min), and was held for 1 hour at 450°C. Then, it cooled down slowly to room temperature to prepare a polymer including polybenzoxazole including a repeating unit represented by the above Chemical Formula 51.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed. The prepared polymer had a fractional free volume of 0.352 and d-spacing of 662pm.

**Reference Example 13 - Preparation of a polymer**

A polymer including polybenzoxazole including a repeating unit represented by the above Chemical Formula 51 was prepared in the same manner as in Example 12, except that 4.35g (40mmol) of trimethylchlorosilane was added before 3.66g (10mmol) of 2,2-bis(3-amino-4-hydroxyphenyl)hexafluoropropane and 4.44g (10mmol) of 4,4'-(hexafluoroisopropylidene)diphthalic anhydride were reacted.

As a result of FT-IR analysis, characteristic bands of the resulting polybenzoxazole at $1553cm^{-1}$, $1480cm^{-1}$ (C=N), and $1058cm^{-1}$ (C-O) which were not detected in polyhydroxyimide were confirmed. The prepared polymer had a fractional free volume of 0.352 and d-spacing of 748pm.

**Reference Example 14** - **Preparation of a polymer**

3.66g (10mmol) of 2,2-bis(3-amino-4-hydroxyphenyl)hexafluoropropane and 4.44g (10mmol) of 4,4'-(hexafluoroisopropylidene)diphthalic anhydride were added into 32.4g (80wt%) of N-methylpyrrolidone (NMP), and intensively agitated for 4 hours. A polymer including polybenzoxazole including a repeating unit represented by the above Chemical Formula 51 was prepared in the same manner as in Example 12, except that polyhydroxyimide was prepared by adding 32ml of xylene as an azeotropic mixture, and removing the mixture of water and xylene by thermal solution imidization at 180°C for 12 hours.

As a result of FT-IR analysis, characteristic bands of the resulting polybenzoxazole at $1553cm^{-1}$, $1480cm^{-1}$ (C=N), and $1058cm^{-1}$ (C-O) which were not detected in polyhydroxyimide were confirmed. The prepared polymer had a fractional free volume of 0.222 and d-spacing of 595pm.

**Reference Example 15** - **Preparation of a polymer**

A polymer including polybenzoxazole including a repeating unit represented by the above Chemical Formula 51 was prepared in the same manner as in Example 14, except that a membrane including polyhydroxyimide was heat-treated at 450°C for 3 hours.

As a result of FT-IR analysis, characteristic bands of the resulting polybenzoxazole at $1553cm^{-1}$, $1480cm^{-1}$ (C=N), and $1058cm^{-1}$ (C-O) which were not detected in polyhydroxyimide were confirmed. The prepared polymer had a fractional free volume of 0.26 and d-spacing of 602pm.

**Reference Example 16** - **Preparation of a polymer**

A polymer including polybenzoxazole including a repeating unit represented by the above Chemical Formula 51 was prepared in the same manner as in Example 14, except that a membrane including polyhydroxyimide was heat-treated at 450°C for 4 hours.

As a result of FT-IR analysis, characteristic bands of the resulting polybenzoxazole at $1553cm^{-1}$, $1480cm^{-1}$ (C=N) and $1052cm^{-1}$ (C-O) which were not detected in polyhydroxyimide were confirmed. The prepared polymer had a fractional free volume of 0.279 and d-spacing of 623pm.

**Reference Example 17** - **Preparation of a polymer**

A polymer including polybenzoxazole including a repeating unit represented by the above Chemical Formula 51 was prepared in the same manner as in Example 14, except that a membrane including polyhydroxyimide was heat-treated at 450°C for 5 hours.

As a result of FT-IR analysis, characteristic bands of the resulting polybenzoxazole at $1553cm^{-1}$, $1480cm^{-1}$ (C=N), and $1058cm^{-1}$ (C-O) which were not detected in polyhydroxyimide were confirmed. The prepared polymer had a fractional free volume of 0.323 and d-spacing of 651pm.

**Reference Example 18** - **Preparation of a polymer**

3.66g (10mmol) of 2,2-bis(3-amino-4-hydroxyphenyl)hexafluoropropane and 4.44g (10mmol) of 4,4'-(hexafluoroisopropylidene)diphthalic anhydride were added to 45.9g (85wt%) of N-methylpyrrolidone (NMP). Then, the solution was allowed to react at 15°C for 4 hours to prepare a pale yellow viscous polyhydroxyamic acid solution.

The prepared viscous polyhydroxyamic acid solution was cast on a glass plate 20cm x 25cm in size, and cured and imidized in vacuum oven at 100°C for 2 hours, at 150°C for 1 hour, at 200°C for 1 hour, and at 250°C for 1 hour. Then, vacuum drying was carried out in a vacuum oven at 60°C for 24 hours in order to completely remove the residual solvent. Consequently, a transparent brownish polyhydroxyimide membrane was prepared. The thickness of the prepared membrane including polyhydroxyimide was 40μm.

The polyhydroxyimide membrane was thermally treated in the muffled tubular furnace at 450°C at a heating rate of 5°C/min under an argon atmosphere ($300cm^3$[STP]/min), and was held for 1 hour at 450°C. Then, it was cooled down slowly to room temperature to prepare a polybenzoxazole membrane.

The membrane including a polymer including the polybenzoxazole was treated in a 10M HCl solution for 1 hour and washed in distilled water, and then dried at 150°C. Thereby, a polymer including acid treated polybenzoxazole was

prepared.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed, and a characteristic band of chlorine negative ions ($Cl^-$) at 920cm$^{-1}$ was confirmed.

**Reference Example 19** - **Preparation of a polymer**

A polymer including polybenzoxazole was prepared in the same manner as in Example 18, except adding a final process in which the polybenzoxazole membrane was treated in a 10M NaOH solution until the pH was set to 7.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed. A characteristic band of chlorine negative ions ($Cl^-$) at 920cm$^{-1}$ was not confirmed. The prepared polymer had a fractional free volume of 0.261 and d-spacing of 597pm.

**Reference Example 20** - **Preparation of a polymer**

A polymer including polybenzoxazole was prepared in the same manner as in Example 18, except adding two final processes in which the polybenzoxazole membrane was treated in a 10M NaOH solution until the pH was set to 7, and treated again in a 10M HCl solution for one hour and washed and dried at 150°C.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed, and a characteristic band of chlorine negative ions ($Cl^-$) at 920cm$^{-1}$ was confirmed.

**Reference Example 21** - **Preparation of a polymer**

A polymer including polybenzoxazole was prepared in the same manner as in Example 18, except that a 10M $H_3PO_4$ solution was used instead of a 10M HCl solution.

As a result of FT-IR analysis, characteristic bands of the resulting polybenzoxazole at 1553 cm$^{-1}$, 1480 cm$^{-1}$ (C=N), and 1058 cm$^{-1}$ (C-O) which were not detected in polyhydroxyimide were confirmed, and a characteristic band of phosphoric acid negative ions ($H_2PO_4^-$) at 1020cm$^{-1}$ was confirmed.

**Reference Example 22** - **Preparation of a polymer**

A silica-dispersed solution at 5wt% was fabricated via dispersion of fumed silica powder (Aerosil 200) with average particle size of 13nm in N-methylpyrrolidone. Then, the silica disperse solution was added at a content of 1wt% to the polyhydroxyamic acid solution in Example 3.

The polyhydroxyamic acid solution containing dispersed silica was cast on a glass plate 20 cm x 25 cm in size and cured and imidized in vacuum oven for 2 hours at 100°C, 1 hour at 150°C, 1 hour at 200°C, and 1 hour at 250°C. Then, vacuum drying was carried out in a vacuum oven at 60°C for 24 hours in order to completely remove the residual solvent. Consequently, a transparent brownish polyhydroxyimide membrane was obtained. The prepared membrane including polyhydroxyimide had a thickness of 30μm.

The polyhydroxyimide membrane was thermally treated in the muffled tubular furnace at 450°C at a heating rate of 10°C/min under an argon atmosphere (300cm$^3$[STP]/min), and was held for 1 hour at 450°C. Then, it was cooled down slowly to room temperature to prepare a polymer including polybenzoxazole.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed. The prepared polymer had a fractional free volume of 0.309 and d-spacing of 627pm.

**Reference Example 23** - **Preparation of a polymer**

Zirconium phosphate-dispersed solution at 5wt% was fabricated via dispersion of zirconium phosphate powder as a proton conductor in N-methylpyrrolidone. Then, the zirconium phosphate dispersed solution was added at a content of 20wt% into the polyhydroxyamic acid solution of Example 3

The polyhydroxyamic acid solution including zirconium phosphate-dispersed was cast on a glass plate 20 cm x 25 cm in size and cured and imidized in a vacuum oven for 2 hours at 100°C, 1 hour at 150°C, 1 hour at 200°C, and 1 hour at 250°C. Then, vacuum drying was carried out in a vacuum oven at 60°C for 24 hours in order to completely remove the residual solvent. Consequently, a transparent brownish polyhydroxyimide membrane was obtained. The prepared membrane including polyhydroxyimide had a thickness of 35μm.

The polyhydroxyimide membrane was thermally treated in a muffled tubular furnace at 450°C at a heating rate of 10 °C/min under an argon atmosphere (300cm$^3$[STP]/min), and was held for 1 hour at 450°C. Then, it was cooled down slowly to room temperature to prepare a polymer including polybenzoxazole.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed. The prepared polymer had a fractional free volume of 0.371 and d-spacing of 724pm.

**Reference Example 24 - Preparation of a polymer**

A polymer including polybenzoxazole including a repeating unit represented by the following Chemical Formula 59 was prepared according to the following reaction from polyhydroxyamic acid.

[Chemical Formula 59]

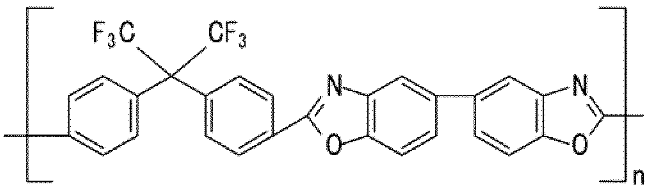

A polymer including polybenzoxazole including a repeating unit represented by the above Chemical Formula 59 was prepared in the same manner as in Example 3, except that 2.16g (10mmol) of 3,3'-dihydroxybenzidine and 4.44g (10mmol) of 4,4'-(hexafluoroisopropylidene)diphthalic anhydride were reacted as a starting material.

As a result of FT-IR analysis, characteristic bands of the resulting polybenzoxazole at 1553cm$^{-1}$, 1480cm$^{-1}$ (C=N), and 1052cm$^{-1}$ (C-O) which were not detected in polyhydroxyimide were confirmed. The prepared polymer had a fractional free volume of 0.186 and d-spacing of 583pm.

**Reference Example 25 - Preparation of a polymer**

A polymer including polypyrrolone including a repeating unit represented by the following Chemical Formula 60 was prepared according to the following reaction from polyhydroxyamic acid.

[Chemical Formula 60]

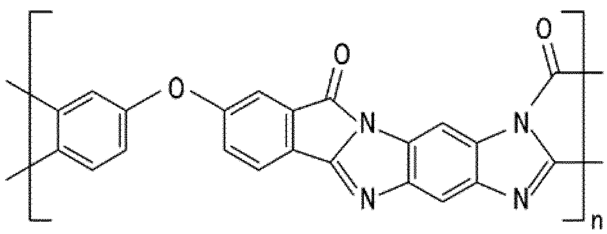

A polymer including polypyrrolone including a repeating unit represented by the above Chemical Formula 60 was prepared in the same manner as in Example 3, except that 2.84g (10mmol) of benzene-1,2,4,5-tetraamine tetrahydrochloride and 3.10g (10mmol) of 4,4'-oxydiphthalic anhydride were reacted as a starting material to prepare a polyamic acid including an amine-group ($-NH_2$).

As a result of FT-IR analysis, characteristic bands of the resulting polypyrrolone at 1758cm$^{-1}$ (C=O) and 1625cm$^{-1}$ (C=N), which were not detected in polyaminoimide were confirmed. The prepared polymer had a fractional free volume of 0.220 and d-spacing of 622pm.

**Reference Example 26 - Preparation of a polymer**

A polymer including a poly(benzoxazole-benzoxazole) copolymer including a repeating unit represented by the following Chemical Formula 61 was prepared according to the following reaction.

[Chemical Formula 61]

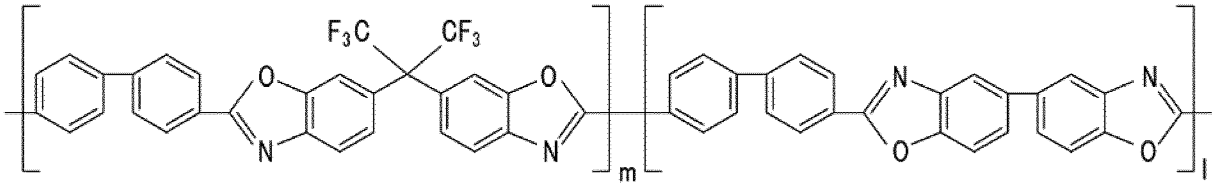

A polymer including a poly(benzoxazole-benzoxazole) copolymer (mole ratio, m:l, is 5:5) including a repeating unit represented by the above Chemical Formula 61 was prepared in the same manner as in Example 3, except that 3.66g (10mmol) of 2,2-bis(3-amino-4-hydroxyphenyl)hexafluoropropane, 2.16g (10mmol) of 3,3'-dihydroxybenzidine, and 5.88g (20mmol) of 3,3',4,4'-biphenyltetracarboxylic anhydride were reacted as a starting material.

As a result of FT-IR analysis, characteristic bands of the resulting polybenzoxazole at 1553cm$^{-1}$, 1480cm$^{-1}$ (C=N), and 1058cm$^{-1}$ (C-O) which were not detected in polyhydroxyimide were confirmed. The prepared polymer had a fractional free volume of 0.237 and d-spacing of 609pm.

**Example 27** - **Preparation of a polymer**

A polymer including a poly(benzoxazole-imide) copolymer including a repeating unit represented by the following Chemical Formula 62 was prepared according to the following reaction.

[Chemical Formula 62]

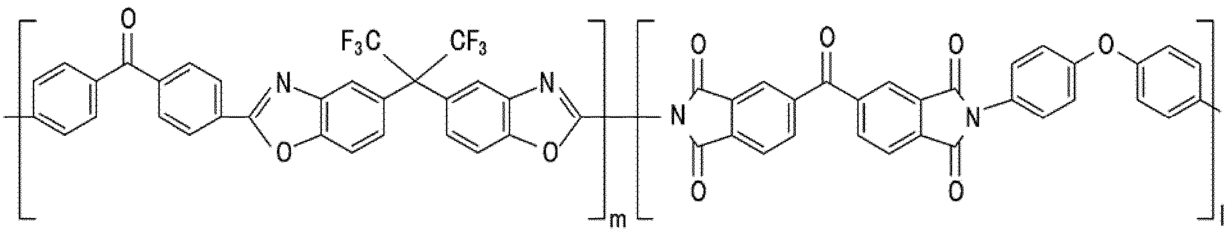

A polymer including a poly(benzoxazole-imide) copolymer (mole ratio, m:l, is 8:2) including a repeating unit represented by the above Chemical Formula 62 was prepared in the same manner as in Example 3, except that 5.86g (16mmol) of 2,2-bis(3-amino-4-hydroxyphenyl)hexafluoropropane, 0.8g (4mmol) of 4,4'-diaminodiphenylether and 6.45g (20mmol) of 3,3',4,4'-benzophenonetetracarboxylic dianhydride were reacted as a starting material.

As a result of FT-IR analysis, characteristic bands of the resulting polybenzoxazole at 1553cm$^{-1}$, 1480cm$^{-1}$ (C=N), and 1058cm$^{-1}$ (C-O) were confirmed, and characteristic bands of polyimide at 1720cm$^{-1}$ (C=O) and 1580cm$^{-1}$ (C=O) were confirmed. The prepared polymer had a fractional free volume of 0.226 and d-spacing of 615pm.

**Example 28** - **Preparation of a polymer**

A polymer including a poly(pyrrolone-imide) copolymer including a repeating unit represented by the following Chemical Formula 63 was prepared according to the following reaction.

[Chemical Formula 63]

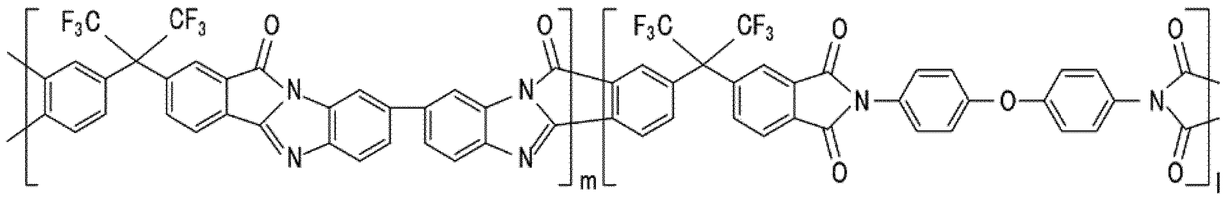

A polymer including a poly(pyrrolone-imide) copolymer (mole ratio, m:l, is 8:2) including a repeating unit represented by the above Chemical Formula 63 was prepared in the same manner as in Example 3, except that 3.42g (16mmol) of 3,3'-diaminobenzidine, 0.8g (4mmol) of 4,4'-diaminodiphenylether, and 8.88g (20 mmol) of 4,4'-(hexafluoroisopropylidene)diphthalic anhydride were reacted as a starting material.

As a result of FT-IR analysis, characteristic bands of the resulting polypyrrolone at 1758cm$^{-1}$ (C=O) and 1625cm$^{-1}$ (C=N) were confirmed, and characteristic bands of polyimide at 1720cm$^{-1}$ (C=O) and 1580cm$^{-1}$ (C=O) were confirmed. The prepared polymer had a fractional free volume of 0.241 and d-spacing of 628pm.

**Example 29 - Preparation of a polymer**

A polymer including a poly(benzothiazole-imide) copolymer including a repeating unit represented by the following Chemical Formula 64 was prepared according to the following reaction.

[Chemical Formula 64]

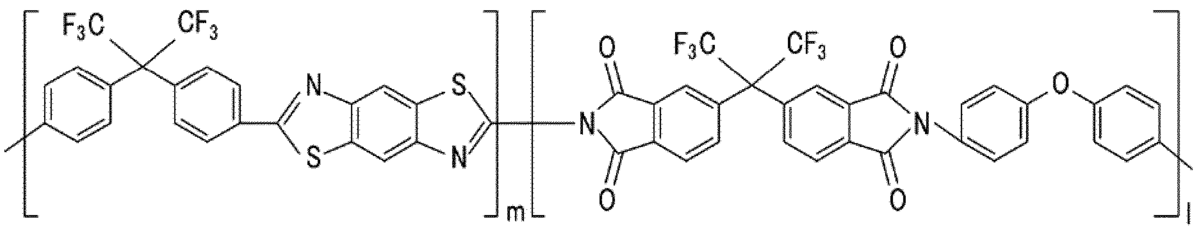

A polymer including a poly(benzothiazole-imide) copolymer (mole ratio, m:l, is 8:2) including a repeating unit represented by the above Chemical Formula 64 was prepared in the same manner as in Example 3, except that 3.92g (16mmol) of 2,5-diamino-1,4-benzenedithiol dihydrochloride, 0.8g (4mmol) of 4,4'-diaminodiphenylether, and 8.88g (20mmol) of 4,4'-(hexafluoroisopropylidene)diphthalic anhydride were reacted as a starting material.

As a result of FT-IR analysis, characteristic bands of the resulting polybenzothiazole at 1484cm$^{-1}$ (C-S) and 1404cm$^{-1}$ (C-S) were confirmed, and characteristic bands of polyimide at 1720cm$^{-1}$ (C=O) and 1580cm$^{-1}$ (C=O) were confirmed. The prepared polymer had a fractional free volume of 0.256 and d-spacing of 611pm.

**Reference Example 30 - Preparation of a polymer**

A polymer including a poly(benzoxazole-benzothiazole) copolymer including a repeating unit represented by the following Chemical Formula 65 was prepared according to the following reaction.

[Chemical Formula 65]

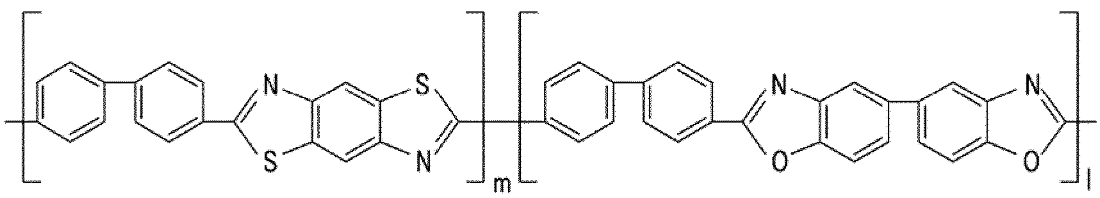

A polymer including a poly(benzoxazole-benzothiazole) copolymer (mole ratio, m:l, is 5:5) including a repeating unit represented by the above Chemical Formula 65 was prepared in the same manner as in Example 3, except that 2.16g (10mmol) of 3,3'-dihydroxybenzidine, 2.45g (10mmol) of 2,5-diamino-1,4-benzenedithiol dihydrochloride, and 6.64g (20mol) of 3,3',4,4'-biphenyltetracarboxylic anhydride were reacted as a starting material.

As a result of FT-IR analysis, characteristic bands of the resulting polybenzoxazole at 1595cm$^{-1}$, 1480cm$^{-1}$ (C=N), and 1052cm$^{-1}$ (C-O) which were not detected in polyimide were confirmed, and characteristic bands of polybenzothiazole at 1484cm$^{-1}$ (C-S) and 1404cm$^{-1}$ (C-S) were confirmed. The prepared polymer had a fractional free volume of 0.194 and d-spacing of 587pm.

**Reference Example 31 - Preparation of a polymer**

A polymer including a poly(pyrrolone-pyrrolone) copolymer including a repeating unit represented by the following Chemical Formula 66 was prepared according to the following reaction.

[Chemical Formula 66]

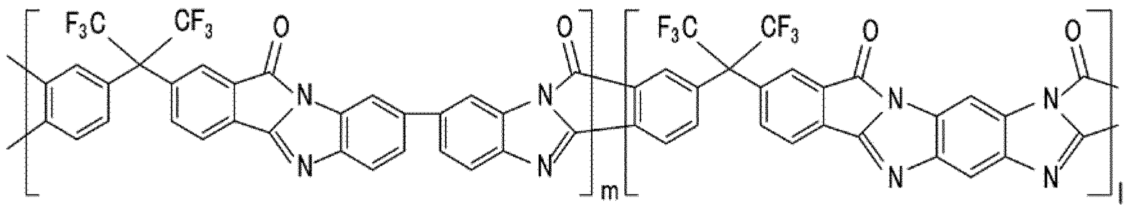

A polymer including a (pyrrolone-pyrrolone) copolymer (mole ratio, m:l, is 8:2) including a repeating unit represented by the above Chemical Formula 66 was prepared in the same manner as in Example 3, except that 3.42g (16 mol) of 3,3'-diaminobenzidine, 1.14g (4mmol) of benzene-1,2,4,5-tetraamine tetrahydrochloride, and 8.88g (20mmol) of 4,4'-(hexafluoroisopropylidene) diphthalic anhydride were reacted as a starting material.

As a result of FT-IR analysis, characteristic bands of the resulting polypyrrolone at 1758$cm^{-1}$ (C=O) and 1625$cm^{-1}$ (C=N) which were not detected in polyaminoimide were confirmed. The prepared polymer had a fractional free volume of 0.207 and d-spacing of 602pm.

**Example 32 - Preparation of a polymer**

A polymer including a poly(benzoxazole-imide) copolymer including a repeating unit represented by the following Chemical Formula 67 was prepared according to the following reaction.

[Chemical Formula 67]

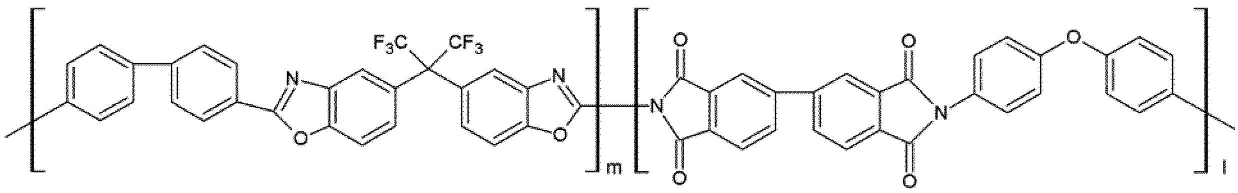

A polymer including a (benzoxazole-imide) copolymer (mole ratio, m:l, is 5:5) including a repeating unit represented by the above Chemical Formula 67 was prepared in the same manner as in Example 3, except that 3.66g (10mmol) of 2,2-bis(3-amino-4-hydroxyphenyl)hexafluoropropane, 2.00g (10mmol) of 4,4'-diaminodiphenylether, and 5.88g (20mmol) of 3,3',4,4'-biphenyltetracarboxylic dianhydride were reacted as a starting material.

As a result of FT-IR analysis, characteristic bands of the resulting polybenzoxazole at 1553 $m^{-1}$, 1480$cm^{-1}$ (C=N), and 1058$cm^{-1}$ (C-O) were confirmed, and characteristic bands of the resulting polyimide at 1720$cm^{-1}$ (C=O) and 1580$cm^{-1}$ (C=O) were confirmed. The prepared polymer had a fractional free volume of 0.192 and d-spacing of 645pm.

**Example 33 - Preparation of a polymer**

A polymer including a poly(benzoxazole-imide) copolymer (mol ratio, m:l, is 2:8) including a repeating unit represented by the above Chemical Formula 67 was prepared in the same manner as in Example 28, except that the copolymerization ratio of benzoxazole to imide was adjusted to 2:8.

As a result of FT-IR analysis, characteristic bands of the resulting polybenzoxazole at 1553$cm^{-1}$, 1480$cm^{-1}$ (C=N), and 1058$cm^{-1}$ (C-O) were confirmed, and characteristic bands of the resulting polyimide at 1720$cm^{-1}$ (C=O) and 1580$cm^{-1}$ (C=O) were confirmed. The prepared polymer had a fractional free volume of 0.182 and d-spacing of 631pm.

**Example 34 - Preparation of a polymer**

A polymer including a poly(benzoxazole-imide) copolymer (mol ratio, m:l, is 8:2) including a repeating unit represented by the above Chemical Formula 67 was prepared in the same manner as in Example 28, except that the

copolymerization ratio of benzoxazole to imide was adjusted to 8:2.

As a result of FT-IR analysis, characteristic bands of the resulting polybenzoxazole at 1553cm$^{-1}$, 1480cm$^{-1}$ (C=N), and 1058cm$^{-1}$ (C-O) were confirmed, and characteristic bands of the resulting polyimide at 1720cm$^{-1}$ (C=O) and 1580cm$^{-1}$ (C=O) were confirmed. The prepared polymer had a fractional free volume of 0.209 and d-spacing of 689pm.

**Comparative Example 1 - Preparation of a polymer**

3.66g (10mmol) of 2,2-bis(3-amino-4-hydroxyphenyl)hexafluoropropane and 4.44g (10mmol) of 4,4'-(hexafluoroisopropylidene)diphthalic anhydride were added into 45.9g (85wt%) of N-methylpyrrolidone (NMP). Then, the solution was allowed to react at 15°C for 4 hours to prepare a pale yellow viscous polyhydroxyamic acid solution.

The prepared viscous polyhydroxyamic acid solution was cast on a glass plate 20cm x 25cm in size, and cured and imidized in vacuum oven at 100°C for 2 hours, at 150°C for 1 hour, at 200°C for 1 hour, and at 250°C for 1 hour. Then, vacuum drying was carried out in a vacuum oven at 60°C for 24 hours in order to completely remove the residual solvent. Consequently, a transparent brownish polyhydroxyimide membrane was obtained. The prepared membrane including polyhydroxyimide had a thickness of 30μm. The polyhydroxyimide membrane was thermally treated in a muffled tubular furnace at 300°C at a heating rate of 10°C/min under an argon atmosphere (300cm$^3$[STP]/min), and was held for 1 hour at 300°C. Then, it was cooled down slowly to room temperature to prepare a polymer.

**Comparative Example 2 - Preparation of a polymer membrane**

A polymer was prepared in the same manner as in Comparative Example 1, except that 2.45g (10mmol) of 2,5-diamino-1,4-benzenedithiol dihydrochloride and 4.44g (10mmol) of 4,4'-(hexafluoroisopropylidene)diphthalic anhydride were reacted as a starting material to prepare a polyamic acid including a thiol group (-SH).

**Comparative Example 3 - Preparation of a polymer membrane**

A polymer was prepared in the same manner as in Comparative Example 1, except that 2.14g (10mmol) of 3,3'-diaminobenzidine and 4.44g (10mmol) of 4,4'-(hexafluoroisopropylidene)diphthalic anhydride were reacted as a starting material to prepare a polyamic acid including an amine-group ($-NH_2$).

**Comparative Example 4 - Preparation of a polymer membrane**

A polymer was prepared in the same manner as in Comparative Example 1, except that 3.66g (0.1mol) of 2,2-bis(3-amino-4-hydroxyphenyl)hexafluoropropane and 3.1g (10mmol) of 4,4'-oxydiphthalic anhydride were reacted as a starting material.

**Comparative Example 5 - Preparation of a polymer membrane**

A polymer was prepared in the same manner as in Comparative Example 1, except that 3.66g (10mmol) of 2,2-bis(3-amino-4-hydroxyphenyl)hexafluoropropane and 2.18g (10mmol) of 1,2,4,5-benzenetetracarboxylic dianhydride were reacted as a starting material.

**Comparative Example 6 - Preparation of a polymer membrane**

A polymer was prepared in the same manner as in Comparative Example 1, except that 3.66g (10mmol) of 2,2-bis(3-amino-4-hydroxyphenyl)hexafluoropropane and 3.22g (10mmol) of 3,3',4,4'-benzophenonetetracarboxylic dianhydride were reacted as a starting material.

**Comparative Example 7 - Preparation of a polymer membrane**

A polymer was prepared in the same manner as in Comparative Example 1, except that 3.66g (10mmol) of 2,2-bis(3-amino-4-hydroxyphenyl)hexafluoropropane and 2.94g (10mmol) of 3,3',4,4'-biphenyltetracarboxylic dianhydride were reacted as a starting material.

**Comparative Example 8 - Preparation of a polymer membrane**

3.66g (10mmol) of 2,2-bis(3-amino-4-hydroxyphenyl)hexafluoropropane and 4.44g (10mmol) of 4,4'-(hexafluoroisopropylidene)diphthalic anhydride were added into 32.4g (80wt%) of N-methylpyrrolidone (NMP), and intensively

agitated for 4 hours. Subsequently, 3.22ml (40mmol) of pyridine as a catalyst for chemical imidization and 3.78ml (40mmol) of acetic anhydride were added to the solution. Then, the solution was allowed to react at room temperature for 24 hours to prepare a pale yellow viscous polyhydroxyimide solution. The pale yellow viscous polyhydroxyimide solution was agitated in triple-distilled water, and deposited to prepare a polymer powder. Then, the polymer powder was filtered, and dried at 120°C.

The prepared polymer powder was dissolved in an amount of 20wt% in an N-methylpyrrolidone (NMP) solution. The dissolved polyhydroxyimide solution was cast on a glass plate 20 cm x 25 cm in size, and cured and imidized in vacuum oven at 180°C for 6 hours. Then, vacuum drying was carried out in a vacuum oven at 60°C for 24 hours in order to completely remove the residual solvent. Consequently, a transparent brownish polyhydroxyimide membrane was obtained. The prepared membrane including polyhydroxyimide had a thickness of 40μm.

**Comparative Example 9 - Preparation of a polymer membrane**

A polymer including polyhydroxyimide was prepared in the same manner as in Comparative Example 8, except that 4.35g (40mmol) of trimethylchlorosilane was added before 3.66g (10mmol) of 2,2-bis(3-amino-4-hydroxyphenyl)hexafluoropropane and 4.44g (10mmol) of 4,4'-(hexafluoroisopropylidene)diphthalic anhydride were reacted.

**Comparative Example 10 - Preparation of a polymer membrane**

3.66g (10mmol) of 2,2-bis(3-amino-4-hydroxyphenyl)hexafluoropropane and 4.44g (10mmol) of 4,4'-(hexafluoroisopropylidene)diphthalic anhydride were added to 32.4g (80wt%) of N-methylpyrrolidone (NMP), and intensively agitated for 4 hours. A membrane including polyhydroxyimide was prepared in the same manner as in Comparative Example 8, except that polyhydroxyimide was prepared by adding 32ml of xylene as an azeotropic mixture, and removing the mixture of water and xylene by thermal solution imidization at 180°C for 12 hours.

**Comparative Example 11 - Preparation of a carbon molecular sieve membrane**

A carbon molecular sieve membrane was prepared by carbonizing a polyimide membrane (Kapton®, DuPont) at 600°C.

In detail, a commercial polyimide membrane (Kapton®, DuPont) prepared from equimolar 1,2,4,5-benzenetetracarboxylic dianhydride and 4,4'-diaminodiphenylether as starting materials was thermally treated in a muffled tubular furnace at 600°C at a heating rate of 5°C/min under an argon atmosphere (100cm$^3$[STP]/min). The membrane was held for one hour at 600°C. Then, it was cooled down slowly to room temperature to prepare a carbon molecular sieve membrane.

**Comparative Example 12 - Preparation of a carbon molecular sieve membrane**

A carbon molecular sieve membrane was prepared in the same manner as in Comparative Example 11, except for carbonizing the polyimide membrane (Kapton®, DuPont) at 800°C.

**Comparative Example 13 - Preparation of a carbon molecular sieve membrane**

A carbon molecular sieve membrane was prepared in the same manner as in Comparative Example 11, except that the membrane including polyhydroxyimide prepared according to Comparative Example 1 was carbonized at 600°C.

**Comparative Example 14 - Preparation of a polymer**

2,2-bis(trimethylsilylamino-4-trimethylsiloxyphenyl)-1,1,1,3,3,3-hexafluor opropane and hexafluoroisopropylidenebiphenyl-4,4-dicarboxylic acid chloride with the same equivalent was dissolved in dimethyl acetamide at 0°C. Then, the dissolved solution was cast on a glass film, and heat-treated at 300°C under an inert atmosphere. Thereby, a membrane including polybenzoxazole was prepared.

**Experimental Example 1 - FT-IR analysis (Fourier transform infrared, FT-IR)**

In order to characterize a precursor and a polymer, ATR-FTIR (attenuated total reflectance (ATR)-Fourier transform infrared (FTIR)) spectra were obtained using an infrared microspectrometer (IlluminatIR, SensIR Technologies, Danbury, CT, USA).

FIG. 2 shows FT-IR spectra of a polymer of Example 3 and of Comparative Example 1.

As shown in FIG. 2, in the case of the polyhydroxyimide of Comparative Example 1, a characteristic band of HO-phenylene at $3400m^{-1}$, characteristic bands of imide at $1788cm^{-1}$ and $1618cm^{-1}$, and a characteristic band of carbonyl-group at $1720cm^{-1}$ were observed. On the other hand, in the case of the polybenzoxazole of Example 3, characteristic bands of polybenzoxazole at $1553cm^{-1}$, $1480cm^{-1}$, and $1052cm^{-1}$ which were not detected in polyhydroxyimide were confirmed. It may be confirmed from the FT-IR spectra that the polymer including polyhydroxyimide of Comparative Example 1 was converted to the polymer including polybenzoxazole of Example 3 by thermal treatment.

In addition, Examples 1, 2, 4 to 8, 11 to 24, 26, 27, 30, and 32 to 34 which contain a similar structure and the same functional groups as Example 3, and Comparative Examples 4 to 10 which contain a similar structure and the same functional groups as Comparative Example 1, showed the same FT-IR spectra as Example 3 and Comparative Example 1, respectively.

FIG. 3 shows FT-IR spectra of a polymer of Example 9 and of Comparative Example 2.

As shown in FIG. 3, in the case of the polythiolimide of Comparative Example 2, characteristic broad and weak bands of -SH at $2400cm^{-1}$ to $2600cm^{-1}$ and characteristic bands of imide at $1793cm^{-1}$ and $1720cm^{-1}$ were observed. On the other hand, in the case of the polybenzothiazole of Example 9, characteristic bands of polybenzothiazole at $1480cm^{-1}$ and $1404cm^{-1}$ which were not detected in polythiolimide were observed. It may be confirmed from the FT-IR spectra that the polymer including polythiolimide of Comparative Example 2 was converted to the polymer including polybenzothiazole of Example 9 by thermal treatment.

In addition, Examples 29 and 30 which contain a similar structure and the same functional groups to Example 9 showed the same infrared spectrum as Example 9.

FIG. 4 shows FT-IR spectra of a polymer of Example 10 and of Comparative Example 3.

As shown in FIG. 4, in the case of the polyaminoimide of Comparative Example 3, a characteristic broad and weak band of $-NH_2$ at $2900cm^{-1}$ to $3400cm^{-1}$ and characteristic bands of imide at $1793cm^{-1}$ and $1720cm^{-1}$ were observed. On the other hand, in the case of the polypyrrolone of Example 10, characteristic bands of polypyrrolone at $1758cm^{-1}$ and $1625cm^{-1}$ which were not detected in polyaminoimide were observed. It may be confirmed from the FT-IR spectra that the polymer including polyaminoimide of Comparative Example 3 was converted to the polymer including polypyrrolone of Example 10 by thermal treatment.

In addition, Examples 25, 28, and 31 which contain a similar structure and the same functional groups as Example 10 showed the same infrared spectra as Example 10.

**Experimental Example 2 - TGA (thermogravimetric analysis)/MS (mass spectroscopy)**

The polyimides of Comparative Examples 1 to 3, the polybenzoxazoles of Examples 1, 3, and 4, the polybenzothiazole of Example 9, and the polypyrrolone of Example 10 were subjected to thermogravimetric analysis/mass spectroscopy (TGA-MS) to confirm weight loss occurring by the thermal rearrangement. The TGA/MS was carried out using TG 209 F1 Iris® (NETZSCH, Germany) and QMS 403C Aeolos® (NETZSCH, Germany), while injecting Ar into each precursor membrane. The heating rate was 10°/min and the Ar purge flow was $90cm^3$[STP]/min. The results thus obtained are shown in FIGS. 5 to 7.

FIG. 5 is a TGA/MS thermogram of the polyhydroxyimide of Comparative Example 1 and the polybenzoxazole of Examples 1, 3, and 4.

As can be seen from FIG. 5, the thermal degradation of the polybenzoxazole of Examples 3 and 4 is not observed within the thermal conversion temperature of 400 to 500°C. On the other hand, the polyhydroxyimide of Comparative Example 1 and the polybenzoxazole of Example 1 began to be thermally rearranged at a thermal conversion temperature of 400 to 500°C. The polybenzoxazole of Example 1 that was treated at a relatively lower temperature of 350°C to complete the thermally conversion process showed further conversion at a temperature range of 400 to 500°C. The evolved gas component was subjected to MS to confirm the presence of $CO_2$. According to elimination of $CO_2$, the weight of the polyhydroxyimide of Comparative Example 1 and the polybenzoxazole of Example 1 decreased 6 to 8% and 4 to 5% respectively, at the temperature range of 400 to 500°C due to the thermal rearrangement through thermal treatment. However, the weight of polybenzoxazole of Examples 3 and 4 did not decrease up to 500°C.

In addition, Examples 1, 2, 4 to 8, 11 to 24, 26, 27, 30, and 32 to 34 that contain a similar structure and the same functional groups as Example 3, and Comparative Examples 4 to 10 that contain a similar structure and the same functional groups as Comparative Example 1, showed similar thermal decomposition curves to Example 3 and Comparative Example 1, respectively.

FIG. 6 is a TGA/MS thermogram of polythiolimide of Comparative Example 2 (precursor of polybenzothiazole of Example 9) and polybenzothiazole of Example 9.

As can be seen from FIG. 6, the thermal degradation of the polybenzothiazole of Example 9 is not observed within the thermal conversion temperature of 400 to 500°C. On the other hand, the polythiolimide of Comparative Example 2 began to be thermally rearranged at a thermal conversion temperature of 400 to 500°C. The evolved gas component was subjected to MS to confirm the presence of $CO_2$. According to elimination of $CO_2$, the weight of the polythiolimide

of Comparative Example 2 decreased 12 to 14% at the temperature range of 400 to 500°C due to the thermal rearrangement through thermal treatment. However, the weight of the polybenzothiazole of Example 9 did not decrease up to 500°C.

FIG. 7 is a TGA/MS thermogram of the polyaminoimide of Comparative Example 3 (precursor of polypyrrolone of Example 10) and the polypyrrolone of Example 10.

As can be seen from FIG. 7, the thermal degradation of the polypyrrolone of Example 10 is not observed within the thermal conversion temperature of 300 to 500°C. On the other hand, the polyaminoimide of Comparative Example 3 began to be thermally rearranged at a thermal conversion temperature of 300 to 500°C. The evolved gas component was subjected to MS to confirm the presence of $H_2O$. According to elimination of $H_2O$, the weight of polyaminoimide of Comparative Example 3 decreased 7 to 9% at the temperature range of 300 to 500°C due to the thermal rearrangement through thermal treatment. However, the weight of polypyrrolone of Example 10 did not decrease up to 500°C.

In addition, Examples 25, 28, and 31 that contain a similar structure and the same functional groups as Example 10 showed similar thermal decomposition curves to Example 10.

According to these data, the polymers prepared according to Examples 1 to 34 have excellent thermal resistance at a high temperature.

### Experimental Example 3 - Elemental Analysis

To observe a structural change of the polymers of Examples 1 to 3 and Comparative Example 1, an elemental analyzer (Carlo Erba/Fison Inc, ThermoFinnigan EA1108) was engaged. $WO_3$/Cu was engaged as a catalyst, and BBOT (2,5-bis(5-tert-butyl-benzoxazole-2-yl)thiophene) was engaged as a standard material. Table 1 shows the test results of examples at 1000°C.

Table 1

| Polymer | Chemical Formula | C (wt%) | H (wt%) | N (wt%) | O (wt%) | F (wt%) |
|---|---|---|---|---|---|---|
| Example 1 | - | 54.1±0.16 | 2.07±0.00 | 3.87±0.01 | 9.34±0.18 | 30.6±0.02 |
| Example 2 | - | 55.2±0.01 | 2.02±0.01 | 4.05±0.00 | 7.23±0.03 | 31.5±0.04 |
| Example 3 | $[C_{32}H_{14}F_{12}N_2O_2]_n$ | 56.7±0.01 (55.9*) | 1.93±0.02 (2.06*) | 4.21±0.01 (4.08*) | 4.89±0.12 (4.66*) | 32.3±0.12 (33.2*) |
| Comparative Example 1 | $[C_{34}H_{14}F_{12}N_2O_6]_n$ | 53.2±0.08 (52.7*) | 1.87±0.06 (1.82*) | 3.62±0.01 (3.62*) | 11.3±0.22 (11.3*) | 30.0±0.08 (29.4*) |

* calculated value

- measurement apparatus: ThermoFinnigan (Carlo Erba/Fison) EA1108
- temperature: 1000°C, (1060°C for $O_2$)
- catalyst: $WO_3$/Cu (nickel-plated carbon, nickel wool, quartz turnings, soda lime, magnesium perchlorate anhydrone for O)
- sample weight: 5mg, (2mg for O)
- measured element: C, H, N, O
- standard material: BBOT (2,5-bis(5-tert-butyl-benzoxazole-2-yl) thiophene), (sulfanilamide for O)

Referring to the above Table 1, the polyhydroxyimide of Comparative Example 1 must include 52.7wt% carbon (C), 1.82wt% hydrogen (H), 3.62wt% nitrogen (N), 11.3wt% oxygen (O), and 29.4wt% fluorine (F) in the abstract. The constituents of polyhydroxyimide of Comparative Example 1 (53.2±0.08wt% carbon (C), 1.87±0.06wt% hydrogen (H), 3.62±0.01wt% nitrogen (N), 11.3±0.22wt% oxygen (O), and 30.0±0.08wt% fluorine (F)) were consistent with the above theoretical polyhydroxyimide constituents.

In addition, the polybenzoxazole of Example 3 must include 55.9wt% carbon (C), 2.06wt% hydrogen (H), 4.08wt% nitrogen (N), 4.66wt% oxygen (O), and 33.2wt% fluorine (F) in the abstract. The constituents of polybenzoxazole of Example 3 (56.7±0.01wt% carbon (C), 1.93±0.02wt% hydrogen (H), 4.21±0.01 wt% nitrogen (N), 4.89±0.12wt% oxygen (O), and 32.3±0.12wt% fluorine (F)) were consistent with the above theoretical polybenzoxazole constituents.

According to these data, it may be confirmed that the formulae of the thermally rearranged polymers of Examples 1 to 34 are consistent with the supposed chemical formulae. Thereby, it may be confirmed that the polymers prepared according to Examples 1 to 34 are prepared by thermal rearrangement.

**Experimental Example 4 - Mechanical Properties**

The mechanical properties of the polymer membranes prepared according to Examples 1 to 12, 14, and 24 to 34, and Comparative Examples 1 to 13, were measured at 25°C using AGS-J 500N equipment (Shimadzu). Five specimens of each sample were tested. The standard deviation from the mean was within ±5%. The results thus obtained are shown in the following Table 2.

Table 2

| Polymer | Tensile strength (MPa) | Elongation percent at break (%) |
|---|---|---|
| Example 1 | 87 | 3.8 |
| Example 2 | 95 | 3.5 |
| Example 3 | 98 | 3.9 |
| Example 4 | 101 | 3.2 |
| Example 5 | 96 | 4.7 |
| Example 6 | 104 | 4.2 |
| Example 7 | 109 | 3.1 |
| Example 8 | 103 | 4.1 |
| Example 9 | 95 | 5.7 |
| Example 10 | 88 | 4.2 |
| Example 11 | 96 | 3.7 |
| Example 12 | 92 | 5.2 |
| Example 14 | 88 | 2.6 |
| Example 24 | 117 | 4.2 |
| Example 25 | 109 | 5.3 |
| Example 26 | 98 | 5.9 |
| Example 27 | 84 | 6.7 |
| Example 28 | 91 | 5.5 |
| Example 29 | 101 | 4.5 |
| Example 30 | 96 | 3.2 |
| Example 31 | 88 | 3.8 |
| Example 32 | 96 | 5.2 |
| Example 33 | 82 | 6.7 |
| Example 34 | 95 | 4.3 |
| Comparative Example 1 | 83 | 3.1 |
| Comparative Example 2 | 76 | 4.2 |
| Comparative Example 3 | 75 | 4.8 |
| Comparative Example 4 | 81 | 3.5 |
| Comparative Example 5 | 90 | 2.5 |
| Comparative Example 6 | 78 | 3.3 |
| Comparative Example 7 | 85 | 3.1 |
| Comparative Example 8 | 64 | 3.4 |
| Comparative Example 9 | 65 | 3.7 |

(continued)

| Polymer | Tensile strength (MPa) | Elongation percent at break (%) |
|---|---|---|
| Comparative Example 10 | 66 | 3.5 |
| Comparative Example 11 | 42 | 0.4 |
| Comparative Example 12 | 52 | 0.3 |
| Comparative Example 13 | 34 | 0.6 |

As shown in the Table 2, the polymers of Examples 1 to 12, 14, and 24 to 34 showed better tensile strength (unit: MPa) and elongation percent at break (unit: %) than those of Comparative Examples 1 to 13. This is because the polyimide main chain structure was converted into a stiff and rigid aromatic-connected polybenzoxazole, polybenzothiazole, or polypyrrolone structure through thermal rearrangement.

Therefore, it is advantageous in that the polymers of Examples 1 to 34 can endure moderate conditions as well as harsh conditions such as a long operation time, a high operation temperature, an acidic condition, and high humidity due to the rigid polymer backbone present in the polymer.

**Experimental Example 5-Adsorption/desorption isotherm analysis**

An adsorption/desorption isotherm analysis was performed to determine nitrogen ($N_2$) adsorption/desorption characteristics of the polymer prepared according to Examples 1 to 12, 14, 24, and 25, and Comparative Examples 1 to 3. $N_2$ adsorption/desorption isotherms of the polymers were measured by a BET (Brunauer-Emmett-Teller) method. The results are shown in FIGS. 8 and 9.

FIG. 8 shows $N_2$ adsorption/desorption isotherms at -196°C for Examples 3, 9, and 10. FIG. 9 shows $N_2$ adsorption/desorption isotherms at -196°C for Examples 3 and 5 to 8.

As shown in FIGS. 8 and 9, the $N_2$ adsorption/desorption isotherms of Examples 3 and 5 to 10 are of a reversible Type IV form with hysteresis. This result including a large specific surface area and gas adsorbing capacity confirmed that picopores were well connected.

In order to realize more precise characterization of the polymers according to one embodiment, the pore volume of polymers according to Examples 1 to 10, 11, 12, 14, 24, and 25, and Comparative Examples 1 to 3, were measured using a specific surface area and pore analyzer (ASAP2020, Micromeritics, GA, USA). At this time, the polymers were transferred to pre-weighed analytic tubes that were capped with Transeal™ to prevent permeation of oxygen and atmospheric moisture during transfers and weighing. The polymers were evacuated under a dynamic vacuum up to 300°C until an outgas rate was less than 2mTorr/min. The results are shown in the following Table 3.

Specific surface area and total pore volume were calculated by measuring nitrogen adsorption degree until saturation pressure ($P/P_o=1$) by the $cm^3/g$ unit and using liquefied nitrogen at 77K through Equations 1 and 2 that are well-known for the Brunauer-Emmett-Teller (BET) function, within $0.05 < P/P_o < 0.3$.

[Equation 1]

$$\frac{1}{v[(P_0/P)-1]} = \frac{c-1}{v_m c}\left(\frac{P}{P_0}\right) + \frac{1}{v_m c}$$

In Equation 1,

P is balance pressure of gas,
$P_o$ is saturated pressure of gas,
v is quantity of gas adsorbed,
$v_m$ is quantity of gas absorbed at the surface at single phase at adsorption temperature, and
c is the BET constant of Equation 2.

[Equation 2]

$$c = \exp\left(\frac{E_1 - E_L}{RT}\right)$$

In Equation 2,

$E_1$ is adsorption heat at the first phase,
$E_L$ is adsorption heat beyond the second phase,
R is a gas constant, and
T is measuring temperature.

Table 3

| Polymer | Maximum adsorption quantity ($cm^3/g$ [STP]) | BET surface area ($m^2/g$) | Total pore volume at a single point ($cm^3/g$ [STP]) |
|---|---|---|---|
| Example 1 | 3.58 | 2.73 | 0.002 |
| Example 2 | 16.9 | 31.47 | 0.023 |
| Example 3 | 219.2 | 661.5 | 0.335 |
| Example 4 | 236.7 | 638.2 | 0.309 |
| Example 5 | 185.5 | 545.5 | 0.283 |
| Example 6 | 24.8 | 59.78 | 0.036 |
| Example 7 | 195.9 | 556.1 | 0.290 |
| Example 8 | 174.4 | 492.0 | 0.257 |
| Example 9 | 145.8 | 409.9 | 0.223 |
| Example 10 | 173.2 | 532.9 | 0.266 |
| Example 11 | 209.5 | 592.8 | 0.297 |
| Example 12 | 163.9 | 457.6 | 0.239 |
| Example 14 | 142.8 | 352.8 | 0.213 |
| Example 24 | 89.2 | 76.4 | 0.096 |
| Example 25 | 117.6 | 92.7 | 0.141 |
| Comparative Example 1 | 23.4 | 9.97 | 0.018 |
| Comparative Example 2 | 68.6 | 44.8 | 0.072 |
| Comparative Example 3 | 14.7 | 27.9 | 0.19 |

As shown in Table 3, the BET surface area of Example 3 is $661.5m^2/g$ that is markedly large for a polymer, and total pore volume at a single point is $0.335cm^3/g$. This indicates that the polymers of Examples 1 to 34 may include a substantial amount of free volume.

**Experimental Example 6** - **Positron annihilation lifetime spectroscopy (PALS) measurements**

The PALS measurements were performed in nitrogen at ambient temperature using an automated EG&G Ortec fast-fast coincidence spectrometer. The timing resolution of the system was 240ps.

The polymer membranes were stacked to a thickness of 1mm on either side of a $^{22}$Na-Ti foil source. There

was no source correction needed for the Ti foil (thickness 2.5μm). Each spectrum consisted of approximately 10 million integrated counts. The spectra were modeled as the sum of three decaying exponentials or as a continuous distribution. The PALS measurement is performed by obtaining time difference $T_1$, $T_2$, $T_3$, and the like between $\gamma_0$ of 1.27MeV produced by radiation of positrons produced from a $^{22}Na$ isotope and $\gamma_1$ and $\gamma_2$ of 0.511MeV produced by annihilation thereafter.

The size of pores may be calculated through Equation 3 using disappearance time of 0.511MeV of 2-γ signals.

[Equation 3]

$$\tau_{o-Ps} = \frac{1}{2}\left[1 - \frac{R}{R+\Delta R} + \frac{1}{2\pi}\sin\left(\frac{2\pi R}{R+\Delta R}\right)\right]^{-1}$$

In Equation 3,

$\tau_{o\text{-}Ps}$ is disappearance time of positrons,
R is pore size, and
ΔR is an empirical parameter of the supposition that the pores are spherically shaped.

The results are shown in the following Table 4 and FIG. 10. Table 4 and FIG. 10 confirm the size and uniformity of the pores.

Table 4

| Polymer | Intensity $I_3$ [%] | Lifetime [$T_3$/ns] | FWHM* | Treated temperature [°C] |
|---|---|---|---|---|
| Example 1 | 4.6 | 2.3 | 0.14 | 350 |
| Example 2 | 14.3 | 3.2 | 0.12 | 400 |
| Example 3 | 8.0 | 3.3 | 0.17 | 450 |
| Comparative Example 1 | 2.0 | 2.0 | 0.48 | 300 |
| * FWHM, full width at half maximum from the o-PS lifetime $T_3$ distribution | | | | |

FIG. 10 is a graph showing pore radius distribution of polymers of Examples 1 to 3 and Comparative Example 1 measured by PALS. The polymer of Comparative Example 1 has a wide pore radius distribution area and small quantity of pores as a conventional polymer. But the polymer of Example 1 has a narrow pore radius distribution area and a large quantity of pore sizes at about 320pm. Further, the polymers of Examples 2 and 3 have a narrow pore radius distribution area and a large quantity of pore sizes of 370pm to 380pm generated by thermal conversion. The reason why the number of pores decreases in Example 3 as opposed to Example 2 is that the pores are linked to each other at a higher thermal conversion temperature. This confirms that picopores are well-connected to each other.

**Experimental Example 7 - Gas permeability and selectivity measurements**

In order to ascertain gas permeability and selectivity of a polymer of Examples 1 to 34 and Comparative Examples 1 to 7 and 11 to 13, the following processes were performed. The results are shown in the following Table 5 and FIGS. 11 and 12.

Gas permeability and selectivity were measured using a high-vacuum time-lag apparatus, the calibrated downstream volume was $30cm^3$, and the upstream and the downstream pressures were measured using a Baratron transducer with a full scale of 33atm and 0.002atm, respectively.

All of the pure gas permeation tests were performed more than 5 times at 25°C. The standard deviation from the mean values of permeabilities was within ±2%, and the sample-to-sample reproducibility was very good within samples at ±5%. The effective area of the polymer membranes was $4.00cm^2$.

For these pure gases, it is possible to measure either the volume of permeation at a fixed pressure or the rate of increase of permeation pressure in a fixed receiver volume. The permeation pressure, $p_2$, has a very small value (<2Torr), while the inlet pressure, pi, is atmospheric pressure or more. While the pressure at the permeation side was

measured by recording $p_2$ versus time (sec), it is capable of approximating the permeabilities of gas molecules through the polymer membranes. The permeability coefficient of A molecules, $P_A$, can be calculated from the rate at which the downstream pressure increases in the fixed permeation volume at a steady state as in the following Equation 4.

[Equation 4]

$$P_A = \frac{Vl}{p_1 ART}\left(\frac{dp_2}{dt}\right)_{ss}$$

In Equation 4,

V is the volume of a fixed downstream receiver,
l is the membrane thickness,
A is the membrane area,
$p_1$ and $p_2$ are the upstream and downstream pressures, and
R, T, and t are the gas constant, temperature, and time, respectively.

Table 5

| Polymer | $H_2$ permeability (Barrer) | $O_2$ permeability (Barrer) | $CO_2$ permeability (Barrer) | $O_2/N_2$ selectivity | $CO_2/CH_4$ selectivity |
|---|---|---|---|---|---|
| Example 1 | 60.9 | 5.5 | 23.6 | 6.9 | 26.2 |
| Example 2 | 372.4 | 59.8 | 296.9 | 5.1 | 61.2 |
| Example 3 | 2855.9 | 776.1 | 3575.3 | 5 | 44.3 |
| Example 4 | 8867.5 | 1547.2 | 5963.2 | 6.5 | 40.7 |
| Example 5 | 443.5 | 92.8 | 596.9 | 4.7 | 40.5 |
| Example 6 | 91.2 | 14.3 | 72.79 | 6.1 | 58.2 |
| Example 7 | 634.9 | 148.2 | 951.8 | 4.4 | 40.7 |
| Example 8 | 356.4 | 81.4 | 468.6 | 5.4 | 45.5 |
| Example 9 | 2560 | 524.5 | 1251.3 | 5.9 | 61.4 |
| Example 10 | 495.3 | 84.4 | 442 | 4.5 | 37.2 |
| Example 11 | 4671.3 | 900.6 | 4111.5 | 5.5 | 62.5 |
| Example 12 | 4423 | 1438 | 4923 | 3.7 | 29 |
| Example 13 | 3391 | 1065 | 3699 | 3.2 | 18 |
| Example 14 | 408 | 81 | 398 | 4.3 | 34 |
| Example 15 | 1902 | 612 | 2855 | 3.4 | 27 |
| Example 16 | 2334 | 795 | 2464 | 3.7 | 13 |
| Example 17 | 2878 | 917 | 4922 | 3.5 | 23 |
| Example 18 | 1231 | 236.5 | 912.3 | 5.8 | 61.6 |
| Example 19 | 1061.5 | 250.1 | 759.3 | 4.5 | 37.2 |
| Example 20 | 941.8 | 203.3 | 701.9 | 4.6 | 41.3 |
| Example 21 | 738 | 82.4 | 295.1 | 6.8 | 89.4 |
| Example 22 | 445.4 | 82.1 | 392.2 | 4.4 | 31.3 |

(continued)

| Polymer | $H_2$ permeability (Barrer) | $O_2$ permeability (Barrer) | $CO_2$ permeability (Barrer) | $O_2/N_2$ selectivity | $CO_2/CH_4$ selectivity |
|---|---|---|---|---|---|
| Example 24 | 53 | 3.5 | 12 | 8.3 | 54.5 |
| Example 25 | 135.4 | 39.7 | 171.4 | 6.5 | 49.1 |
| Example 26 | 742.3 | 122.1 | 461.7 | 5.5 | 38.5 |
| Example 27 | 491.6 | 107 | 389.1 | 4.2 | 19.5 |
| Example 28 | 300.1 | 59.7 | 314.4 | 5.5 | 40.3 |
| Example 29 | 350.4 | 89.6 | 451.3 | 5.6 | 41 |
| Example 30 | 2699.8 | 650.1 | 2604.1 | 5.4 | 30.2 |
| Example 31 | 752.1 | 150.4 | 429.5 | 5.5 | 23 |
| Example 32 | 192.7 | 12.5 | 251.9 | 4.9 | 28.6 |
| Example 33 | 8.6 | 2.2 | 11.4 | 5.7 | 38.2 |
| Example 34 | 294.2 | 106.6 | 388.9 | 4.2 | 19.4 |
| Comparative Example 1 | 35.2 | 2.6 | 9.9 | 7.2 | 123.4 |
| Comparative Example 2 | 14.3 | 1.8 | 8.5 | 6.5 | 48.2 |
| Comparative Example 3 | 206.8 | 22.7 | 80.2 | 5.9 | 38 |
| Comparative Example 4 | 12.2 | 0.8 | 1.8 | 13 | 110.7 |
| Comparative Example 5 | 42.8 | 3.7 | 17 | 6.8 | 79.5 |
| Comparative Example 6 | 11.1 | 0.6 | 1.43 | 6.6 | 47.4 |
| Comparative Example 7 | 14.3 | 0.7 | 2.7 | 7.7 | 90.6 |
| Comparative Example 11 | 534 | 383 | 1820 | 4.7 | - |
| Comparative Example 12 | 248 | 34.8 | 128 | 11.5 | - |
| Comparative Example 13 | 4973.9 | 401.5 | 1140.7 | 7.65 | 50.2 |

As shown in Table 5, it may be confirmed that the polymers of Examples 1 to 34 have excellent gas permeability and selectivity compared to the polymers of Comparative Examples 1 to 13.

FIGS. 11 and 12 are graphs showing oxygen permeability (Barrer) and oxygen/nitrogen selectivity, and carbon dioxide permeability (Barrer) and carbon dioxide/methane selectivity of flat membranes prepared in Examples 1 to 11, 18 to 22, and 24 to 34 of the present invention, and Comparative Examples 1 to 7 and 11 to 13, respectively (the numbers 1 to 11, 18 to 22, and 24 to 34 indicate Examples 1 to 11, 18 to 22, and 24 to 34, respectively, and the numbers 1' to 7' and 11' to 13' indicate Comparative Examples 1 to 7 and 11 to 13, respectively).

As shown in FIGS. 11 and 12, it may be confirmed that the polymers of Examples 1 to 34 have excellent gas permeability and selectivity.

It may be confirmed that the polymers of Examples 1 to 34 include well-connected picopores.

**Experimental Example 8 - Fractional free volume (FFV) measurements**

The fractional free volumes of the polymers of Examples 3, 5 to 8, and 10, and Comparative Examples 1 and 3 to 7 were measured.
The density of a polymer is related to the degree of free volume, and has an influence on gas permeability.
First, density of the membranes was measured by a buoyancy method using a Sartorius LA 310S analytical balance in accordance with Equation 5.

[Equation 5]

$$\rho_P = \frac{w_a}{w_a - w_w} \times \rho_w$$

In Equation 5,

$\rho_p$ is the density of a polymer,
$\rho_w$ is the density of deionized water,
$w_c$ is the weight of a polymer measured in the air, and
$w_\omega$ is the weight of a polymer measured in the deionized water.

The fractional free volume (FFV, $V_f$) was calculated from the data in accordance with Equation 6 below.

[Equation 6]

$$FFV = \frac{V - 1.3V_W}{V}$$

In Equation 6,

V is the polymer specific volume and
Vw is the specific Van der Waals volume.

The d-spacing was calculated in accordance with Bragg's Equation from X-ray diffraction pattern results.
The results are shown in the following Table 6.

Table 6

| Polymer | Density (g/cm$^3$) | polymer specific volume (V, cm$^3$/g) | Van der Waals volume (Vw, cm$^3$/g) | Fractional free volume (FFV, $V_f$) | Increment in FFV (%) | d-spacing (pm) |
|---|---|---|---|---|---|---|
| Comparative Example 1 | 1.503 | 0.665 | 0.430 | 0.159 | 65 | 548 |
| Example 3 | 1.293 | 0.773 | 0.439 | 0.263 | | 600 |
| Comparative Example 7 | 1.453 | 0.688 | 0.459 | 0.134 | 64 | 546 |
| Example 5 | 1.271 | 0.787 | 0.473 | 0.219 | | 606 |
| Comparative Example 4 | 1.469 | 0.681 | 0.455 | 0.131 | 57 | 503 |
| Example 6 | 1.304 | 0.767 | 0.469 | 0.205 | | 611 |

(continued)

| Polymer | Density (g/cm$^3$) | polymer specific volume (V, cm$^3$/g) | Van der Waals volume (Vw, cm$^3$/g) | Fractional free volume (FFV, $V_f$) | Increment in FFV (%) | d-spacing (pm) |
|---|---|---|---|---|---|---|
| Comparative Example 5 | 1.478 | 0.677 | 0.443 | 0.148 | 28 | 560 |
| Example 7 | 1.362 | 0.734 | 0.457 | 0.190 | | 698 |
| Comparative Example 6 | 1.482 | 0.675 | 0.457 | 0.120 | 102 | 539 |
| Example 8 | 1.240 | 0.806 | 0.470 | 0.243 | | 602 |
| Comparative Example 3 | 1.475 | 0.678 | 0.373 | 0.172 | 64 | 576 |
| Example 10 | 1.406 | 0.711 | 0.610 | 0.282 | | 634 |
| Comparative Example 8 | 1.449 | 0.690 | 0.417 | 0.215 | 64 | 578 |
| Example 12 | 1.146 | 0.873 | 0.439 | 0.352 | | 662 |
| Comparative Example 10 | 1.487 | 0.673 | 0.430 | 0.172 | 29 | 545 |
| Example 14 | 1.377 | 0.727 | 0.439 | 0.222 | | 595 |

As shown in Table 6, the polymers of Examples 3, 5 to 8, 10, and 12 and 14 have decreased density due to heat treatment compared to Comparative Examples 1, 3 to 8, and 10, and thereby have increased fractional free volume by 28% to 102%. Consequently, it may be confirmed that the polymers of Examples 1 to 34 may have abundant uniform-sized picopores through heat treatment.

**Claims**

1. A polymer derived from a polyimide copolymer, wherein
the polymer derived from the polyimide copolymer includes picopores, said picopores having an average diameter of 100 pm to 1000 pm, measured by positron annihilation lifetime spectroscopy (PALS), and
the polyimide copolymer comprises a repeating unit represented by any one of the following Chemical Formulae 37 to 40:

[Chemical Formula 37]

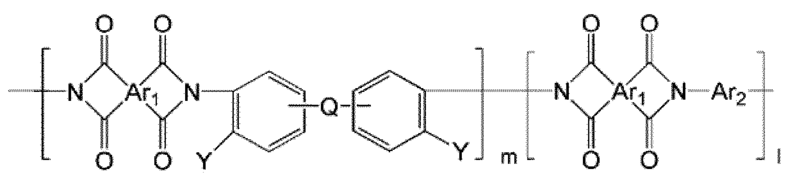

[Chemical Formula 38]

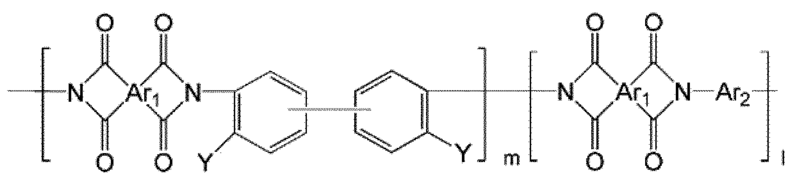

[Chemical Formula 39]

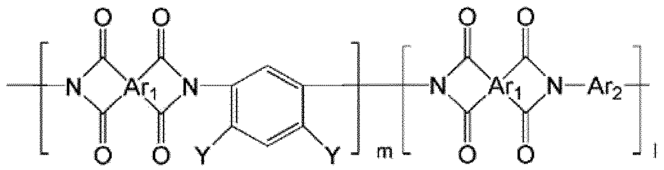

[Chemical Formula 40]

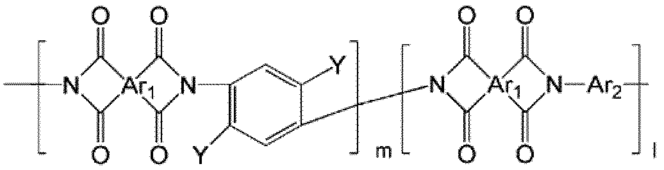

wherein, in the above Chemical Formulae 37 to 40,

$Ar_1$ is an aromatic group selected from a substituted or unsubstituted quadrivalent C6 to C24 arylene group and a substituted or unsubstituted quadrivalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,
$Ar_2$ is an aromatic group selected from a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,
wherein the term "substituted" means substituted with at least one substituent selected from the group consisting of a C1 to C10 alkyl group, a C1 to C10 alkoxy group, a C1 to C10 haloalkyl group, and a C1 to C10 haloalkoxy group,
Q is O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, C(=O)NH, $C(CH_3)(CF_3)$, or a substituted or unsubstituted phenylene group, where the substituted phenylene group is a phenylene group substituted with a C1 to C6 alkyl group or a C1 to C6 haloalkyl group, where the Q is linked with aromatic groups with m-m, m-p, p-m, or p-p positions,
Y is the same or different in each repeating unit and is independently selected from OH, SH, or $NH_2$,
m is an integer ranging from 10 to 400,
l is an integer ranging from 10 to 400,
wherein the polymer is doped with an acid dopant, and
wherein the acid dopant includes one selected from the group consisting of sulfuric acid, hydrochloric acid, phosphoric acid, nitric acid, $HBrO_3$, $HClO_4$, $HPF_6$, $HBF_6$, 1-methyl-3-methylimidazolium cations ($BMIM^+$), and a combination thereof.

**2.** The polymer of claim 1, wherein the picopores have an hourglass-shaped structure by connecting at least two picopores.

**3.** The polymer of claim 1, wherein the polymer derived from a polyimide has a fractional free volume (FFV) of 0.18 to 0.40.

**4.** The polymer of claim 1, wherein the polymer derived from polyimide has interplanar distance (d-spacing) of 580pm to 800pm measured by X-ray diffraction (XRD).

**5.** The polymer of claim 1, wherein the picopores have a full width at half maximum (FWHM) of 10pm to 40pm measured by positron annihilation lifetime spectroscopy (PALS).

**6.** The polymer of claim 1, wherein the polymer derived from a polyimide has a BET surface area of $100m^2/g$ to $1000m^2/g$.

**7.** The polymer of claim 1, wherein the polyimide is obtained by imidization of a polyamic acid copolymer including a repeating unit represented by any one of the following Chemical Formulae 5 to 8:

[Chemical Formula 5]

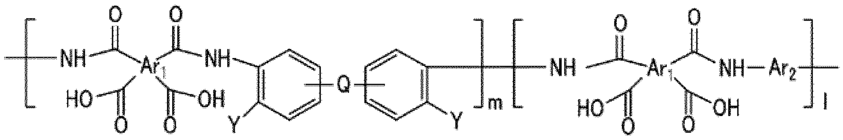

[Chemical Formula 6]

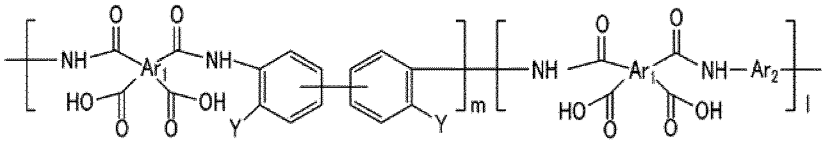

[Chemical Formula 7]

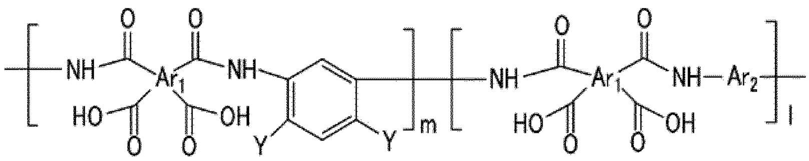

[Chemical Formula 8]

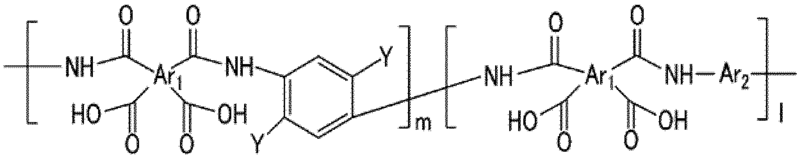

wherein, in the above Chemical Formulae 5 to 8,

$Ar_1$ is an aromatic group selected from a substituted or unsubstituted quadrivalent C6 to C24 arylene group and a substituted or unsubstituted quadrivalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,

$Ar_2$ is an aromatic group selected from a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,

wherein the term "substituted" means substituted with at least one substituent selected from the group consisting of a C1 to C10 alkyl group, a C1 to C10 alkoxy group, a C1 to C10 haloalkyl group, and a C1 to C10 haloalkoxy group,

Q is O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, C(=O)NH, $C(CH_3)(CF_3)$, or a substituted or unsubstituted phenylene group, where the substituted phenylene group is a phenylene group substituted with a C1 to C6 alkyl group or a C1 to C6 haloalkyl group, where the Q is linked with aromatic groups with m-m, m-p, p-m, or p-p positions,

Y is the same or different in each repeating unit and is independently selected from OH, SH, and $NH_2$,
m is an integer ranging from 10 to 400, and
I is an integer ranging from 10 to 400.

**8.** The polymer of claim 1 or 7, wherein the $Ar_1$ is selected from one of the following Chemical Formulae:

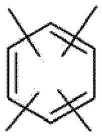 , 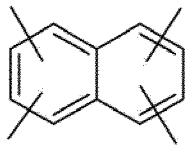 , 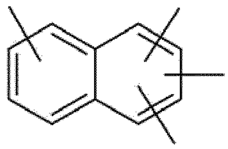 , 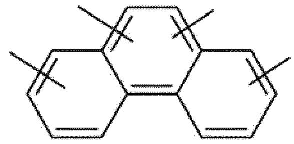 ,

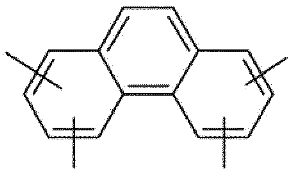 , 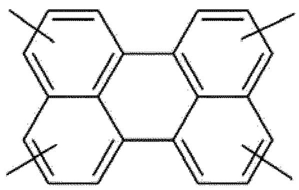 , 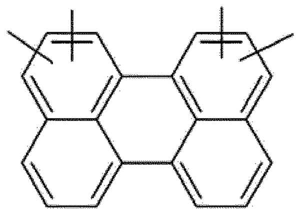 ,

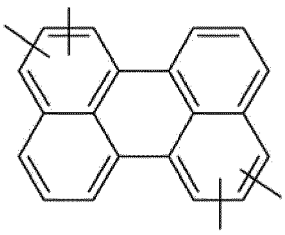 , 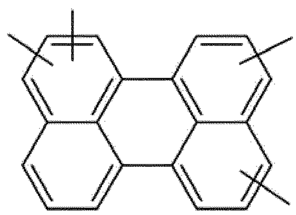 , 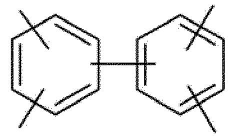 ,

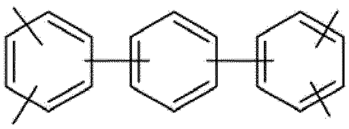 , 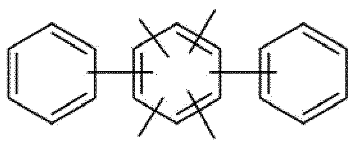 ,

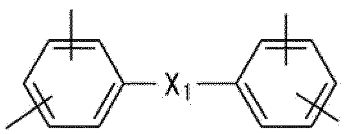 , 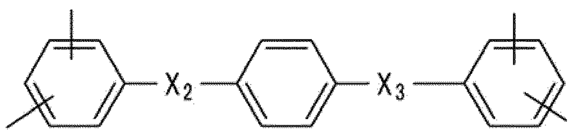 ,

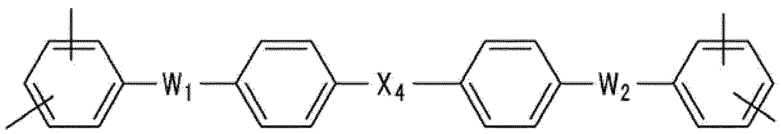 , 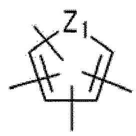 ,

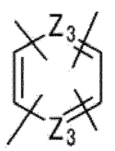

wherein, in the above Chemical Formula,

$X_1$, $X_2$, $X_3$, and $X_4$ are the same or different and are independently O, S, C(=O), CH(OH), $S(=O)_2$, $Si(CH_3)_2$,

$(CH_2)_p$, where $1 \leq p \leq 10$, $(CF_2)_q$, where $1 \leq q \leq 10$, $C(CH_3)_2$, $C(CF_3)_2$, or C(=O)NH,
$W_1$ and $W_2$ are the same or different and are independently O, S, or 5 C(=O),
$Z_1$ is O, S, $CR_1R_2$, or $NR_3$, where $R_1$, $R_2$, and $R_3$ are the same or different and are independently hydrogen or a C1 to C5 alkyl group, and
$Z_2$ and $Z_3$ are the same or different and are independently N or $CR_4$, where $R_4$ is hydrogen or a C1 to C5 alkyl group, provided that both $Z_2$ and $Z_3$ 10 are not $CR_4$.

**9.** The polymer of claim 8, wherein the $Ar_1$ is selected from one of the following Chemical Formulae:

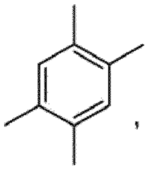 , 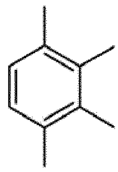 , 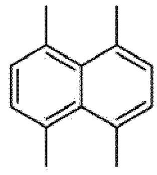 , 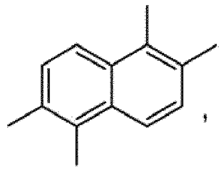 , 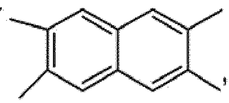 ,

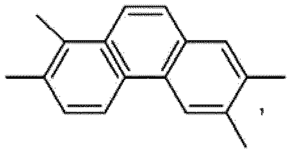 , 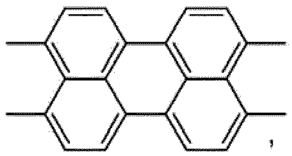 , 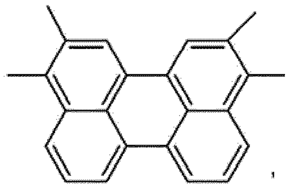 ,

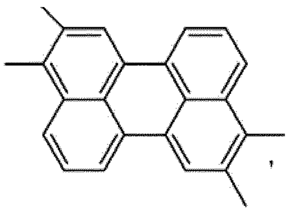 , 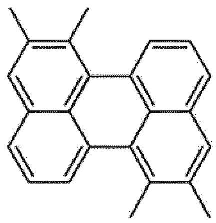 , 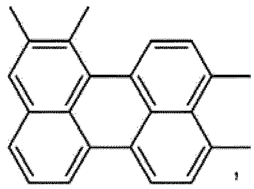 ,

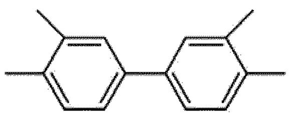 , 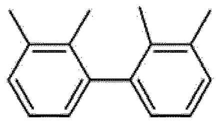 , 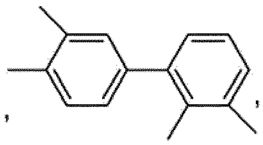 ,

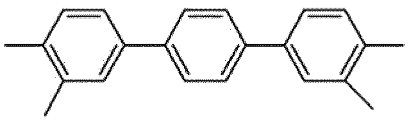 , 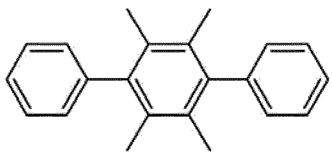 ,

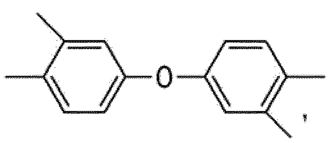 , 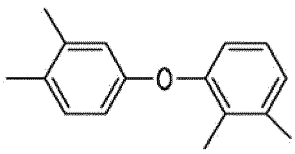 , 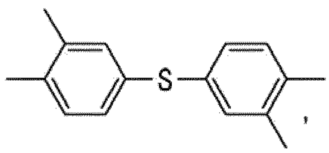 ,

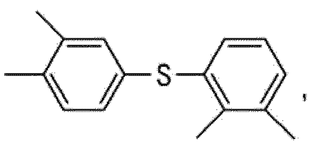 , 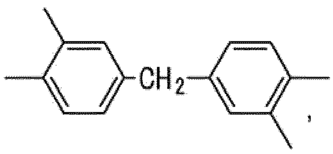 , 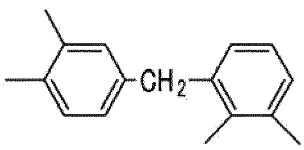

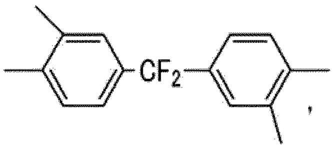, 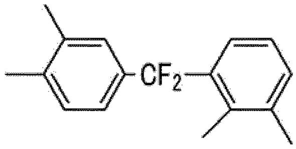, 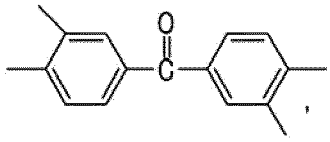,

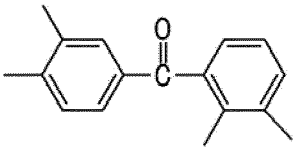, 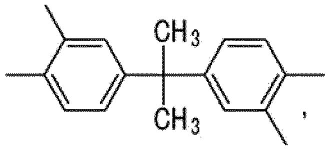, 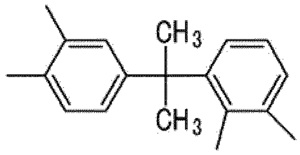,

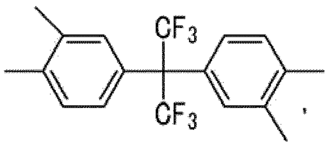, 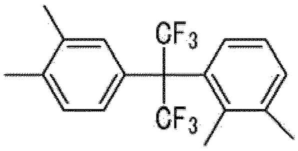, 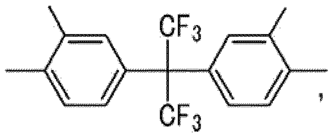,

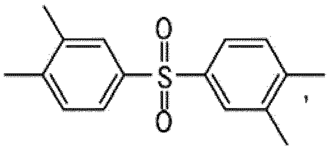, 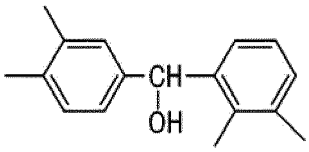, 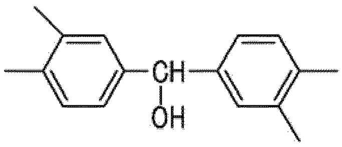,

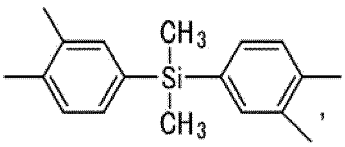, 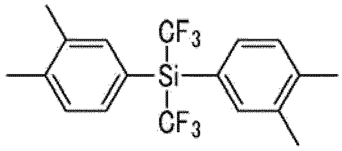, 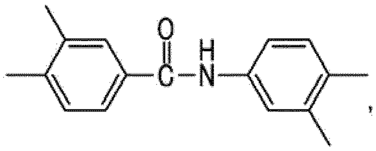,

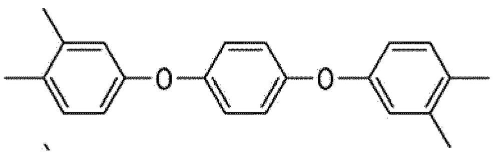, 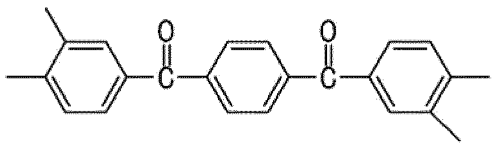,

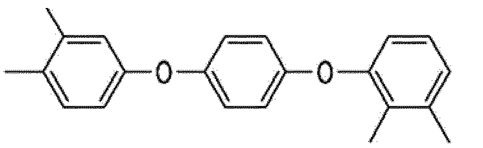, 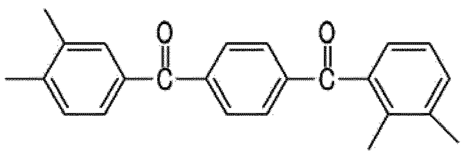,

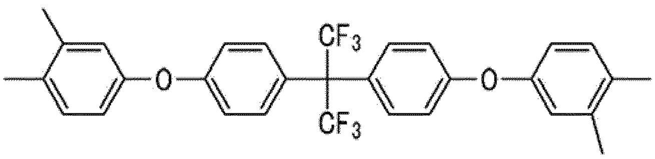, 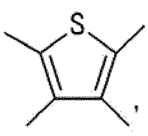, 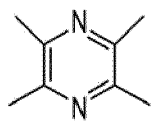,

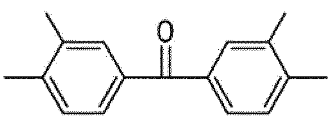, 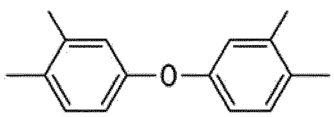

**10.** The polymer of claim 1 or 7, wherein the $Ar_2$ is selected from one of the following Chemical Formulae:

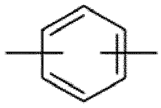 , 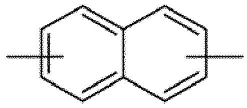 , 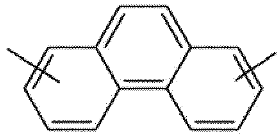 ,

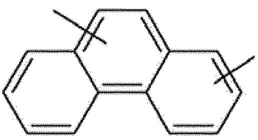 , 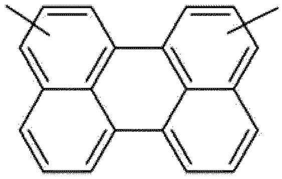 , 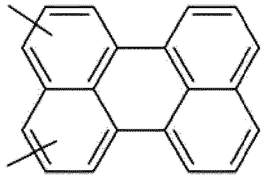 ,

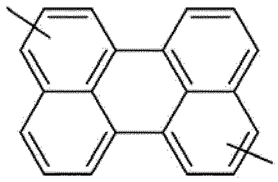 , 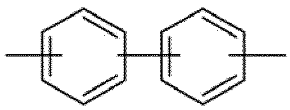 ,

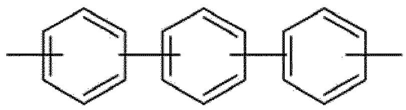 , 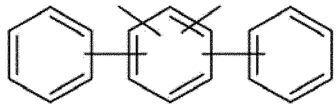 ,

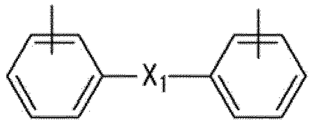 , 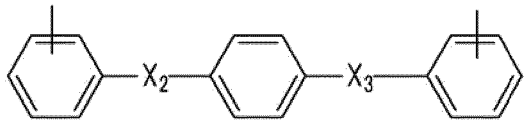 ,

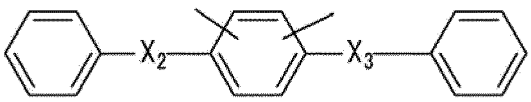 ,

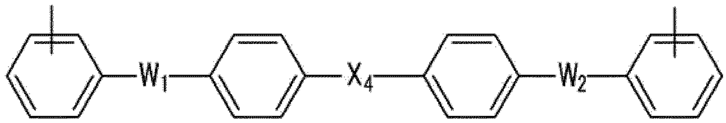 , 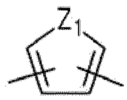 ,

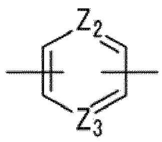

wherein, in the above Chemical Formulae,

$X_1$, $X_2$, $X_3$ and $X_4$ are the same or different and are independently O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,
$W_1$ and $W_2$ are the same or different and are independently O, S, or C(=O),
$Z_1$ is O, S, $CR_1R_2$ or $NR_3$, where $R_1$, $R_2$, and $R_3$ are the same or different and are independently hydrogen or a C1 to C5 alkyl group, and
$Z_2$ and $Z_3$ are the same or different and are independently N or $CR_4$, where $R_4$ is hydrogen or a C1 to C5 alkyl

group, provided that both $Z_2$ and $Z_3$ are not $CR_4$.

**11.** The polymer of claim 10, wherein the $Ar_2$ is selected from one of the following Chemical Formulae:

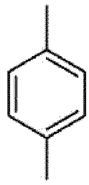 , 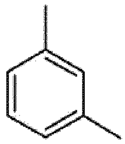 , 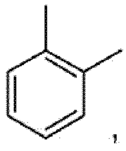 , 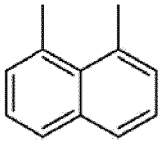 , 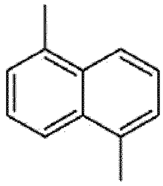 ,

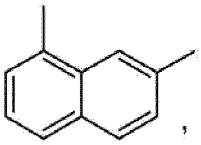 , 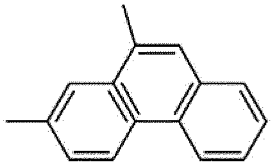 , 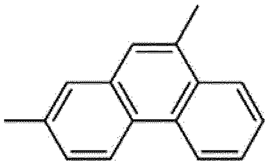 ,

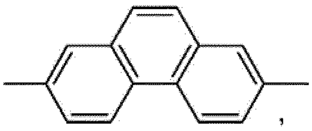 , 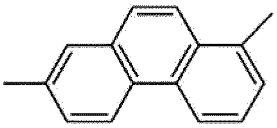 , 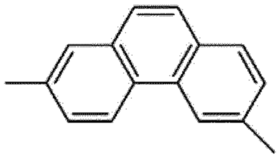 ,

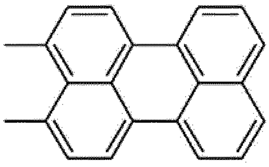 , 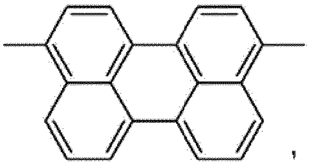 , 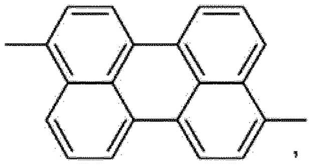 ,

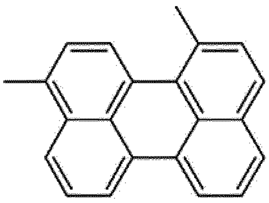 , 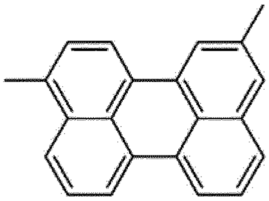 , 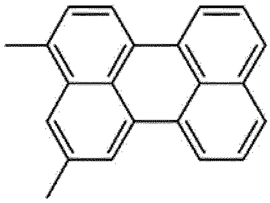 ,

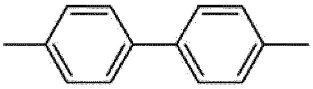 , 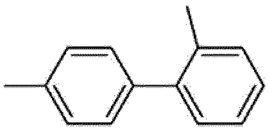 , 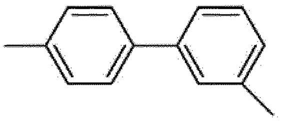 ,

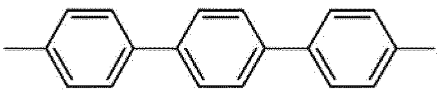 , 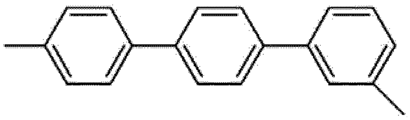 ,

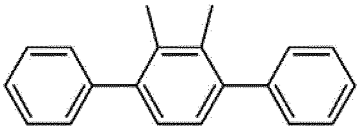 , 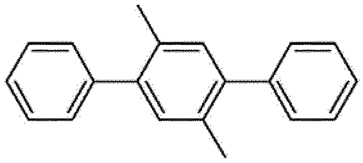 ,

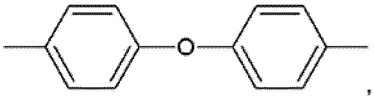 , 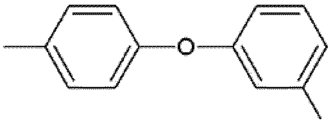 , 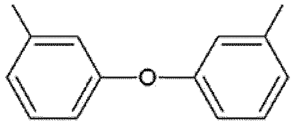 ,

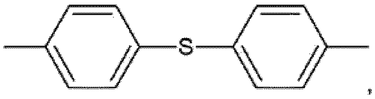 , 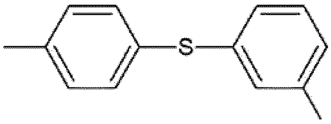 , 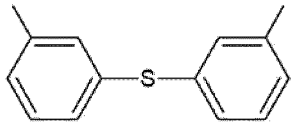 ,

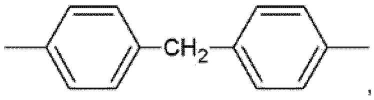 , 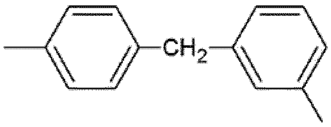 , 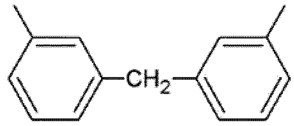 ,

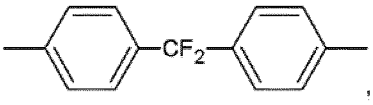 , 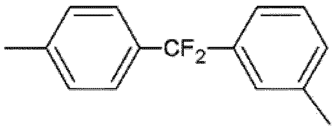 , 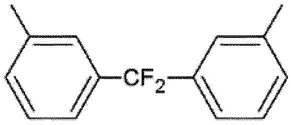 ,

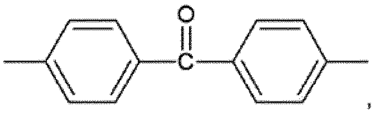 , 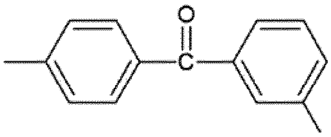 , 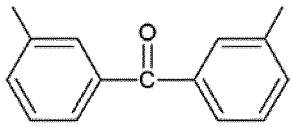

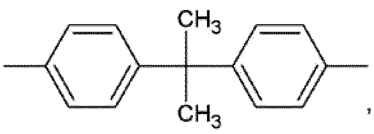 , 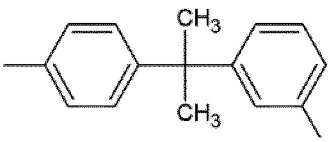 , 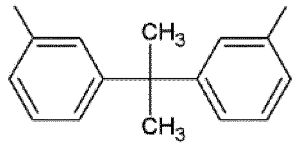

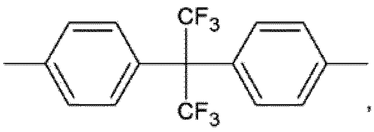 , 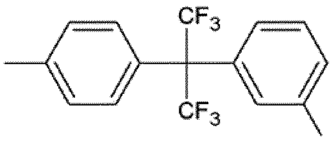 , 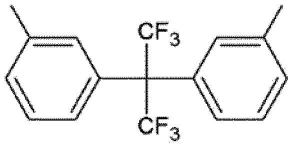

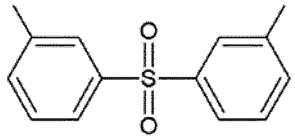 , 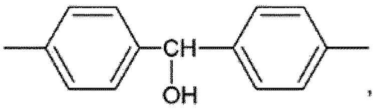 , 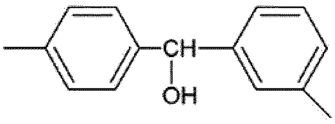

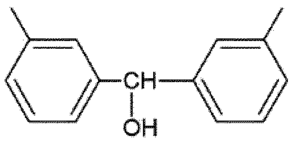, 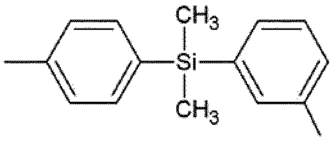, 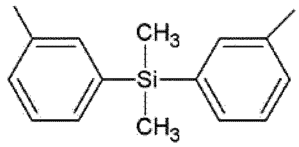

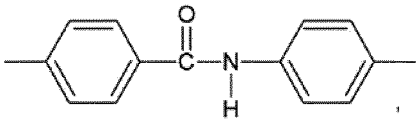, 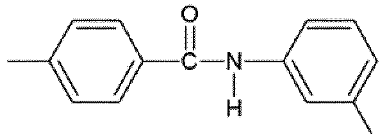,

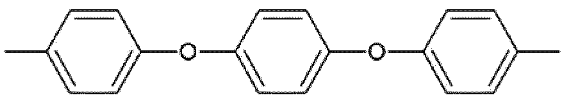, 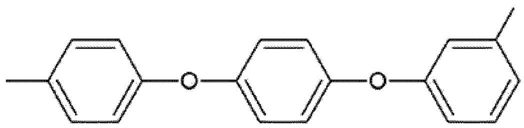,

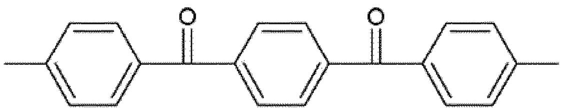, 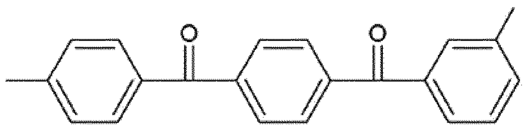,

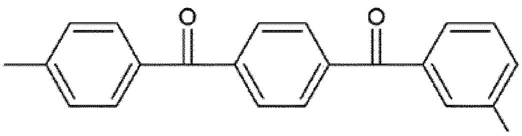, 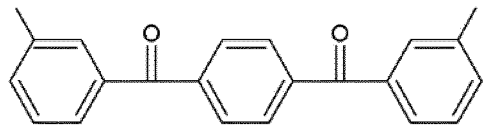,

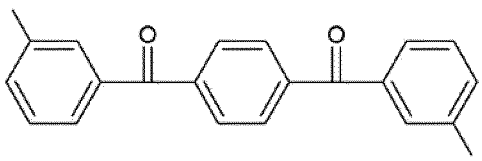, 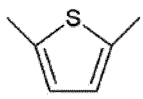, 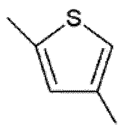, 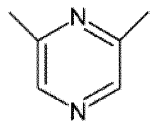,

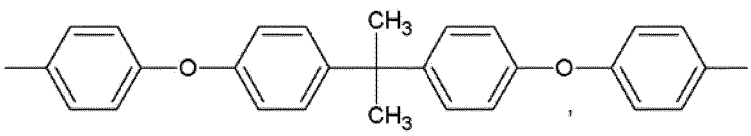, , 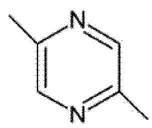.

**12.** The polymer of claim 1 or 7, wherein the Q is selected from $C(CH_3)_2$, $C(CF_3)_2$, O, S, $S(=O)_2$, or C(=O).

**13.** The polymer of claim 1 or 7, wherein the $Ar_1$ is a functional group represented by the following Chemical Formula A, B, or C, $Ar_2$ is a functional group represented by the following Chemical Formula D or E, and Q may be $C(CF_3)_2$:

[Chemical Formula A]

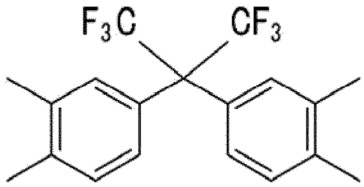

[Chemical Formula B]

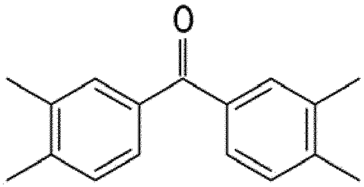

[Chemical Formula C]

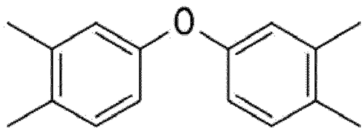

[Chemical Formula D]

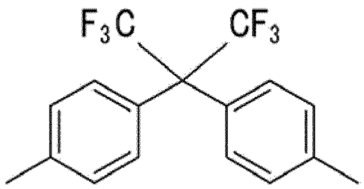

[Chemical Formula E]

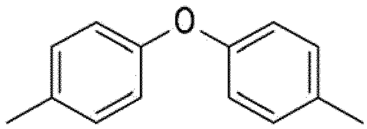

.

**14.** The polymer of claim 7, wherein, an m:l mole ratio in Chemical Formula 5 to 8 ranges from 0.1:9.9 to 9.9:0.1.

**15.** The polymer of claim 1, wherein an m:l mole ratio in Chemical Formula 37 to 40 ranges from 0.1:9.9 to 9.9:0.1.

**16.** The polymer of claim 1, wherein the polymer derived from a polyimide includes compounds including a repeating unit represented by one of the following Chemical Formulae 26 to 32 or copolymers thereof:

[Chemical Formula 26]

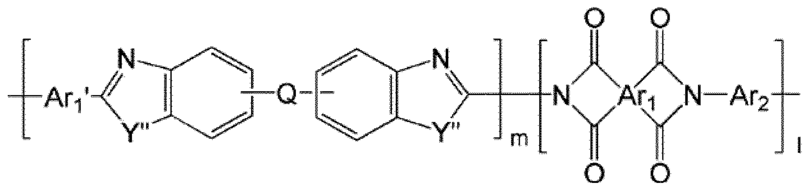

[Chemical Formula 27]

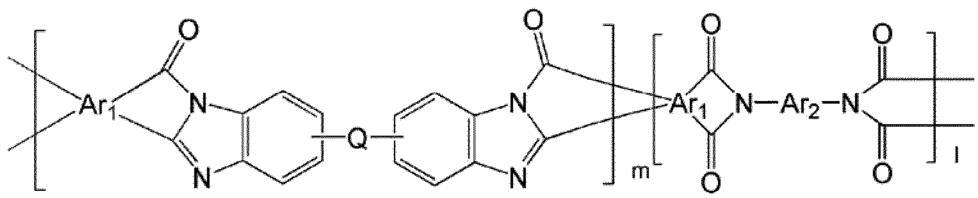

[Chemical Formula 28]

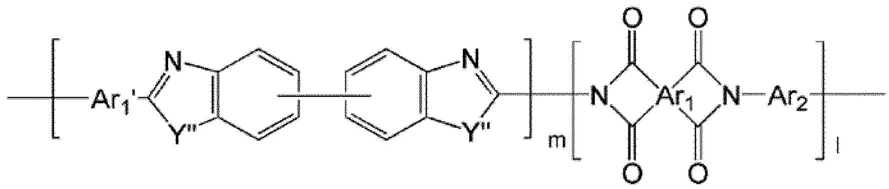

[Chemical Formula 29]

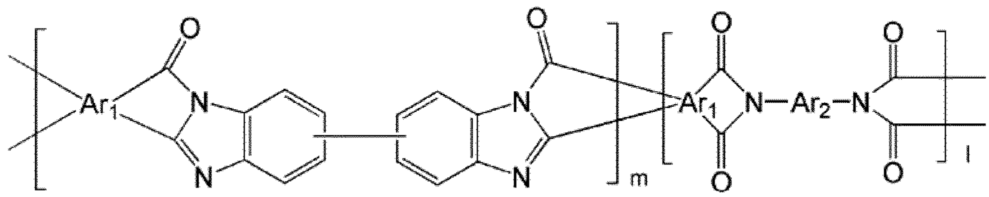

[Chemical Formula 30]

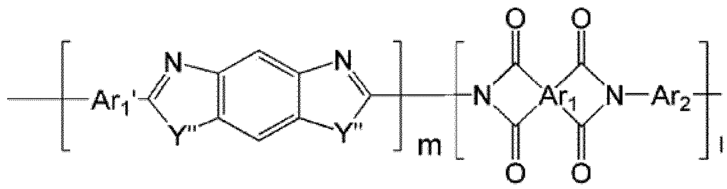

[Chemical Formula 31]

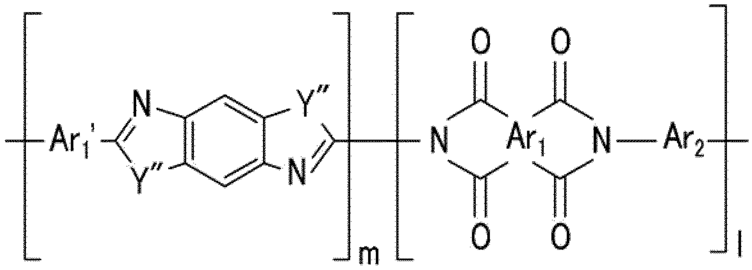

[Chemical Formula 32]

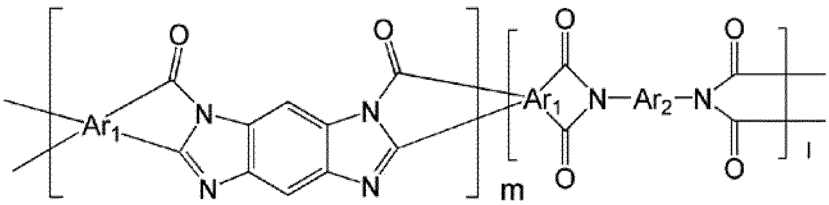

wherein, in the above Chemical Formulae 26 to 32,

$Ar_1$ is an aromatic group selected from a substituted or unsubstituted quadrivalent C6 to C24 arylene group and a substituted or unsubstituted quadrivalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,

$Ar_1$' is the same or different and is independently a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,

$Ar_2$ is the same or different and is independently a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,

wherein the term "substituted" measns substituted with at least one substituent selected from the group consisting of a C1 to C10 alkyl group, a C1 to C10 alkoxy group, a C1 to C10 haloalkyl group, and a C1 to C10 haloalkoxy group,

Q is O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, C(=O)NH, $C(CH_3)(CF_3)$, or a substituted or unsubstituted phenylene group, where the substituted phenylene group is a phenylene group substituted with a C1 to C6 alkyl group or a C1 to C6 haloalkyl group, where the Q is linked with aromatic groups with m-m, m-p, p-m, or p-p positions,

Y" is O or S,

m is an integer ranging from 10 to 400, and

l is an integer ranging from 10 to 400.

**17.** The polymer of claim 16, wherein the $Ar_1$ is selected from one of the following Chemical Formulae:

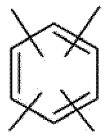, 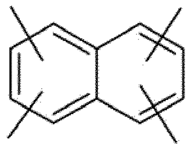, 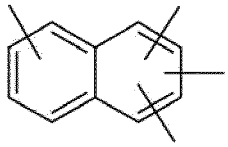, 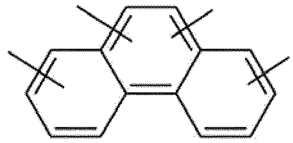,

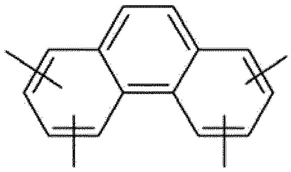, 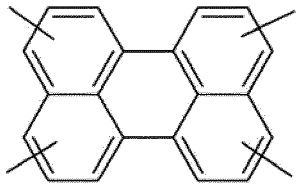, 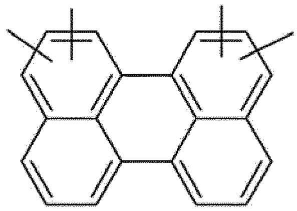,

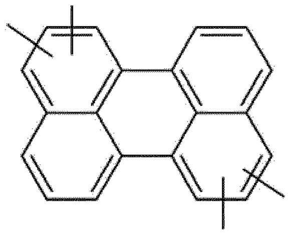, 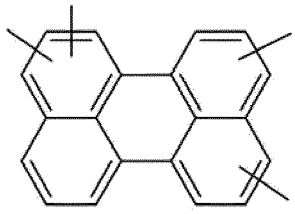, 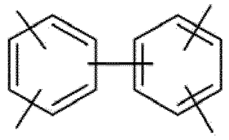,

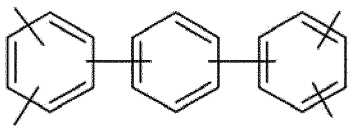, 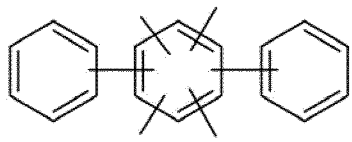,

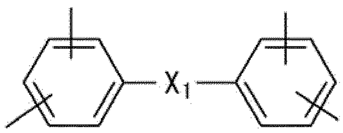, 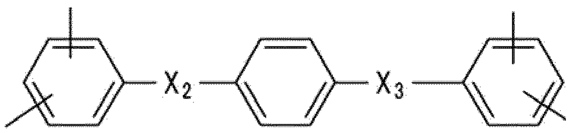,

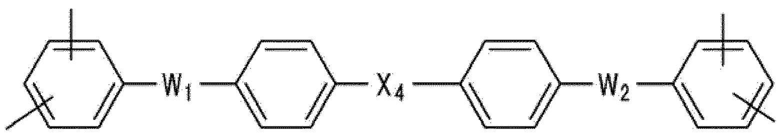, 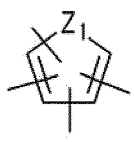,

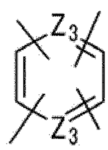

wherein, in the above Chemical Formulae,

$X_1$, $X_2$, $X_3$, and $X_4$ are the same or different and are independently O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,
$W_1$ and $W_2$ are the same or different, and are independently O, S, or C(=O),
$Z_1$ is O, S, $CR_1R_2$, or $NR_3$, where $R_1$, $R_2$, and $R_3$ are the same or different and are independently hydrogen or a C1 to C5 alkyl group, and
$Z_3$ are the same or different and are independently N or $CR_4$, where $R_4$ is hydrogen or a C1 to C5 alkyl group, provided that both $Z_3$ are not $CR_4$.

**18.** The polymer of claim 17, wherein the $Ar_1$ is selected from one of the following Chemical Formulae:

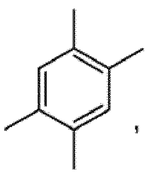 , 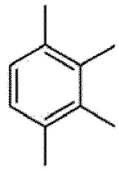 , 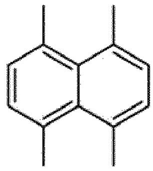 , 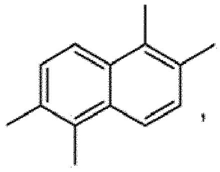 , 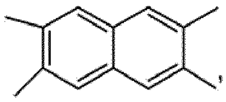 ,

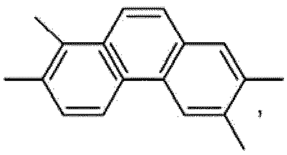 , 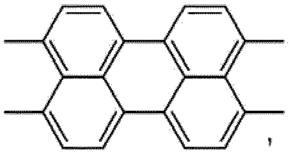 , 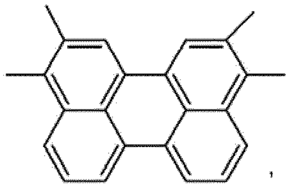 ,

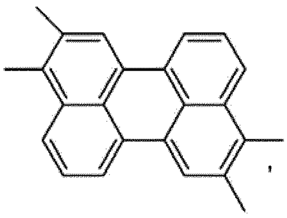 , 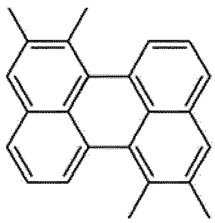 , 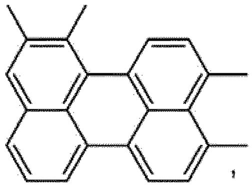 ,

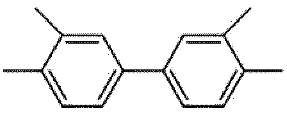 , 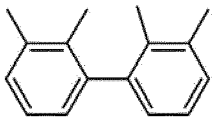 , 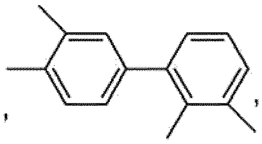 ,

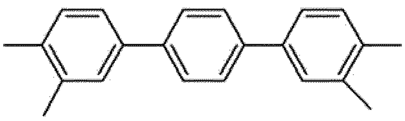 , 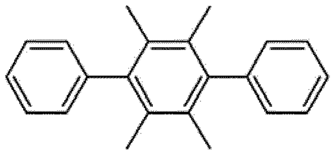 ,

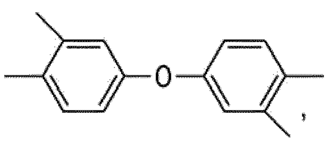 , 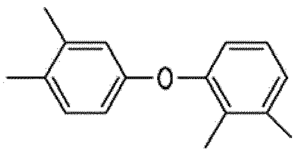 , 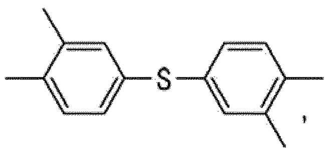 ,

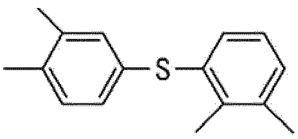 , 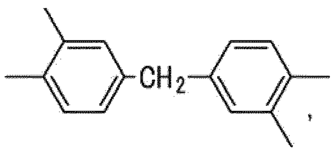 , 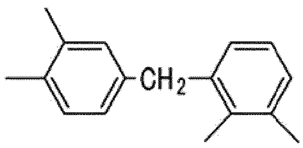 ,

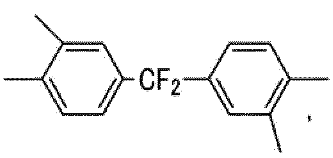 , 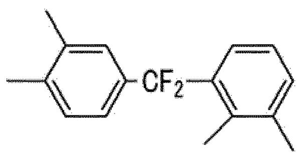 , 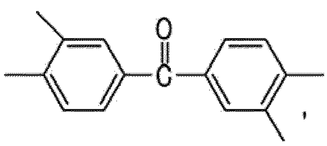 ,

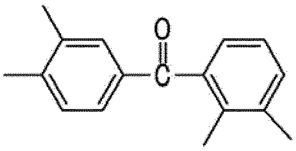 , 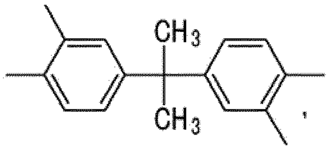 , 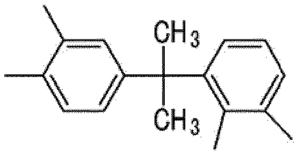 ,

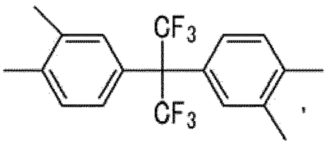 , 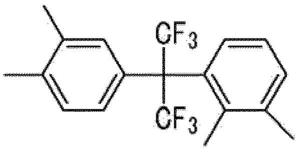 , 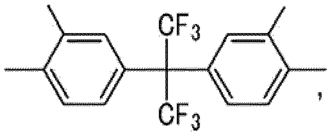 ,

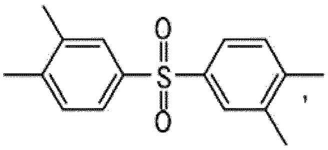 , 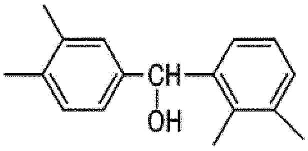 , 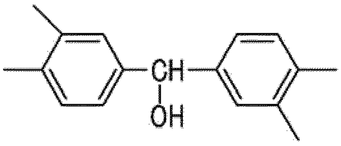 ,

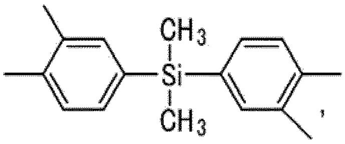 , 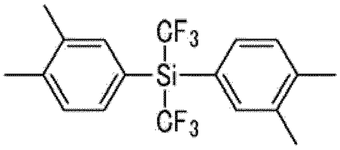 , 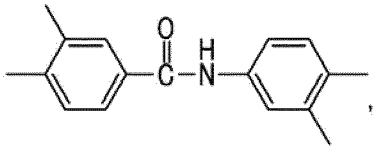 ,

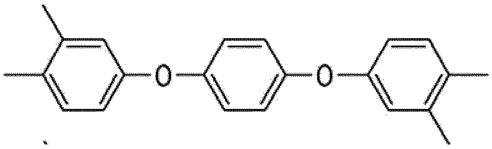 , 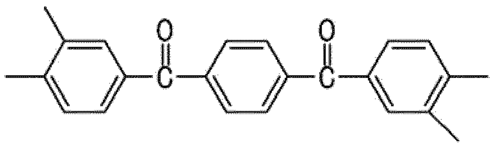 ,

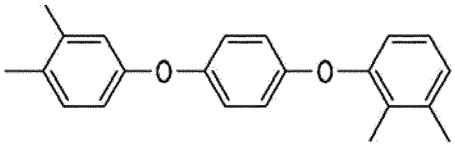 , 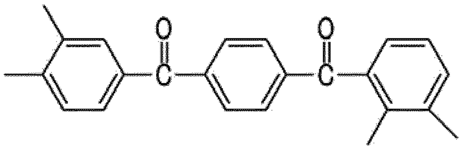 ,

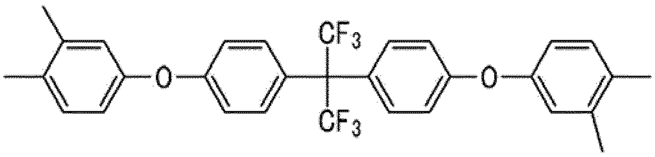 , 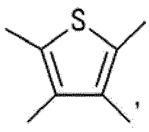 , 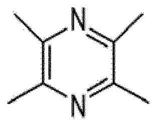 ,

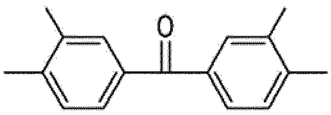 , 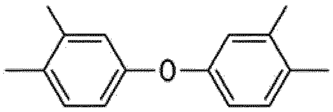

**19.** The polymer of claim 16, wherein the $Ar_1$' and $Ar_2$ are selected from one of the following Chemical Formulae:

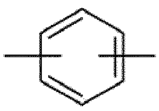 , 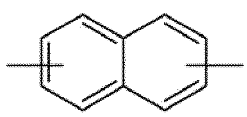 , 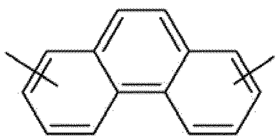 ,

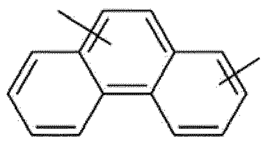,
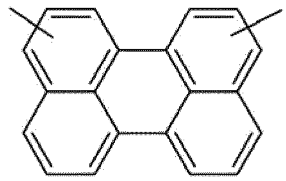,
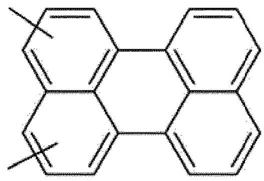,

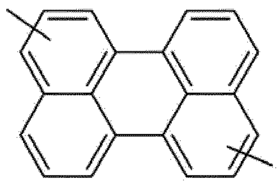,
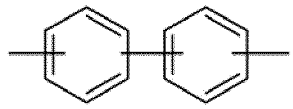,

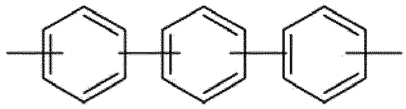,
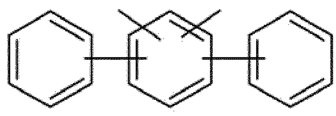,

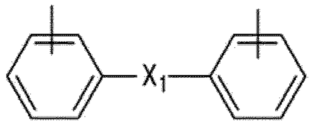,
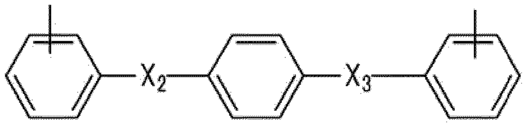,

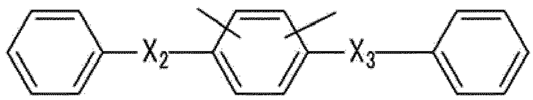,

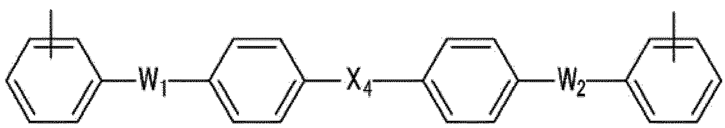,
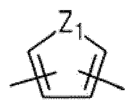,

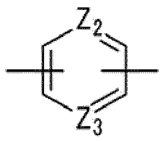

wherein, in the above Chemical Formulae,

$X_1$, $X_2$, $X_3$, and $X_4$ are the same or different and are independently O, S, C(=O), CH(OH), $S(=O)_2$, $Si(CH_3)_2$, $(CH_2)_p$, where $1 \le p \le 10$, $(CF_2)_q$, where $1 \le q \le 10$, $C(CH_3)_2$, $C(CF_3)_2$, or C(=O)NH,
$W_1$ and $W_2$ are the same or different and are independently O, S, or C(=O),
Zi is O, S, $CR_1R_2$, or $NR_3$, where $R_1$, $R_2$, and $R_3$ are the same or different and are independently hydrogen or a C1 to C5 alkyl group, and
$Z_2$ and $Z_3$ are the same or different and are independently N or $CR_4$, where $R_4$ is hydrogen or a C1 to C5 alkyl group, provided that both $Z_2$ and $Z_3$ are not $CR_4$.

**20.** The polymer of claim 19, wherein the $Ar_1$' and $Ar_2$ are selected from one of the following Chemical Formulae:

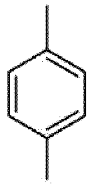 , 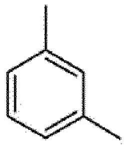 , 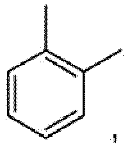 , 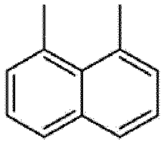 , 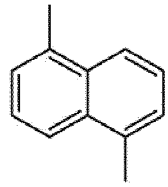 ,

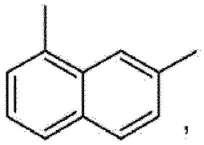 , 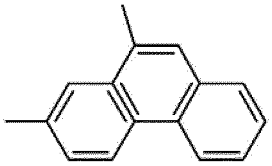 , 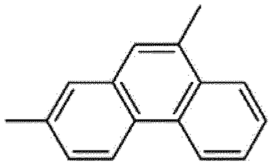 ,

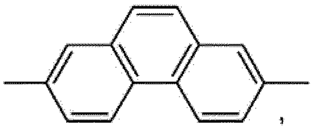 , 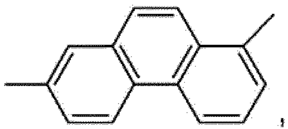 , 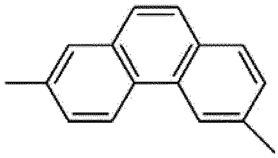 ,

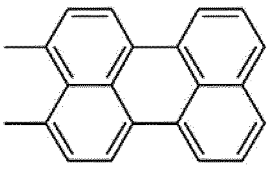 , 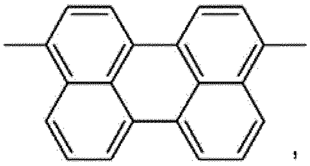 , 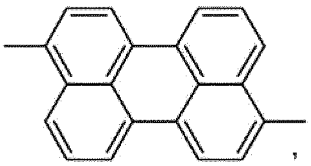 ,

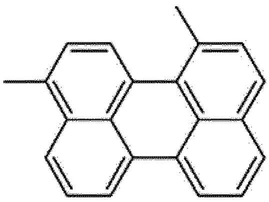 , 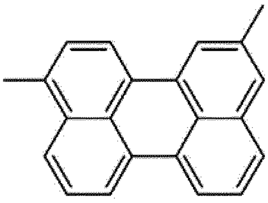 , 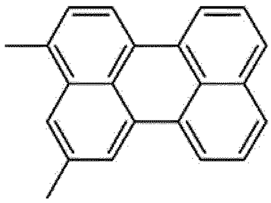 ,

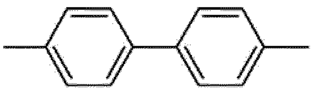 , 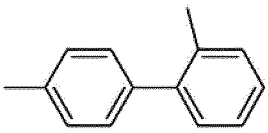 , 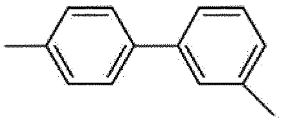 ,

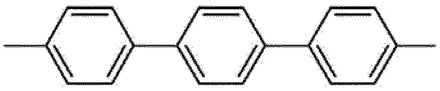 , 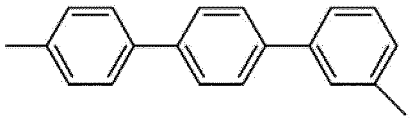 ,

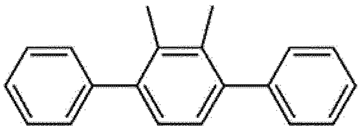 , 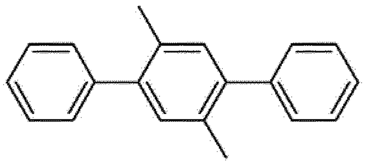 ,

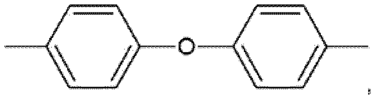 , 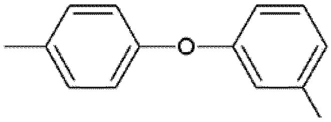 , 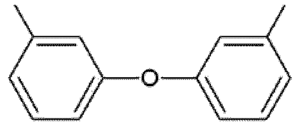 ,

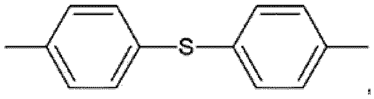 , 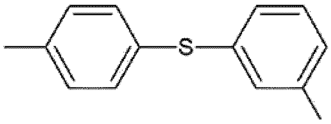 , 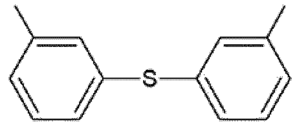 ,

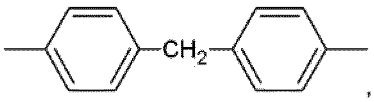 , 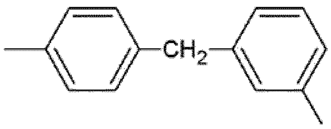 , 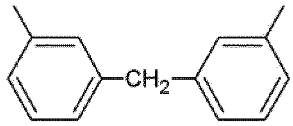 ,

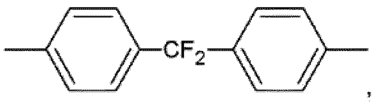 , 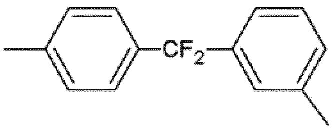 , 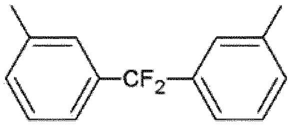 ,

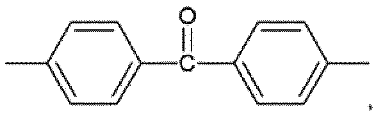 , 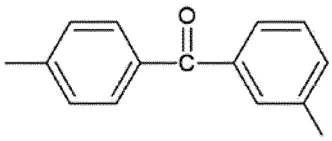 , 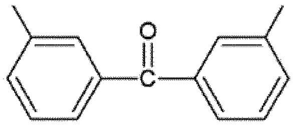 ,

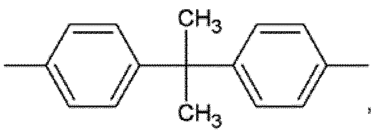 , 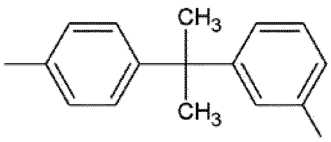 , 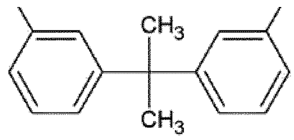 ,

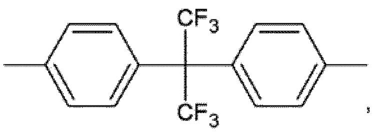 , 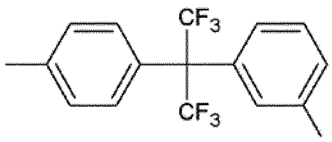 , 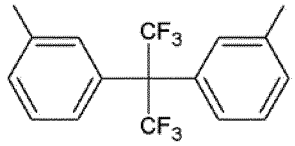 ,

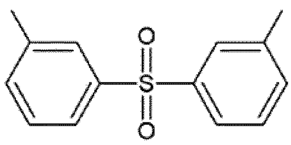 , 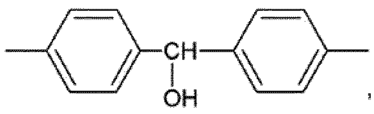 , 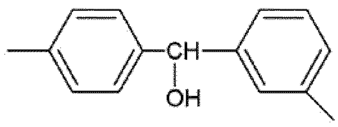 ,

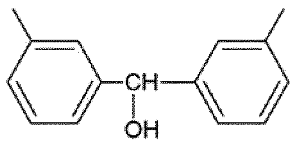 , 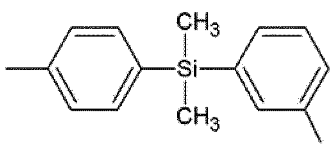 , 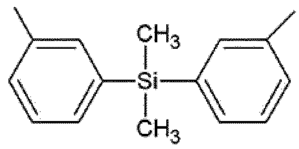 ,

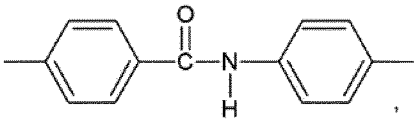 , 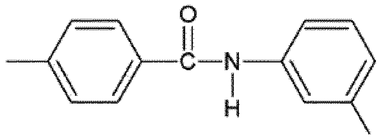 ,

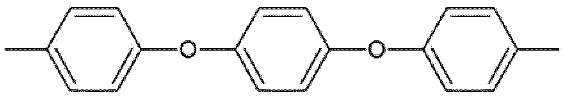 , 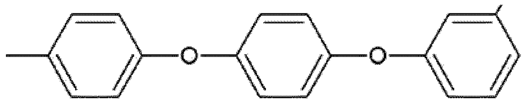 ,

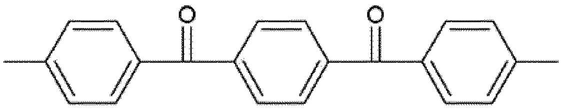 , 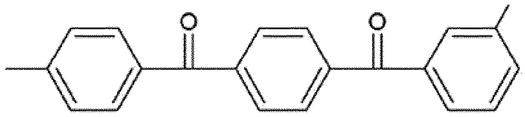 ,

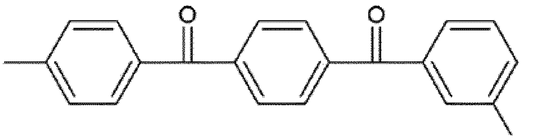 , 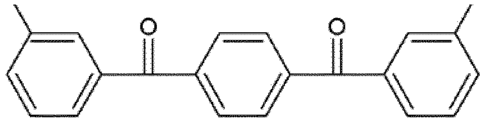 ,

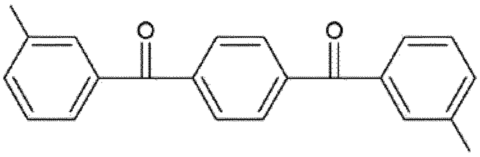 , 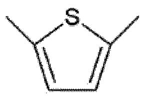 , 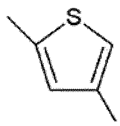 , 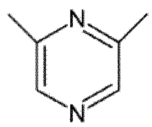 ,

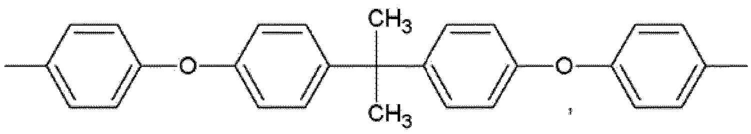 , , 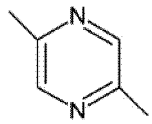 .

**21.** The polymer of claim 16, wherein the Q is selected from $C(CH_3)_2$, $C(CF_3)_2$, O, S, $S(=O)_2$, or C(=O).

**22.** The polymer of claim 16, wherein the $Ar_1$ is a functional group represented by the following Chemical Formula A, B, or C, $Ar_1$' is a functional group represented by the following Chemical Formula F, G, or H, $Ar_2$ is a functional group represented by the following Chemical Formula D or E, and Q is $C(CF_3)_2$:

[Chemical Formula A]

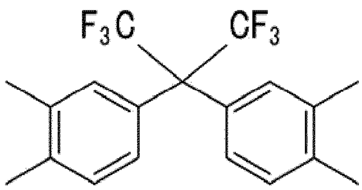

[Chemical Formula B]

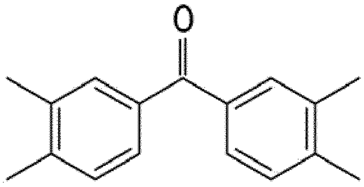

[Chemical Formula C]

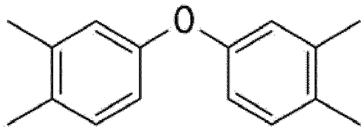

[Chemical Formula D]

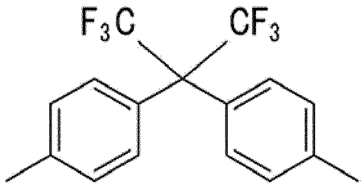

[Chemical Formula E]

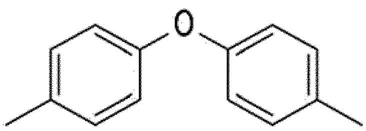

[Chemical Formula F]

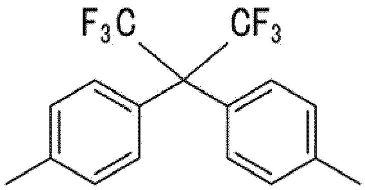

[Chemical Formula G]

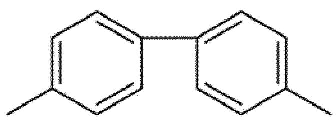

[Chemical Formula H]

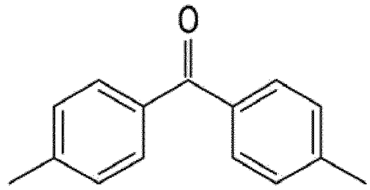

.

**23.** The polymer of claim 1, wherein the copolymer has a weight average molecular weight (Mw) of 10,000 to 200,000.

**24.** The polymer of claim 1, wherein the polymer further includes an additive selected from the group consisting of fumed silica, zirconium oxide, tetraethoxysilane, montmorillonite clay, and a combination thereof.

**25.** The polymer of claim 1, wherein the polymer further includes an inorganic filler selected from the group consisting of phosphotungstic acid (PWA), phosphomolybdic acid, silicotungstic acid (SiWA), molybdophosphoric acid, silicomolybdic acid, phosphotin acid, zirconium phosphate (ZrP), and a combination thereof.

**26.** A preparation method of a polymer, wherein the method comprises:

obtaining a polyimide copolymer by imidization of polyamic acid;
and heat-treating the polyimide copolymer,
wherein the polyamic acid is selected from polyamiacid copolymers including a repeating unit represented by any one of the following Chemical Formulae 5 to 8:

[Chemical Formula 5]

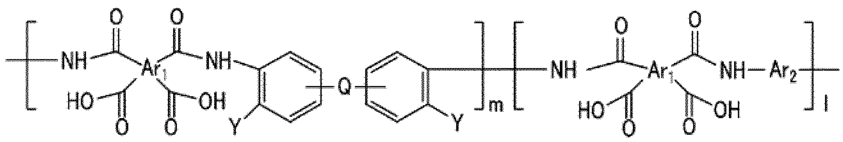

[Chemical Formula 6]

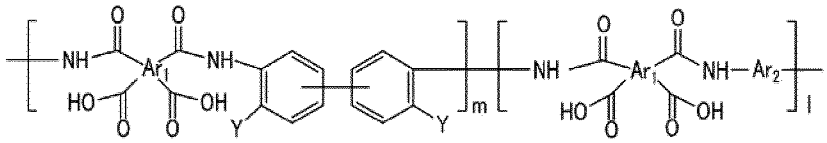

[Chemical Formula 7]

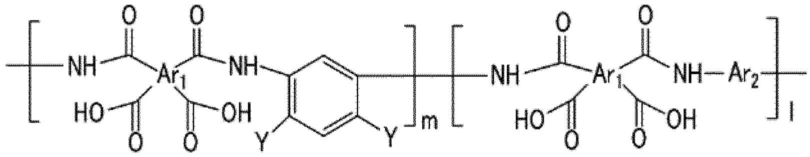

[Chemical Formula 8]

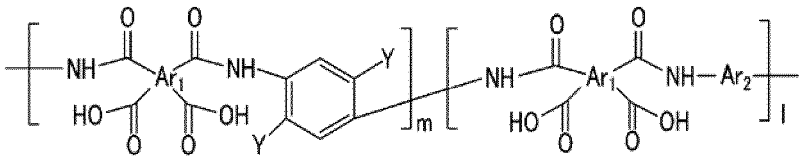

wherein, in the above Chemical Formulae 5 to 8,

$Ar_1$ is an aromatic group selected from a substituted or unsubstituted quadrivalent C6 to C24 arylene group and a substituted or unsubstituted quadrivalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,
$Ar_2$ is an aromatic group selected from a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,
wherein the term "substituted" means substituted with at least one substituent selected from the group consisting of a C1 to C10 alkyl group, a C1 to C10 alkoxy group, a C1 to C10 haloalkyl group, and a C1 to C10 haloalkoxy group,
Q is O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, C(=O)NH, $C(CH_3)(CF_3)$, or a substituted or unsubstituted phenylene group, where the substituted phenylene group is a phenylene group substituted with a C1 to C6 alkyl group or a C1 to C6 haloalkyl group, where the Q is linked with aromatic groups with m-m, m-p, p-m, or p-p positions,
Y is the same or different in each repeating unit and is independently selected from OH, SH, and $NH_2$,
m is an integer ranging from 10 to 400,
l is an integer ranging from 10 to 400,
the polymer includes picopores, said picopores having an average diameter of 100 pm to 1000 pm, measured by positron annihilation lifetime spectroscopy (PALS), and
wherein the method further includes doping the polymer with an acid dopant, and the acid dopant includes one selected from the group consisting of sulfuric acid, hydrochloric acid, phosphoric acid, nitric acid, $HBrO_3$, $HClO_4$, $HPF_6$, $HBF_6$, 1-methyl-3-methylimidazolium cations ($BMIM^+$), and a combination thereof.

**27.** The preparation method of claim 26, wherein the heat treatment is performed by increasing the temperature by 1°C/min to 30°C/min up to 350°C to 500°C, and then maintaining the temperature for 1 minute to 12 hours under an inert atmosphere.

**28.** The preparation method of claim 27, wherein the heat treatment is performed by increasing the temperature by 5°C/min to 20°C/min up to 350°C to 450°C, and then maintaining the temperature for 1 hour to 6 hours under an inert atmosphere.

**29.** A preparation method of a polymer, wherein the method comprises
heat-treating a polyimide copolymer,
wherein the polyimide copolymer comprises a repeating unit represented by any one of the following Chemical Formulae 37 to 40:

[Chemical Formula 37]

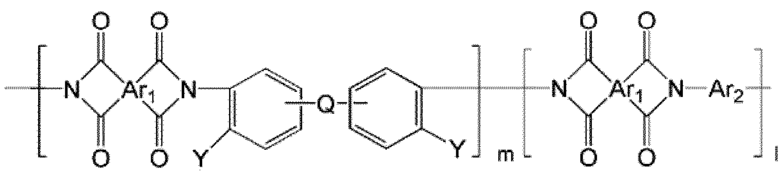

[Chemical Formula 38]

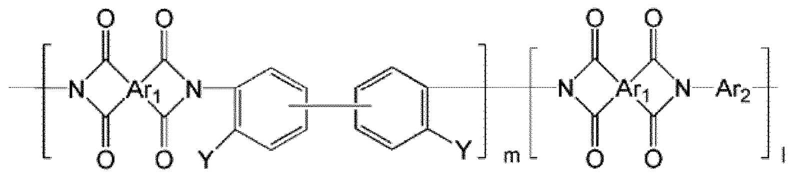

[Chemical Formula 39]

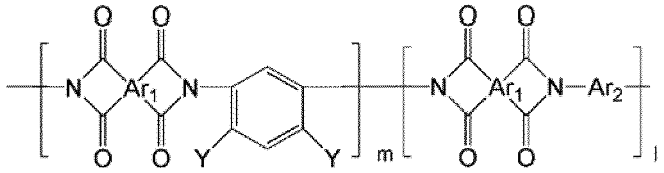

[Chemical Formula 40]

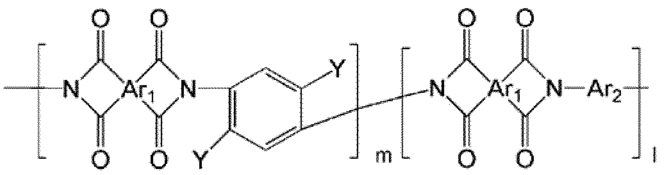

wherein, in the above Chemical Formulae 37 to 40,

$Ar_1$ is an aromatic group selected from a substituted or unsubstituted quadrivalent C6 to C24 arylene group and a substituted or unsubstituted quadrivalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,
$Ar_2$ is an aromatic group selected from a substituted or unsubstituted divalent C6 to C24 arylene group and a substituted or unsubstituted divalent C4 to C24 heterocyclic group, where the aromatic group is present singularly; at least two aromatic groups are fused to form a condensed cycle; or at least two aromatic groups are linked by a single bond or a functional group selected from O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, or C(=O)NH,
wherein the term "substituted" means substituted with at least one substituent selected from the group consisting of a C1 to C10 alkyl group, a C1 to C10 alkoxy group, a C1 to C10 haloalkyl group, and a C1 to C10 haloalkoxy group,
Q is O, S, C(=O), CH(OH), $S(=O)_2$, $Si(CH_3)_2$, $(CH_2)_p$, where $1 \leq p \leq 10$, $(CF_2)_q$, where $1 \leq q \leq 10$, $C(CH_3)_2$, $C(CF_3)_2$, C(=O)NH, $C(CH_3)(CF_3)$, or a substituted or unsubstituted phenylene group, where the substituted phenylene group is a phenylene group substituted with a C1 to C6 alkyl group or a C1 to C6 haloalkyl group, where the Q is linked with aromatic groups with m-m, m-p, p-m, or p-p positions,
Y is the same or different in each repeating unit and is independently selected from OH, SH, or $NH_2$,
m is an integer ranging from 10 to 400,
l is an integer ranging from 10 to 400,
the polymer includes picopores, said picopores having an average diameter of 100 pm to 1000 pm, measured by positron annihilation lifetime spectroscopy (PALS), and
wherein the method further includes doping the polymer with an acid dopant, and the acid dopant includes one selected from the group consisting of sulfuric acid, hydrochloric acid, phosphoric acid, nitric acid, $HBrO_3$, $HClO_4$, $HPF_6$, $HBF_6$, 1-methyl-3-methylimidazolium cations ($BMIM^+$), and a combination thereof.

**30.** The preparation method of claim 29, wherein the heat treatment is performed by increasing the temperature by 1°C/min to 30°C/min up to 350°C to 500°C, and then maintaining the temperature for 1 minute to 12 hours under an inert atmosphere.

**31.** The preparing method of claim 30, wherein the heat treatment is performed by increasing the temperature by 5°C/min to 20°C/min up to 350°C to 450°C, and then maintaining the temperature for 1 hour to 6 hours under an inert atmosphere.

**32.** The polymer of claim 1, wherein the the picopores form a three-dimensional network structure where at least two picopores are three-dimensionally connected to have an hourglass-shaped structure forming a narrow valley at connection parts.

## Patentansprüche

**1.** Polymer, das sich von einem Polyimid-Copolymer ableitet, wobei das Polymer, das sich von einem Polyimid-Copolymer ableitet, Picoporen mit einem mittels PALS (Positron Annihilation Lifetime Spectroscopy) gemessenen mittleren Durchmesser von 100 pm bis 1000 pm aufweist und das Polyimid-Copolymer eine Wiederholungseinheit umfasst, die durch eine der folgenden Chemischen Formeln 37 bis 40 wiedergegeben wird:

[Chemische Formel 37]

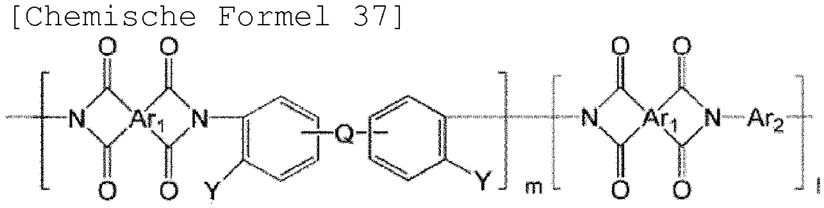

[Chemische Formel 38]

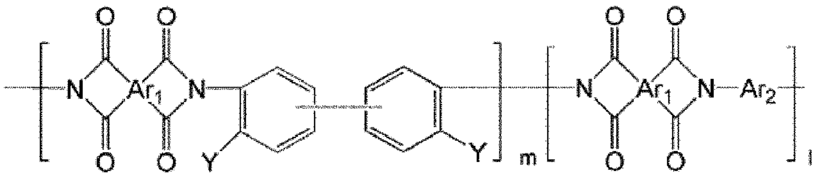

[Chemische Formel 39]

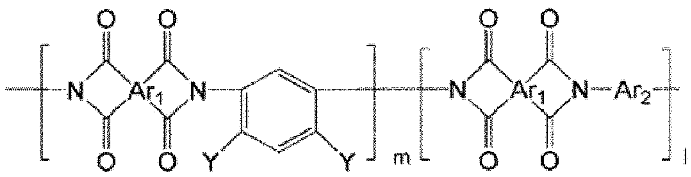

[Chemische Formel 40]

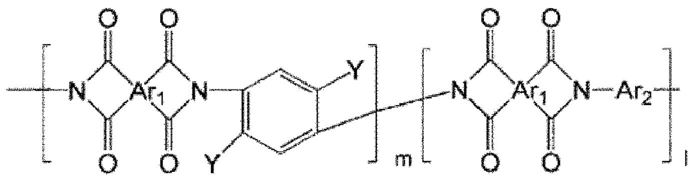

wobei in den obigen Chemischen Formeln 37 bis 40

$Ar_1$ für eine aromatische Gruppe steht, die aus einer substituierten oder unsubstituierten vierwertigen C6- bis C24-Arylengruppe und einer substituierten oder unsubstituierten vierwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH ausgewählt ist, verknüpft sind,
$Ar_2$ für eine aromatische Gruppe steht, die aus einer substituierten oder unsubstituierten zweiwertigen C6- bis

C24-Arylengruppe und einer substituierten oder unsubstituierten zweiwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus 0, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH ausgewählt ist, verknüpft sind,
wobei der Begriff "substituiert" durch mindestens einen Substituenten aus der Gruppe bestehend aus einer C1- bis C10-Alkylgruppe, einer C1- bis C10-Alkoxygruppe, einer C1- bis C10-Halogenalkylgruppe und einer C1- bis C10-Halogenalkoxygruppe substituiert bedeutet,
Q für 0, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$, C(=O)NH, $C(CH_3)(CF_3)$ oder eine substituierte oder unsubstituierte Phenylengruppe steht, wobei es sich bei der substituierten Phenylengruppe um eine Phenylengruppe handelt, die durch eine C1- bis C6-Alkylgruppe oder eine C1- bis C6-Halogenalkylgruppe substituiert ist, wobei das Q mit aromatischen Gruppen mit m-m-, m-p-, p-m- oder p-p-Positionen verknüpft ist,
Y in jeder Wiederholungseinheit gleich oder verschieden ist und unabhängig aus OH, SH oder $NH_2$ ausgewählt ist,
m für eine ganze Zahl im Bereich von 10 bis 400 steht,
l für eine ganze Zahl im Bereich von 10 bis 400 steht,
wobei das Polymer mit einem Säure-Dotierstoff dotiert ist und
wobei der Säure-Dotierstoff einen Dotierstoff aus der Gruppe bestehend aus Schwefelsäure, Salzsäure, Phosphorsäure, Salpetersäure, $HBrO_3$, $HClO_4$, $HPF_6$, $HBF_6$, 1-Methyl-3-methylimidazolium-Kationen ($BMIM^+$) und einer Kombination davon enthält.

2. Polymer nach Anspruch 1, wobei die Picoporen durch Verbindung von mindestens zwei Picoporen eine stundenglasförmige Struktur aufweisen.

3. Polymer nach Anspruch 1, wobei das Polymer, das sich von einem Polyimid ableitet, das einen Anteil von freiem Volumen (Fractional Free Volume, FFV) von 0,18 bis 0,40 aufweist.

4. Polymer nach Anspruch 1, wobei das Polymer, das sich von einem Polyimid ableitet, einen durch Röntgenbeugung (XRD) gemessenen Netzebenenabstand (d-Abstand) von 580 pm bis 800 pm aufweist.

5. Polymer nach Anspruch 1, wobei die Picoporen eine mittels PALS (Positron Annihilation Lifetime Spectroscopy) gemessene Halbwertsbreite (Full Width at Half Maximum, FWHM) von 10 pm bis 40 pm aufweisen.

6. Polymer nach Anspruch 1, wobei das Polymer, das sich von einem Polyimid ableitet, eine BET-Oberfläche von 100 $m^2/g$ bis 1000 $m^2/g$ aufweist.

7. Polymer nach Anspruch 1, wobei das Polyimid durch Imidisierung eines Polyamidsäure-Copolymers mit einer Wiederholungseinheit, die durch eine der folgenden Chemischen Formeln 5 bis 8 wiedergegeben wird, erhalten wird:

[Chemische Formel 5]

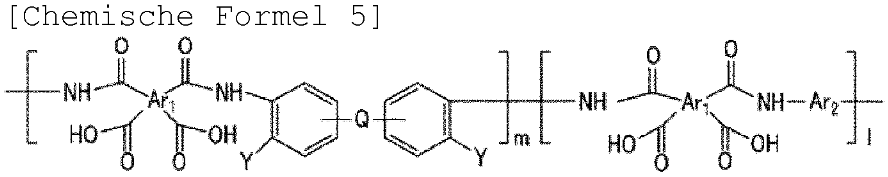

[Chemische Formel 6]

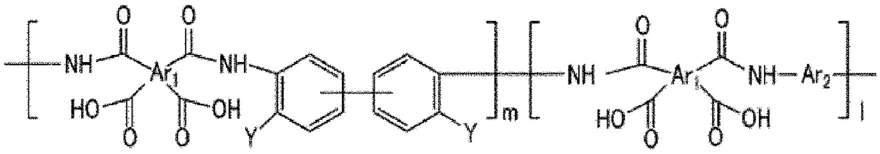

[Chemische Formel 7]

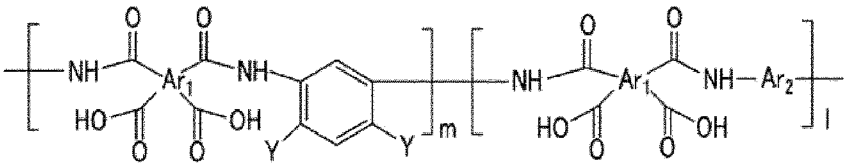

[Chemische Formel 8]

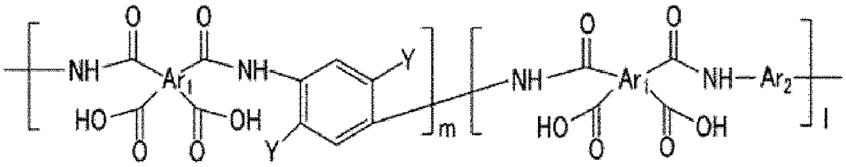

wobei in den obigen Chemischen Formeln 5 bis 8

$Ar_1$ für eine aromatische Gruppe steht, die aus einer substituierten oder unsubstituierten vierwertigen C6- bis C24-Arylengruppe und einer substituierten oder unsubstituierten vierwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH ausgewählt ist, verknüpft sind,
$Ar_2$ für eine aromatische Gruppe steht, die aus einer substituierten oder unsubstituierten zweiwertigen C6- bis C24-Arylengruppe und einer substituierten oder unsubstituierten zweiwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH ausgewählt ist, verknüpft sind,
wobei der Begriff "substituiert" durch mindestens einen Substituenten aus der Gruppe bestehend aus einer C1- bis C10-Alkylgruppe, einer C1- bis C10-Alkoxygruppe, einer C1- bis C10-Halogenalkylgruppe und einer C1- bis C10-Halogenalkoxygruppe substituiert bedeutet,
Q für O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$, C(=O)NH, $C(CH_3)(CF_3)$ oder eine substituierte oder unsubstituierte Phenylengruppe steht, wobei es sich bei der substituierten Phenylengruppe um eine Phenylengruppe handelt, die durch eine C1- bis C6-Alkylgruppe oder eine C1- bis C6-Halogenalkylgruppe substituiert ist, wobei das Q mit aromatischen Gruppen mit m-m-, m-p-, p-m- oder p-p-Positionen verknüpft ist,
Y in jeder Wiederholungseinheit gleich oder verschieden ist und unabhängig aus OH, SH oder $NH_2$ ausgewählt ist,
m für eine ganze Zahl im Bereich von 10 bis 400 steht und
l für eine ganze Zahl im Bereich von 10 bis 400 steht.

**8.** Polymer nach Anspruch 1 oder 7, wobei das $Ar_1$ aus einer der folgenden Chemischen Formeln ausgewählt ist:

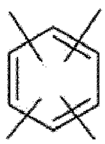 , 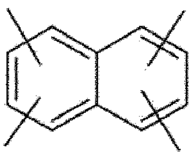 , 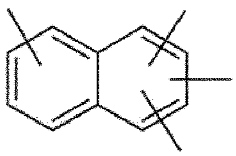 , 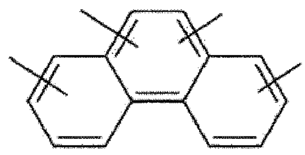 ,

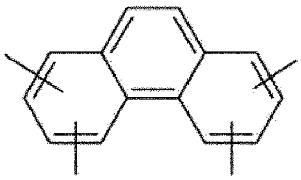 , 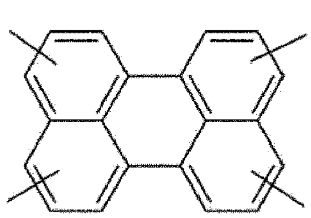 , 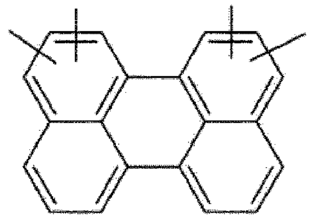 ,

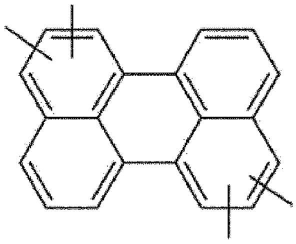 , 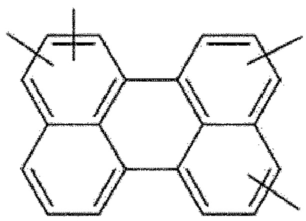 , 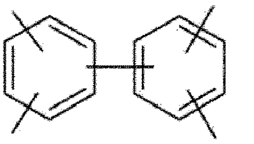 ,

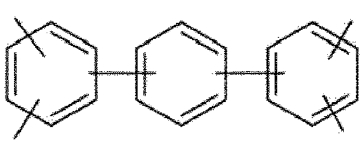 , 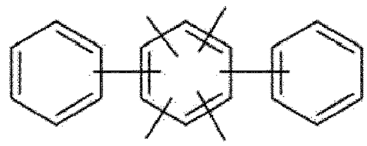 ,

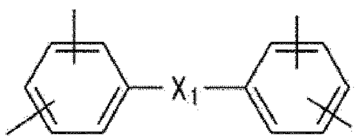 , 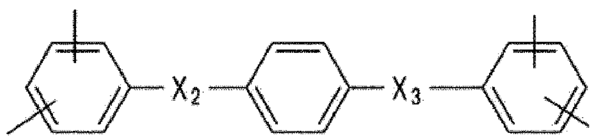 ,

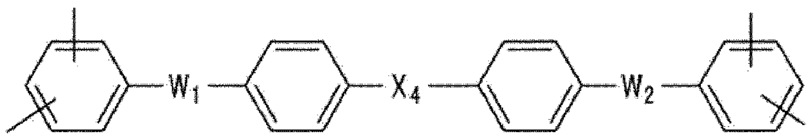 , 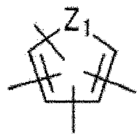 ,

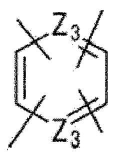

wobei in den obigen Chemischen Formeln

$X_1$, $X_2$, $X_3$ und $X_4$ gleich oder verschieden sind und unabhängig für O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH stehen,
$W_1$ und $W_2$ gleich oder verschieden sind und unabhängig für O, S oder C(=O) stehen,
$Z_1$ für O, S, $CR_1R_2$ oder $NR_3$ steht, wobei $R_1$, $R_2$ und $R_3$ gleich oder verschieden sind und unabhängig für H oder eine C1- bis C5-Alkylgruppe stehen, und
$Z_2$ und $Z_3$ gleich oder verschieden sind und unabhängig für N oder $CR_4$ stehen, wobei $R_4$ für Wasserstoff oder eine C1- bis C5-Alkylgruppe stehen, mit der Maßgabe, dass nicht sowohl $Z_2$ als auch $Z_3$ für $CR_4$ stehen.

**9.** Polymer nach Anspruch 8, wobei das $Ar_1$ aus einer der folgenden Chemischen Formeln ausgewählt ist:

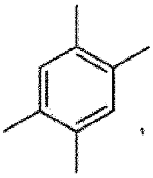, 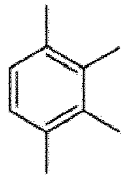, 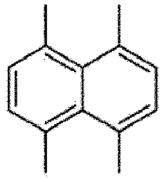, 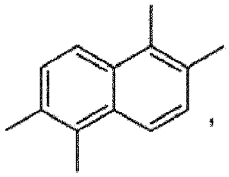, 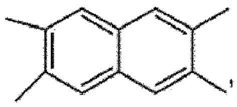,

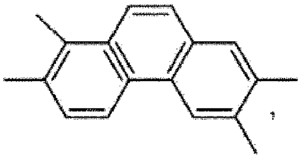, 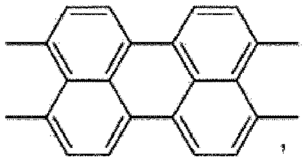, 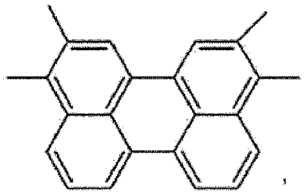,

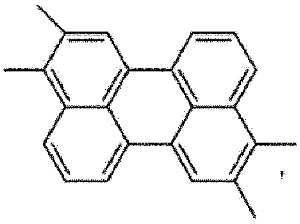, 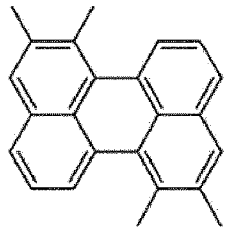, 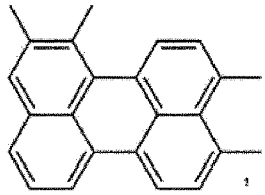,

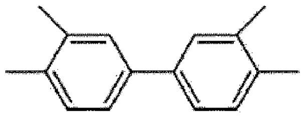, 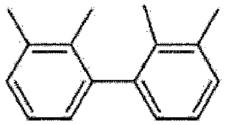, 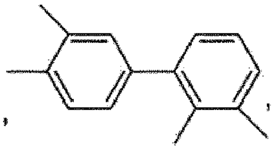,

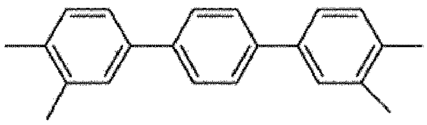, 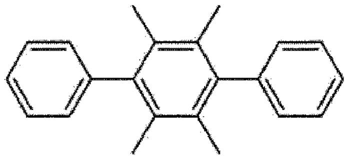,

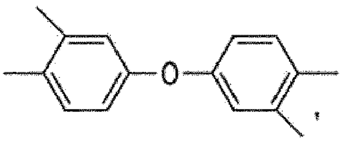, 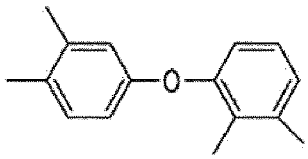, 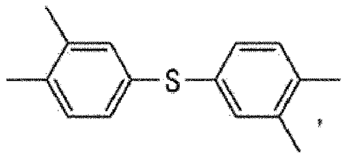,

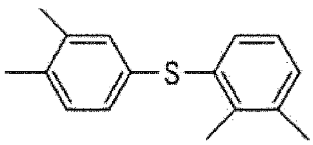, 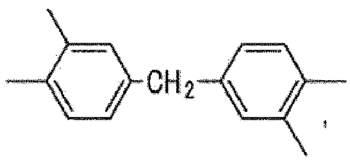, 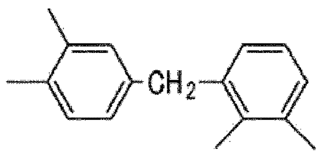,

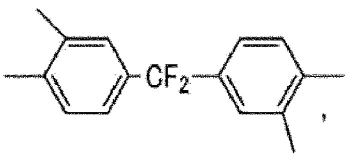, 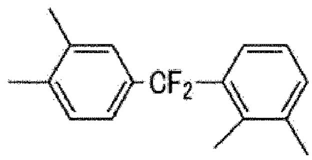, 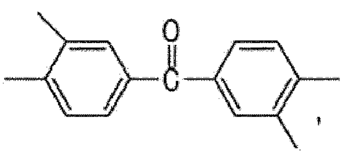,

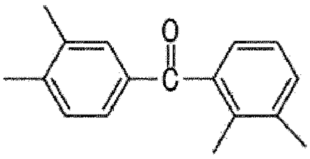, 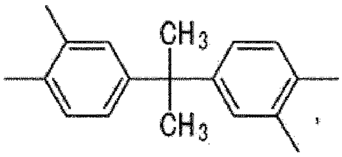, 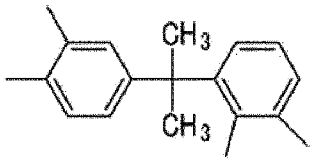,

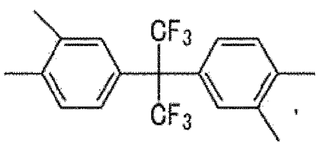, 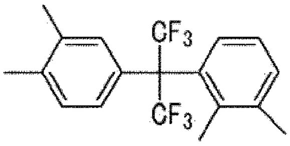, 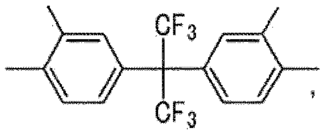,

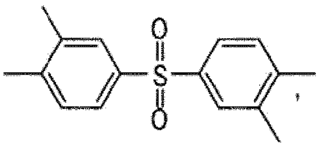, 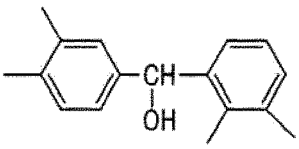, 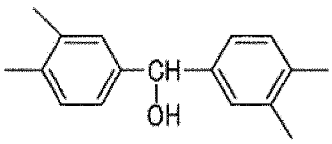,

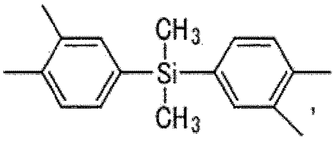, 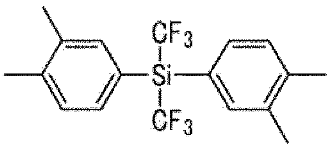, 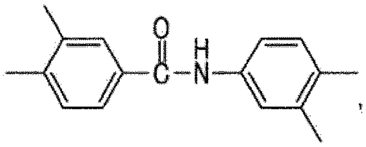,

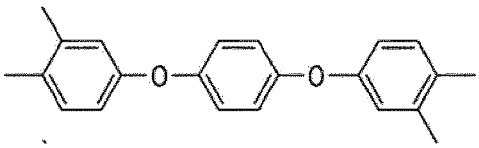, 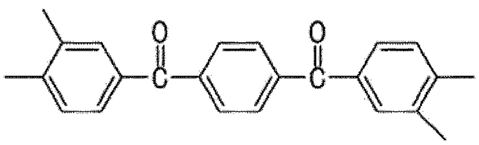,

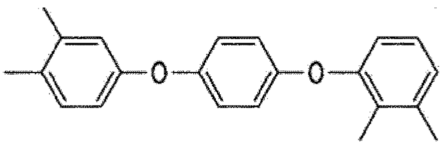, 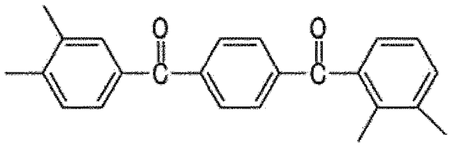,

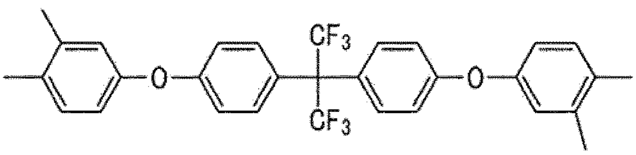, 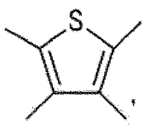, 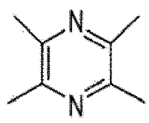,

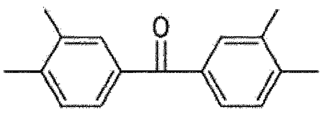, 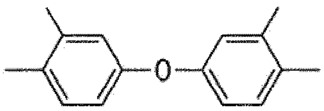

**10.** Polymer nach Anspruch 1 oder 7, wobei das $Ar_2$ aus einer der folgenden Chemischen Formeln ausgewählt ist:

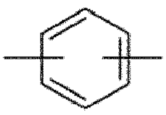, 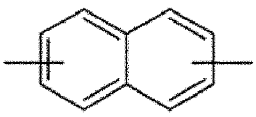, 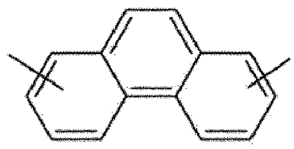,

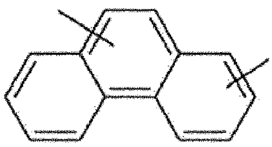 , 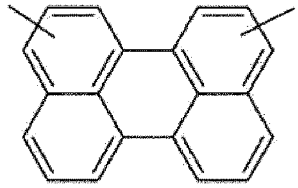 , 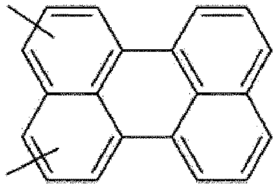 ,

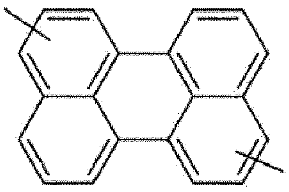 , 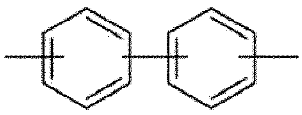 ,

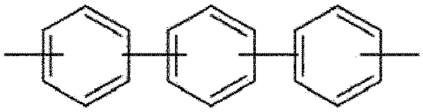 , 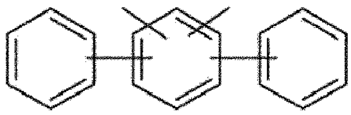 ,

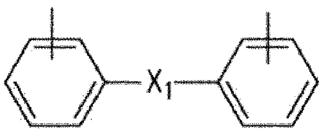 , 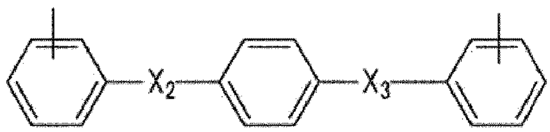 ,

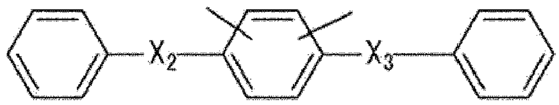 ,

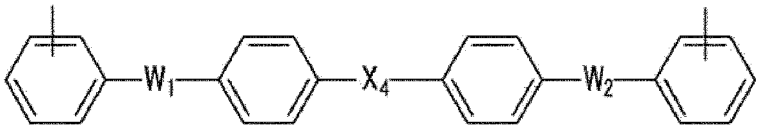 , 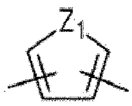 ,

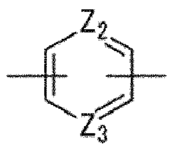

wobei in den obigen Chemischen Formeln

$X_1$, $X_2$, $X_3$ und $X_4$ gleich oder verschieden sind und unabhängig für O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH stehen,
$W_1$ und $W_2$ gleich oder verschieden sind und unabhängig für O, S oder C(=O) stehen,
$Z_1$ für O, S, $CR_1R_2$ oder $NR_3$ steht, wobei $R_1$, $R_2$ und $R_3$ gleich oder verschieden sind und unabhängig für H oder eine C1- bis C5-Alkylgruppe stehen, und
$Z_2$ und $Z_3$ gleich oder verschieden sind und unabhängig für N oder $CR_4$ stehen, wobei $R_4$ für Wasserstoff oder eine C1- bis C5-Alkylgruppe stehen, mit der Maßgabe, dass nicht sowohl $Z_2$ als auch $Z_3$ für $CR_4$ stehen.

**11.** Polymer nach Anspruch 10, wobei das $Ar_2$ aus einer der folgenden Chemischen Formeln ausgewählt ist:

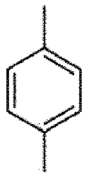, 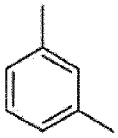, 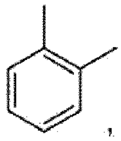, 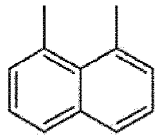, 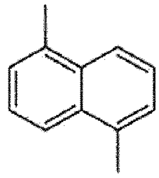,

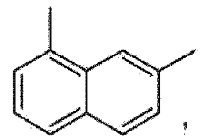, 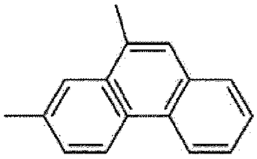, 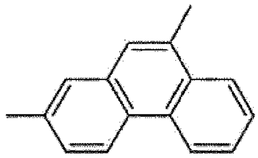,

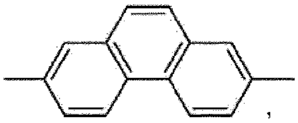, 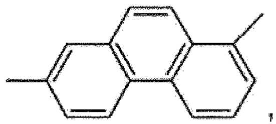, 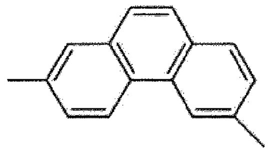,

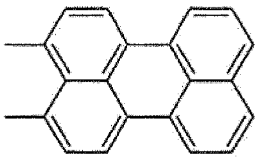, 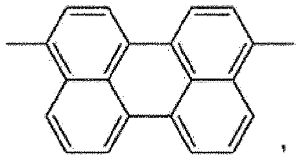, 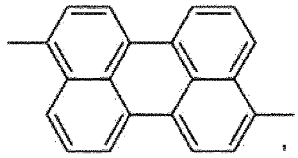,

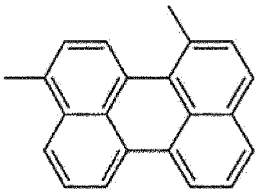, 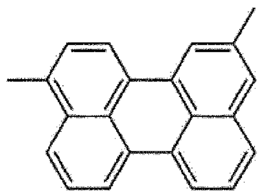, 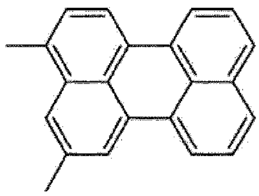,

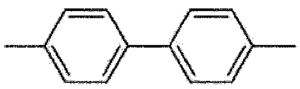, 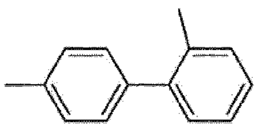, 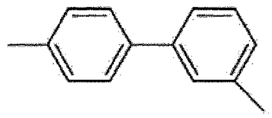,

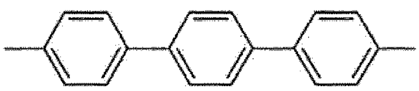, 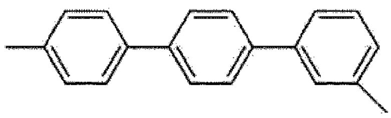,

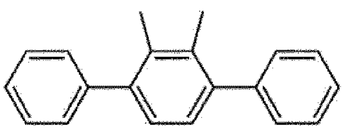, 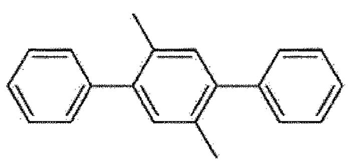,

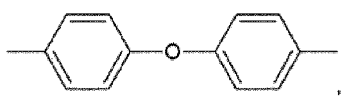 , 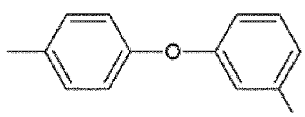 , 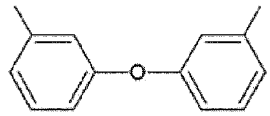 ,

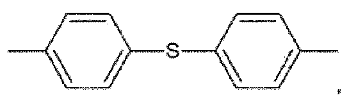 , 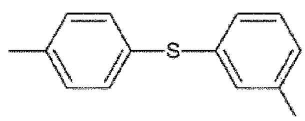 , 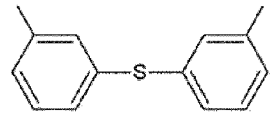 ,

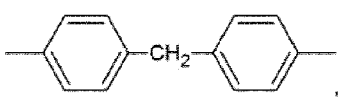 , 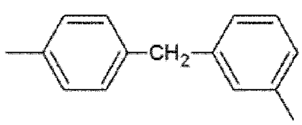 , 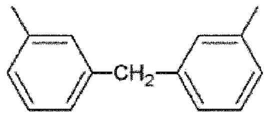 ,

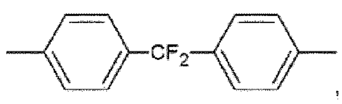 , 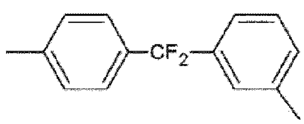 , 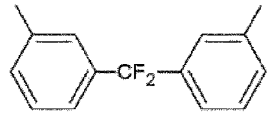 ,

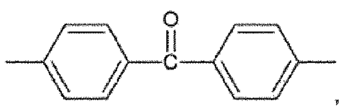 , 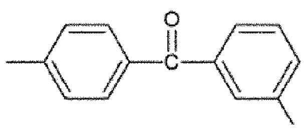 , 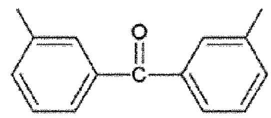 ,

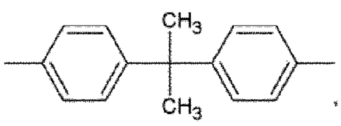 , 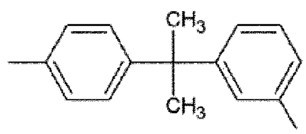 , 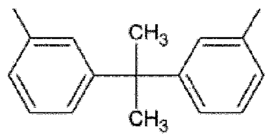 ,

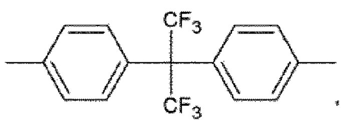 , 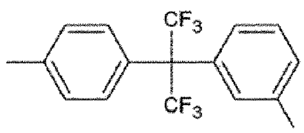 , 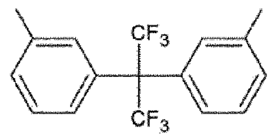 ,

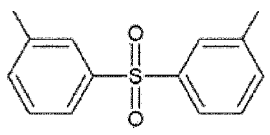 , 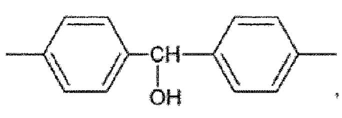 , 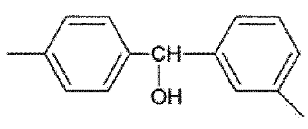 ,

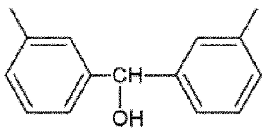 , 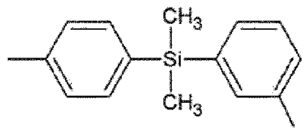 , 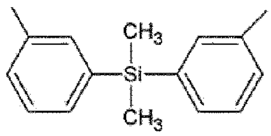 ,

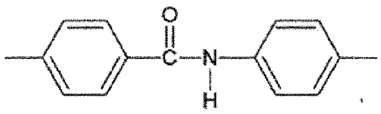 , 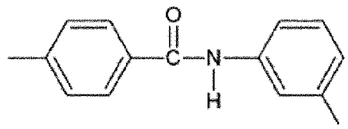 ,

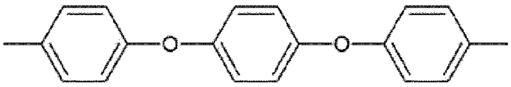 , 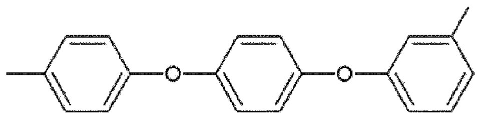 ,

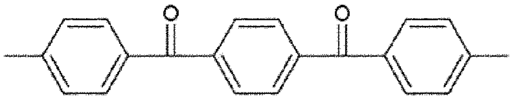 , 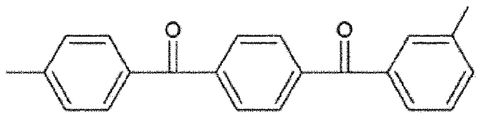 ,

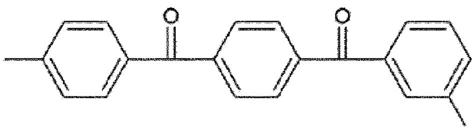 , 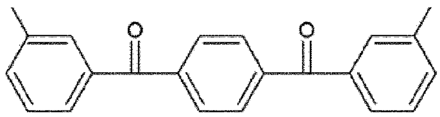 ,

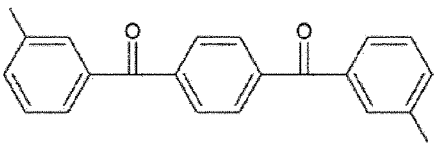 , 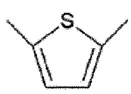 , 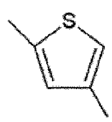 , 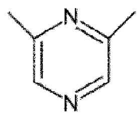 ,

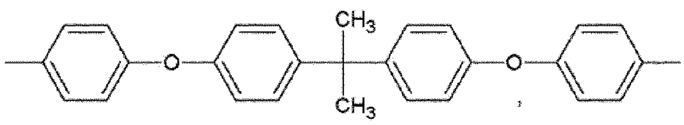 , , 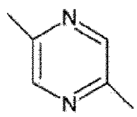 .

**12.** Polymer nach Anspruch 1 oder 7, wobei das Q aus $C(CH_3)_2$, $C(CF_3)_2$, O, S, $S(=O)_2$ oder C(=O) ausgewählt ist.

**13.** Polymer nach Anspruch 1 oder 7, wobei das $Ar_1$ für eine funktionelle Gruppe steht, die durch die folgende Chemische Formel A, B oder C wiedergegeben wird, $Ar_2$ für eine funktionelle Gruppe steht, die durch die folgende Chemische Formel D oder E wiedergegeben wird, und Q für $C(CF_3)_2$ stehen kann:

[Chemische Formel A]

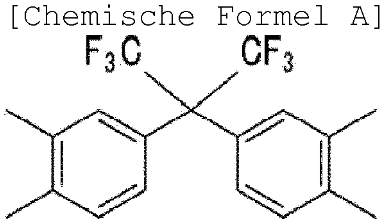

[Chemische Formel B]

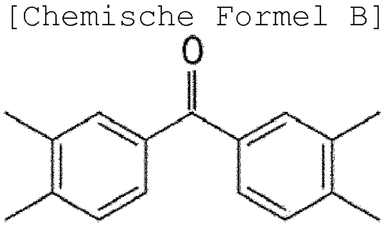

[Chemische Formel C]

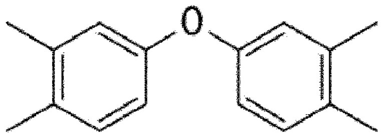

[Chemische Formel D]

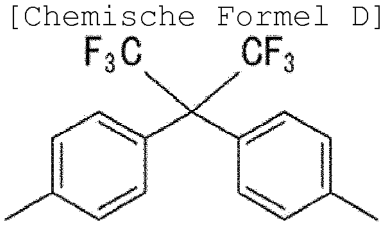

[Chemische Formel E]

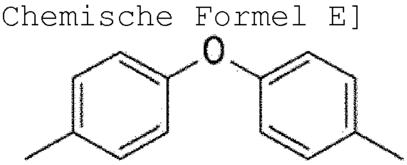

.

**14.** Polymer nach Anspruch 7, wobei ein m:l-Molverhältnis in den Chemischen Formeln 5 bis 8 im Bereich von 0,1:9,9 bis 9,9:0,1 liegt.

**15.** Polymer nach Anspruch 1, wobei ein m:l-Molverhältnis in den Chemischen Formeln 37 bis 40 im Bereich von 0,1:9,9 bis 9,9:0,1 liegt.

**16.** Polymer nach Anspruch 1, wobei das Polymer, das sich von einem Polyimid ableitet, Verbindungen mit einer Wiederholungseinheit, die durch eine der folgenden Chemischen Formeln 26 bis 32 wiedergegeben werden, oder Copolymere davon enthält:

[Chemische Formel 26]

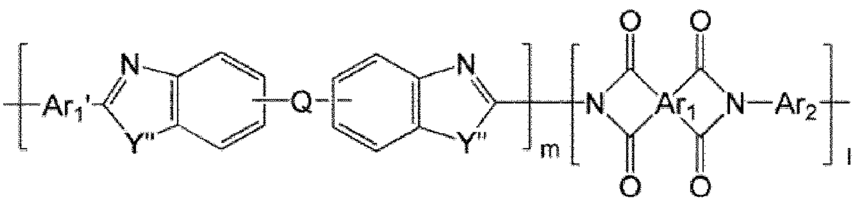

[Chemische Formel 27]

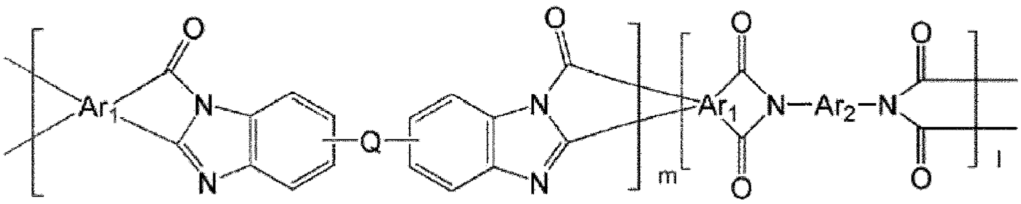

[Chemische Formel 28]

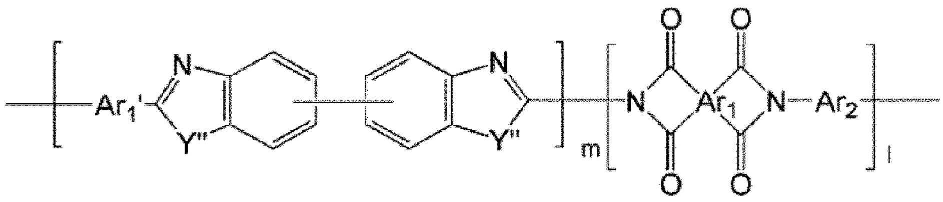

[Chemische Formel 29]

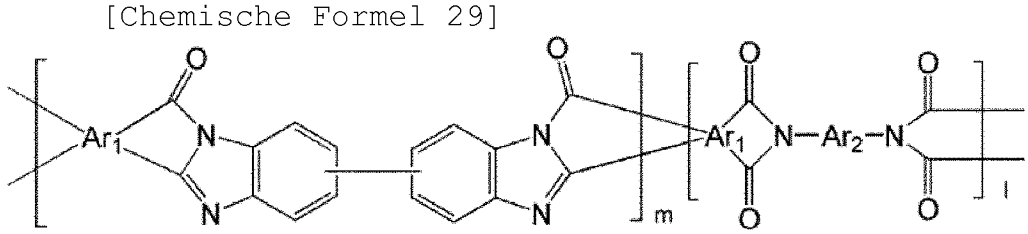

[Chemische Formel 30]

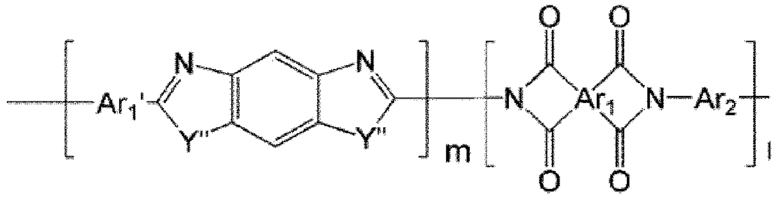

[Chemische Formel 31]

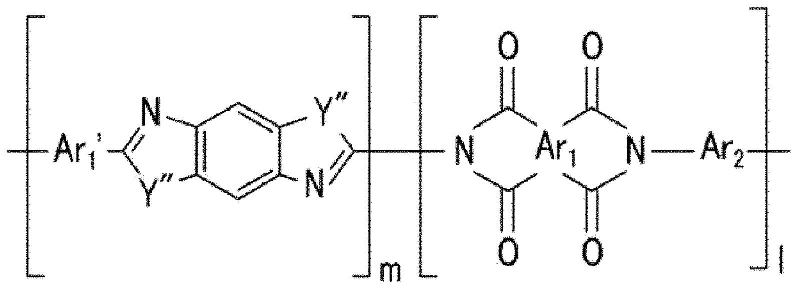

[Chemische Formel 32]

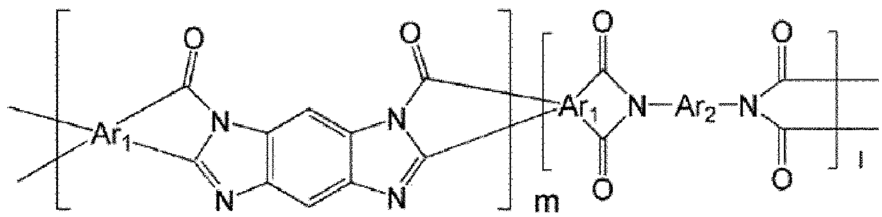

wobei in den obigen Chemischen Formeln 26 bis 32

$Ar_1$ für eine aromatische Gruppe steht, die aus einer substituierten oder unsubstituierten vierwertigen C6- bis C24-Arylengruppe und einer substituierten oder unsubstituierten vierwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH ausgewählt ist, verknüpft sind,

$Ar_1'$ für eine aromatische Gruppe steht, die aus einer substituierten oder unsubstituierten vierwertigen C6- bis C24-Arylengruppe und einer substituierten oder unsubstituierten vierwertigen C4- bis C24-heterocyclischen Gruppe ausgewählt ist, wobei die aromatische Gruppe singulär vorliegt; mindestens zwei aromatische Gruppen

zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \le p \le 10$, $(CF_2)_q$, wobei $1 \le q \le 10$, $C(CH_3)_2$, $C(CF_3)_2$ oder C(=O)NH ausgewählt ist, verknüpft sind,
$Ar_2$ für eine aromatische Gruppe steht, die aus einer substituierten oder unsubstituierten zweiwertigen C6- bis C24-Arylengruppe und einer substituierten oder unsubstituierten zweiwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \le p \le 10$, $(CF_2)_q$, wobei $1 \le q \le 10$, $C(CH_3)_2$, $C(CF_3)_2$ oder C(=O)NH ausgewählt ist, verknüpft sind,
wobei der Begriff "substituiert" durch mindestens einen Substituenten aus der Gruppe bestehend aus einer C1- bis C10-Alkylgruppe, einer C1- bis C10-Alkoxygruppe, einer C1- bis C10-Halogenalkylgruppe und einer C1- bis C10-Halogenalkoxygruppe substituiert bedeutet,
Q für O, S, C(=O), CH(OH), $S(=O)_2$, $Si(CH_3)_2$, $(CH_2)_p$, wobei $1 \le p \le 10$, $(CF_2)_q$, wobei $1 \le q \le 10$, $C(CH_3)_2$, $C(CF_3)_2$, C(=O)NH, $C(CH_3)(CF_3)$ oder eine substituierte oder unsubstituierte Phenylengruppe steht, wobei es sich bei der substituierten Phenylengruppe um eine Phenylengruppe handelt, die durch eine C1- bis C6-Alkylgruppe oder eine C1- bis C6-Halogenalkylgruppe substituiert ist, wobei das Q mit aromatischen Gruppen mit m-m-, m-p-, p-m- oder p-p-Positionen verknüpft ist,
Y'' für O oder S steht,
m für eine ganze Zahl im Bereich von 10 bis 400 steht und
l für eine ganze Zahl im Bereich von 10 bis 400 steht.

**17.** Polymer nach Anspruch 16, wobei das $Ar_1$ aus einer der folgenden Chemischen Formeln ausgewählt ist:

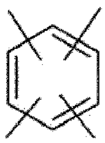 , 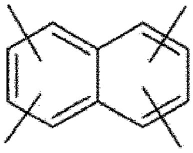 , 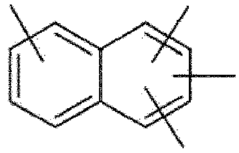 , 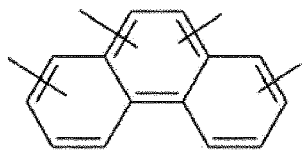 ,

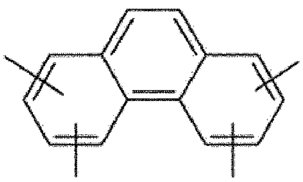 , 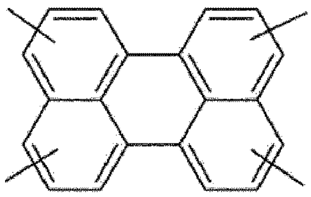 , 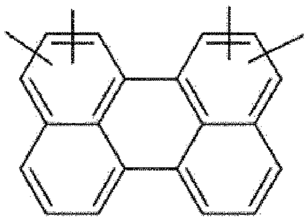 ,

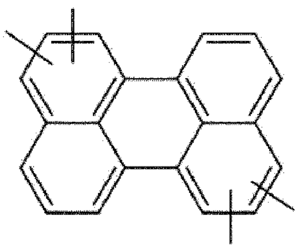 , 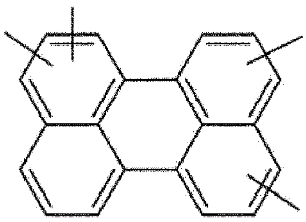 , 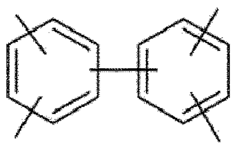 ,

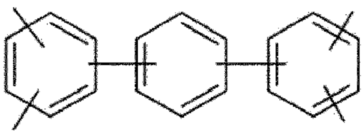 , 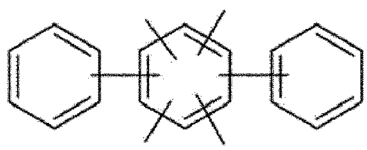 ,

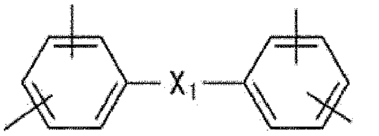,
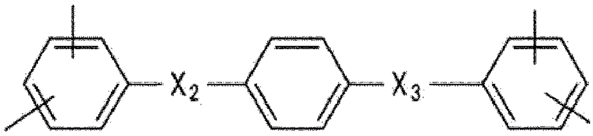,

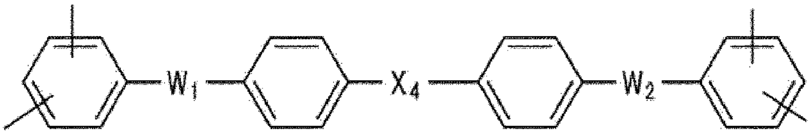,
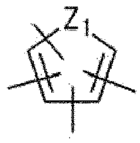,

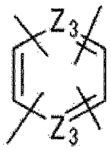

wobei in den obigen Chemischen Formeln

$X_1$, $X_2$, $X_3$ und $X_4$ gleich oder verschieden sind und unabhängig für O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH stehen,
$W_1$ und $W_2$ gleich oder verschieden sind und unabhängig für O, S oder C(=O) stehen,
$Z_1$ für O, S, $CR_1R_2$ oder $NR_3$ steht, wobei $R_1$, $R_2$ und $R_3$ gleich oder verschieden sind und unabhängig für H oder eine C1- bis C5-Alkylgruppe stehen, und
$Z_3$ gleich oder verschieden sind und unabhängig für N oder $CR_4$ stehen, wobei $R_4$ für Wasserstoff oder eine C1- bis C5-Alkylgruppe stehen, mit der Maßgabe, dass nicht beide $Z_3$ für $CR_4$ stehen.

**18.** Polymer nach Anspruch 17, wobei das $Ar_1$ aus einer der folgenden Chemischen Formeln ausgewählt ist:

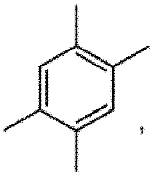, 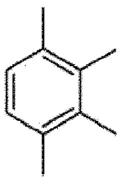, 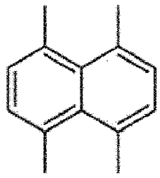, 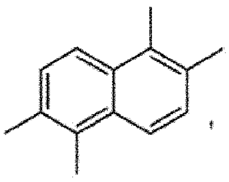, 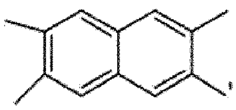,

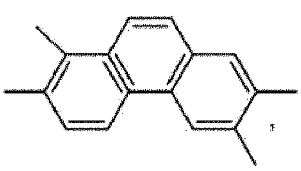, 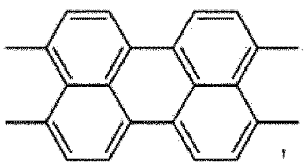, 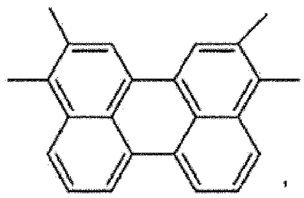,

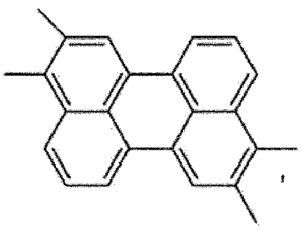, 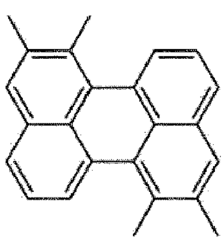, 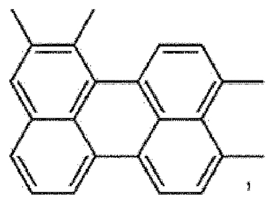,

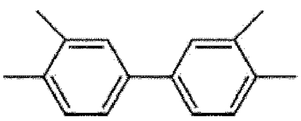 , 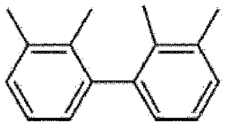 , 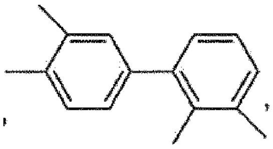 ,

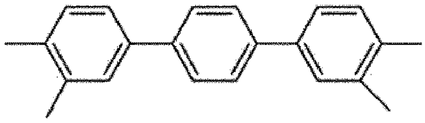 , 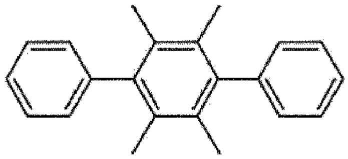 ,

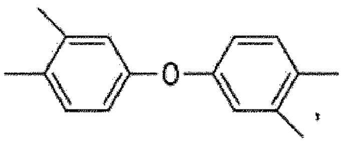 , 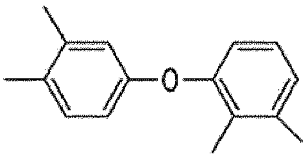 , 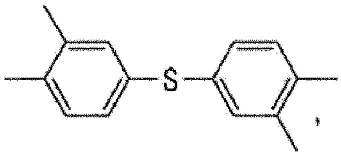 ,

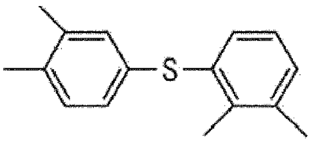 , 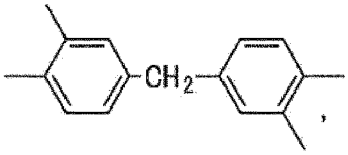 , 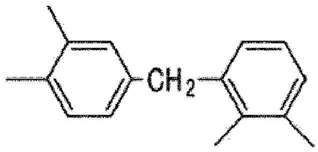 ,

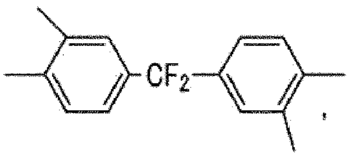 , 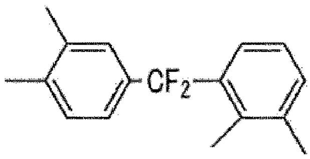 , 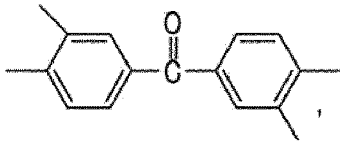 ,

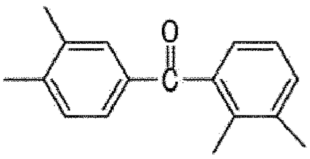 , 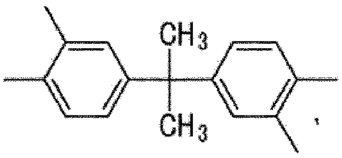 , 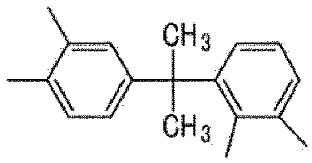 ,

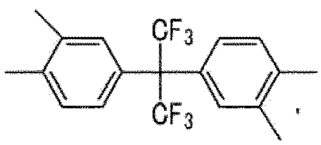 , 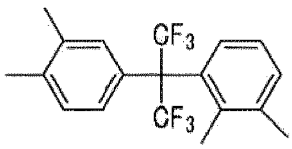 , 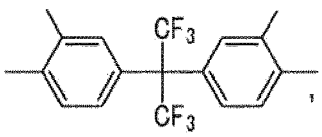 ,

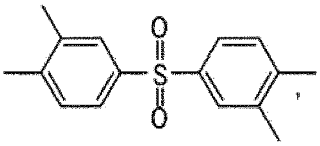 , 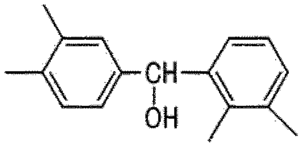 , 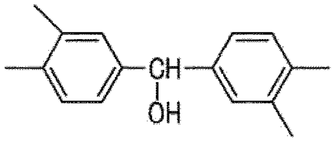 ,

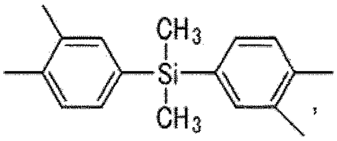 , 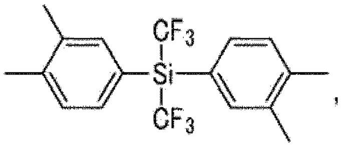 , 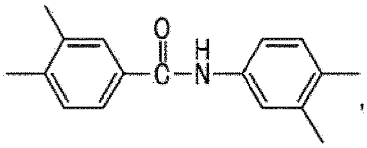 ,

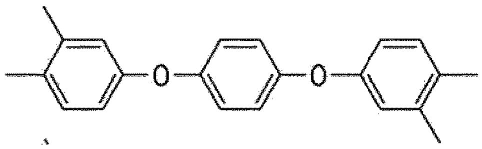, 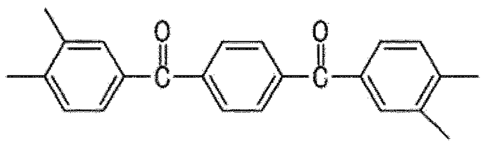,

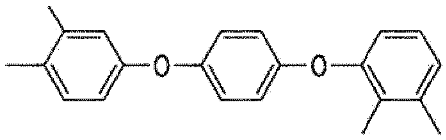, 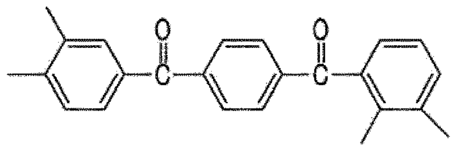

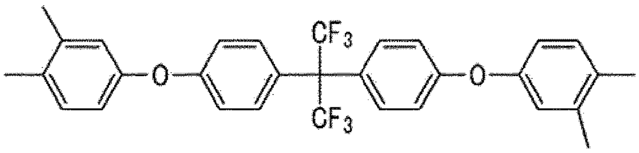, 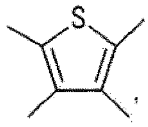, 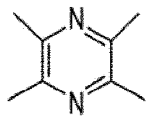,

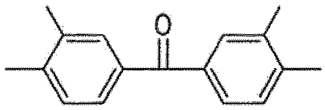, 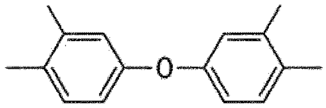

**19.** Polymer nach Anspruch 16, wobei das $Ar_1$' und $Ar_2$ aus einer der folgenden Chemischen Formeln ausgewählt sind:

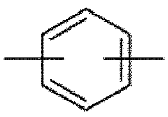, 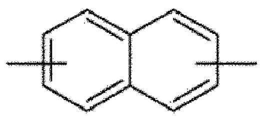, 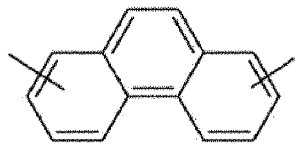,

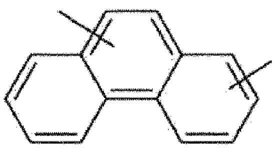, 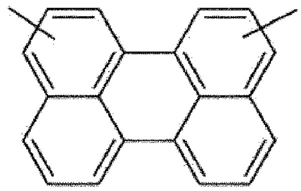, 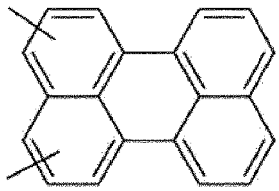,

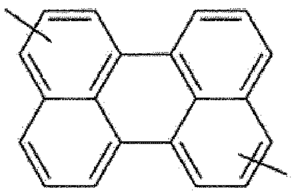, 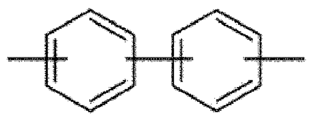,

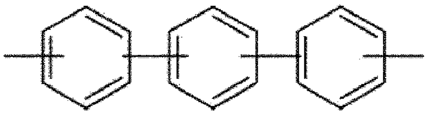, 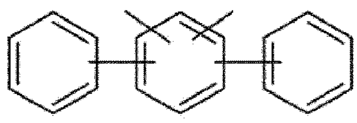,

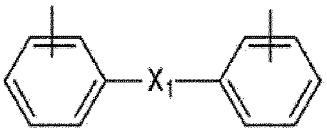,
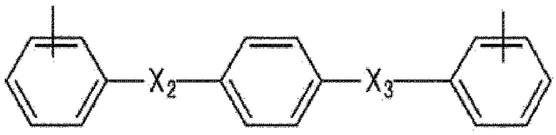,

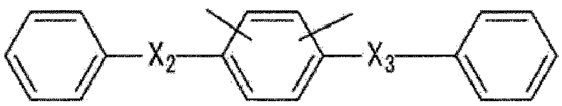,

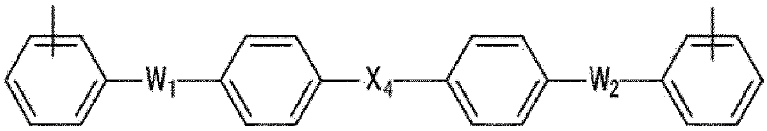,
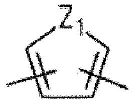,

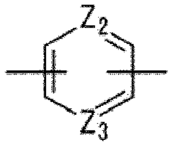

wobei in den obigen Chemischen Formeln

$X_1$, $X_2$, $X_3$ und $X_4$ gleich oder verschieden sind und unabhängig für O, S, C(=O), CH(OH), $S(=O)_2$, Si $(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH stehen,
$W_1$ und $W_2$ gleich oder verschieden sind und unabhängig für O, S oder C(=O) stehen,
$Z_1$ für O, S, $CR_1R_2$ oder $NR_3$ steht, wobei $R_1$, $R_2$ und $R_3$ gleich oder verschieden sind und unabhängig für H oder eine C1- bis C5-Alkylgruppe stehen, und
$Z_2$ und $Z_3$ gleich oder verschieden sind und unabhängig für N oder $CR_4$ stehen, wobei $R_4$ für Wasserstoff oder eine C1- bis C5-Alkylgruppe stehen, mit der Maßgabe, dass nicht sowohl $Z_2$ als auch $Z_3$ für $CR_4$ stehen.

**20.** Polymer nach Anspruch 19, wobei das $Ar_1$' und $Ar_2$ aus einer der folgenden Chemischen Formeln ausgewählt sind:

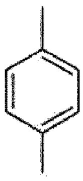,
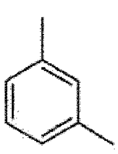,
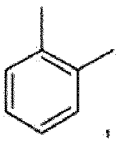,
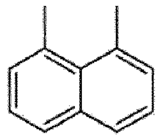,
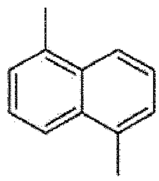,

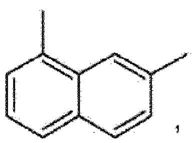,
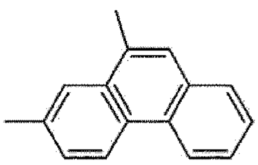,
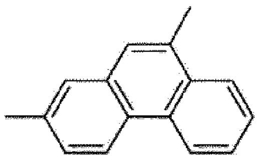,

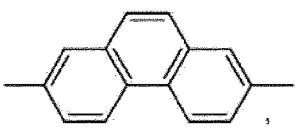,
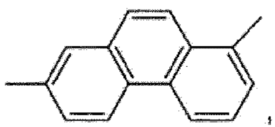,
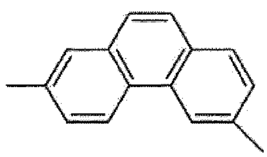,

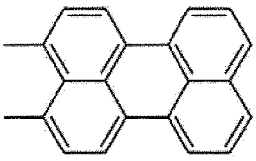 , 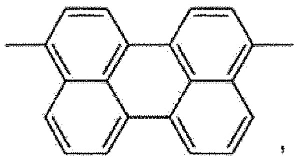 , 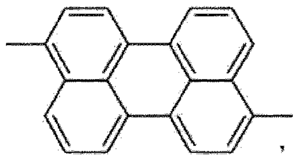 ,

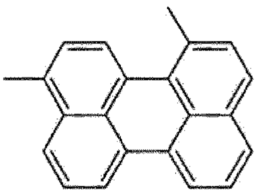 , 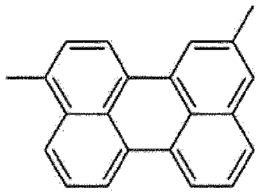 , 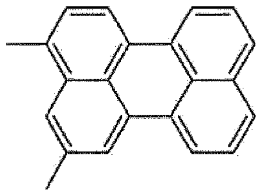 ,

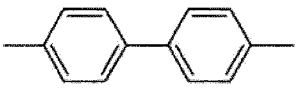 , 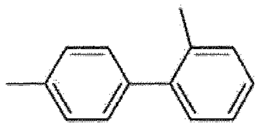 , 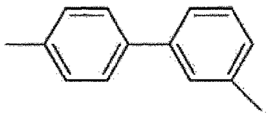 ,

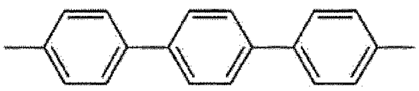 , 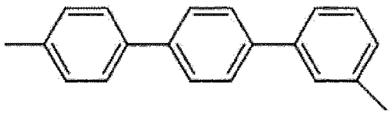 ,

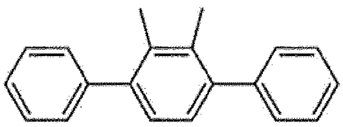 , 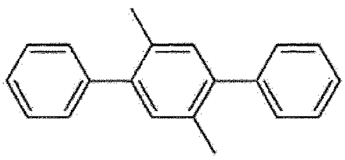 ,

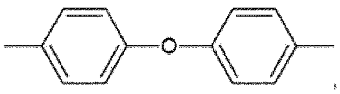 , 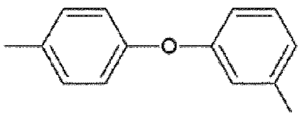 , 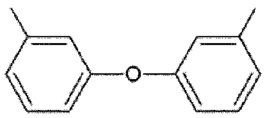 ,

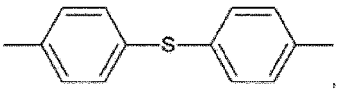 , 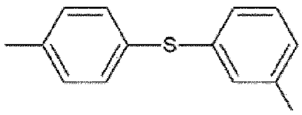 , 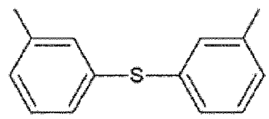 ,

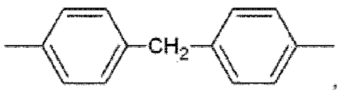 , 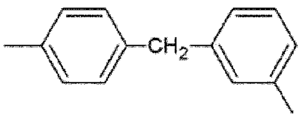 , 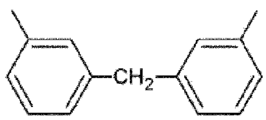 ,

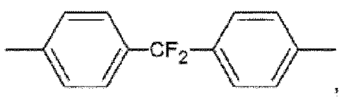 , 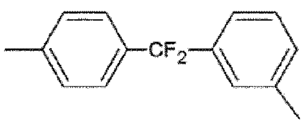 , 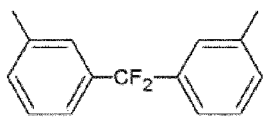 ,

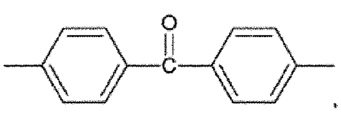 , 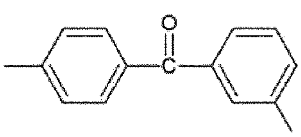 , 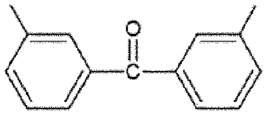 ,

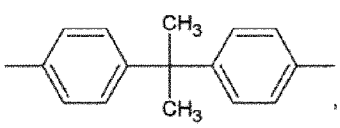 , 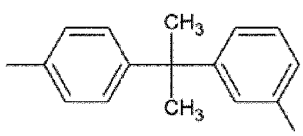 , 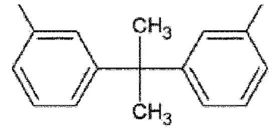 ,

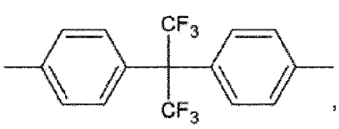 , 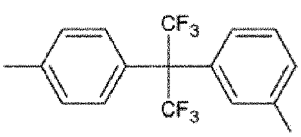 , 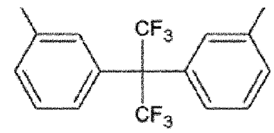 ,

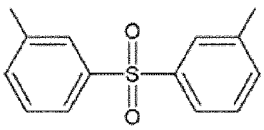 , 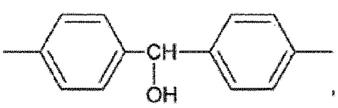 , 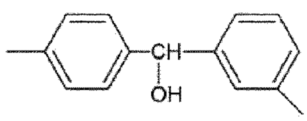 ,

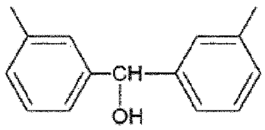 , 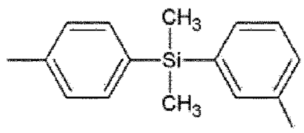 , 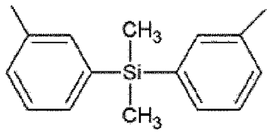 ,

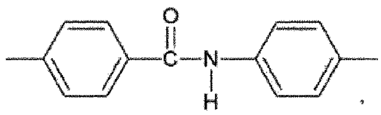 , 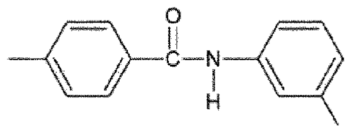 ,

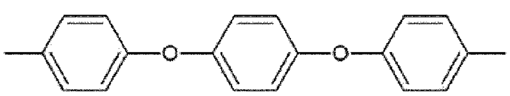 , 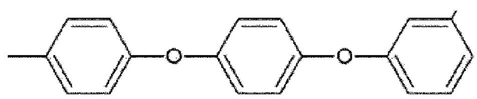 ,

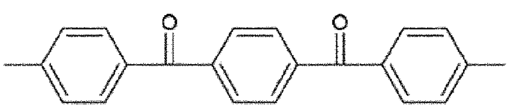 , 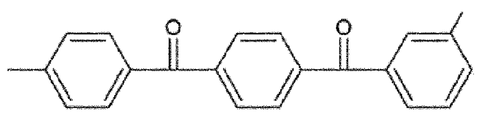 ,

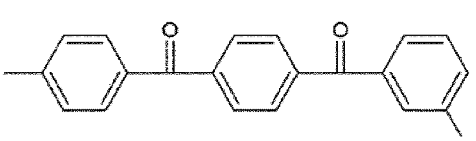 , 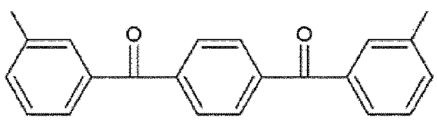 ,

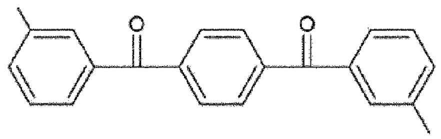 , 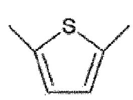 , 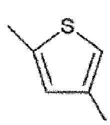 , 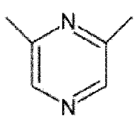 ,

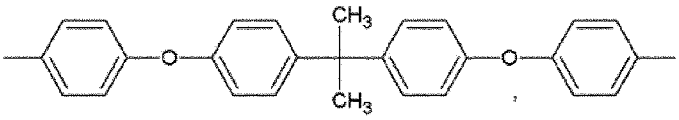 , , 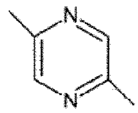 .

**21.** Polymer nach Anspruch 16, wobei das Q aus $C(CH_3)_2$, $C(CF_3)_2$, O, S, $S(=O)_2$ oder C(=O) ausgewählt ist.

**22.** Polymer nach Anspruch 16, wobei das $Ar_1$ für eine funktionelle Gruppe steht, die durch die folgende Chemische Formel A, B oder C wiedergegeben wird, $Ar_1$' für eine funktionelle Gruppe steht, die durch die folgende Chemische Formel F, G oder H wiedergegeben wird, $Ar_2$ für eine funktionelle Gruppe steht, die durch die folgende Chemische Formel D oder E wiedergegeben wird, und Q für $C(CF_3)_2$ steht:

[Chemische Formel A]

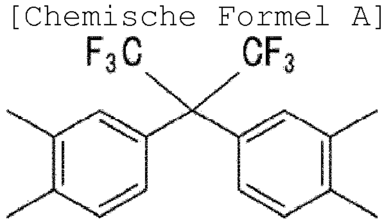

[Chemische Formel B]

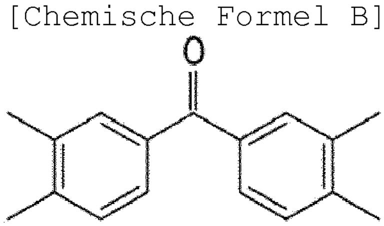

[Chemische Formel C]

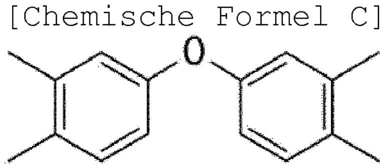

[Chemische Formel D]

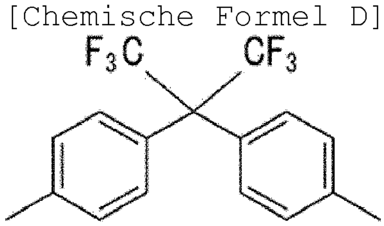

[Chemische Formel E]

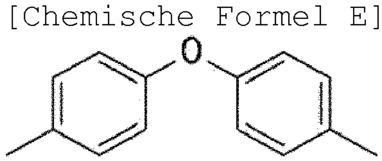

[Chemische Formel F]

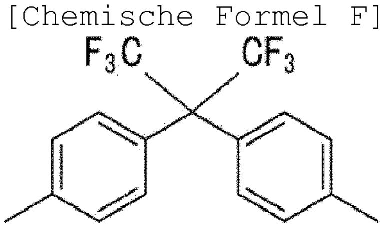

[Chemische Formel G]

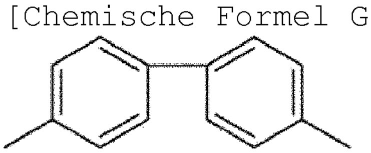

[Chemische Formel H]

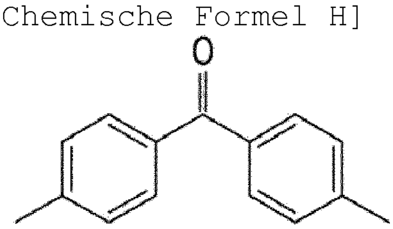

**23.** Polymer nach Anspruch 1, wobei das Copolymer ein gewichtsmittleres Molekulargewicht (Mw) von 10.000 bis 200.000 aufweist.

**24.** Polymer nach Anspruch 1, wobei das Polymer ferner ein Additiv aus der Gruppe bestehend aus pyrogener Kieselsäure, Zirconiumoxid, Tetraethoxysilan, Montmorillonit-Ton und einer Kombination davon enthält.

**25.** Polymer nach Anspruch 1, wobei das Polymer ferner einen anorganischen Füllstoff aus der Gruppe bestehend aus Phosphorwolframsäure (PWA), Phosphormolybdänsäure, Kieselwolframsäure (SiWA), Molybdatophosphorsäure, Kieselmolybdänsäure, Phosphorzinnsäure, Zirconiumphosphat (ZrP) und einer Kombination davon enthält.

**26.** Herstellungsverfahren für ein Polymer, wobei das Verfahren Folgendes umfasst:

Erhalten eines Polyimid-Copolymers durch Imidisierung von Polyamidsäure
und Wärmebehandeln des Polyimid-Copolymers,
wobei die Polyamidsäure aus Polyamidsäure-Copolymeren mit einer Wiederholungseinheit, die durch eine der folgenden Chemischen Formeln 5 bis 8 wiedergegeben wird, erhalten wird:

[Chemische Formel 5]

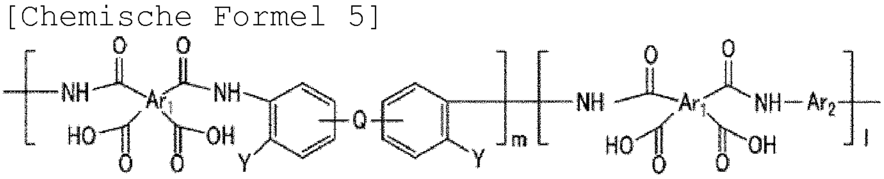

[Chemische Formel 6]

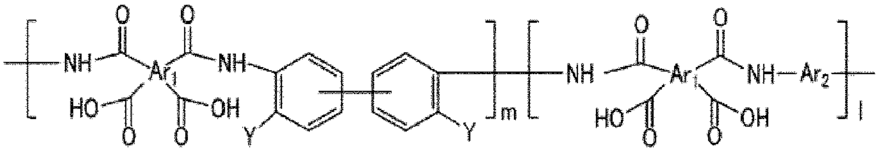

[Chemische Formel 7]

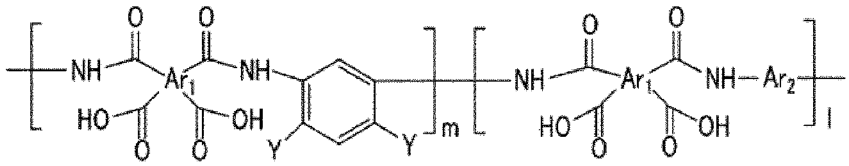

[Chemische Formel 8]

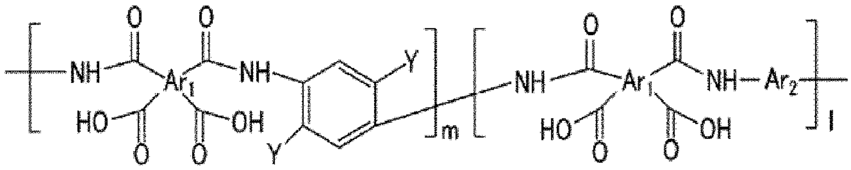

wobei in den obigen Chemischen Formeln 5 bis 8

$Ar_1$ für eine aromatische Gruppe steht, die aus einer substituierten oder unsubstituierten vierwertigen C6- bis C24-Arylengruppe und einer substituierten oder unsubstituierten vierwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH ausgewählt ist, verknüpft sind,
$Ar_2$ für eine aromatische Gruppe steht, die aus einer substituierten oder unsubstituierten zweiwertigen C6- bis C24-Arylengruppe und einer substituierten oder unsubstituierten zweiwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH ausgewählt ist, verknüpft sind,
wobei der Begriff "substituiert" durch mindestens einen Substituenten aus der Gruppe bestehend aus einer C1- bis C10-Alkylgruppe, einer C1- bis C10-Alkoxygruppe, einer C1- bis C10-Halogenalkylgruppe und einer C1- bis C10-Halogenalkoxygruppe substituiert bedeutet,
Q für O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$, C(=O)NH, $C(CH_3)(CF_3)$ oder eine substituierte oder unsubstituierte Phenylengruppe steht, wobei es sich bei der substituierten Phenylengruppe um eine Phenylengruppe handelt, die durch eine C1- bis C6-Alkylgruppe oder eine C1- bis C6-Halogenalkylgruppe substituiert ist, wobei das Q mit aromatischen Gruppen mit m-m-, m-p-, p-m- oder p-p-Positionen verknüpft ist,
Y in jeder Wiederholungseinheit gleich oder verschieden ist und unabhängig aus OH, SH oder $NH_2$ ausgewählt ist,
m für eine ganze Zahl im Bereich von 10 bis 400 steht und
1 für eine ganze Zahl im Bereich von 10 bis 400 steht,
wobei das Polymer, das sich von einem Polyimid-Copolymer ableitet, Picoporen mit einem mittels PALS (Positron Annihilation Lifetime Spectroscopy) gemessenen mittleren Durchmesser von 100 pm bis 1000 pm aufweist und
wobei das Verfahren ferner das Dotieren des Polymers mit einem Säure-Dotierstoff umfasst und der Säure-Dotierstoff einen Dotierstoff aus der Gruppe bestehend aus Schwefelsäure, Salzsäure, Phosphorsäure, Salpetersäure, $HBrO_3$, $HClO_4$, $HPF_6$, $HBF_6$, 1-Methyl-3-methylimidazolium-Kationen ($BMIM^+$) und einer Kombination davon enthält.

**27.** Herstellungsverfahren nach Anspruch 26, bei dem die Wärmebehandlung durch Erhöhen der Temperatur um 1 °C/min bis 30 °C/min auf 350 °C bis 500 °C und dann Halten der Temperatur über einen Zeitraum von 1 Minute bis 12 Stunden unter Inertatmosphäre durchgeführt wird.

**28.** Herstellungsverfahren nach Anspruch 27, bei dem die Wärmebehandlung durch Erhöhen der Temperatur um 5 °C/min bis 20 °C/min auf 350 °C bis 450 °C und dann Halten der Temperatur über einen Zeitraum von 1 Stunde bis

6 Stunden unter Inertatmosphäre durchgeführt wird.

**29.** Herstellungsverfahren für ein Polymer, wobei das Verfahren Folgendes umfasst:

Wärmebehandeln eines Polyimid-Copolymers,
wobei das Polyimid-Copolymer eine Wiederholungseinheit umfasst, die durch eine der folgenden Chemischen Formeln 37 bis 40 wiedergegeben wird:

[Chemische Formel 37]

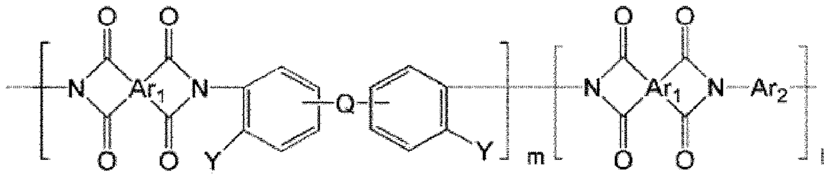

[Chemische Formel 38]

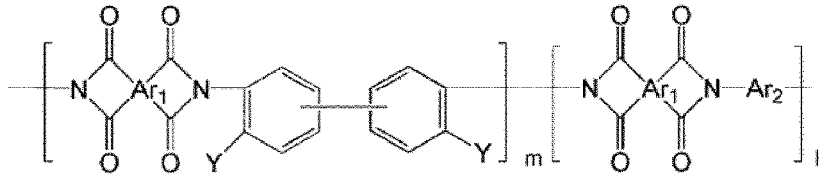

[Chemische Formel 39]

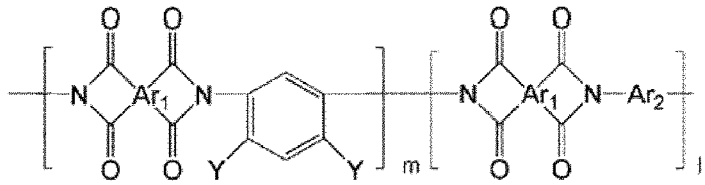

[Chemische Formel 40]

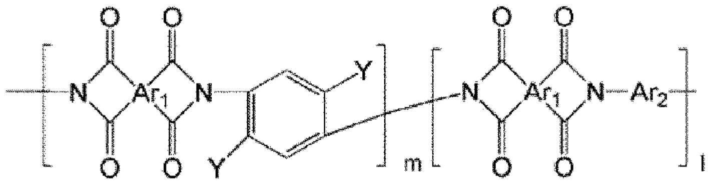

wobei in den obigen Chemischen Formeln 37 bis 40

$Ar_1$ für eine aromatische Gruppe steht, die aus einer substituierten oder unsubstituierten vierwertigen C6- bis C24-Arylengruppe und einer substituierten oder unsubstituierten vierwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH ausgewählt ist, verknüpft sind,

$Ar_2$ für eine aromatische Gruppe steht, die aus einer substituierten oder unsubstituierten zweiwertigen C6- bis C24-Arylengruppe und einer substituierten oder unsubstituierten zweiwertigen C4- bis C24-heterocyclischen Gruppe ausgewählt ist, wobei die aromatische Gruppe singulär vorliegt; mindestens zwei aromatische Gruppen zu einem kondensierten Ring anelliert sind oder mindestens zwei aromatische Gruppen über eine Einfachbindung oder eine funktionelle Gruppe, die aus O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$ oder C(=O)NH ausgewählt ist, verknüpft sind,

wobei der Begriff "substituiert" durch mindestens einen Substituenten aus der Gruppe bestehend aus einer C1- bis C10-Alkylgruppe, einer C1- bis C10-Alkoxygruppe, einer C1- bis C10-Halogenalkylgruppe und einer C1- bis C10-Halogenalkoxygruppe substituiert bedeutet,
Q für O, S, C(=O), CH(OH), $S(=O)_2$, $Si(CH_3)_2$, $(CH_2)_p$, wobei $1 \leq p \leq 10$, $(CF_2)_q$, wobei $1 \leq q \leq 10$, $C(CH_3)_2$, $C(CF_3)_2$, C(=O)NH, $C(CH_3)(CF_3)$ oder eine substituierte oder unsubstituierte Phenylengruppe steht, wobei es sich bei der substituierten Phenylengruppe um eine Phenylengruppe handelt, die durch eine C1- bis C6-Alkylgruppe oder eine C1- bis C6-Halogenalkylgruppe substituiert ist, wobei das Q mit aromatischen Gruppen mit m-m-, m-p-, p-m- oder p-p-Positionen verknüpft ist,
Y in jeder Wiederholungseinheit gleich oder verschieden ist und unabhängig aus OH, SH oder $NH_2$ ausgewählt ist,
m für eine ganze Zahl im Bereich von 10 bis 400 steht,
l für eine ganze Zahl im Bereich von 10 bis 400 steht,
wobei das Polymer, das sich von einem Polyimid-Copolymer ableitet, Picoporen mit einem mittels PALS (Positron Annihilation Lifetime Spectroscopy) gemessenen mittleren Durchmesser von 100 pm bis 1000 pm aufweist und
wobei das Verfahren ferner das Dotieren des Polymers mit einem Säure-Dotierstoff umfasst und der Säure-Dotierstoff einen Dotierstoff aus der Gruppe bestehend aus Schwefelsäure, Salzsäure, Phosphorsäure, Salpetersäure, $HBrO_3$, $HC10_4$, $HPF_6$, $HBF_6$, 1-Methyl-3-methylimidazolium-Kationen ($BMIM^+$) und einer Kombination davon enthält.

**30.** Herstellungsverfahren nach Anspruch 29, bei dem die Wärmebehandlung durch Erhöhen der Temperatur um 1 °C/min bis 30 °C/min auf 350 °C bis 500 °C und dann Halten der Temperatur über einen Zeitraum von 1 Minute bis 12 Stunden unter Inertatmosphäre durchgeführt wird.

**31.** Herstellungsverfahren nach Anspruch 30, bei dem die Wärmebehandlung durch Erhöhen der Temperatur um 5 °C/min bis 20 °C/min auf 350 °C bis 450 °C und dann Halten der Temperatur über einen Zeitraum von 1 Stunde bis 6 Stunden unter Inertatmosphäre durchgeführt wird.

**32.** Polymer nach Anspruch 1, wobei die Picoporen eine dreidimensionale Netzwerkstruktur bilden, wobei mindestens zwei Picoporen dreidimensional zu einer stundenglasförmigen Struktur, die an Verbindungsteilen ein schmales Tal bildet, verbunden sind.

## Revendications

**1.** Polymère dérivé d'un copolymère de polyimide, le polymère dérivé du copolymère de polyimide comprenant des picopores, lesdits picopores ayant un diamètre moyen de 100 pm à 1000 pm, mesuré par spectroscopie temporelle d'annihilation de positrons (PALS), et
le copolymère de polyimide comprend un motif répétitif représenté par l'une quelconque des formules chimiques 37 à 40 suivantes :

[Formule chimique 37]

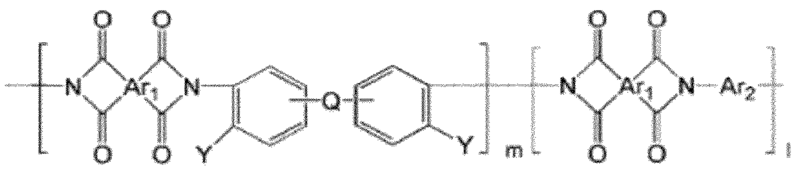

[Formule chimique 38]

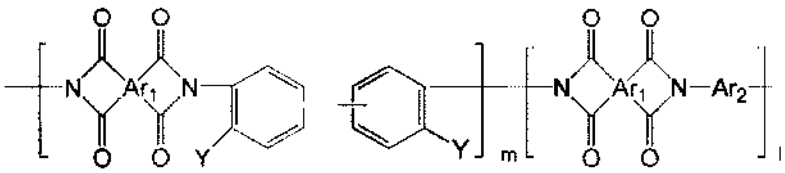

[Formule chimique 39]

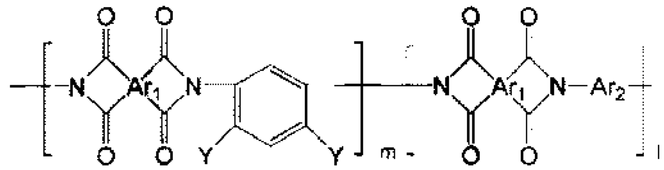

[Formule chimique 40]

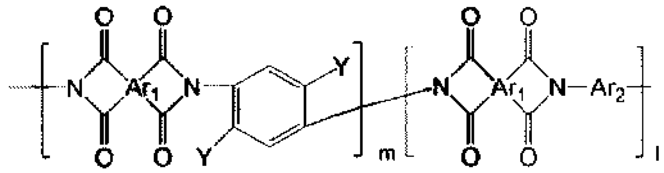

dans lequel, dans les formules chimiques 37 à 40 ci-dessus,

$Ar_1$ est un groupe aromatique choisi parmi un groupe arylène en C6 à C24 tétravalent substitué ou non substitué et un groupe hétérocyclique en C4 à C24 tétravalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,

$Ar_2$ est un groupe aromatique choisi parmi un groupe arylène en C6 à C24 divalent substitué ou non substitué et un groupe hétérocyclique en C4 à C24 divalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,

dans lequel le terme "substitué" signifie substitué par au moins un substituant choisi dans le groupe constitué d'un groupe alkyle en C1 à C10, un groupe alcoxy en C1 à C10, un groupe halogénoalkyle en C1 à C10, et un groupe halogénoalcoxy en C1 à C10,

Q est O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$, C(=O)NH, $C(CH_3)(CF_3)$, ou un groupe phénylène substitué ou non substitué, où le groupe phénylène substitué est un groupe phénylène substitué par un groupe alkyle en C1 à C6 ou un groupe halogénoalkyle en C1 à C6, où Q est lié à des groupes aromatiques avec des positions m-m, m-p,

p-m ou p-p,

Y est identique ou différent dans chaque motif répétitif et est indépendamment choisi parmi OH, SH ou $NH_2$,

m est un entier dans la plage de 10 à 400,

1 est un entier dans la plage de 10 à 400,

le polymère étant dopé avec un dopant acide, et

le dopant acide comprenant l'un choisi dans le groupe constitué de l'acide sulfurique, l'acide chlorhydrique, l'acide phosphorique, l'acide nitrique, $HBrO_3$, $HClO_4$, $HPF_6$, $HBF_6$, des cations 1-méthyl-3-méthylimidazolium cations ($BMIM^+$), et une combinaison de ceux-ci.

**2.** Polymère selon la revendication 1, dans lequel les picopores ont une structure en forme de sablier reliant au moins deux picopores.

**3.** Polymère selon la revendication 1, le polymère dérivé d'un polyimide ayant un volume libre fractionnaire (FFV) de 0,18 à 0,40.

**4.** Polymère selon la revendication 1, le polymère dérivé de polyimide ayant une distance interréticulaire (espacement d) de 580 pm à 800 pm mesurée par diffraction des rayons X (XRD).

**5.** Polymère selon la revendication 1, dans lequel les picopores ont une largeur à mi-hauteur (FWHM) de 10 pm à 40

pm mesurée par spectroscopie temporelle d'annihilation de positrons (PALS).

**6.** Polymère selon la revendication 1, le polymère dérivé d'un polyimide ayant une surface BET de 100 $m^2/g$ à 1000 $m^2/g$.

**7.** Polymère selon la revendication 1, le polyimide étant obtenu par imidation d'un copolymère d'acide polyamique comprenant un motif répétitif représenté par l'une quelconque des formules chimiques 5 à 8 suivantes :

[Formule chimique 5]

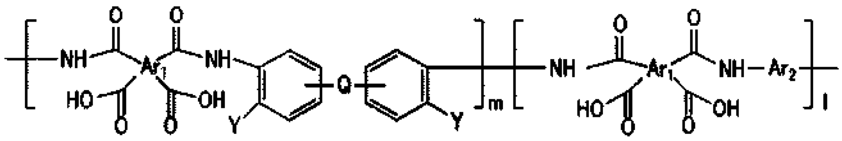

[Formule chimique 6]

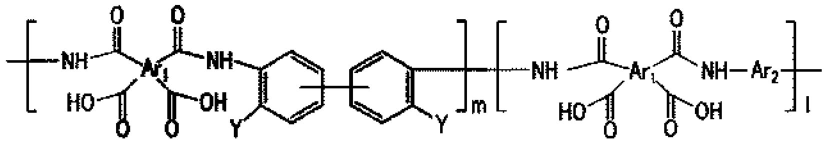

[Formule chimique 7]

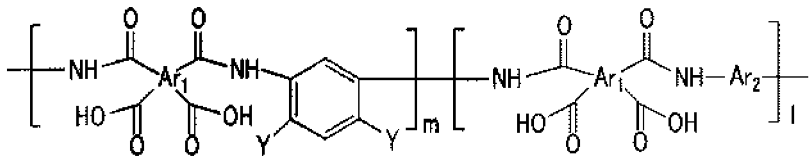

[Formule chimique 8]

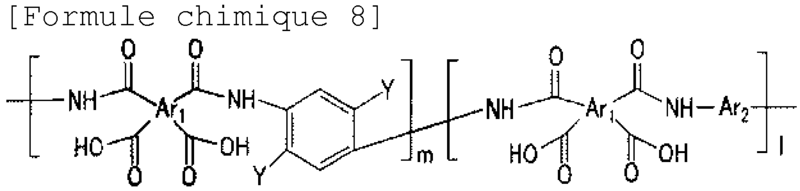

dans lequel, dans les formules chimiques 5 à 8 ci-dessus,

$Ar_1$ est un groupe aromatique choisi parmi un groupe arylène en C6 à C24 tétravalent substitué ou non substitué et un groupe hétérocyclique en C4 à C24 tétravalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,

$Ar_2$ est un groupe aromatique choisi parmi un groupe arylène en C6 à C24 divalent substitué ou non substitué et un groupe hétérocyclique en C4 à C24 divalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,

dans lequel le terme "substitué" signifie substitué par au moins un substituant choisi dans le groupe constitué d'un groupe alkyle en C1 à C10, un groupe alcoxy en C1 à C10, un groupe halogénoalkyle en C1 à C10, et un groupe halogénoalcoxy en C1 à C10,

Q est O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$, C(=O)NH, $C(CH_3)(CF_3)$, ou un groupe phénylène substitué ou non substitué, où le groupe phénylène substitué est un groupe phénylène substitué par un groupe alkyle en C1 à C6 ou un groupe halogénoalkyle en C1 à C6, où Q est lié à des groupes aromatiques avec des positions m-m, m-p, p-m ou p-p,

Y est identique ou différent dans chaque motif répétitif et est indépendamment choisi parmi OH, SH et $NH_2$,
m est un entier dans la plage de 10 à 400, et
1 est un entier dans la plage de 10 à 400.

**8.** Polymère selon la revendication 1 ou 7, dans lequel $Ar_1$ est choisi parmi l'une des formules chimiques suivantes :

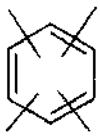 , 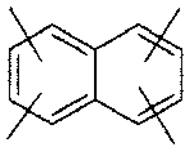 , 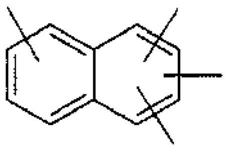 , 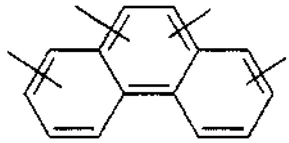 ,

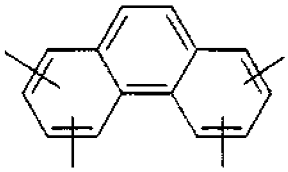 , 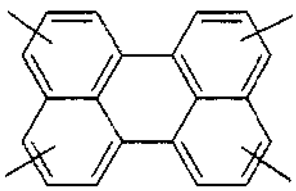 , 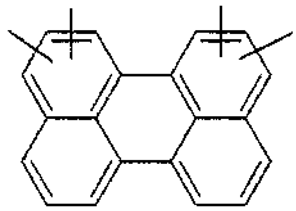 ,

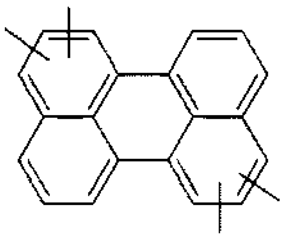 , 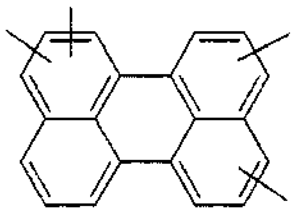 , 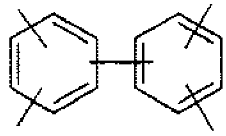 ,

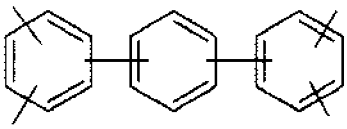 , 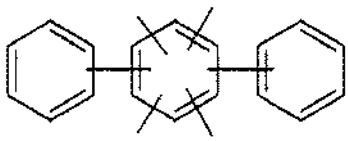 ,

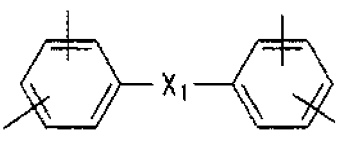 , 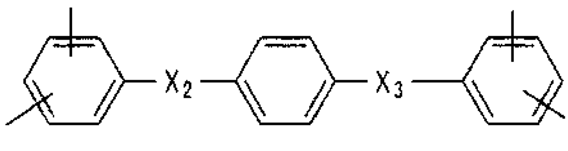 ,

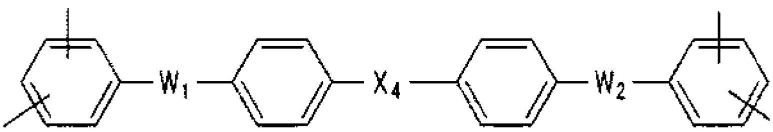 , 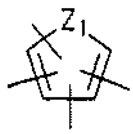 ,

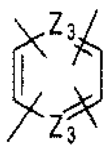

dans lequel, dans les formules chimiques ci-dessus,

$X_1$, $X_2$, $X_3$ et $X_4$ sont identiques ou différents et sont indépendamment O, S, C(=O), CH(OH), $S(=O)_2$, $Si(CH_3)_2$,

$(CH_2)_p$, où $1 \leq p \leq 10$, $(CF_2)_q$, où $1 \leq q \leq 10$, $C(CH_3)_2$, $C(CF_3)_2$ ou C(=O)NH,
$W_1$ et $W_2$ sont identiques ou différents et sont indépendamment O, S ou C(=O),
$Z_1$ est O, S, $CR_1R_2$ ou $NR_3$, où $R_1$, $R_2$ et $R_3$ sont identiques ou différents et sont indépendamment hydrogène ou un groupe alkyle en C1 à C5, et
$Z_2$ et $Z_3$ sont identiques ou différents et sont indépendamment N ou $CR_4$, où $R_4$ est hydrogène ou un groupe alkyle en C1 à C5, à condition que $Z_2$ et $Z_3$ ne soient pas tous deux $CR_4$.

**9.** Polymère selon la revendication 8, dans lequel $Ar_1$ est choisi parmi l'une des formules chimiques suivantes :

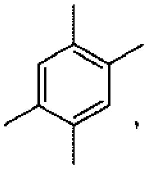 , 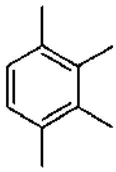 , 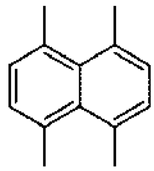 , 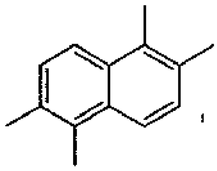 , 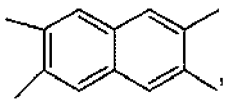 ,

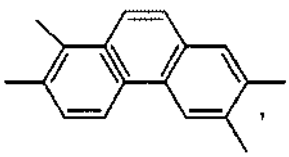 , 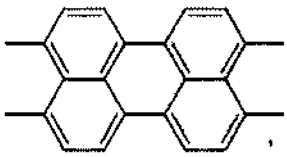 , 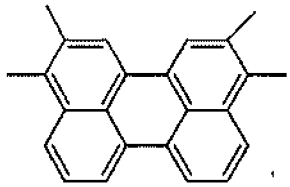 ,

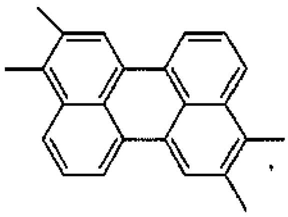 , 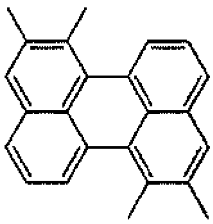 , 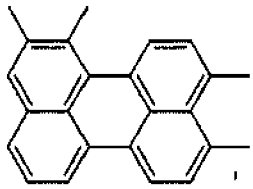 ,

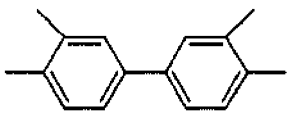 , 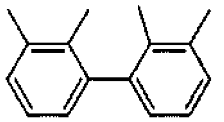 , 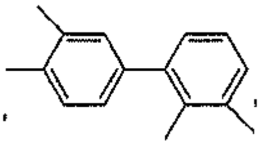 ,

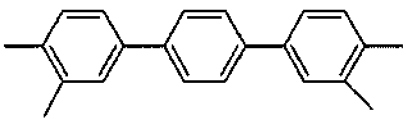 , 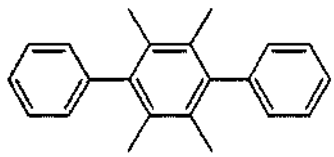 ,

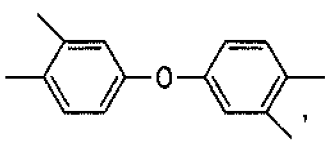 , 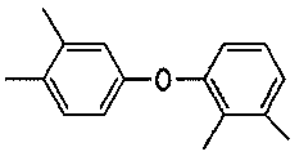 , 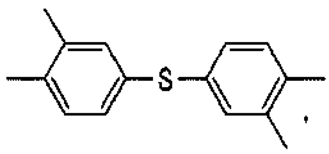 ,

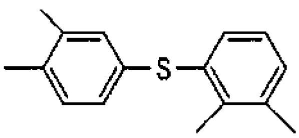 , 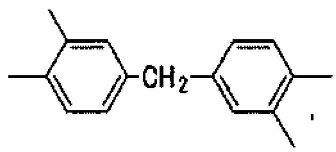 , 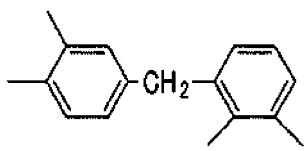 ,

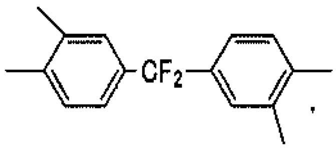, 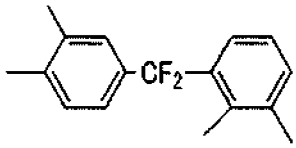, 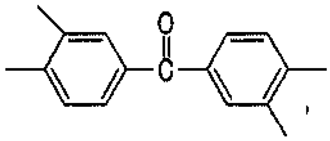,

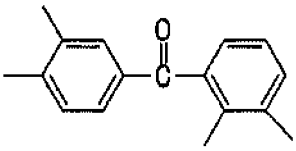, 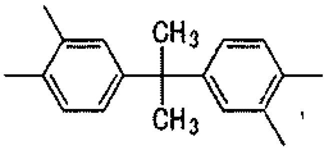, 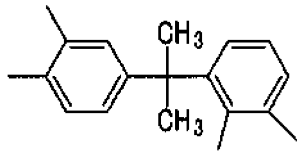,

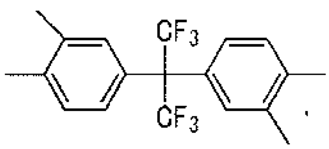, 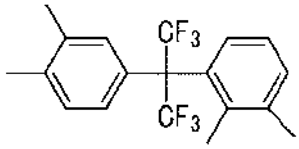, 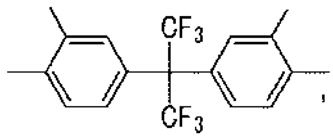,

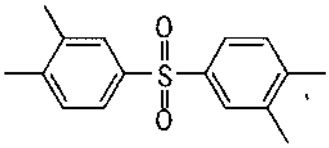, 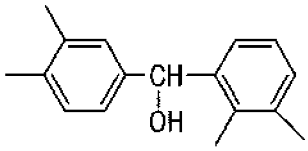, 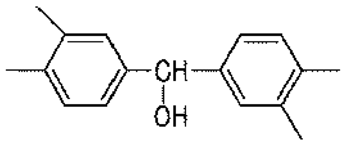,

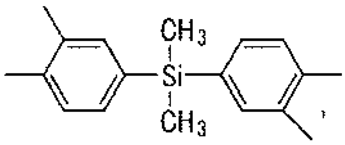, 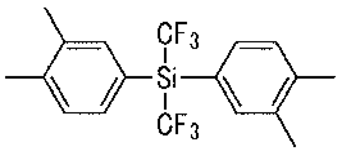, 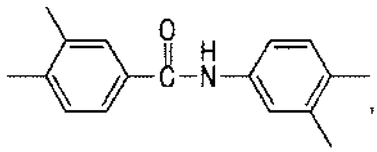,

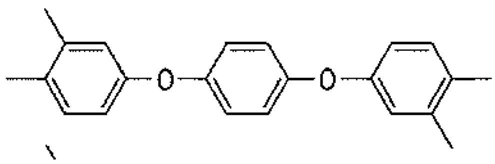, 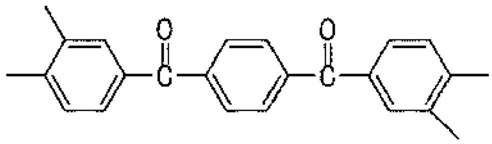,

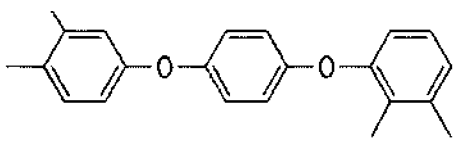, 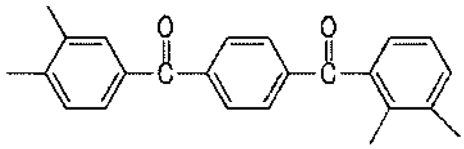,

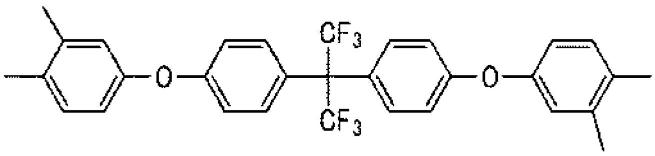, 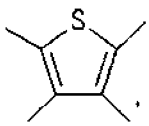, 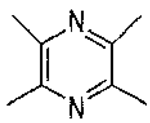,

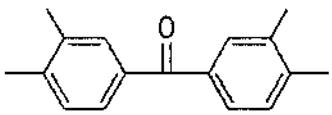, 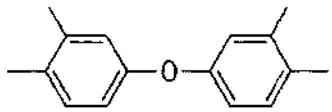

**10.** Polymère selon la revendication 1 ou 7, dans lequel $Ar_2$ est choisi parmi l'une des formules chimiques suivantes :

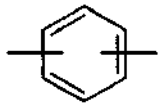 , 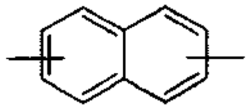 , 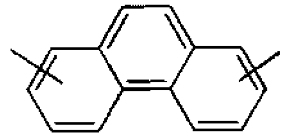 ,

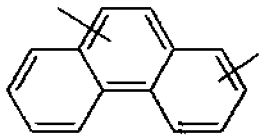 , 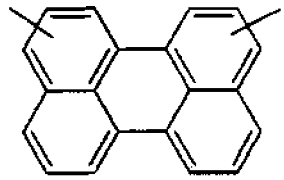 , 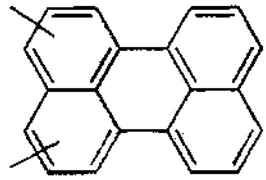 ,

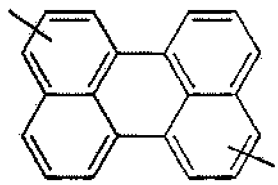 , 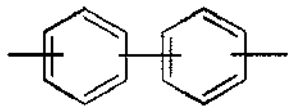

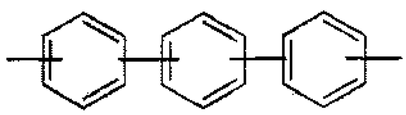 , 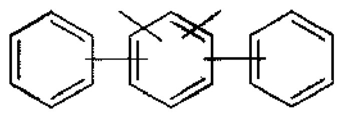 ,

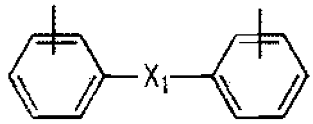 , 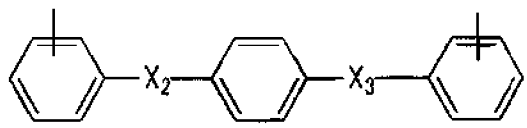 ,

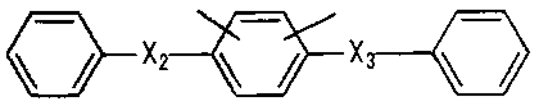 ,

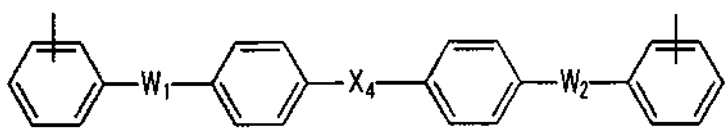 , 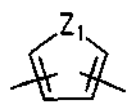 ,

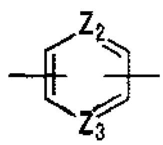

dans lequel, dans les formules chimiques ci-dessus,

$X_1$, $X_2$, $X_3$ et $X_4$ sont identiques ou différents et sont indépendamment O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,
$W_1$ et $W_2$ sont identiques ou différents et sont indépendamment O, S ou C(=O),
$Z_1$ est O, S, $CR_1R_2$ ou $NR_3$, où $R_1$, $R_2$ et $R_3$ sont identiques ou différents et sont indépendamment hydrogène ou un groupe alkyle en C1 à C5, et
$Z_2$ et $Z_3$ sont identiques ou différents et sont indépendamment N ou $CR_4$, où $R_4$ est hydrogène ou un groupe

alkyle en C1 à C5, à condition que $Z_2$ et $Z_3$ ne soient pas tous deux $CR_4$.

**11.** Polymère selon la revendication 10, dans lequel $Ar_2$ est choisi parmi l'une des formules chimiques suivantes :

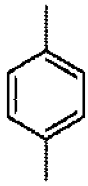 , 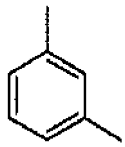 , 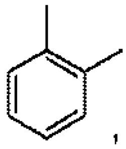 , 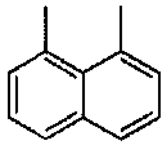 , 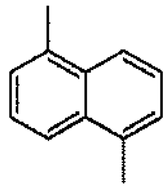 ,

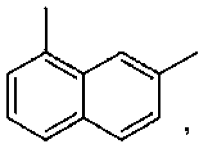 , 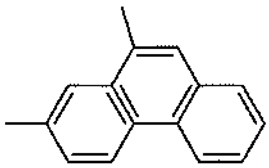 , 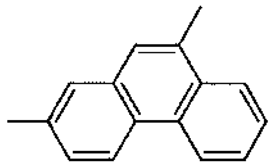 ,

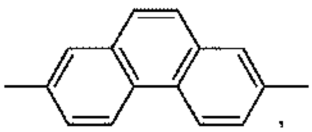 , 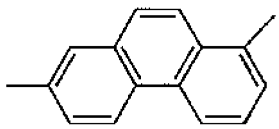 , 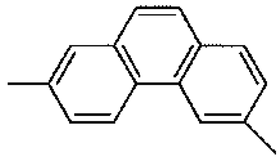 ,

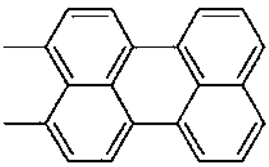 , 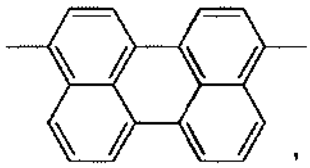 , 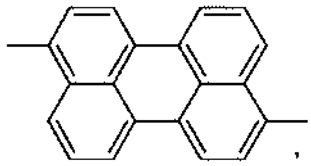 ,

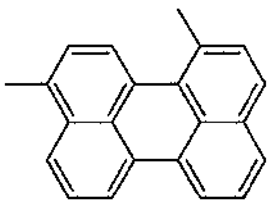 , 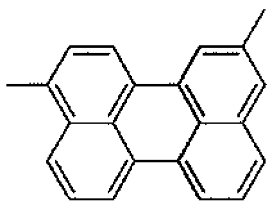 , 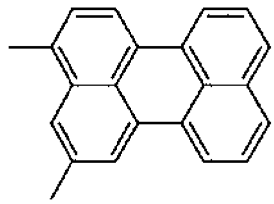 ,

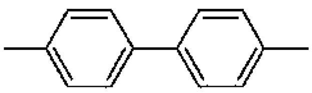 , 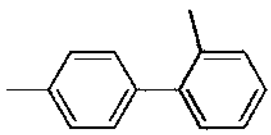 , 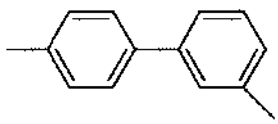

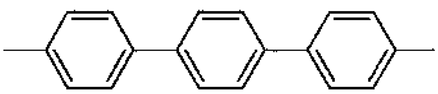 , 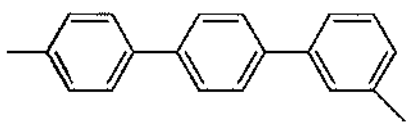 ,

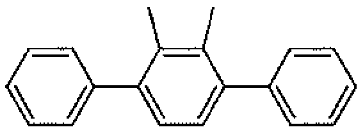 , 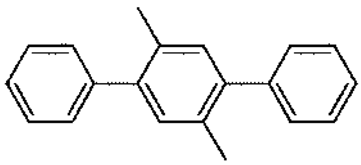 ,

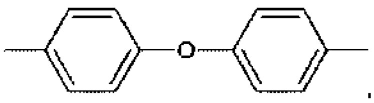 , 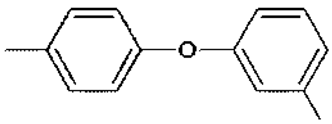 , 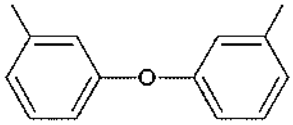 ,

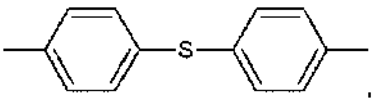 , 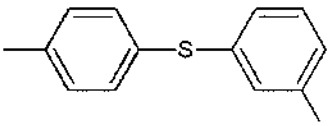 , 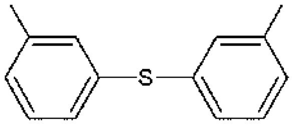 ,

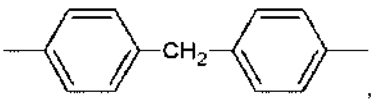 , 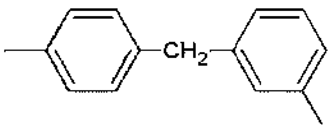 , 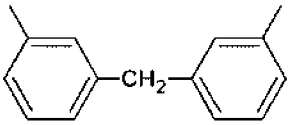 ,

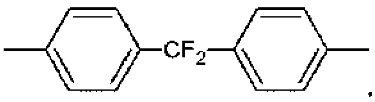 , 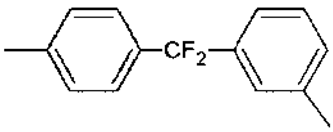 , 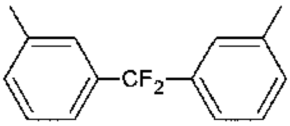 ,

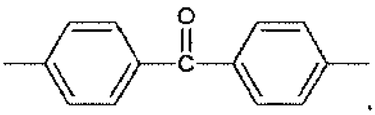 , 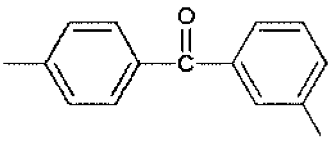 , 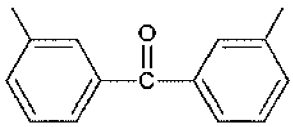 ,

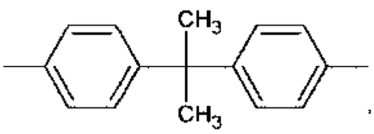 , 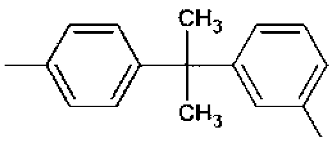 , 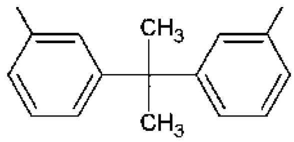 ,

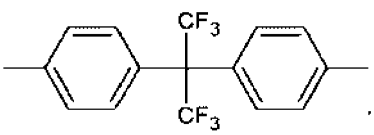 , 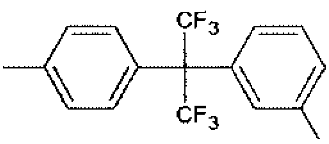 , 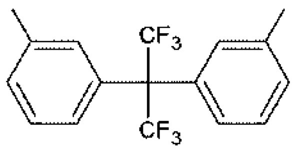 ,

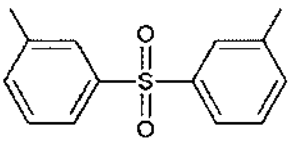 , 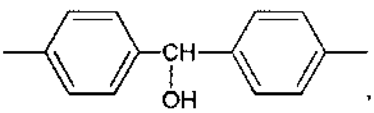 , 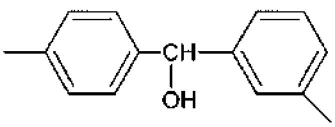 ,

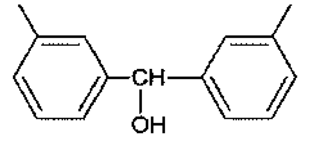, 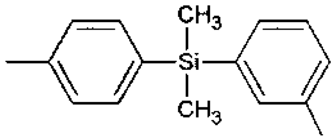, 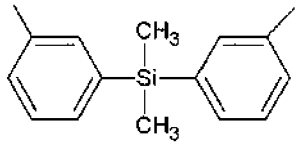,

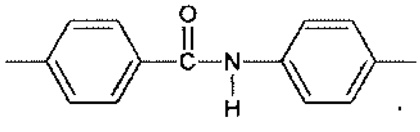, 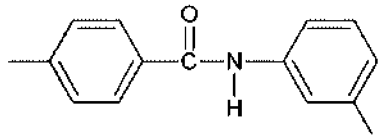,

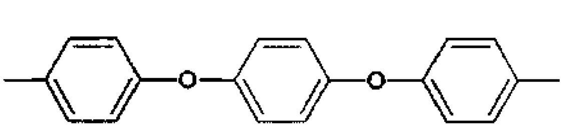, 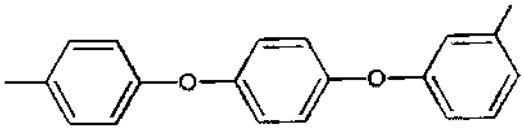,

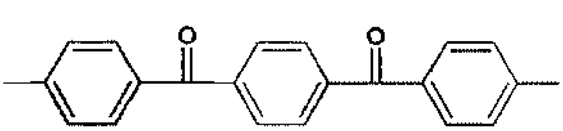, 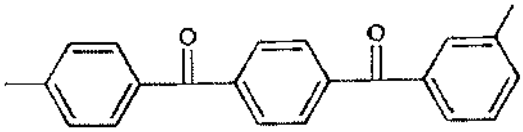,

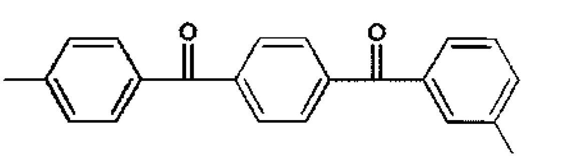, 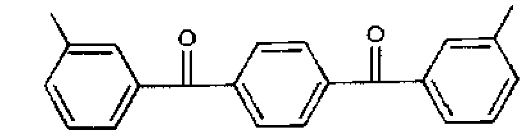,

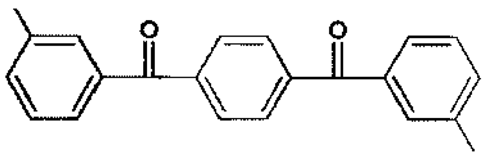, 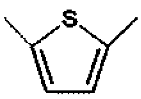, 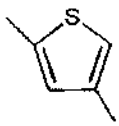, 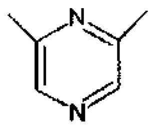,

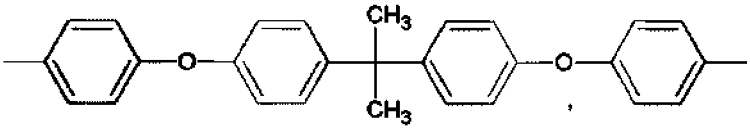, 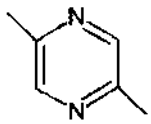.

**12.** Polymère selon la revendication 1 ou 7, dans lequel Q est choisi parmi $C(CH_3)_2$, $C(CF_3)_2$, O, S, $S(=O)_2$ ou C(=O).

**13.** Polymère selon la revendication 1 ou 7, dans lequel $Ar_1$ est un groupe fonctionnel représenté par la formule chimique A, B ou C suivante, $Ar_2$ est un groupe fonctionnel représenté par la formule chimique Formula D ou E suivante, et Q peut être $C(CF_3)_2$ :

[Formule chimique A]

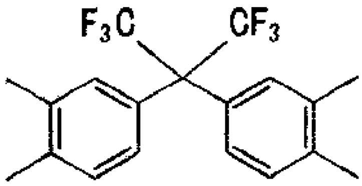

[Formule chimique B]

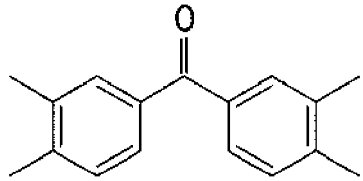

[Formule chimique C]

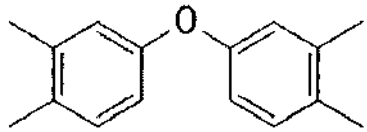

[Formule chimique D]

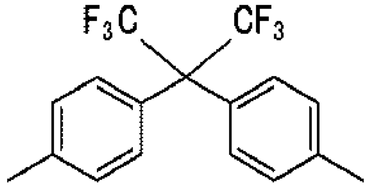

[Formule chimique E]

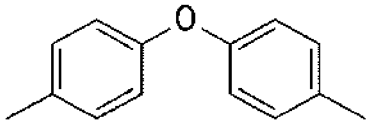

**14.** Polymère selon la revendication 7, dans lequel le rapport molaire m:l dans les formules chimiques 5 à 8 est dans la plage de 0,1:9,9 à 9,9:0,1.

**15.** Polymère selon la revendication 1, dans lequel le rapport molaire m:l dans les formules chimiques 37 à 40 est dans la plage de 0,1:9,9 à 9,9:0,1.

**16.** Polymère selon la revendication 1, le polymère dérivé d'un polyimide comprenant des composés comprenant un motif répétitif représenté par l'une des formules chimiques 26 à 32 suivantes ou des copolymères de ceux-ci :

[Formule chimique 26]

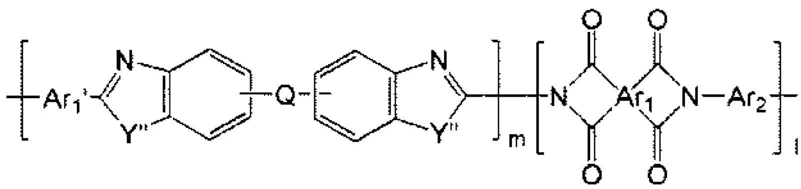

[Formule chimique 27]

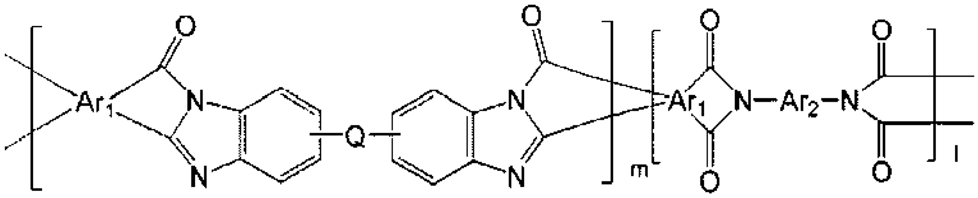

[Formule chimique 28]

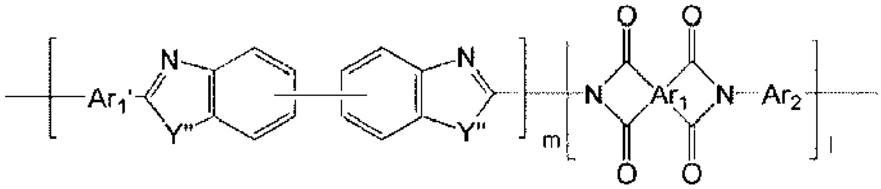

[Formule chimique 29]

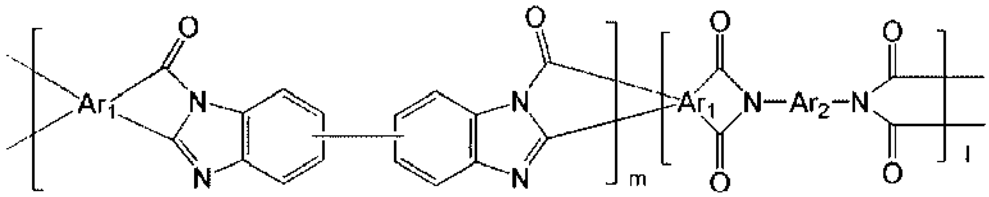

[Formule chimique 30]

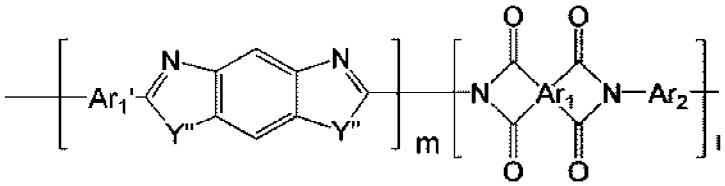

[Formule chimique 31]

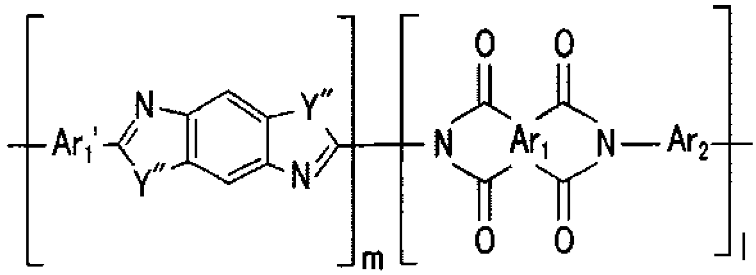

[Formule chimique 32]

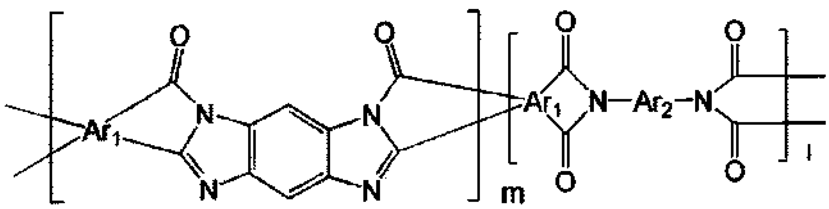

dans lequel, dans les formules chimiques 26 à 32 ci-dessus,

$Ar_1$ est un groupe aromatique choisi parmi un groupe arylène en C6 à C24 tétravalent substitué ou non substitué

et un groupe hétérocyclique en C4 à C24 tétravalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,

$Ar_1$' est identique ou différent et est indépendamment un groupe arylène en C6 à C24 divalent substitué ou non substitué et un groupe hétérocyclique en C4 à C24 divalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,

$Ar_2$ est identique ou différent et est indépendamment un groupe arylène en C6 à C24 divalent substitué ou non substitué et un groupe hétérocyclique en C4 à C24 divalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,

dans lequel le terme "substitué" signifie substitué par au moins un substituant choisi dans le groupe constitué d'un groupe alkyle en C1 à C10, un groupe alcoxy en C1 à C10, un groupe halogénoalkyle en C1 à C10, et un groupe halogénoalcoxy en C1 à C10,

Q est O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$, C(=O)NH, $C(CH_3)(CF_3)$, ou un groupe phénylène substitué ou

non substitué, où le groupe phénylène substitué est un groupe phénylène substitué par un groupe alkyle en C1 à C6 ou un groupe halogénoalkyle en C1 à C6, où Q est lié à des groupes aromatiques avec des positions m-m, m-p,

p-m ou p-p,

Y" est O ou S,

m est un entier dans la plage de 10 à 400, et

1 est un entier dans la plage de 10 à 400.

**17.** Polymère selon la revendication 16, dans lequel $Ar_1$ est choisi parmi l'une des formules chimiques suivantes :

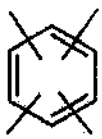 . 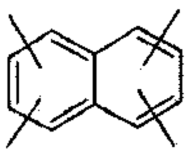 , 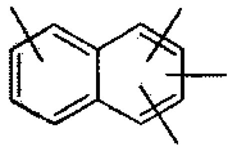 , 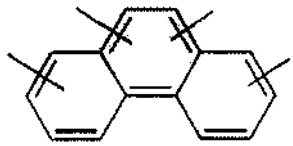 ,

,

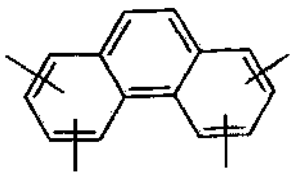 , 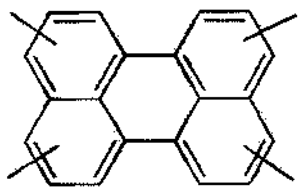 , 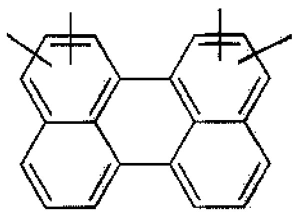 ,

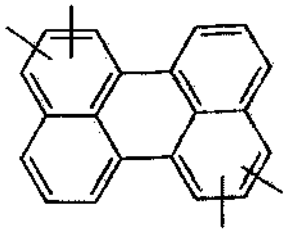 , 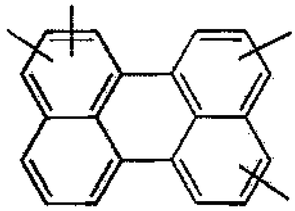 , 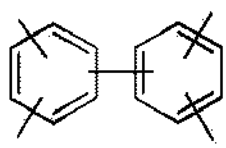 ,

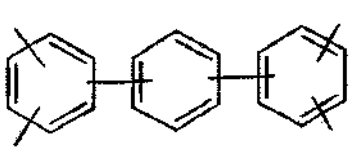 , 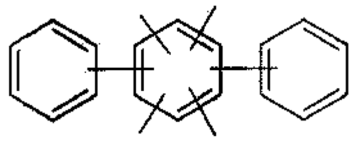 ,

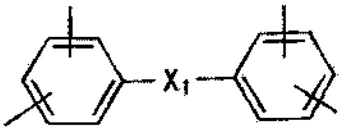 , 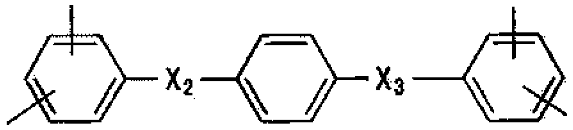 ,

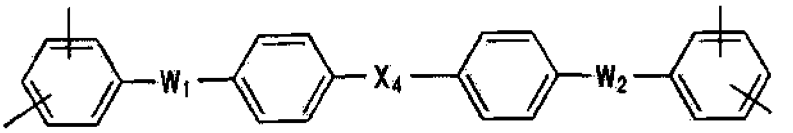 , 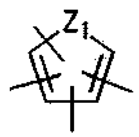 ,

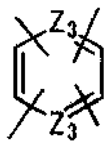

dans lequel, dans les formules chimiques ci-dessus,

$X_1$, $X_2$, $X_3$ et $X_4$ sont identiques ou différents et sont indépendamment O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,
$W_1$ et $W_2$ sont identiques ou différents et sont indépendamment O, S ou C(=O),
$Z_1$ est O, S, $CR_1R_2$ ou $NR_3$, où $R_1$, $R_2$ et $R_3$ sont identiques ou différents et sont indépendamment hydrogène ou un groupe alkyle en C1 à C5, et
les $Z_3$ sont identiques ou différents et sont indépendamment N ou $CR_4$, où $R_4$ est hydrogène ou un groupe alkyle en C1 à C5, à condition que les $Z_3$ ne soient pas tous deux $CR_4$.

**18.** Polymère selon la revendication 17, dans lequel $Ar_1$ est choisi parmi l'une des formules chimiques suivantes :

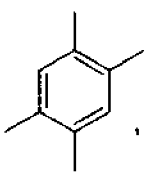 , 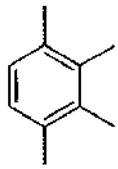 , 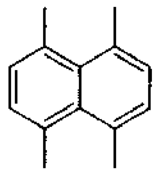 , 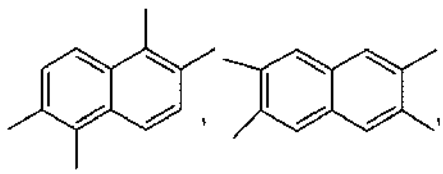 ,

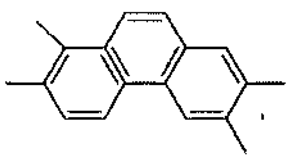 , 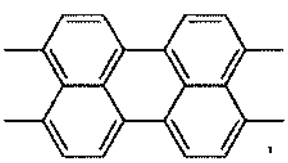 , 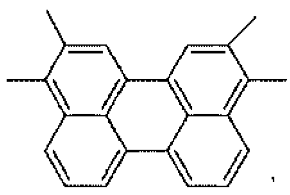 ,

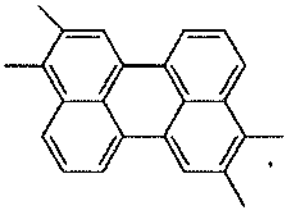, 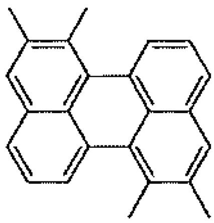, 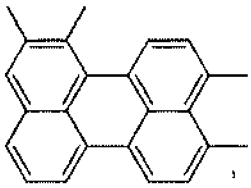,

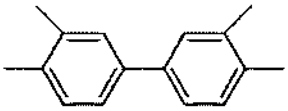, 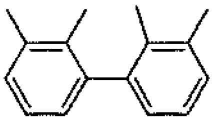, 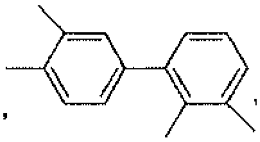,

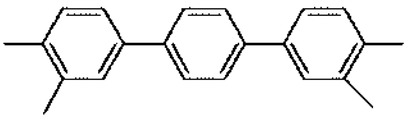, 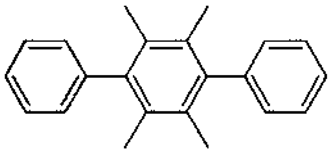,

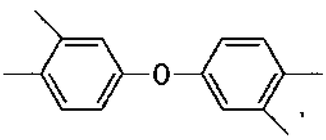, 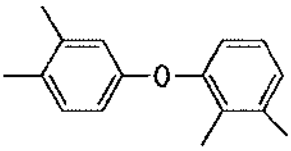, 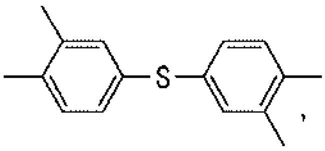,

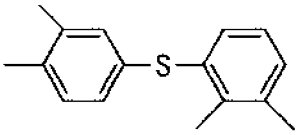, 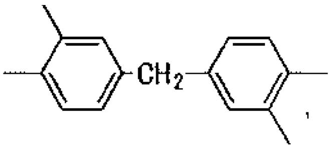, 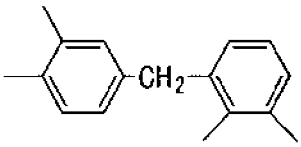,

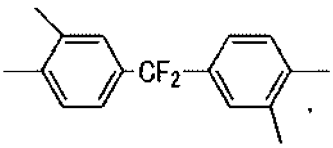, 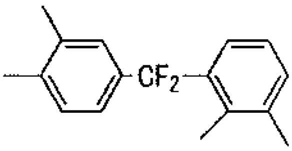, 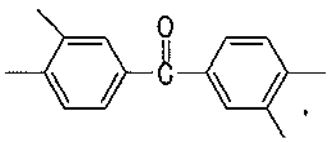,

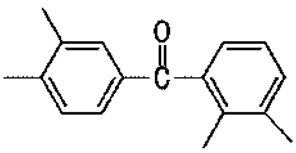, 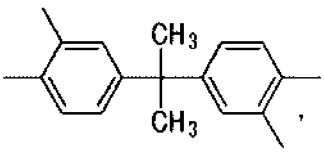, 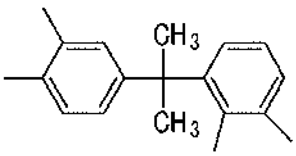,

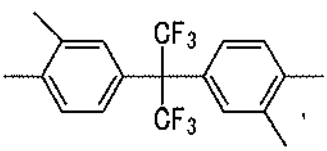, 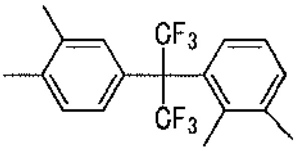, 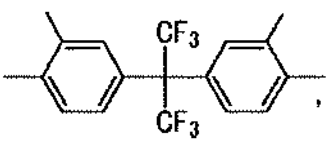,

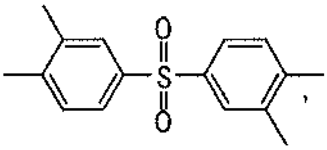, 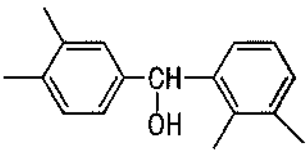, 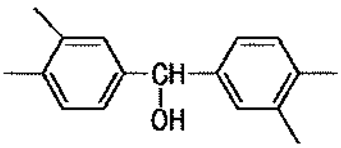

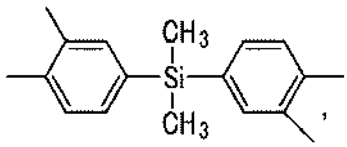 , 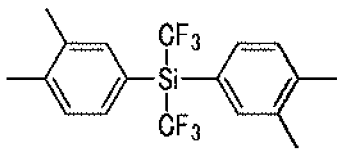 , 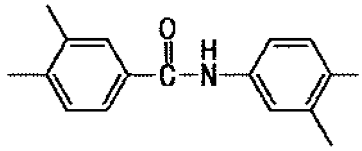

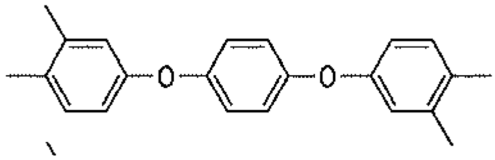 , 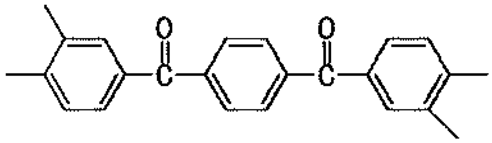 ,

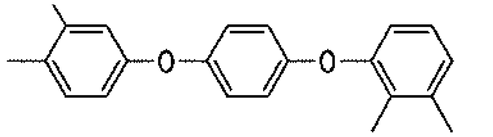 , 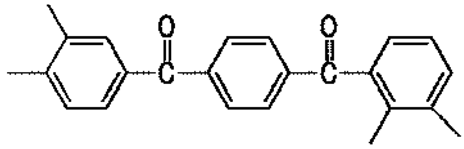

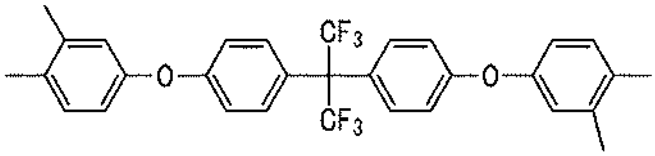 , 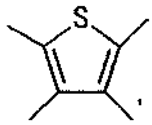 , 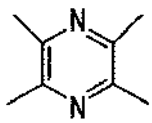 ,

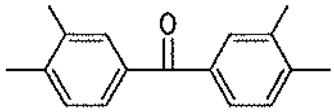 , 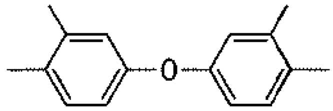

**19.** Polymère selon la revendication 16, dans lequel $Ar_1$' et $Ar_2$ sont choisis parmi l'une des formules chimiques suivantes :

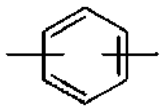 , 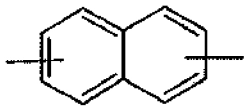 , 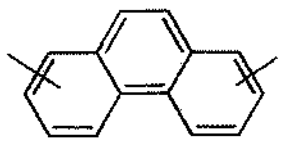 ,

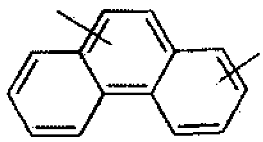 , 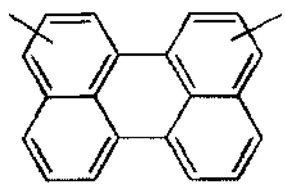 , 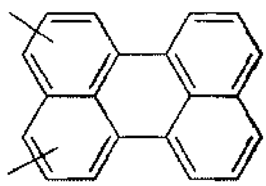 ,

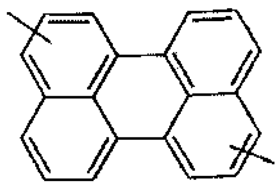 , 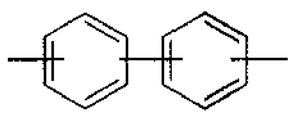

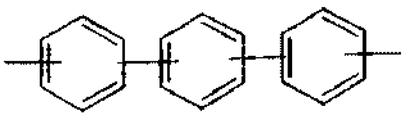 , 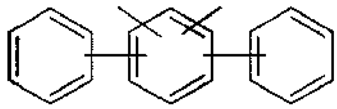 ,

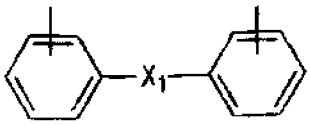 , 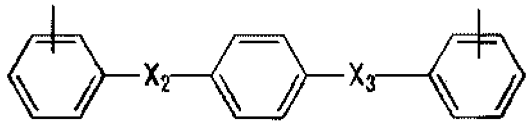 ,

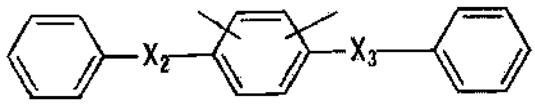 ,

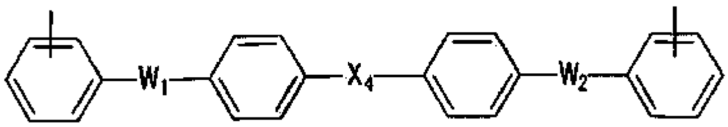 , 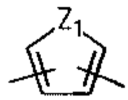

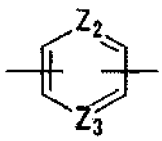

dans lequel, dans les formules chimiques ci-dessus,

$X_1$, $X_2$, $X_3$ et $X_4$ sont identiques ou différents et sont indépendamment O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,
$W_1$ et $W_2$ sont identiques ou différents et sont indépendamment O, S ou C(=O),
$Z_1$ est O, S, $CR_1R_2$ ou $NR_3$, où $R_1$, $R_2$ et $R_3$ sont identiques ou différents et sont indépendamment hydrogène ou un groupe alkyle en C1 à C5, et
$Z_2$ et $Z_3$ sont identiques ou différents et sont indépendamment N ou $CR_4$, où $R_4$ est hydrogène ou un groupe alkyle en C1 à C5, à condition que $Z_2$ et $Z_3$ ne soient pas tous deux $CR_4$.

**20.** Polymère selon la revendication 19, dans lequel $Ar_1$' et $Ar_2$ sont choisis parmi l'une des formules chimiques suivantes :

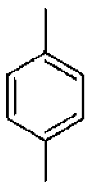 , 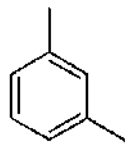 , 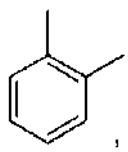 , 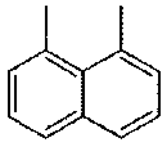 , 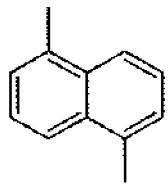 ,

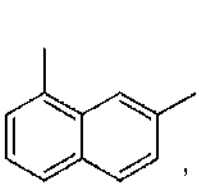 , 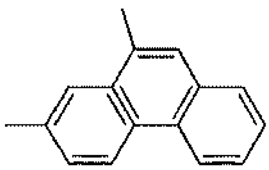 , 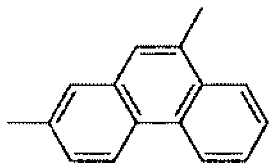 .

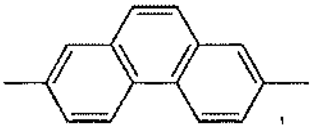, 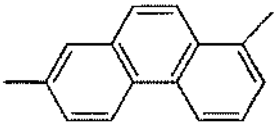, 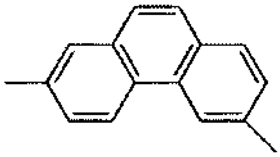,

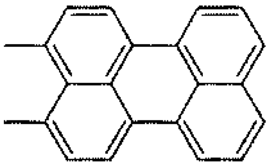, 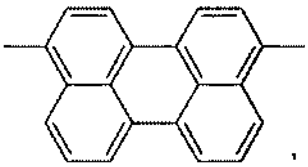, 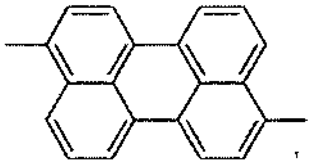,

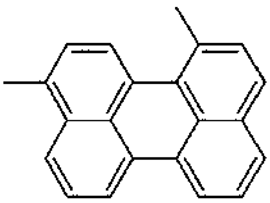, 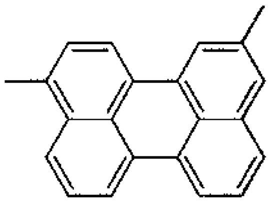, 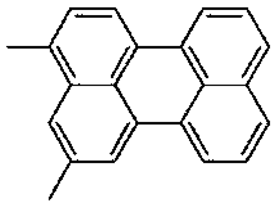,

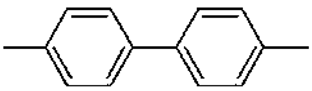, 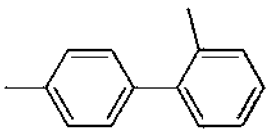, 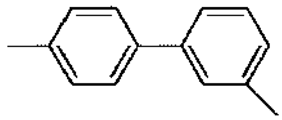

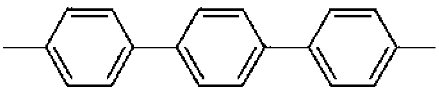, 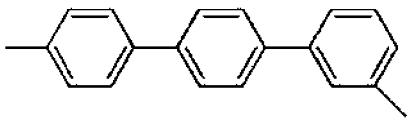,

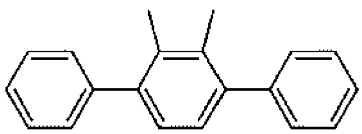, 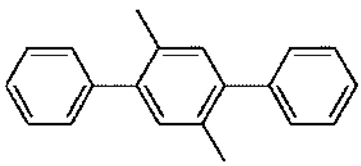,

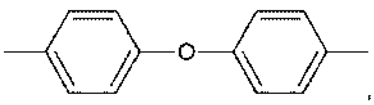, 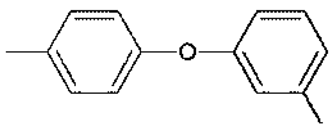, 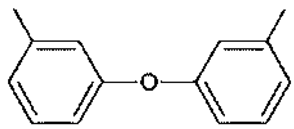,

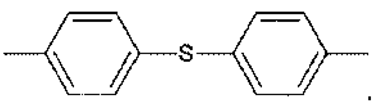, 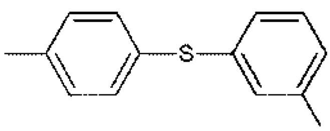, 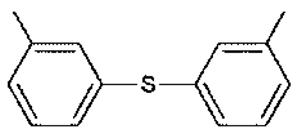,

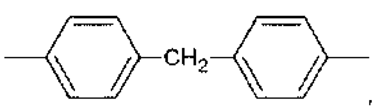, 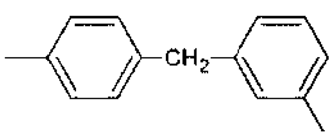, 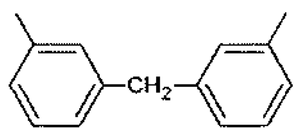,

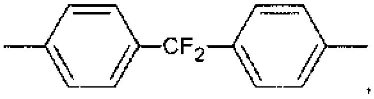 , 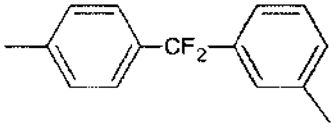 , 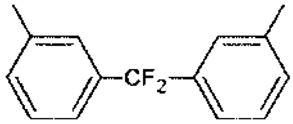 ,

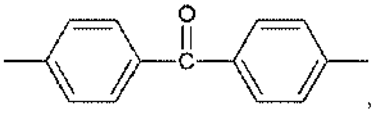 , 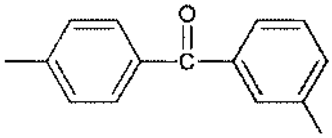 , 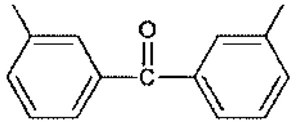 ,

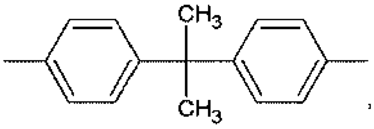 , 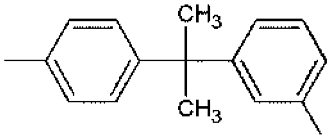 , 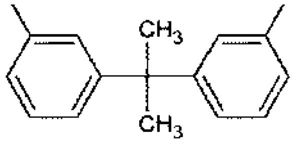 ,

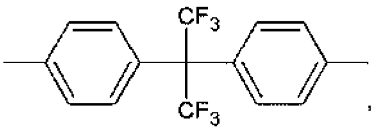 , 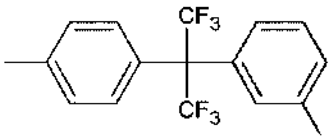 , 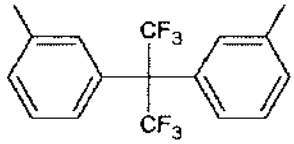 ,

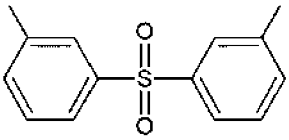 , 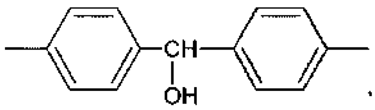 , 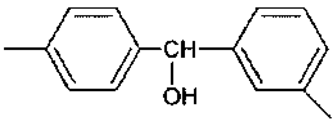 ,

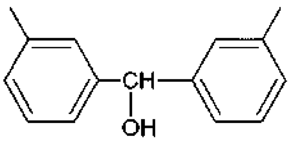 , 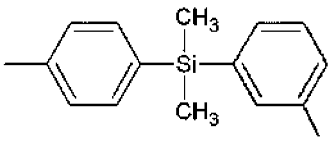 , 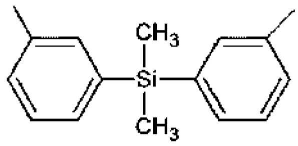 ,

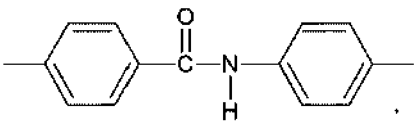 , 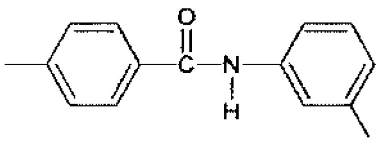 ,

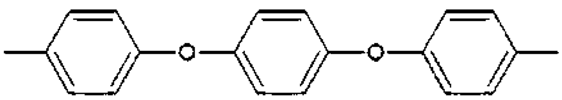 , 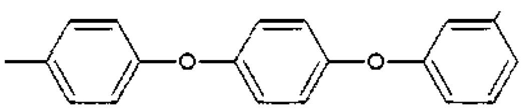 ,

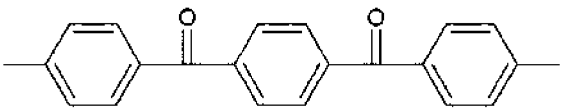 , 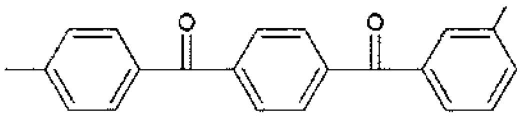 ,

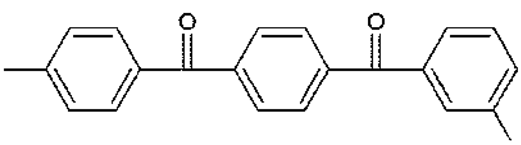 , 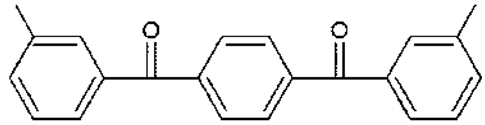 .

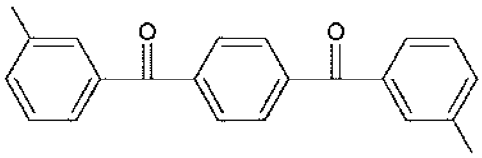 . 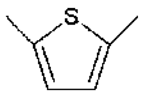 , 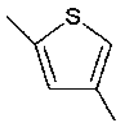 , 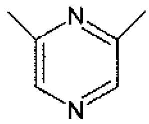 ,

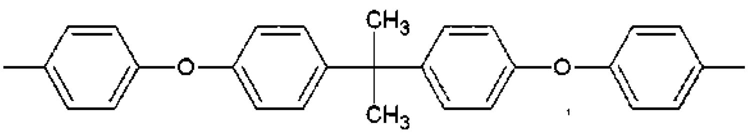 , 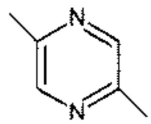 .

**21.** Polymère selon la revendication 16, dans lequel Q est choisi parmi $C(CH_3)_2$, $C(CF_3)_2$, O, S, $S(=O)_2$ ou C(=O).

**22.** Polymère selon la revendication 16, dans lequel $Ar_1$ est un groupe fonctionnel représenté par la formule chimique A, B ou C suivante, $Ar_1$' est un groupe fonctionnel représenté par la formule chimique F, G ou H suivante, $Ar_2$ est un groupe fonctionnel représenté par la formule chimique D ou E suivante, et Q est $C(CF_3)_2$ :

[Formule chimique A]

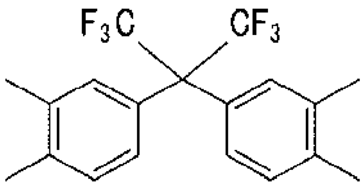

[Formule chimique B]

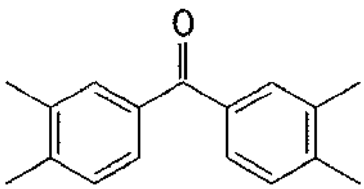

[Formule chimique C]

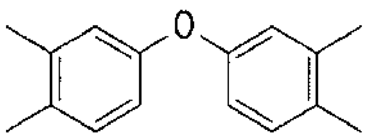

[Formule chimique D]

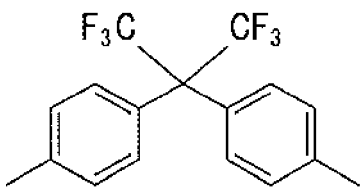

[Formule chimique E]

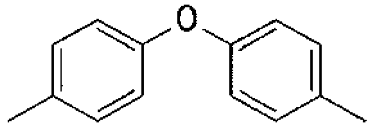

[Formule chimique F]

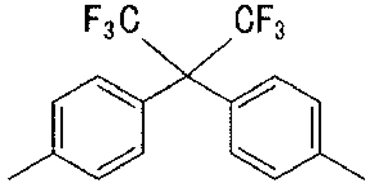

[Formule chimique G]

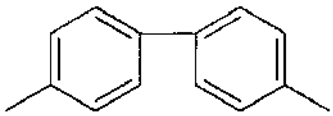

[Formule chimique H]

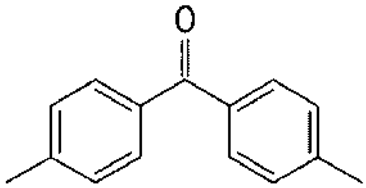

**23.** Polymère selon la revendication 1, le copolymère ayant un poids moléculaire moyen en poids (Mw) de 10 000 à 200 000.

**24.** Polymère selon la revendication 1, le polymère comprenant en outre un additif choisi dans le groupe constitué des silice pyrogénée, oxyde de zirconium, tétraethoxysilane, argile montmorillonite, et une combinaison de ceux-ci.

**25.** Polymère selon la revendication 1, le polymère comprenant en outre une charge inorganique choisie dans le groupe constitué de l'acide phosphotungstique (PWA), l'acide phosphomolybdique, l'acide silicotungstique (SiWA), l'acide molybdophosphorique, l'acide silicomolybdique, l'acide phosphotinique, le phosphate de zirconium (ZrP) et une combinaison de ceux-ci

**26.** Procédé de préparation d'un polymère, le procédé comprenant :

l'obtention d'un copolymère de polyimide par imidation d'acide polyamique ;
et le traitement thermique du copolymère de polyimide, dans lequel l'acide polyamique est choisi parmi des copolymères d'acide polyamique comprenant un motif répétitif représenté par l'une quelconque des formules chimiques 5 à 8 suivantes :

[Formule chimique 5]

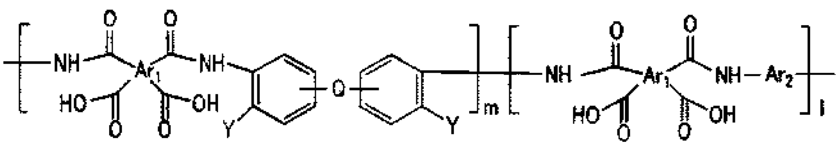

[Formule chimique 6]

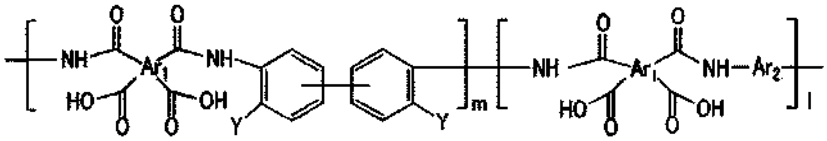

[Formule chimique 7]

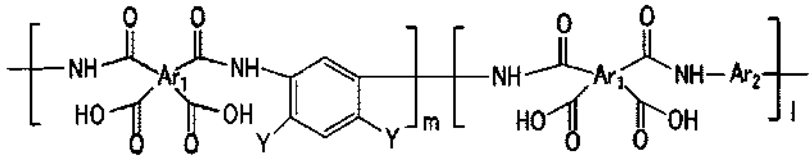

[Formule chimique 8]

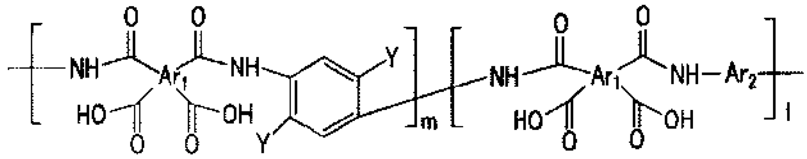

dans lequel, dans les formules chimiques ci-dessus 5 à 8,

$Ar_1$ est un groupe aromatique choisi parmi un groupe arylène en C6 à C24 tétravalent substitué ou non substitué et un groupe hétérocyclique en C4 à C24 tétravalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,
$Ar_2$ est un groupe aromatique choisi parmi un groupe arylène en C6 à C24 divalent substitué ou non substitué et un groupe hétérocyclique en C4 à C24 divalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,
dans lequel le terme "substitué" signifie substitué par au moins un substituant choisi dans le groupe constitué d'un groupe alkyle en C1 à C10, un groupe alcoxy en C1 à C10, un groupe halogénoalkyle en C1 à C10, et un groupe halogénoalcoxy en C1 à C10,
Q est O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$, C(=O)NH, $C(CH_3)(CF_3)$, ou un groupe phénylène substitué ou non substitué, où le groupe phénylène substitué est un groupe phénylène substitué par un groupe alkyle en C1 à C6 ou un groupe halogénoalkyle en C1 à C6, où Q est lié à des groupes aromatiques avec des positions m-m, m-p, p-m ou p-p,
Y est identique ou différent dans chaque motif répétitif et est indépendamment choisi parmi OH, SH, et $NH_2$,
m est un entier dans la plage de 10 à 400,
1 est un entier dans la plage de 10 à 400,
le polymère comprend des picopores, lesdits picopores ayant un diamètre moyen de 100 pm à 1000 pm, mesuré par spectroscopie temporelle d'annihilation de positrons (PALS), et
le procédé comprenant en outre le dopage du polymère avec un dopant acide, et le dopant acide comprenant l'un choisi dans le groupe constitué de l'acide sulfurique, l'acide chlorhydrique, l'acide phosphorique, l'acide nitrique, $HBrO_3$, $HClO_4$, $HPF_6$, $HBF_6$, des cations 1-méthyl-3-méthylimidazolium cations ($BMIM^+$), et une combinaison de ceux-ci.

**27.** Procédé de préparation selon la revendication 26, dans lequel le traitement thermique est effectué en augmentant la température de 1 °C/min à 30 °C/min jusqu'à 350 °C à 500 °C, puis en maintenant la température pendant 1 minute à 12 heures sous atmosphère inerte.

**28.** The procédé de préparation selon la revendication 27, dans lequel le traitement thermique est effectué en augmentant la température de 5 °C/min à 20 °C/min jusqu'à 350 °C à 450 °C, puis en maintenant la température pendant 1 heure à 6 heures sous atmosphère inerte.

**29.** Procédé de préparation d'un polymère, le procédé comprenant
le traitement thermique d'un copolymère de polyimide, dans lequel le copolymère de polyimide comprend un motif répétitif représenté par l'une quelconque des formules chimiques 37 à 40 suivantes :

[Formule chimique 37]

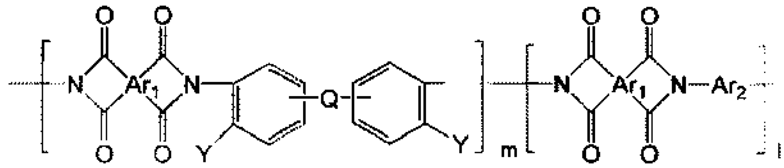

[Formule chimique 38]

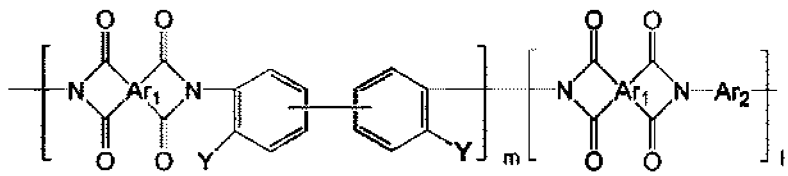

[Formule chimique 39]

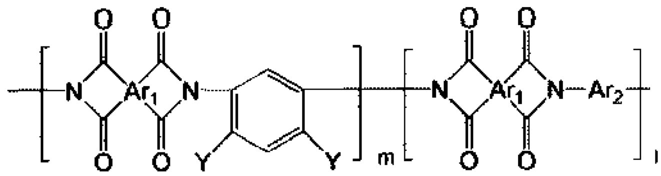

[Formule chimique 40]

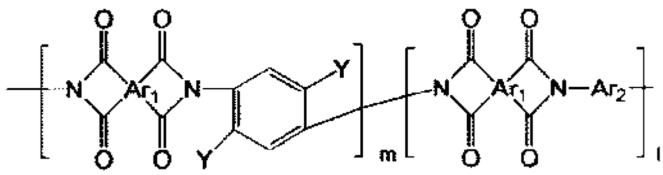

dans lequel, dans les formules chimiques ci-dessus 37 à 40,

$Ar_1$ est un groupe aromatique choisi parmi un groupe arylène en C6 à C24 tétravalent substitué ou non substitué et un groupe hétérocyclique en C4 à C24 tétravalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,
$Ar_2$ est un groupe aromatique choisi parmi un groupe arylène en C6 à C24 divalent substitué ou non substitué et un groupe hétérocyclique en C4 à C24 divalent substitué ou non substitué, où le groupe aromatique est présent une seule fois ; au moins deux groupes aromatiques sont fusionnés pour former un cycle condensé ; ou au moins deux groupes aromatiques sont liés par une simple liaison ou un groupe fonctionnel choisi parmi O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$ ou C(=O)NH,
dans lequel le terme "substitué" signifie substitué par au moins un substituant choisi dans le groupe constitué d'un groupe alkyle en C1 à C10, un groupe alcoxy en C1 à C10, un groupe halogénoalkyle en C1 à C10, et un groupe halogénoalcoxy en C1 à C10,

Q est O, S, C(=O), CH(OH), $S(=O)_2$, $Si(CH_3)_2$, $(CH_2)_p$, où $1 \leq p \leq 10$, $(CF_2)_q$, où $1 \leq q \leq 10$, $C(CH_3)_2$, $C(CF_3)_2$, C(=O)NH, $C(CH_3)(CF_3)$, ou un groupe phénylène substitué ou non substitué, où le groupe phénylène substitué est un groupe phénylène substitué par un groupe alkyle en C1 à C6 ou un groupe halogénoalkyle en C1 à C6, où Q est lié à des groupes aromatiques avec des positions m-m, m-p, p-m ou p-p,
Y est identique ou différent dans chaque motif répétitif et est indépendamment choisi parmi OH, SH ou $NH_2$,
m est un entier dans la plage de 10 à 400,
1 est un entier dans la plage de 10 à 400,
le polymère comprend des picopores, lesdits picopores ayant un diamètre moyen de 100 pm à 1000 pm, mesuré par spectroscopie temporelle d'annihilation de positrons (PALS), et
le procédé comprenant en outre le dopage du polymère avec un dopant acide, et le dopant acide comprenant l'un choisi dans le groupe constitué de l'acide sulfurique, l'acide chlorhydrique, l'acide phosphorique, l'acide nitrique, $HBrO_3$, $HClO_4$, $HPF_6$, $HBF_6$, des cations 1-méthyl-3-méthylimidazolium cations ($BMIM^+$), et une combinaison de ceux-ci.

**30.** Procédé de préparation selon la revendication 29, dans lequel le traitement thermique est effectué en augmentant la température de 1 °C/min à 30 °C/min jusqu'à 350 °C à 500 °C, puis en maintenant la température pendant 1 minute à 12 heures sous atmosphère inerte.

**31.** Procédé de préparation selon la revendication 30, dans lequel le traitement thermique est effectué en augmentant la température de 5 °C/min à 20 °C/min jusqu'à 350 °C à 450 °C, puis en maintenant la température pendant 1 heure à 6 heures sous atmosphère inerte.

**32.** Polymère selon la revendication 1, dans lequel les picopores forment une structure de réseau tridimensionnel où au moins deux picopores sont reliés de façon tridimensionnelle de façon à avoir une structure en forme de sablier formant une vallée étroite au niveau des parties de raccordement.

FIG.1

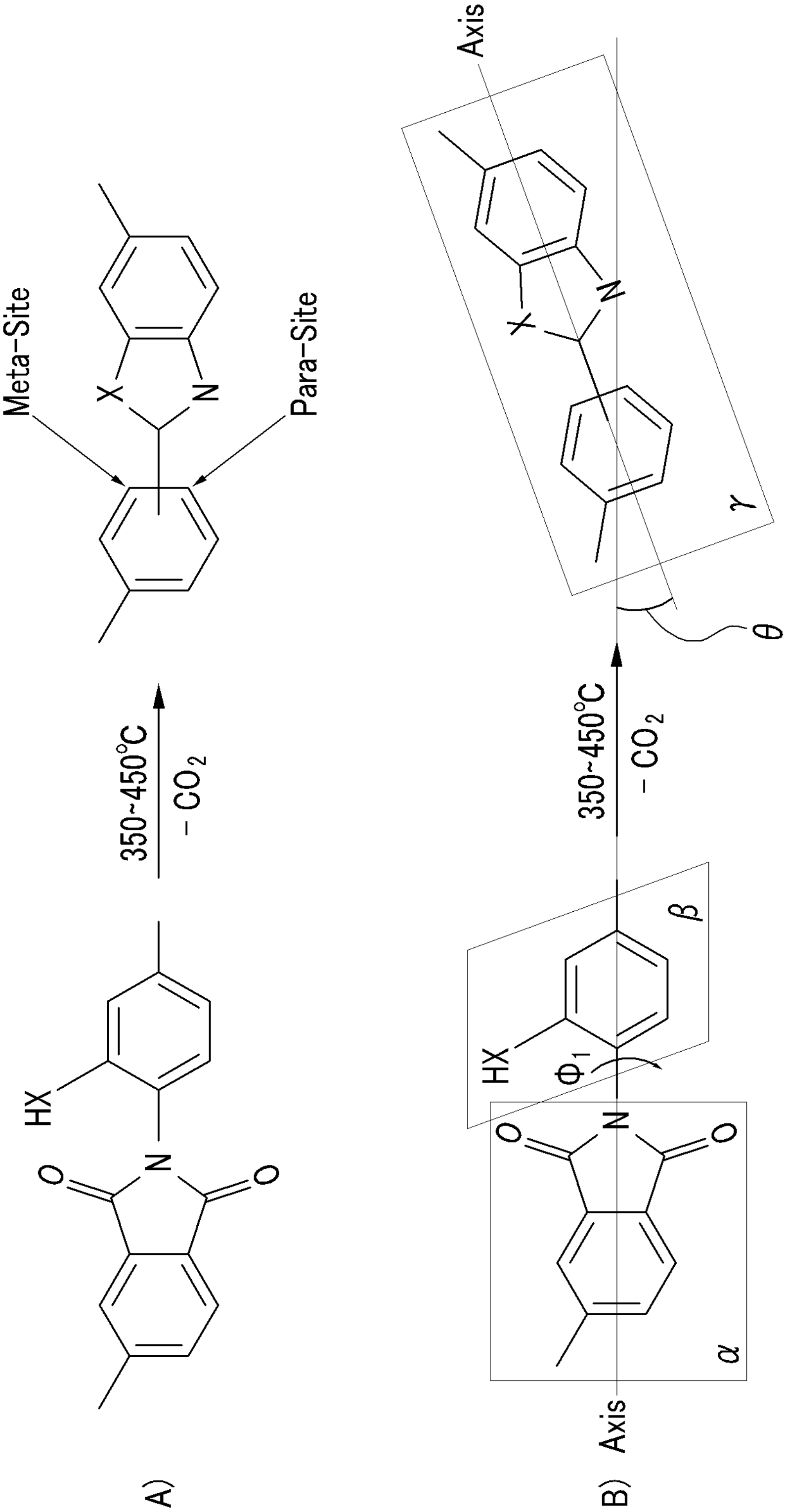

FIG.2

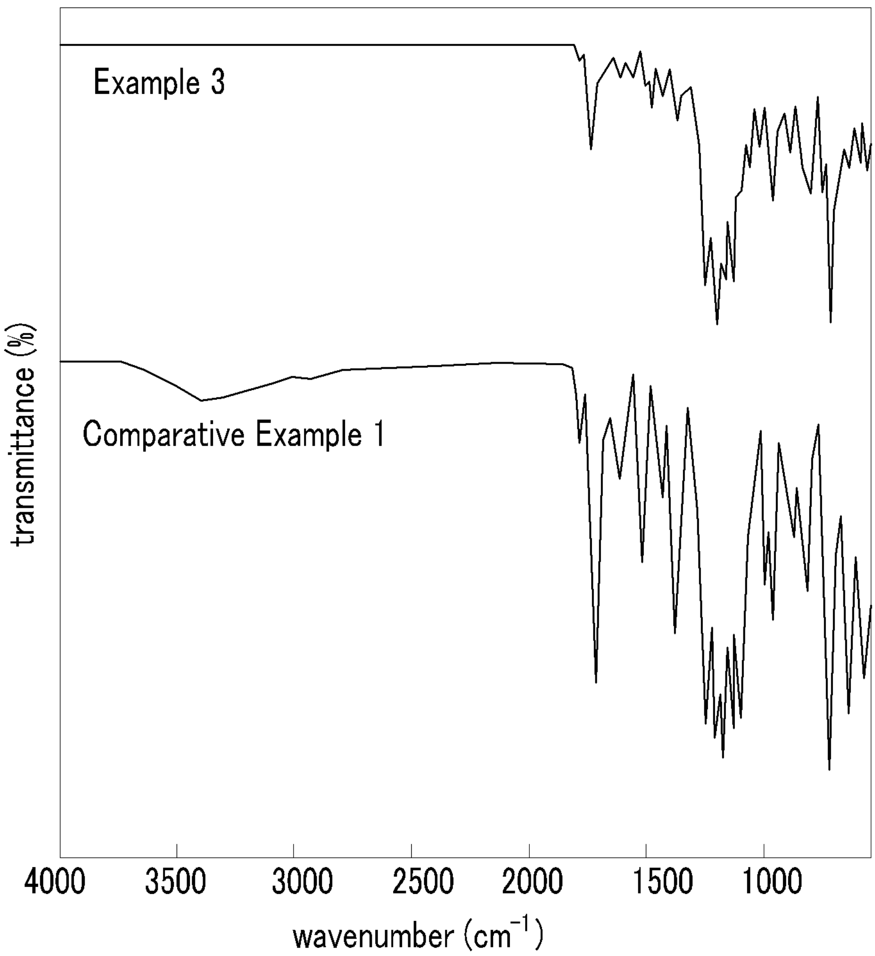
Example 3
Comparative Example 1
transmittance (%)
4000
3500
3000
2500
2000
1500
1000
wavenumber (cm$^{-1}$)

FIG.3

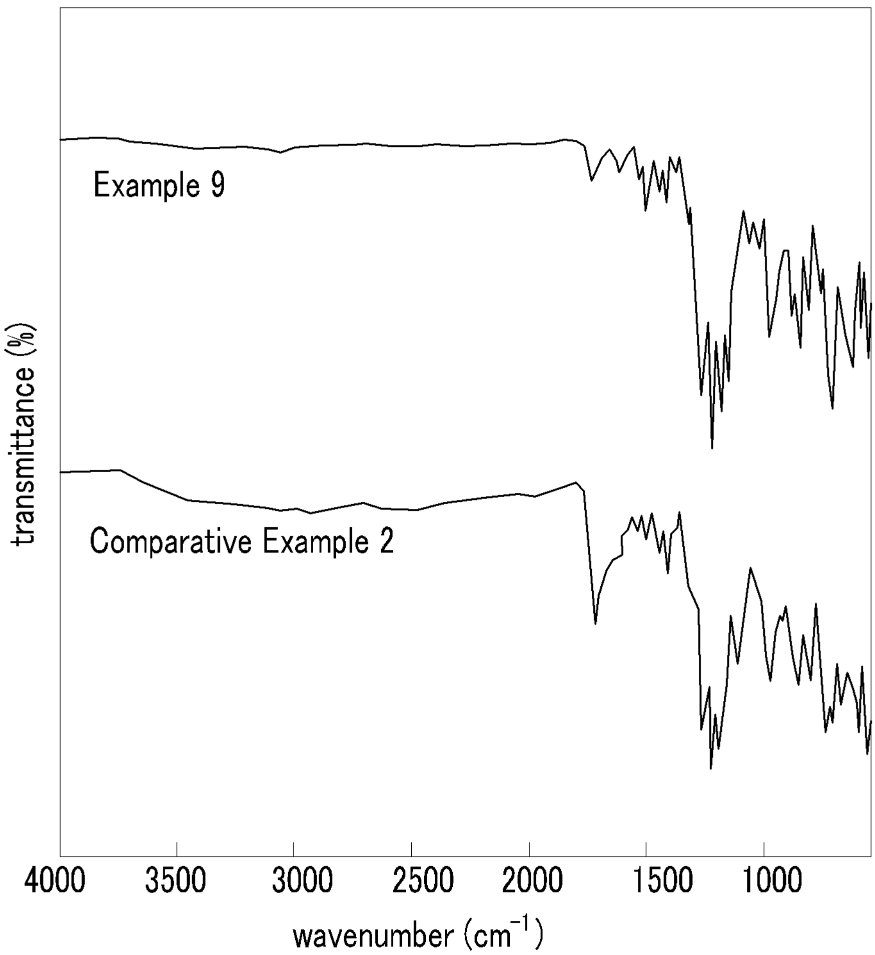
Example 9
Comparative Example 2
transmittance (%)
4000
3500
3000
2500
2000
1500
1000
wavenumber (cm$^{-1}$)

FIG.4

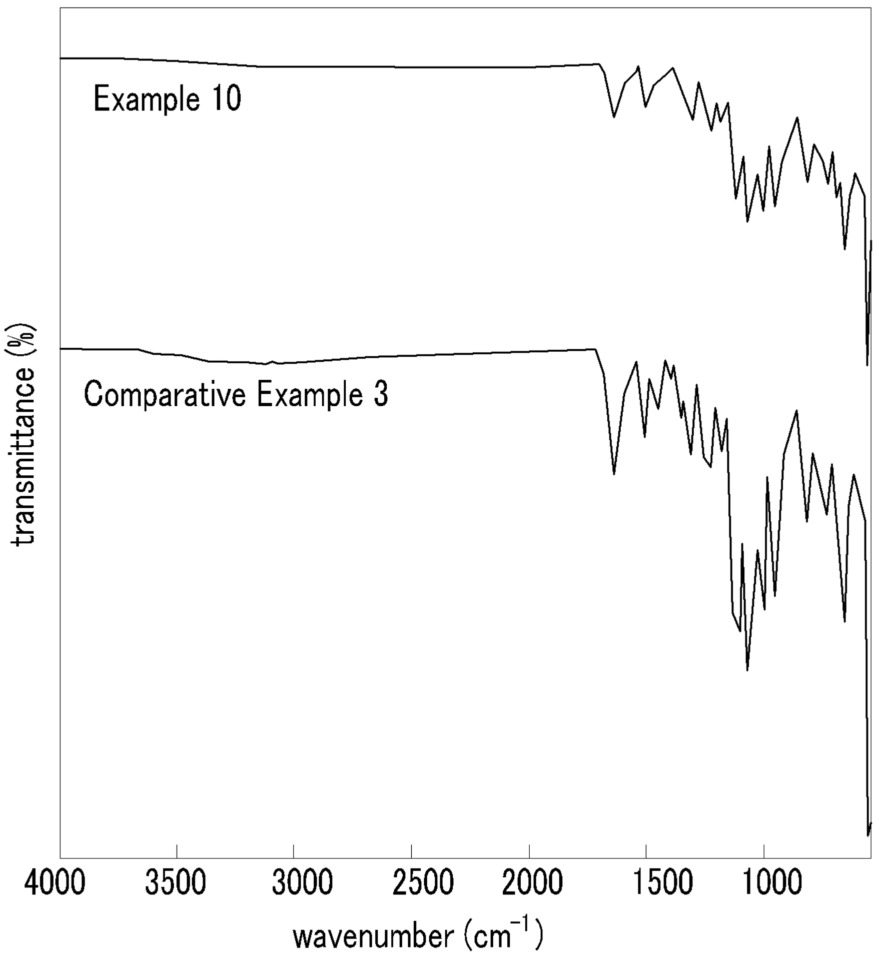
Example 10
Comparative Example 3
transmittance (%)
4000
3500
3000
2500
2000
1500
1000
wavenumber (cm$^{-1}$)

FIG.5

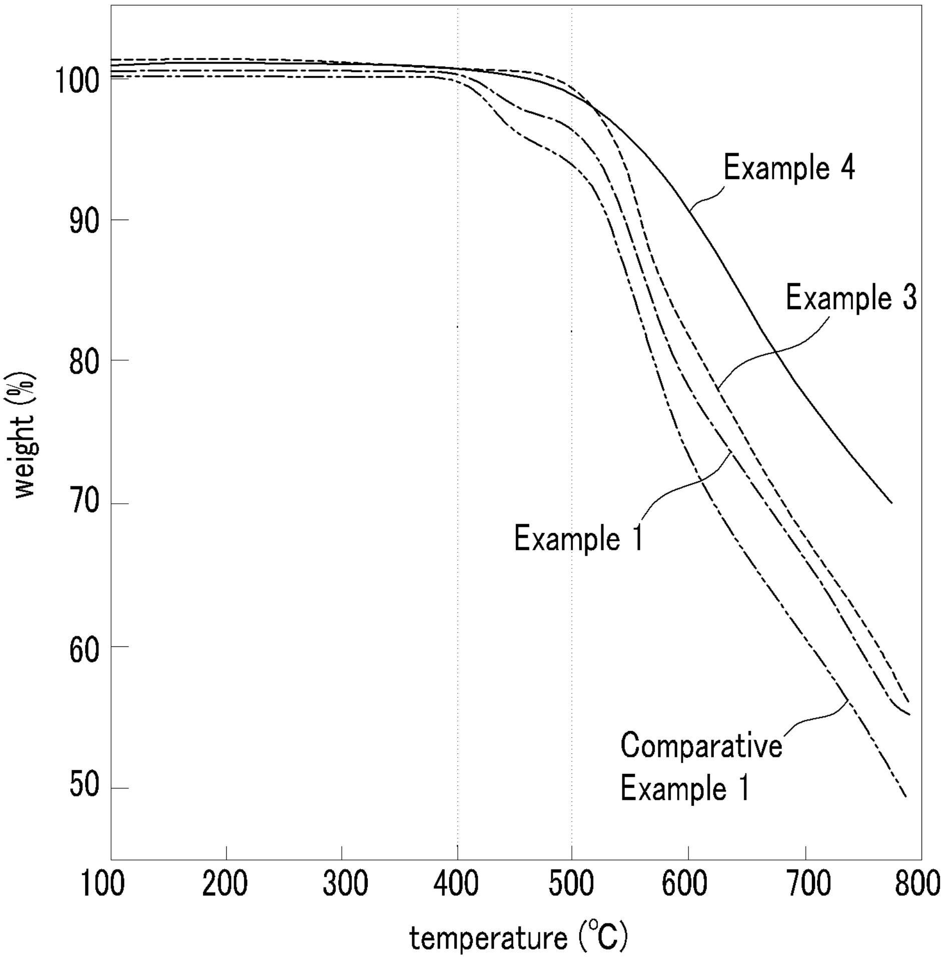
100
90
80
70
60
50
weight (%)
100
200
300
400
500
600
700
800
temperature (°C)
Example 4
Example 3
Example 1
Comparative
Example 1

FIG.6

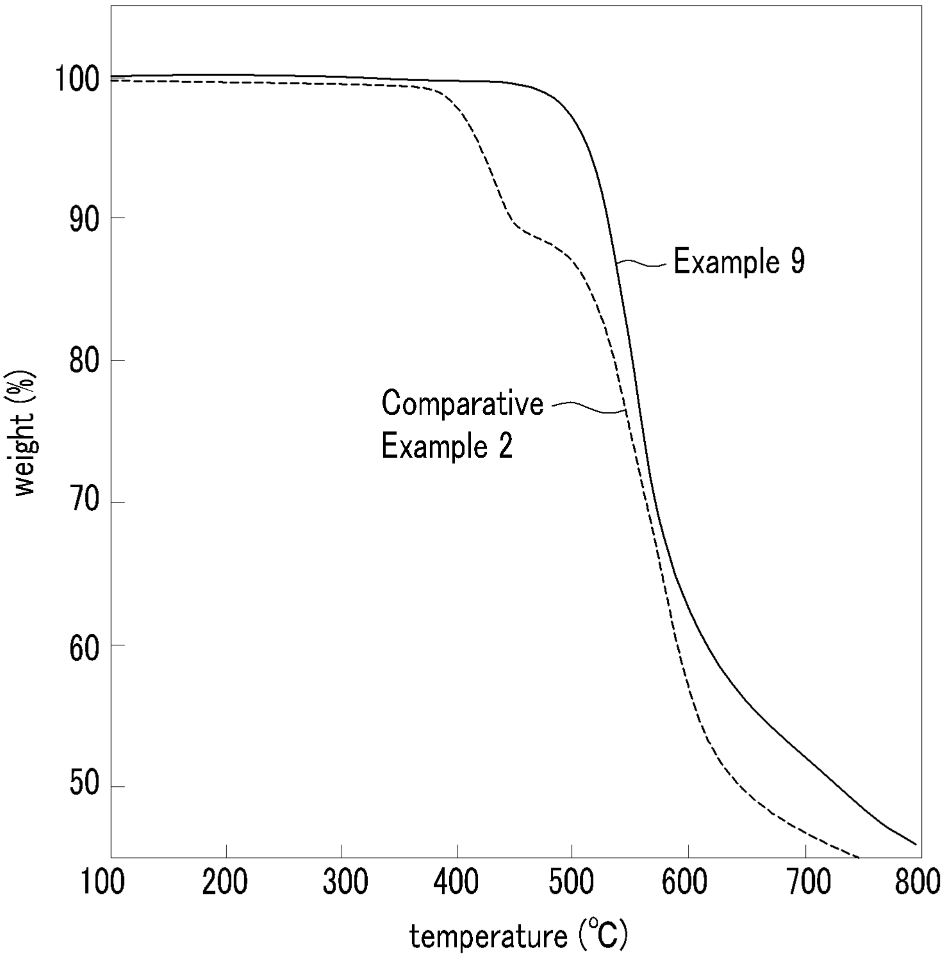
100
90
80
70
60
50
weight (%)
Example 9
Comparative
Example 2
100
200
300
400
500
600
700
800
temperature (℃)

FIG.7

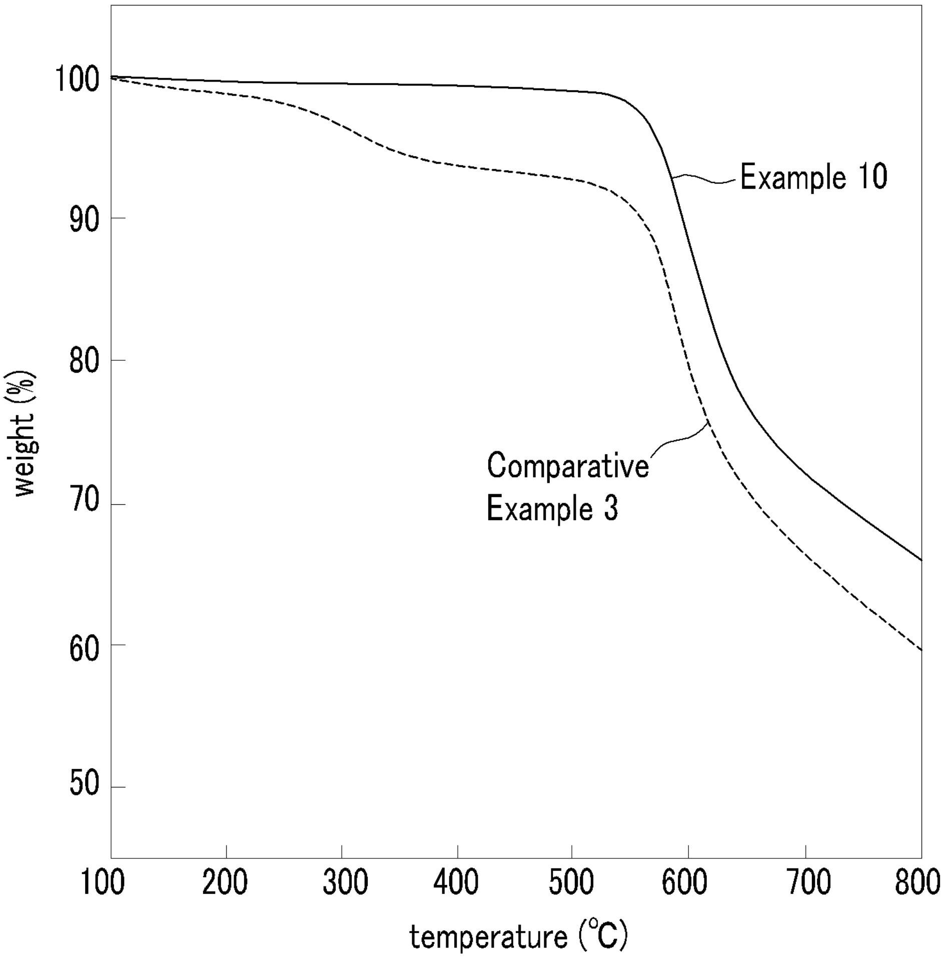
100
90
80
70
60
50
weight (%)
100
200
300
400
500
600
700
800
temperature (°C)
Example 10
Comparative
Example 3

FIG.8

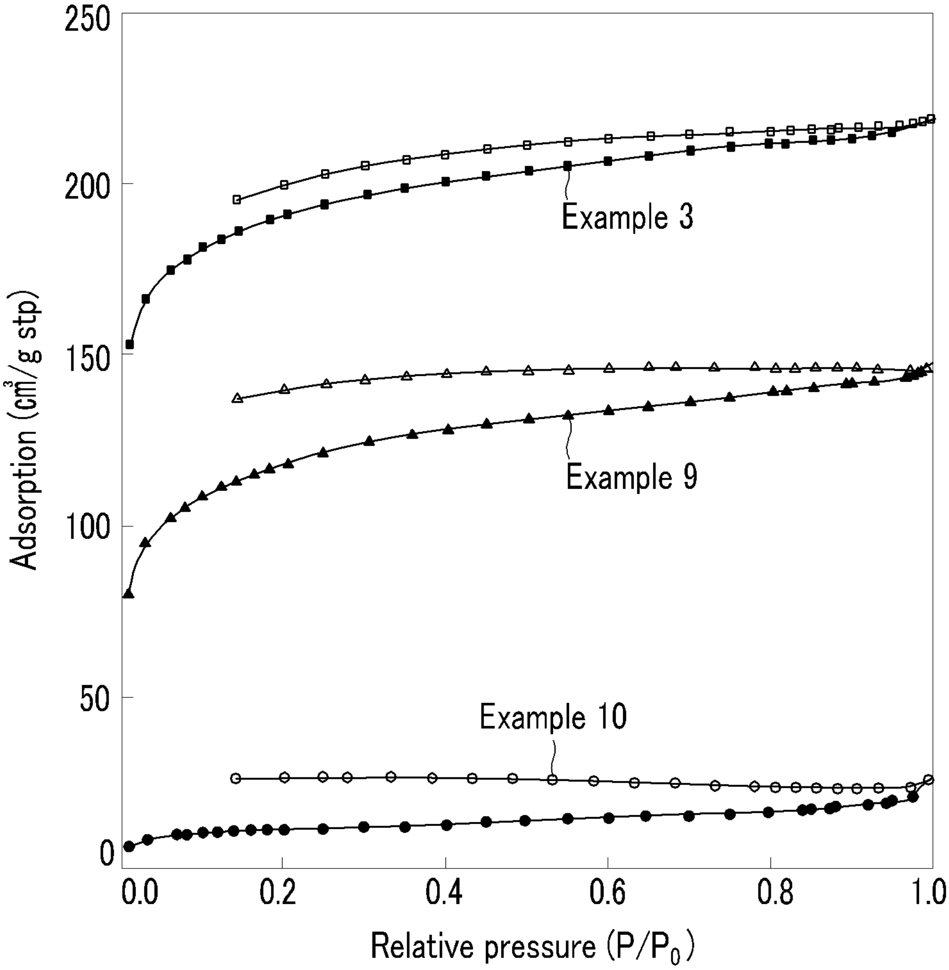
250
200
150
100
50
0
Adsorption (cm³/g stp)
0.0
0.2
0.4
0.6
0.8
1.0
Relative pressure (P/P0)
Example 3
Example 9
Example 10

FIG.9

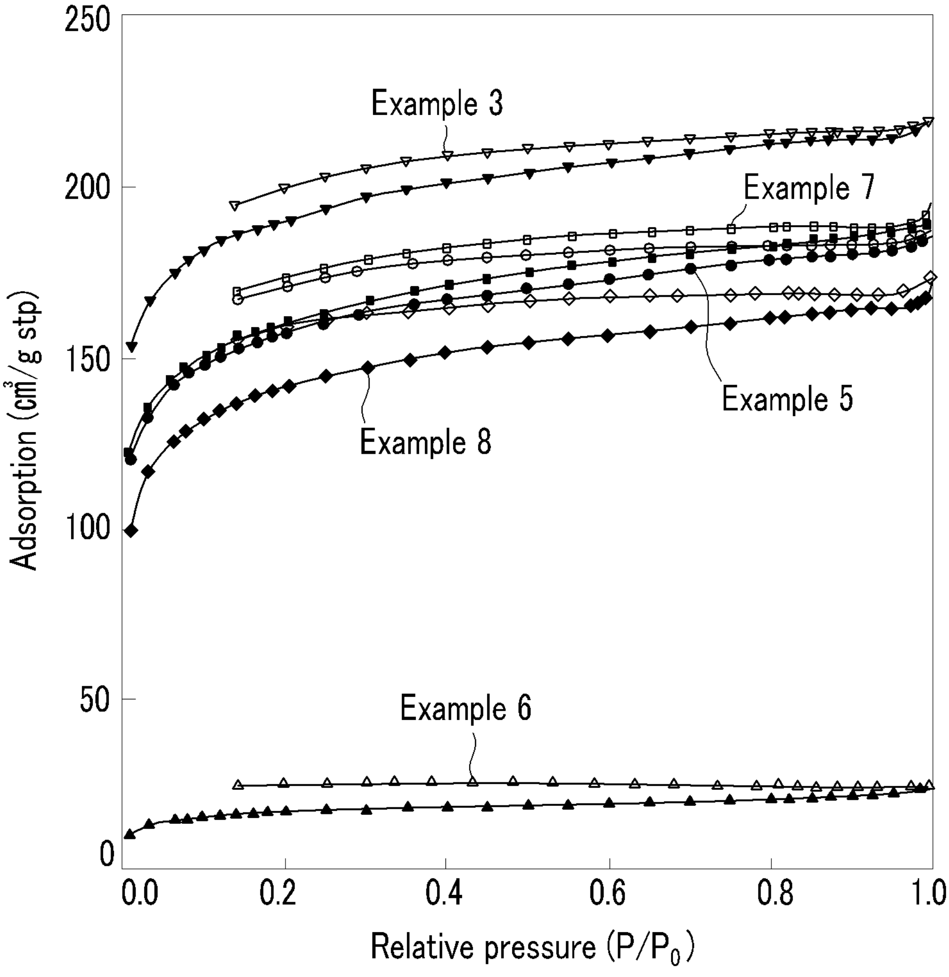
250
200
150
100
50
0
Adsorption (㎤/g stp)
0.0
0.2
0.4
0.6
0.8
1.0
Relative pressure ($P/P_0$)
Example 3
Example 7
Example 5
Example 8
Example 6

FIG.10

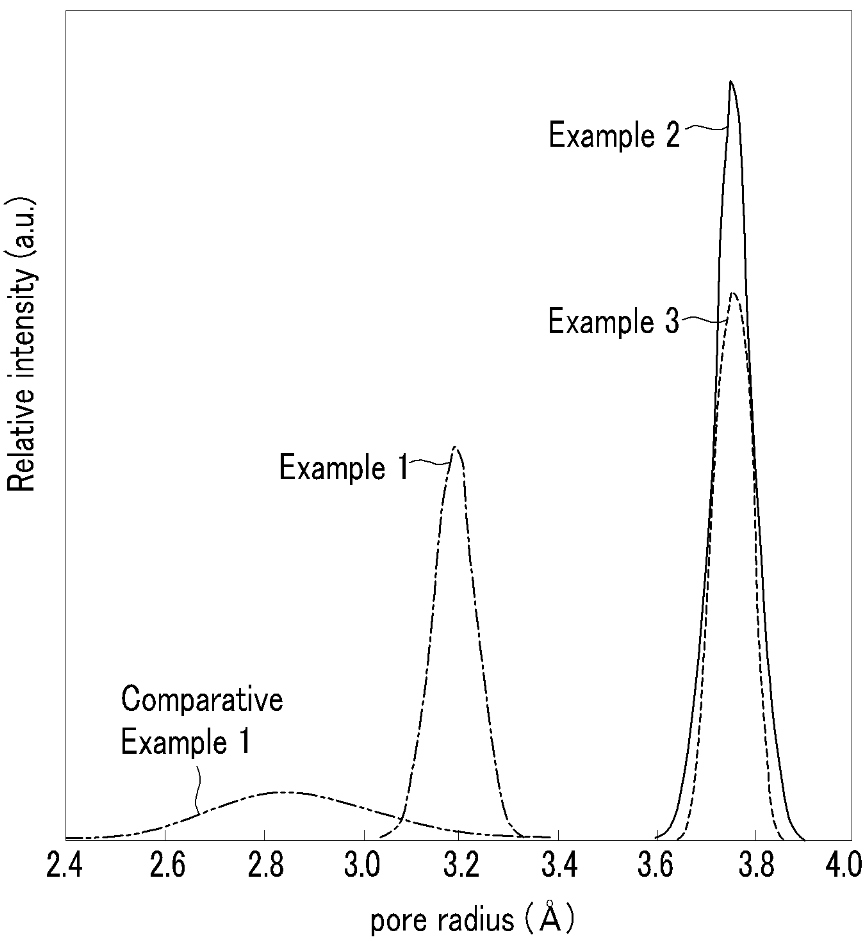
Example 2
Example 3
Example 1
Comparative
Example 1
Relative intensity (a.u.)
2.4
2.6
2.8
3.0
3.2
3.4
3.6
3.8
4.0
pore radius (Å)

FIG.11

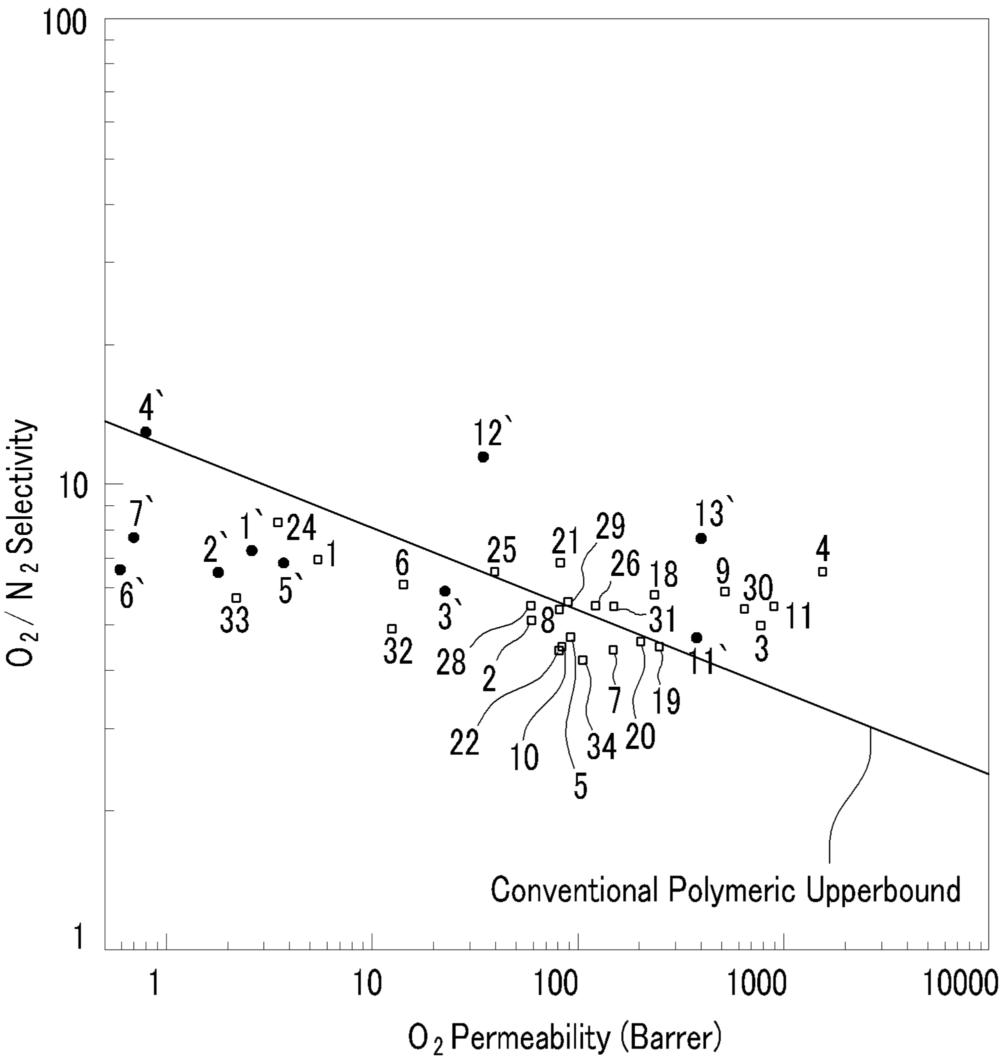
100
10
1
O2 / N2 Selectivity
1
10
100
1000
10000
O2 Permeability (Barrer)
4`
7`
6`
2`
1`
24
5`
1
33
6
32
3`
12`
25
28
2
8
21
29
26
18
31
22
10
5
34
7
20
19
13`
9
30
11
3
11`
4
Conventional Polymeric Upperbound

FIG.12

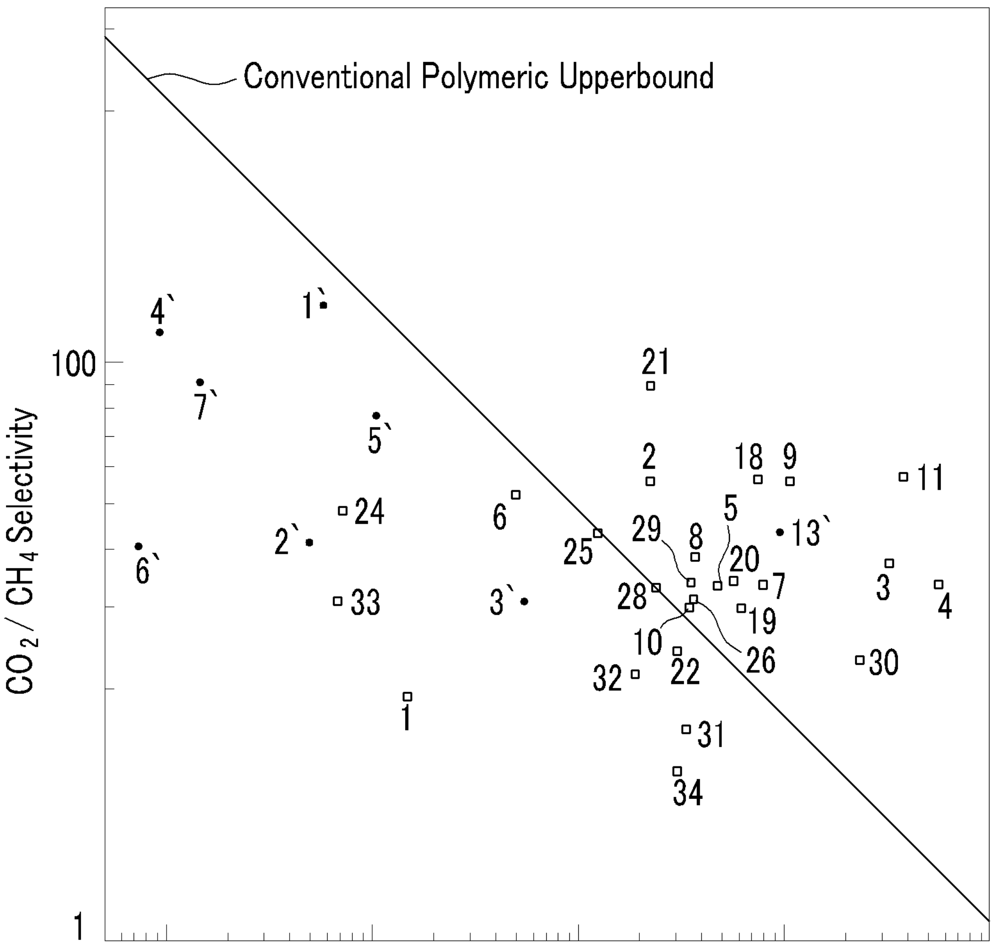
Conventional Polymeric Upperbound
CO2 / CH4 Selectivity
CO2 Permeability (Barrer)
100
1
1
10
100
1000
10000
4`
1`
7`
5`
6`
2`
24
33
1
6
3`
25
21
2
18
9
11
5
29
8
13`
20
7
3
4
28
19
10
26
30
32
22
31
34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **PARK, HO BUM et al.** Polymers with cavities tuned for fast selective transport of small molecules and ions. *Science,* 12 October 2017, vol. 318, 254-258